# EUROPEAN PATENT SPECIFICATION

(11) **EP 4 400 561 B1**
(45) Date of publication and mention of the grant of the patent: **09.09.2026**
(21) Application number: 24150805.0
(22) Date of filing: 09.01.2024
(51) Int. Cl.: C09K 19/30, C09K 19/34, C09K 19/12, C09K 19/04, C09K 19/06

(54) **LIQUID-CRYSTAL MEDIUM**
FLÜSSIGKRISTALLINES MEDIUM
MILIEU À CRISTAUX LIQUIDES

(30) Priority: 12.01.2023 WO PCT/CN2023/071867
(43) Date of publication of application: 17.07.2024
(73) Proprietor: Merck Patent GmbH, 64293 Darmstadt (DE)
(72) Inventor: Choi, Chang-Suk, 17956 Pyeongtaek (KR); Wang, Jing, Shanghai, 201206 (CN); Jung, Ji-Hun, Shanghai, 201206 (CN); Li, Yao, Shanghai, 201206 (CN)
(74) Representative: Merck Patent Association

(56) References cited:
- EP-A1- 4 261 267
- EP-A1- 4 261 268
- WO-A1-2023/094404
- US-A1- 2019 345 129

## Description

The present invention relates to a liquid-crystal (LC) medium based on a mixture of polar compounds, to its use for optical, electro-optical and electronic purposes, in particular in LC displays, especially in LC displays of the fringe-field switching mode, to an LC display of the fringe-field switching mode comprising the LC medium, especially an energy-saving LC display, to a process of preparing the LC medium, and to a process of manufacturing the LC display.

One of the liquid-crystal display (LCD) modes used at present is the TN ("twisted nematic") mode. However, TN LCDs have the disadvantage of a strong viewing-angle dependence of the contrast.

Therefore, so-called FFS ("fringe-field switching") displays have been reported (see, inter alia, S.H. Jung et al., Jpn. J. Appl. Phys., Volume 43, No. 3, 2004, 1028), which contain two electrodes on the same substrate, one of which is structured in a comb-shaped manner and the other is unstructured. A strong, so-called "fringe field" is thereby generated, i.e. a strong electric field close to the edge of the electrodes, and, throughout the cell, an electric field which has both a strong vertical component and also a strong horizontal component. FFS displays have a low viewing-angle dependence of the contrast. FFS displays usually contain an LC medium with positive dielectric anisotropy, and an alignment layer, usually of polyimide, which provides planar alignment to the molecules of the LC medium.

FFS displays can be operated as active-matrix or passive-matrix displays. In the case of active-matrix displays, individual pixels are usually addressed by integrated, non-linear active elements, such as, for example, transistors (for example thin-film transistors ("TFTs")), while in the case of passive-matrix displays, individual pixels are usually addressed by the multiplex method, as known from the prior art.

Furthermore, a new type of FFS displays (known as "Ultra Brightness FFS (UB-FFS)" mode displays) has been disclosed (see S.H. Lee et al., Appl. Phys. Lett. 73(20), 1998, 2882-2883 and S.H. Lee et al., Liquid Crystals 39(9), 2012, 1141-1148), which have similar electrode design and layer thickness as FFS displays, but comprise a layer of an LC medium with negative dielectric anisotropy instead of an LC medium with positive dielectric anisotropy. The LC medium with negative dielectric anisotropy shows a more favourable director orientation that has less tilt and more twist orientation compared to the LC medium with positive dielectric anisotropy, as a result of which these displays have a higher transmission. The displays further comprise an alignment layer, preferably of polyimide provided on at least one of the substrates that is in contact with the LC medium and induces planar alignment of the LC molecules of the LC medium. These displays require an LC medium with high reliability.

In addition, so-called VA ("vertically aligned") displays are known which have a broad viewing angle and fast response times. The LC cell of a VA display contains a layer of an LC medium between two transparent electrodes, where the LC medium usually has a negative value of the dielectric anisotropy (Δε). In the switched-off state, the molecules of the LC layer are aligned perpendicular to the electrode surfaces (homeotropically) or have a tilted homeotropic alignment. On application of a voltage to the two electrodes, a realignment of the LC molecules parallel to the electrode surfaces takes place.

Also known are so-called IPS ("in-plane switching") displays, which contain an LC layer between two substrates with planar orientation, where the two electrodes are arranged on only one of the two substrates and preferably have interdigitated, comb-shaped structures. On application of a voltage to the electrodes an electric field with a significant component parallel to the LC layer is generated between them. This causes realignment of the LC molecules in the layer plane.

In VA displays of the more recent type, uniform alignment of the LC molecules is restricted to a plurality of relatively small domains within the LC cell. Disclinations may exist between these domains, also known as tilt domains. VA displays having tilt domains have, compared with conventional VA displays, a greater viewing-angle independence of the contrast and the grey shades. In addition, displays of this type are simpler to produce since additional treatment of the electrode surface for uniform alignment of the molecules in the switched-on state, such as, for example, by rubbing, is no longer necessary. Instead, the preferential direction of the tilt or pretilt angle is controlled by a special design of the electrodes.

However, the use of LC media with negative dielectric anisotropy in VA or FFS displays has also several drawbacks. For example, they have a significantly lower reliability compared to LC media with positive dielectric anisotropy.

The term "reliability" as used hereinafter means the quality of the performance of the display during time and with different stress loads, such as light load, temperature, humidity, or voltage which cause display defects such as image sticking (area and line image sticking), mura, yogore etc. and which are known to the skilled person in the field of LC displays. As a standard parameter for categorising the reliability usually the voltage holding ration (VHR) value is used, which is a measure for maintaining a constant electrical voltage in a test display. The higher the VHR value, the better the reliability of the LC medium.

The reduced reliability of an LC medium with negative dielectric anisotropy in a VA or FFS display can be explained by an interaction of the LC molecules with the polyimide of the alignment layer, as a result of which ions are extracted from the polyimide alignment layer, and wherein LC molecules with negative dielectric anisotropy do more effectively extract such ions.

This results in new requirements for LC media to be used in VA or FFS displays. In particular, the LC medium has to show a high reliability and a high VHR value after UV exposure. Further requirements are a high specific resistance, a large working-temperature range, short response times even at low temperatures, a low threshold voltage, a multiplicity of grey levels, high contrast and a broad viewing angle, and reduced image sticking.

Thus, in displays known from prior art often the undesired effect of so-called "image sticking" or "image burn" is observed, wherein the image produced in the LC display by temporary addressing of individual pixels still remains visible even after the electric field in these pixels has been switched off, or after other pixels have been addressed.

This "image sticking" can occur on the one hand if LC media having a low VHR are used. The UV component of daylight or the backlight can cause undesired decomposition reactions of the LC molecules therein and thus initiate the production of ionic or free-radical impurities. These may accumulate, in particular, at the electrodes or the alignment layers, where they may reduce the effective applied voltage.

Another problem observed in prior art is that LC media for use in displays, including but not limited to VA and FFS displays, do often exhibit high viscosities and, as a consequence, high switching times. In order to reduce the viscosity and switching time of the LC medium, it has been suggested in prior art to add LC compounds with an alkenyl group. However, it was observed that LC media containing alkenyl compounds often show a decrease of the reliability and stability, and a decrease of the VHR especially after exposure to UV radiation but also to visible light from the backlight of a display, that usually does not emit UV light.

LC media for a liquid crystal display device are known from US 2019/345129 A1 (e.g. Example 9, Table 4) comprising compounds of formulae I, II/IIA/IIB/IIC, III/III-1, IV and V. Further, EP 4261268 A1, EP 4261267 A1 and WO 2023/094404 A1 are earlier-filed applications under Article 54(3) EPC. They each disclose LC mixtures comprising combinations of compounds of formulae I, II/IIA/IIB/IID, III/III-1, IV and V, and describe their use in electro-optical displays (e.g. VA, IPS, FFS).

It is therefore an object of the present invention to provide a process for providing improved LC media for use in FFS-, VA-, or IPS displays, which do not exhibit the disadvantages described above or only do so to a small extent and have improved properties. A further object of the invention is to provide FFS displays with good transmission, high reliability, a VHR value especially after backlight exposure, a high specific resistance, a large working-temperature range, short response times even at low temperatures, a low threshold voltage, a multiplicity of grey levels, high contrast and a broad viewing angle, and reduced image sticking.

In particular, the invention is based on the object of LC medium for use in LC displays, which enable the displays with high contrast ratio, high transmittance and at the same time very high specific resistance values, high VHR values, high reliability, low threshold voltages, short response times, low birefringence, show good UV absorption especially at longer wavelengths, enable quick and complete polymerisation of the RMs, allow the generation of a low pretilt angle, preferably as quickly as possible, enable a high stability of the pretilt even after longer time and/or after UV exposure, reduce or prevent the occurrence of "image sticking" and "ODF mura" in the display, and in case of the RMs polymerise as rapidly and completely as possible and show a high solubility in the LC media which are typically used as host mixtures in PSA displays.

It was found that one or more of these objects could be achieved by providing an LC medium as disclosed and claimed hereinafter.

The invention thus relates to a liquid crystal medium comprising one or more compounds of formula I 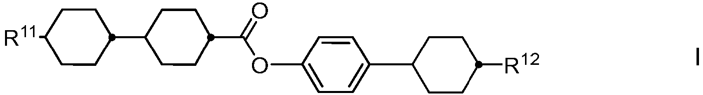 and
one or more compounds of formula III 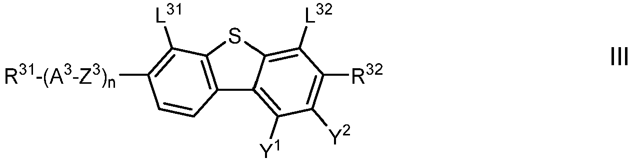 and
one or more compounds of the formulae VI-1 to VI-25, BC, PH-1, IVa-1 to IVa-4 and/or IVb-1 to IVb-3, as in claim 1 and defined below, in which
   - R¹¹ and R¹²,: each, independently of one another, denote an alkyl radical having 1 to 12 C atoms, preferably having 1 to 7 C atoms, or alkenyl radical having 2 to 12 C atoms, preferably having 2 to 7 C atoms, or cyclic alkyl having 3 to 6 C atoms,
   - R³¹ and R³²,: each, independently of one another, denote H, an alkyl or alkoxy radical having 1 to 15 C atoms, preferably having 1 to 7 C atoms, where one or more -CH₂- groups in these radicals may each be replaced, independently of one another, by 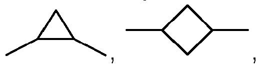 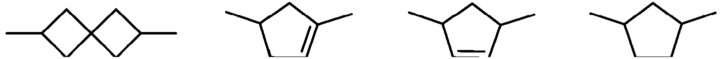 -C≡C-, -CF₂O-, -OCF₂-, -CH=CH-, by -O-, -CO-O- or -O-CO- in such a way that O atoms are not linked directly to one another, and in which one or more H atoms may be replaced by halogen,
   - A³: on each occurrence, independently of one another, denotes a 1,4-phenylene radical, in which one or two CH groups may be replaced by N, or a 1,4-cyclohexylene or 1,4-cyclohexenylene radical, in which one or two non-adjacent CH₂ groups may be replaced by -O- or -S-, where the radicals may be mono- or polysubstituted by halogen atoms,
   - n: denotes 0, 1 or 2,
   - Z³: on each occurrence independently of one another denotes -CF₂O-, -OCF₂-, -CH₂O-, -OCH₂-, -CH₂-, -CH₂CH₂-, -CH=CH-, -C≡C- or a single bond,
   - L³¹ and L³²,: each, independently of one another, denote F, Cl, CF₃ or CHF₂, and
   - Y' and Y²,: each, independently of one another, denote H, F, Cl, CF₃, CHF₂, CH₃ or OCH₃, preferably H, CH₃ or OCH₃, very preferably H.

In a preferred embodiment the LC medium according to the invention, comprises one or more are compounds of formula I and one or more compounds of formula III, wherein R¹¹ and R¹² independently of one another denote straight-chain alkyl having 1 to 7 C atoms or alkenyl having 2 to 7 C atoms.

Preferred compounds of formula I is CCZPC-n-m, wherein n and m independently of one another denote 2 to 7. The most preferred are compounds CCZPC-3-3.

The invention further relates to an LC display comprising the liquid crystal medium as described above and below, in particular a VA, IPS, FFS, PS-VA, PS-IPS, PS-FFS, UB-FFS, UBplus or UV²A display.

The invention furthermore relates to the use of the liquid crystal medium as described above and below in a VA, IPS, FFS, PS-VA, PS-IPS, PS-FFS, UB-FFS, UBplus or UV²A display.

The invention furthermore relates to a process for preparing an LC medium as described above and below, comprising the steps of mixing one or more compounds of formula I with one or more compounds of formula III, one or more compounds of the formulae VI-1 to VI-25, BC, PH-1, IVa-1 to IVa-4 and/or IVb-1 to IVb-3, as in claim 1 and defined below, and optionally with further LC compounds and/or additives.

The invention furthermore relates to a process for manufacturing an LC display as described above and below, comprising the steps of filling or otherwise providing an LC medium as described above and below between the substrates of the display.

The LC media according to the present invention allow to achieve one or more of the following advantageous effects:
- a low birefringence, which in combination with the high average elastic constant contribute to a high contrast ratio,
- a good white-black image sticking (WB IS) result which enables improved short term image sticking,
- a low viscosity which enables fast response time,
- a low threshold voltage which is useful to reduce the driving voltage and enable energy-saving displays.

The LC media according to the present invention show one or more of the following advantageous properties when used in LC displays:
- high resolution,
- high transmittance,
- high contrast ratio,
- improved short term image sticking,
- reduced ODF mura,
- reduced rotational viscosity,
- high reliability and high VHR value after UV exposure and/or heat treatment,
- fast response times,
- a favourably low ratio of rotational viscosity to the splay elastic constant γ₁ /K₁, which contributes to improved switching behaviour especially at low driving voltages and is useful to enable energy-saving displays,
- a low threshold voltage which is useful to enable energy-saving displays.

As used herein, the terms "reactive mesogen" and "RM" will be understood to mean a compound containing a mesogenic or liquid crystalline skeleton, and one or more functional groups attached thereto which are suitable for polymerization and are also referred to as "polymerizable group" or "P".

Unless stated otherwise, the term "polymerizable compound" as used herein will be understood to mean a polymerizable monomeric compound.

The term "mesogenic group" as used herein is known to the person skilled in the art and described in the literature, and means a group which, due to the anisotropy of its attracting and repelling interactions, essentially contributes to causing a liquid-crystal (LC) phase in low-molecular-weight or polymeric substances. Compounds containing mesogenic groups (mesogenic compounds) do not necessarily have to have an LC phase themselves. It is also possible for mesogenic compounds to exhibit LC phase behaviour only after mixing with other compounds and/or after polymerization. Typical mesogenic groups are, for example, rigid rod- or disc-shaped units. An overview of the terms and definitions used in connection with mesogenic or LC compounds is given in Pure Appl. Chem. 2001, 73(5), 888 and C. Tschierske, G. Pelzl, S. Diele, Angew. Chem. 2004, 116, 6340-6368.

The term "spacer group", hereinafter also referred to as "Sp", as used herein is known to the person skilled in the art and is described in the literature, see, for example, Pure Appl. Chem. 2001, 73(5), 888 and C. Tschierske, G. Pelzl, S. Diele, Angew. Chem. 2004, 116, 6340-6368. As used herein, the terms "spacer group" or "spacer" mean a flexible group, for example an alkylene group, which connects the mesogenic group and the polymerizable group(s) in a polymerizable mesogenic compound.

Above and below, 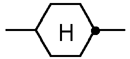 denotes a trans-1,4-cyclohexylene ring, and 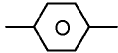 denotes a 1,4-phenylene ring.

In a group 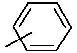 the single bond shown between the two ring atoms can be attached to any free position of the benzene ring.

If in the formulae shown above and below a terminal group like R^{11,12}, R^{21,22}, R^{31,32,33}, R^{41,42}, R^{51, 52}, R⁶¹, R⁷¹, R^{N1,N2}, R^{81,82}, R^{91,92,93}, R^{L1,L2}, R^{Q}, R^{R1 ,R2}, or L denotes an alkyl radical and/or an alkoxy radical, this may be straight-chain or branched. It is preferably straight-chain, has 2, 3, 4, 5, 6 or 7 C atoms and accordingly preferably denotes ethyl, propyl, butyl, pentyl, hexyl, heptyl, ethoxy, propoxy, butoxy, pentoxy, hexyloxy or heptyloxy, furthermore methyl, octyl, nonyl, decyl, undecyl, dodecyl, tridecyl, tetradecyl, pentadecyl, methoxy, octyloxy, nonyloxy, decyloxy, undecyloxy, dodecyloxy, tridecyloxy or tetradecyloxy.

If one of the aforementioned terminal groups denotes an alkyl radical wherein one or more CH₂ groups are replaced by S, this may be straight-chain or branched. It is preferably straight-chain, has 1, 2, 3, 4, 5, 6 or 7 C atoms and accordingly preferably denotes thiomethyl, thioethyl, thiopropyl, thiobutyl, thiopentyl, thiohexyl or thioheptyl.

Oxaalkyl preferably denotes straight-chain 2-oxapropyl (= methoxymethyl), 2- (= ethoxymethyl) or 3-oxabutyl (= 2-methoxyethyl), 2-, 3- or 4-oxapentyl, 2-, 3-, 4- or 5-oxahexyl, 2-, 3-, 4-, 5- or 6-oxaheptyl, 2-, 3-, 4-, 5-, 6- or 7-oxaoctyl, 2-, 3-, 4-, 5-, 6-, 7- or 8-oxanonyl, 2-, 3-, 4-, 5-, 6-, 7-, 8- or 9-oxadecyl.

If one of the aforementioned terminal groups denotes an alkoxy or oxaalkyl group it may also contain one or more additional oxygen atoms, provided that oxygen atoms are not linked directly to one another.

If one of the aforementioned terminal groups denotes an alkyl radical in which one CH₂ group has been replaced by -CH=CH-, this may be straight-chain or branched. It is preferably straight-chain and has 2 to 10 C atoms. Accordingly, it denotes, in particular, vinyl, prop-1- or -2-enyl, but-1-, -2- or -3-enyl, pent-1-, -2-, -3- or -4-enyl, hex-1-, -2-, -3-, -4- or -5-enyl, hept-1-, -2-, -3-, -4-, -5- or -6-enyl, oct-1-, -2-, -3-, -4-, -5-, -6- or -7-enyl, non-1-, -2-, -3-, -4-, -5-, -6-, -7- or -8-enyl, dec-1-, -2-, -3-, -4-, -5-, -6-, -7-, -8- or -9-enyl.

If one of the aforementioned terminal groups denotes an alkyl or alkenyl radical which is at least monosubstituted by halogen, this radical is preferably straight-chain, and halogen is preferably F or Cl. In the case of polysubstitution, halogen is preferably F. The resultant radicals also include perfluorinated radicals. In the case of monosubstitution, the fluorine or chlorine substituent may be in any desired position, but is preferably in the ω-position.

In another preferred embodiment, one or more of the aforementioned terminal groups, like R^{11,12}, R^{21,22}, R^{31,32,33}, R^{41,42}, R^{51,52}, R⁶¹, R⁷¹, R^{N1,N2}, R^{81,82}, R^{91,92,93}, R^{L1,L2}, R^{Q}, R^{R1,R2}, or L are selected from the group consisting of 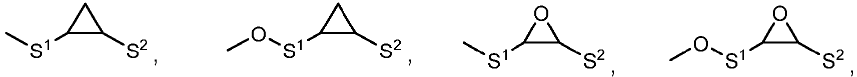 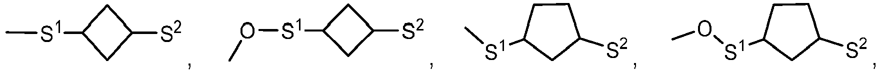 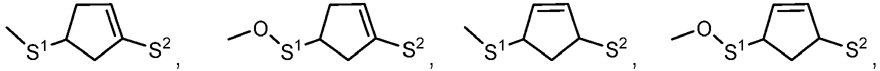 -S¹-F, -O-S¹-F, -O-S₁-O-S₂, wherein S¹ is C₁₋₁₂-alkylene or C₂₋₁₂-alkenylene and S² is H, C₁₋₁₂-alkyl or C₂₋₁₂-alkenyl, and very preferably are selected from the group consisting of 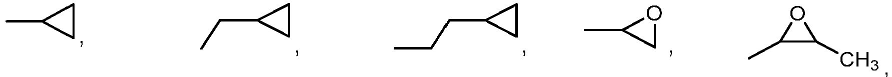 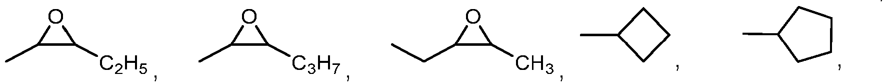 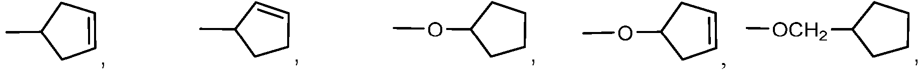 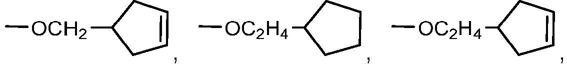 -OCH₂OCH₃, -O(CH₂)₂OCH₃, -O(CH₂)₃OCH₃, -O(CH₂)₄OCH₃, -O(CH₂)₂F, -O(CH₂)₃F, -O(CH₂)₄F.

Halogen is preferably F or Cl, very preferably F.

The group -CR⁰=CR⁰⁰- is preferably -CH=CH-. -CO-, -C(=O)- and -C(O)- denote a carbonyl group, i.e.

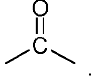

Preferred substituents L, are, for example, F, Cl, Br, I, -CN, -NO₂, -NCO, -NCS, -OCN, -SCN, -C(=O)N(R^{x})₂, -C(=O)Y¹, -C(=O)R^{x}, -N(R^{x})₂, straight-chain or branched alkyl, alkoxy, alkylcarbonyl, alkoxycarbonyl, alkylcarbonyloxy or alkoxycarbonyloxy each having 1 to 25 C atoms, in which one or more H atoms may optionally be replaced by F or Cl, optionally substituted silyl having 1 to 20 Si atoms, or optionally substituted aryl having 6 to 25, preferably 6 to 15, C atoms,
wherein R^{x} denotes H, F, Cl, CN, or straight chain, branched or cyclic alkyl having 1 to 25 C atoms, wherein one or more non-adjacent CH₂-groups are optionally replaced by -O-, -S-, -CO-, -CO-O-, -O-CO-, -O-CO-O- in such a manner that O- and/or S-atoms are not directly connected with each other, and wherein one or more H atoms are each optionally replaced by F, Cl, P- or P-Sp-, and
Y¹ denotes halogen.

Particularly preferred substituents L are, for example, F, Cl, CN, NO₂, CH₃, C₂H₅, OCH₃, OC₂H₅, COCH₃, COC₂H₅, COOCH₃, COOC₂H₅, CF₃, OCF₃, OCHF₂, OC₂F₅, furthermore phenyl. 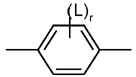 is preferably 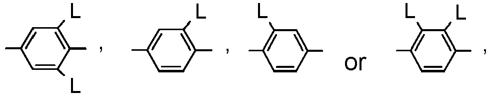 in which L has one of the meanings indicated above.

Preferred compounds of formula III are those of formula III-1 to III-6: 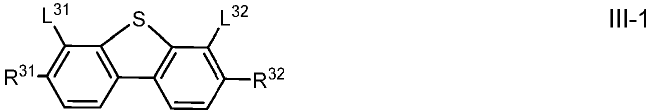 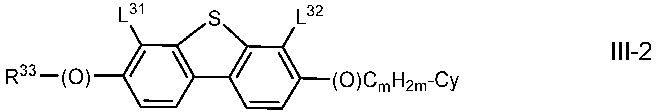 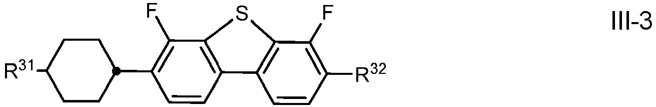 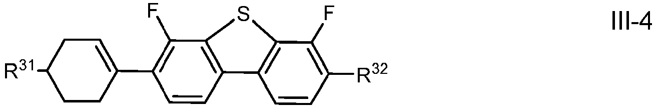 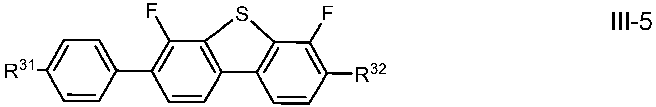 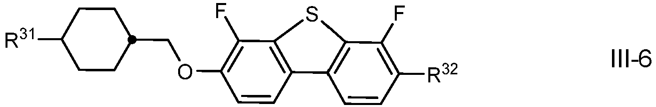 in which the occurring groups have the same meanings as given under formula III above and preferably
- R³¹ and R³²: each, independently of one another, denote an alkyl, alkenyl or alkoxy radical having up to 15 C atoms, preferably having 1 to 7 C atoms, more preferably one or both of them denote an alkoxy radical; or cyclic alkyl having 3 to 6 C atoms,
- R³³: denotes alkyl or alkenyl having up to 7 C atoms or a group Cy-CₙH₂ₙ₊₁-,
- m and n: are, identically or differently, 0, 1, 2, 3, 4, 5 or 6, preferably 1, 2 or 3, very preferably 1,
- Cy: denotes a cycloaliphatic group having 3, 4 or 5 ring atoms, which is optionally substituted with alkyl or alkenyl each having up to 3 C atoms, or with halogen or CN, and preferably denotes cyclopropyl, cyclobutyl, cyclopentyl or cyclopentenyl,
- (O): denotes O or a single bond, and
- L³¹ and L³²: each, independently of one another, denote F or Cl, preferably both denote F.

In another preferred embodiment the LC medium comprises one or more compounds of the formula III-1 selected from the group of compounds of formulae III-1-1 to III-1-10, preferably of formula III-1-1, 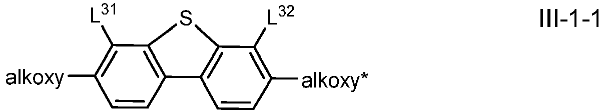 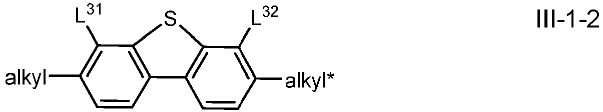 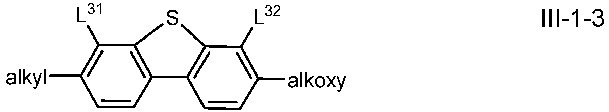 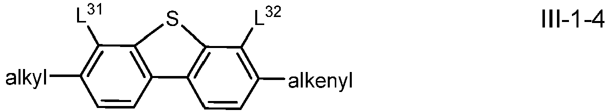 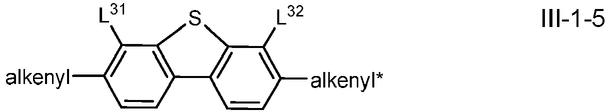 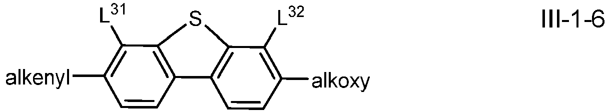 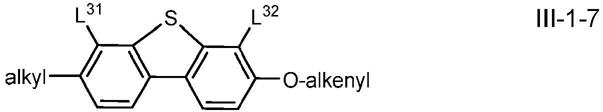 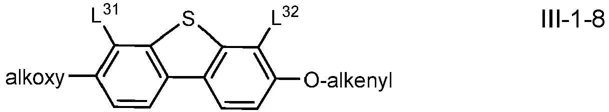 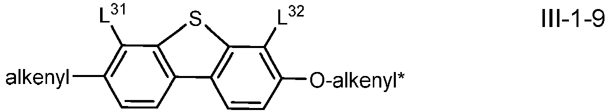 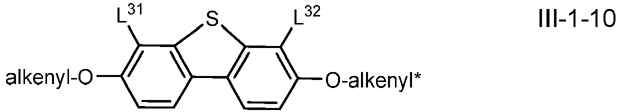 in which alkyl and alkyl* each, independently of one another, denote a straight-chain alkyl radical having 1-6 C atoms, alkenyl and alkenyl* each, independently of one another, denote a straight-chain alkenyl radical having 2-6 C atoms, alkoxy and alkoxy* each, independently of one another, denote a straight-chain alkoxy radical having 1-6 C atoms, and L³¹ and L³² each, independently of one another, denote F or Cl, preferably both F.

Very preferred compounds of formula III-1-1 are selected from the group consisting of the following subformulae,

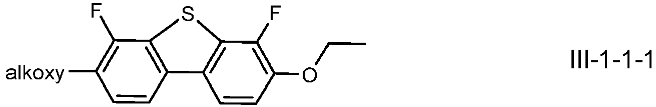

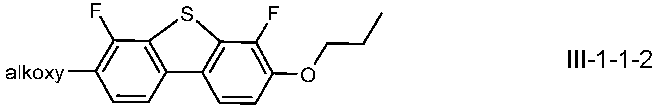

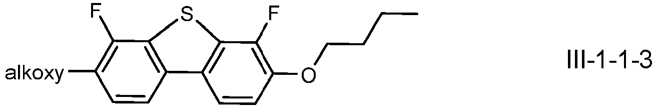

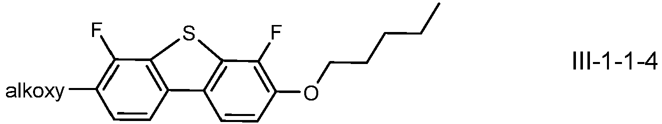

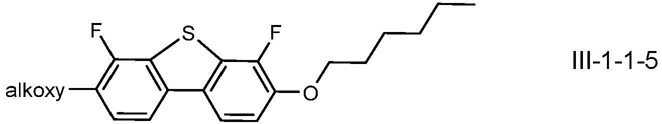

Very preferred compounds of the formula III-2 are the following, 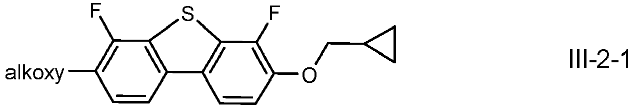 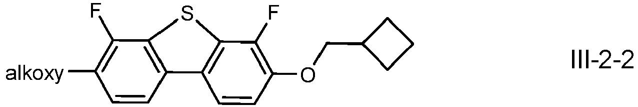 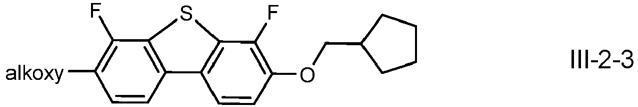 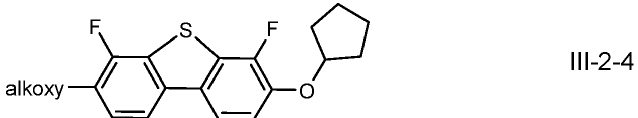 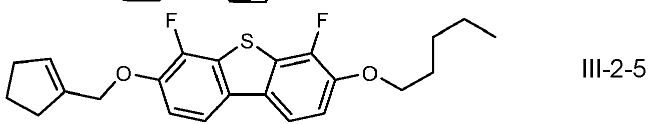 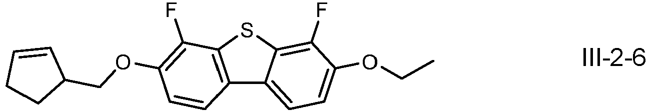 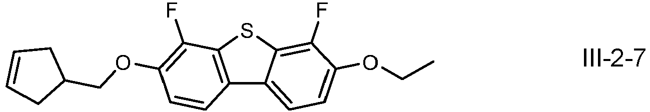 in which alkoxy denotes a straight-chain alkoxy radical having 1-6 C atoms, preferably ethoxy, propoxy, butoxy or pentoxy, very preferaby ethoxy or propoxy.

Very preferred compounds of formula III-6 are selected from the group consisting of the following formulae, 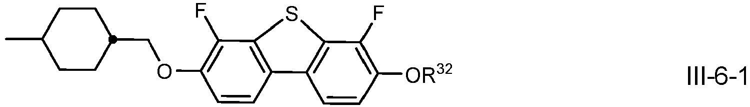 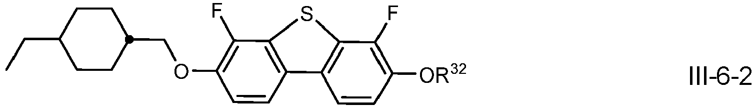 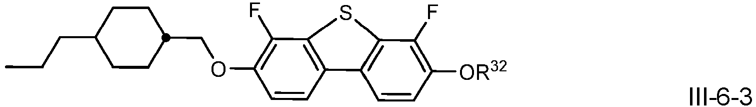 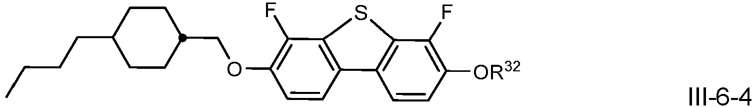 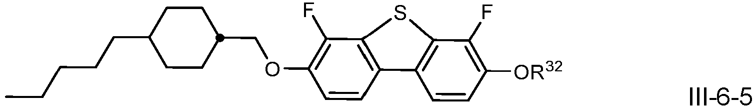 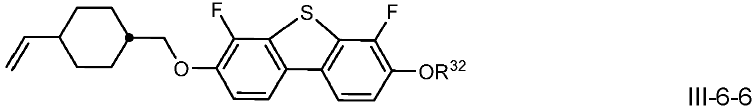 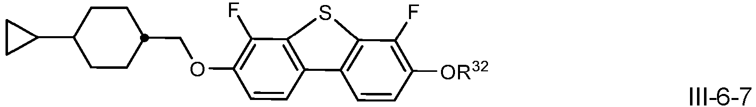 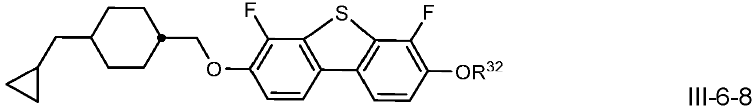 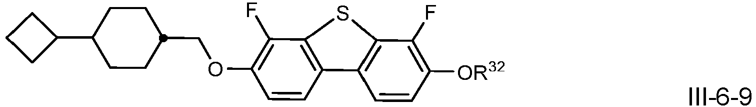 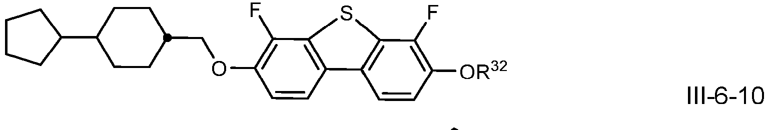 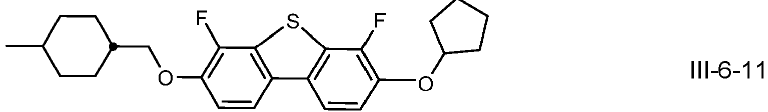 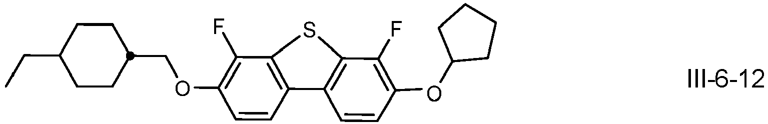 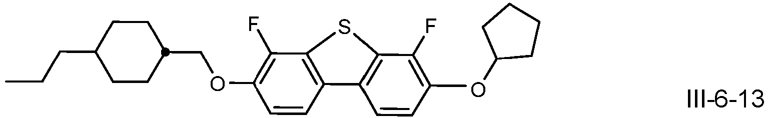 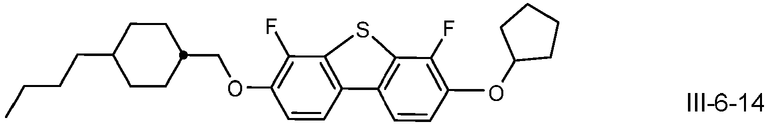 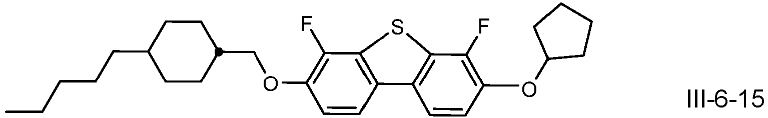 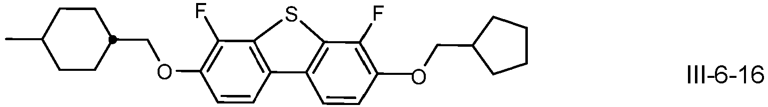 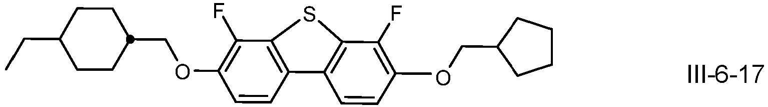 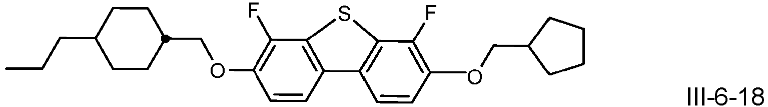 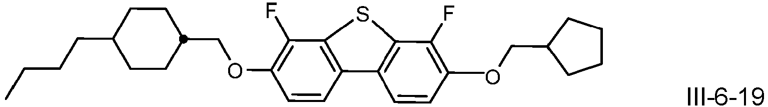 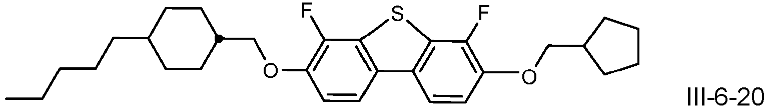 in which R³² denotes alkyl having 1 to 7 C-atoms, preferably ethyl, n-propyl or n-butyl, or alternatively cyclopropylmethyl, cyclobutylmethyl or cyclopentylmethyl or alternatively -(CH₂)ₙF in which n is 2,3,4, or 5, preferably C₂H₄F.

Preferred compounds of formula III are III-1-1-3, III-1-1-4, III-1-1-5 as well as III-6-2, and the most preferred are compounds B(S)-2O-O4, B(S)-2O-O5, B(S)-2O-O6, and COB(S)-2-O4.

Further preferred embodiments of the LC medium according to the present invention are listed below, including any combination thereof:

Preferably the LC medium further comprises one or more compounds of formula II, 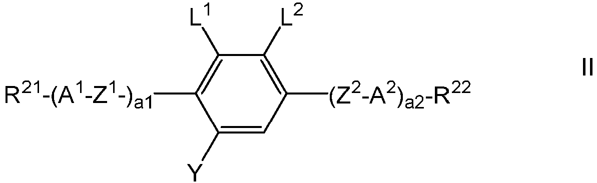 wherein the individual radicals, independently of each other and on each occurrence identically or differently, have the following meanings
- R²¹ and R²²: straight chain, branched or cyclic alkyl or alkoxy having 1 to 20 C atoms, wherein one or more non-adjacent CH₂-groups are optionally replaced by -O-, -S-, -CO-, -CO-O-, -O-CO-, -O-CO-O-, CR⁰=CR⁰⁰-, -C≡C-, 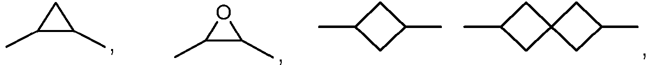 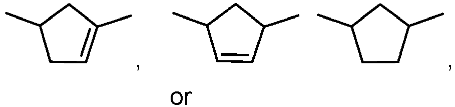 in such a manner that O- and/or S-atoms are not directly connected with each other, and wherein one or more H atoms are each optionally replaced by F, Cl, CN or CF₃, preferably alkyl or alkoxy having 1 to 6 C atoms,
- R⁰, R⁰⁰: H or alkyl having 1 to 12 C atoms,
- A¹ and A²: a group selected from the following formulae 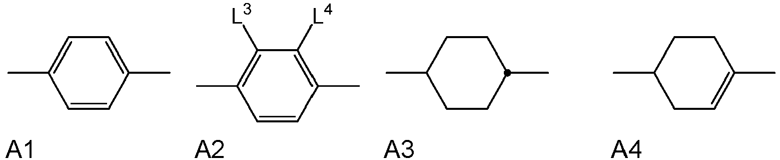 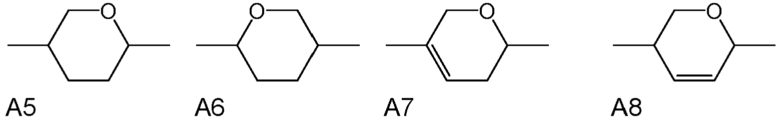 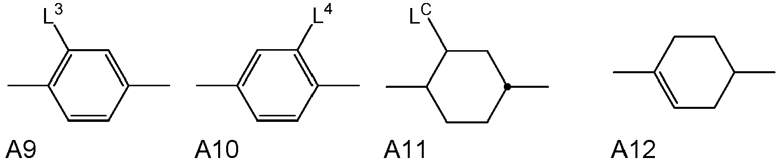 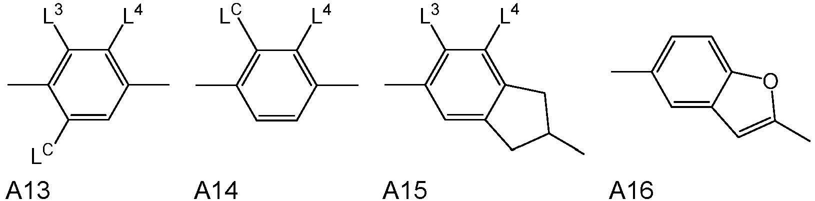 preferably from formulae A1, A2, A3, A4, A5, A6, A9 and A10, very preferably from formulae A1, A2, A3, A4, A6, A9 and A10,
- Z¹ and Z²: -CH₂CH₂-, -CH=CH-, -CF₂O-, -OCF₂-, -CH₂O-, -OCH₂-, -CO-O-, - O-CO-, -C₂F₄-, -CF=CF-, -CH=CH-CH₂O- or a single bond, preferably a single bond,
- L¹, L², L³ and L⁴: F, Cl, OCF₃, CF₃, CH₃, CH₂F or CHF₂, preferably F or Cl, very preferably F,
- Y: H, F, Cl, CF₃, CHF₂ or CH₃, preferably H or CH₃, very preferably H,
- L^{C}: CH₃ or OCH₃, preferably CH₃,
- a1: 0, 1 or 2,
- a2: 0 or 1.

Preferably the LC medium comprises one or more compounds of formula II selected from the group consisting of compounds of the formulae IIA, IIB, IIC, IID and IIE, 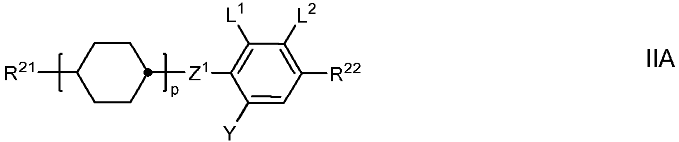 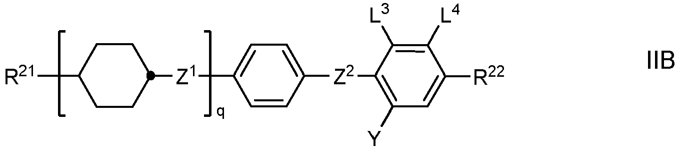 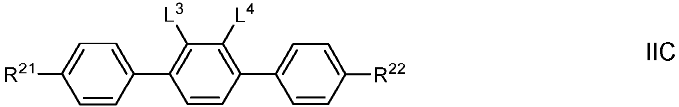 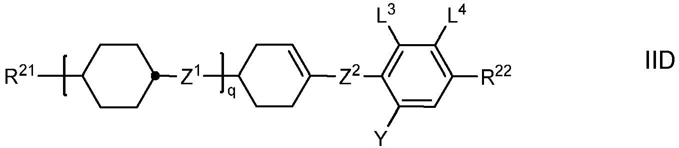 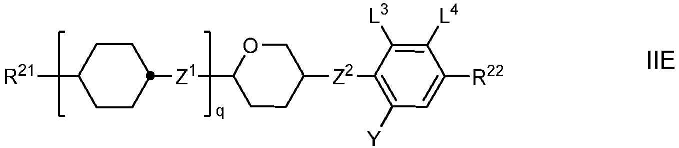 in which the individual radicals, on each occurrence identically or differently, and each, independently of one another, have the following meaning:
- R²¹, R²²: H, an alkyl, alkoxy or alkenyl radical having up to 15 C atoms which is unsubstituted or monosubstituted by F, Cl, CN or CF₃ and where, in addition, one or more CH₂ groups in these radicals may be replaced by -O-, -S-,-C≡C-, -CF₂O-, -OCF₂-, -OC-O-, -O-CO- 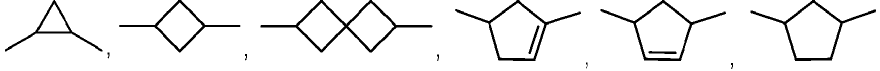 in such a way that O- and/or S-atoms are not linked directly to one another,
- L¹ to L⁴: F, Cl, CF₃ or CHF₂,
- Y: H, F, Cl, CF₃, CHF₂ or CH₃, preferably H or CH₃, particularly preferably H,
- Z¹, Z²: a single bond, -CH₂CH₂-, -CH=CH-, -CF₂O-, -OCF₂-, -CH₂O-, - OCH₂-, -COO-, -OCO-, -C₂F₄-, -CF=CF-, -CH=CHCH₂O,
- p: 0, 1 or 2, and
- q: 0 or 1.

Preferred compounds of the formulae IIA, IIB, IIC, IID and IIE are those wherein R²² denotes an alkyl or alkoxy radical having up to 15 C atoms, and very preferably denotes (O)CᵥH₂ᵥ₊₁, wherein (O) is an oxygen atom or a single bond and v is 1, 2, 3, 4, 5 or 6.

Further preferred compounds of the formulae IIA, IIB, IIC, IID and IIE are those wherein R²¹ or R²² each, independently of one another, denotes or contains cycloalkyl or cycloalkoxy radical, preferably selected from the group consisting of 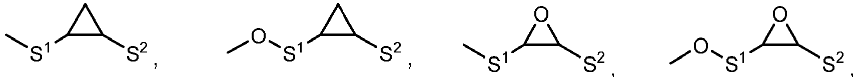 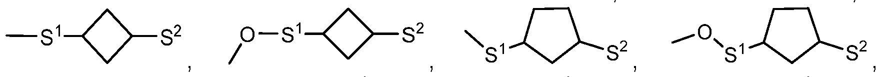 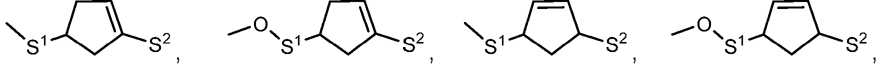 wherein S¹ is C₁₋₁₂-alkylene or C₂₋₁₂-alkenylene and S² is H, C₁₋₁₂-alkyl or C₂₋₁₂-alkenyl, and very preferably are selected from the group consisting of

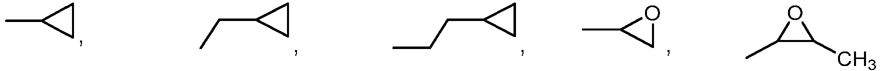

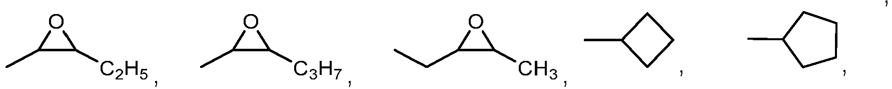

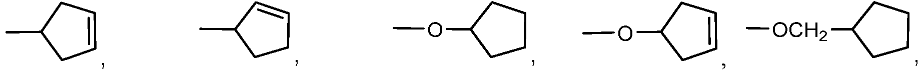

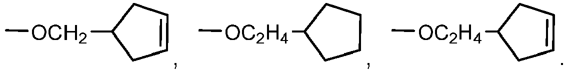

Further preferred compounds of the formulae IIA, IIB, IIC, IID and IIE are indicated below.

In a preferred embodiment the LC medium comprises one or more compounds of the formula IIA selected from the group consisting of the following formulae: 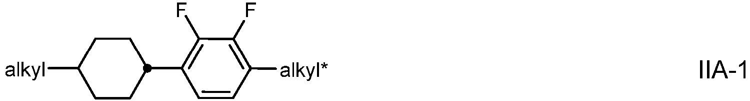 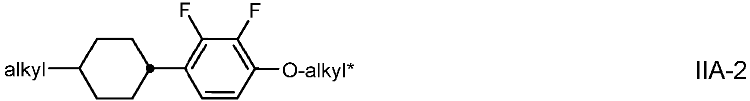 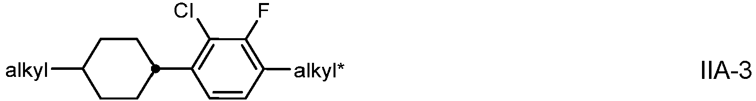 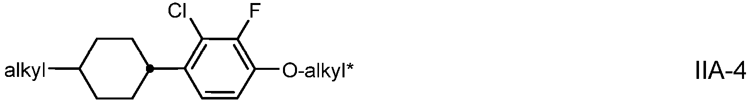 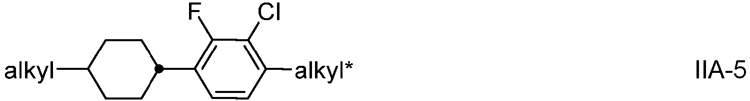 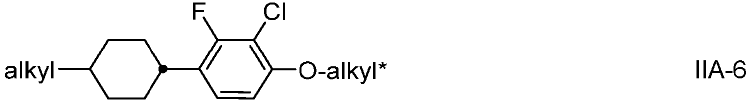 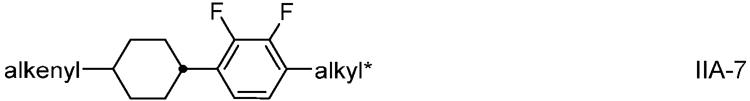 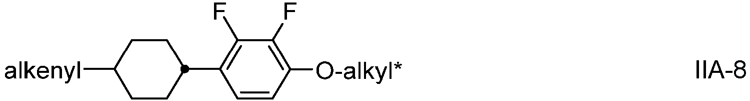 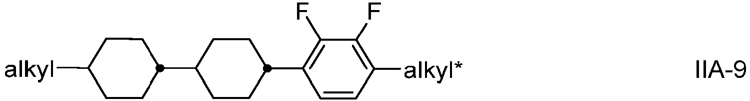 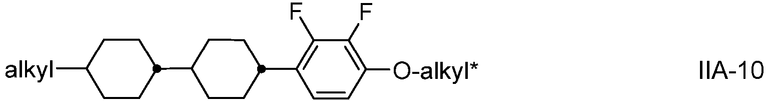 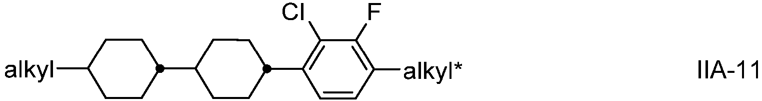 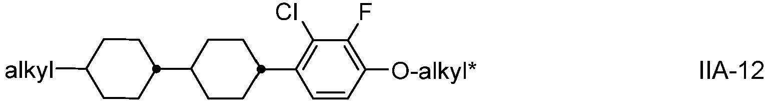 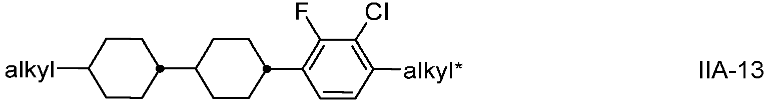 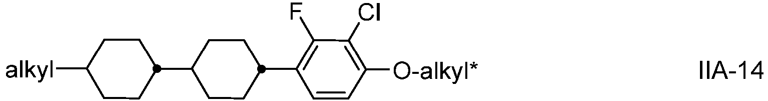 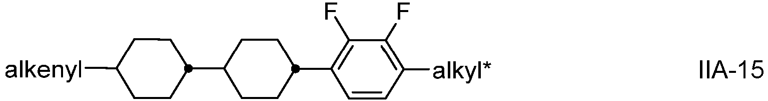 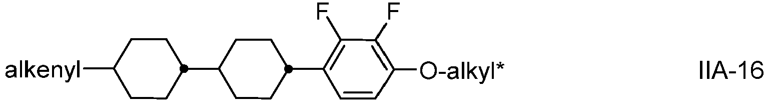 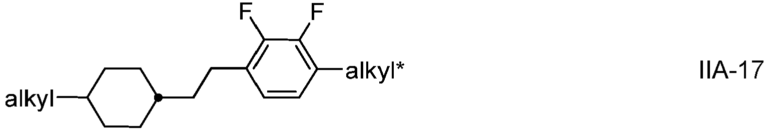 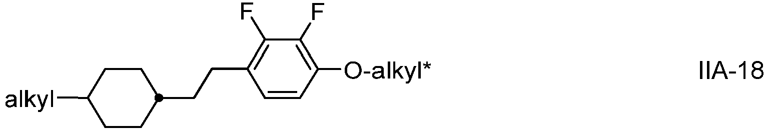 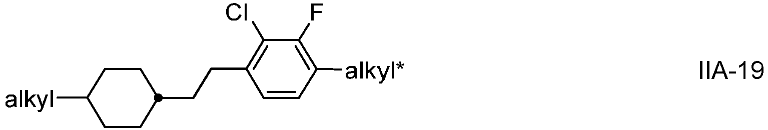 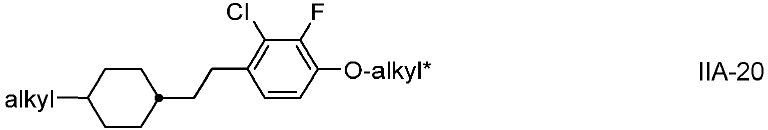 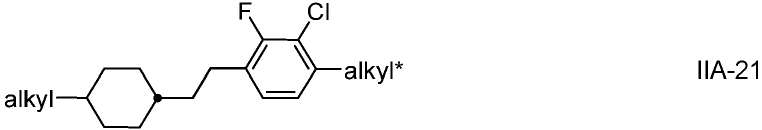 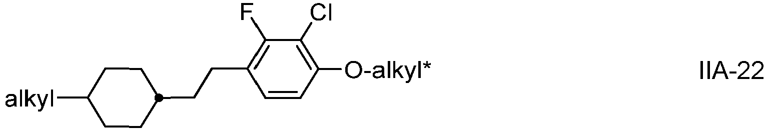 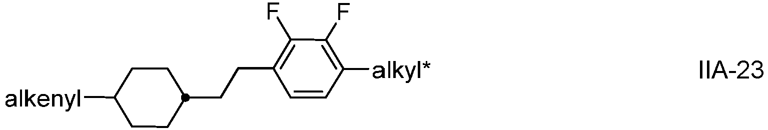 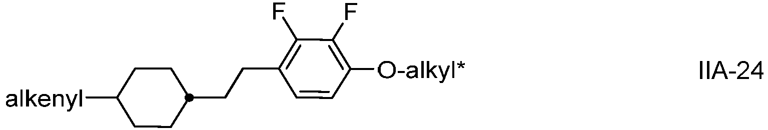 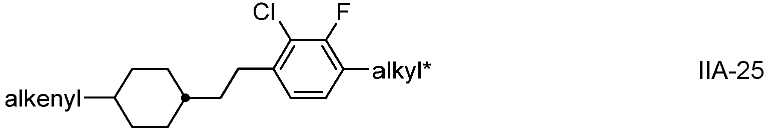 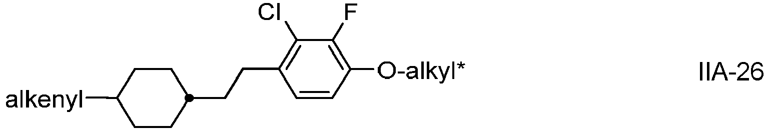 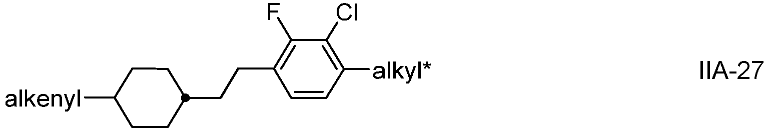 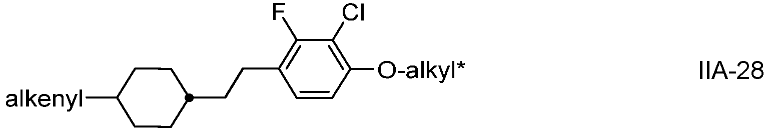 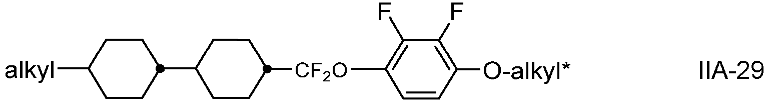 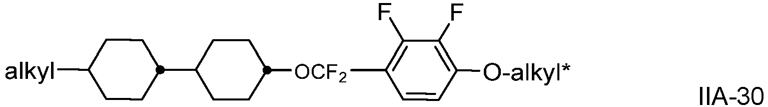 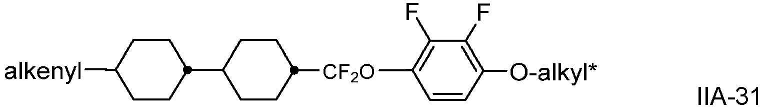 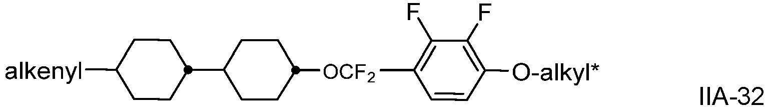 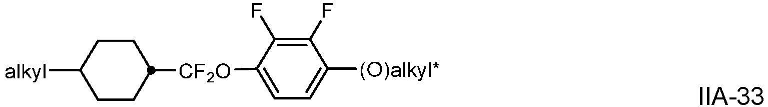 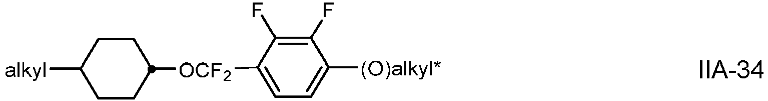 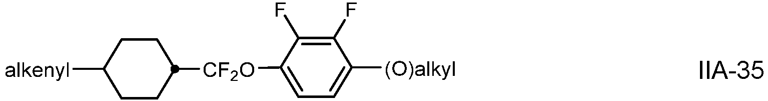 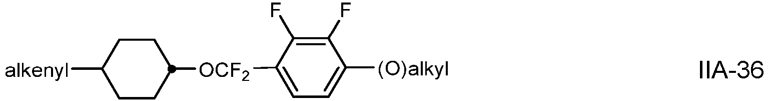 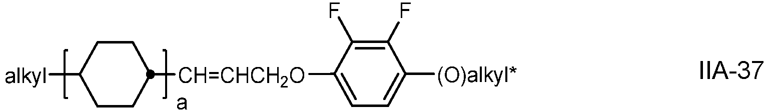 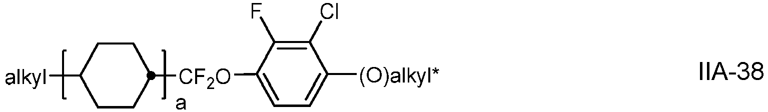 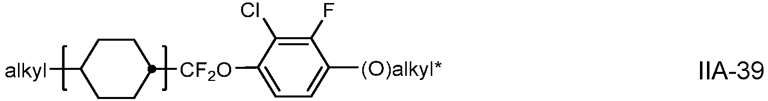 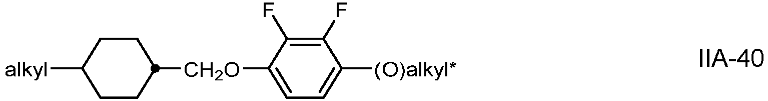 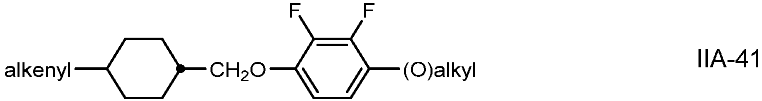 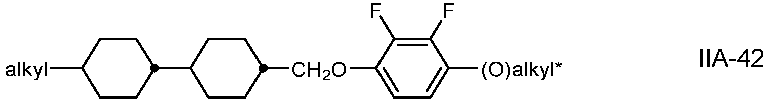 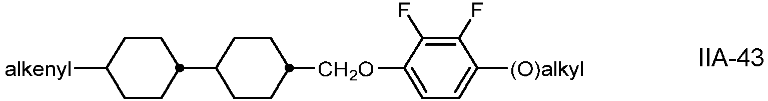 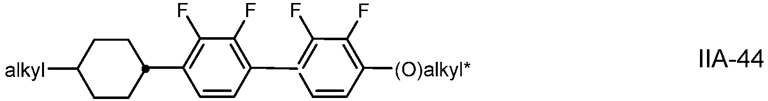 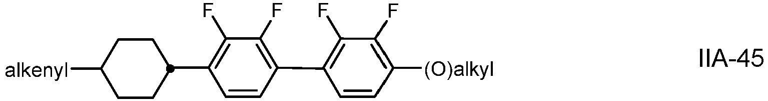 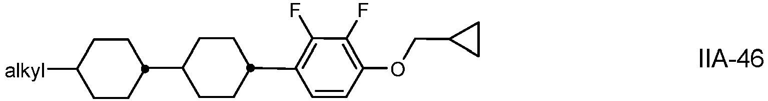 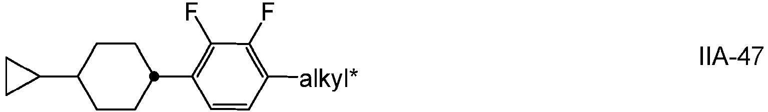 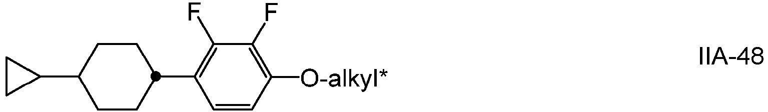 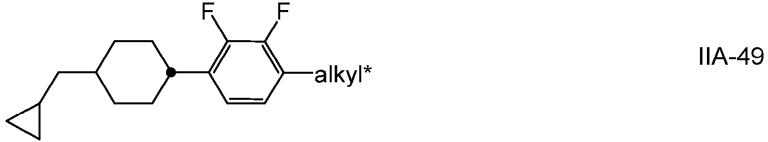 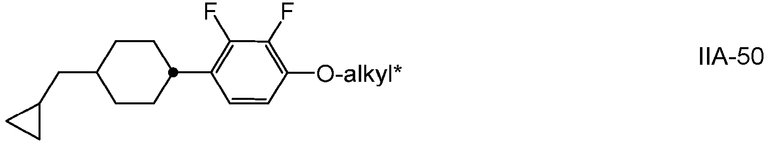 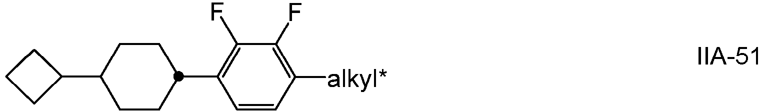 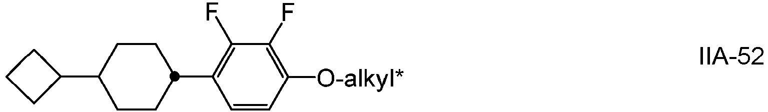 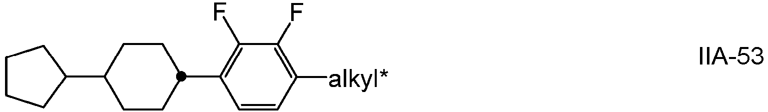 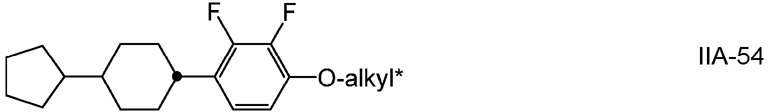 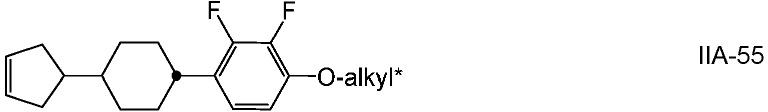 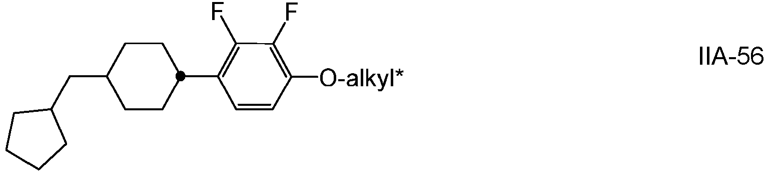 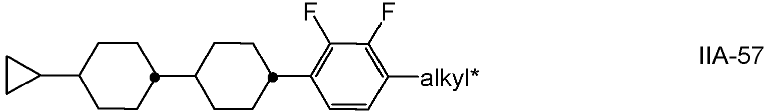 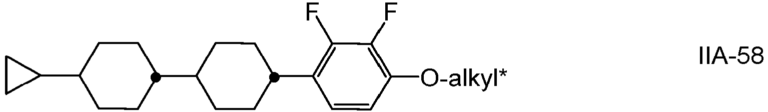 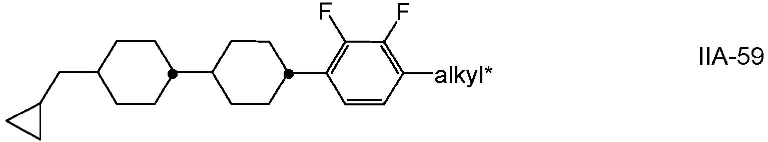 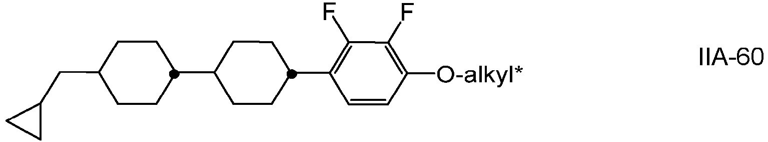 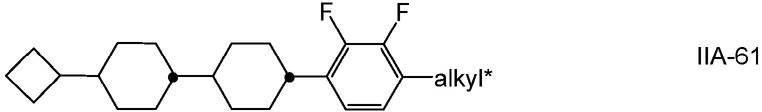 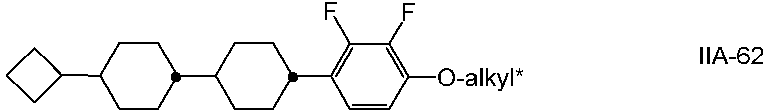 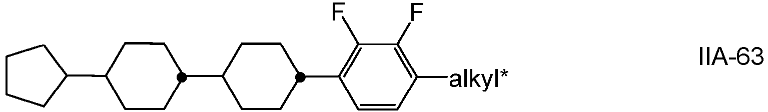 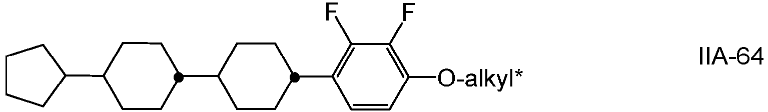 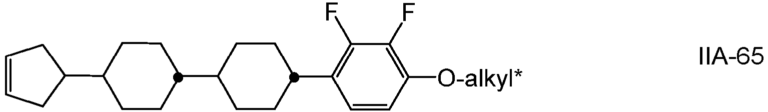 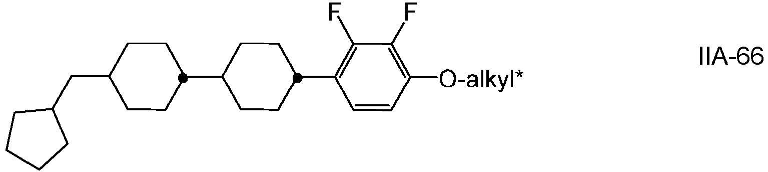 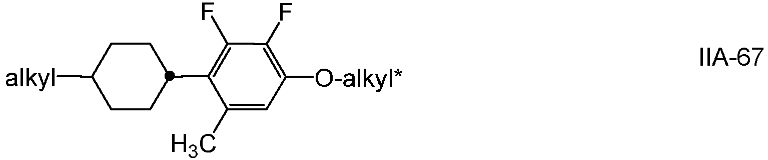 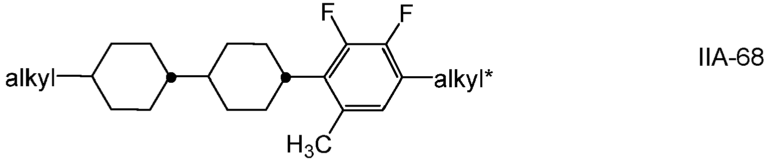 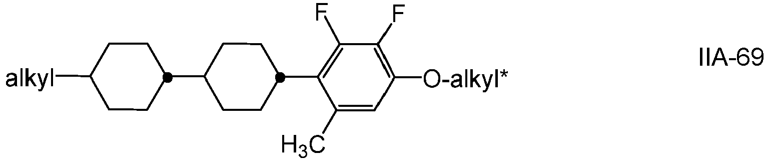 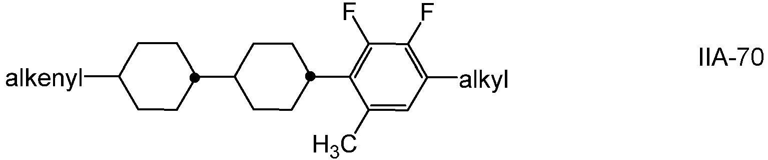 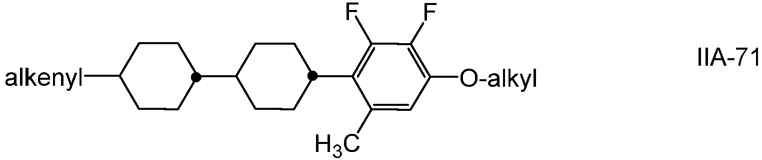 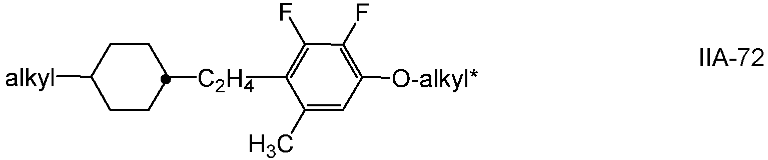 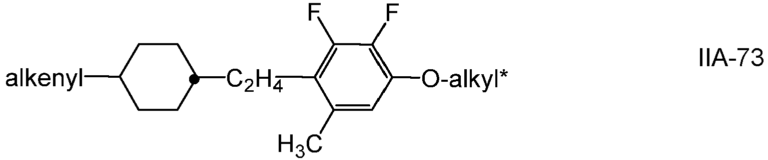 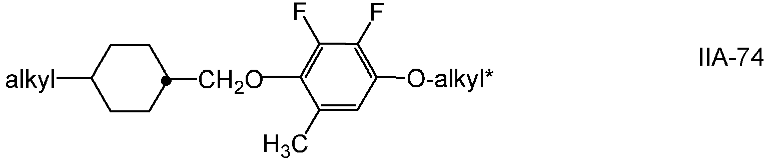 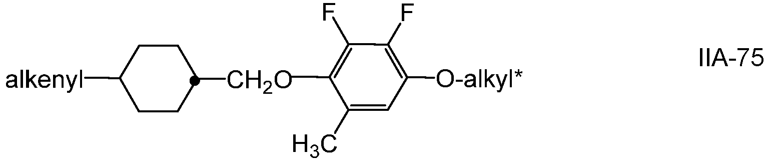 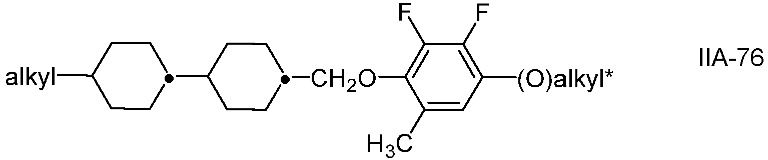 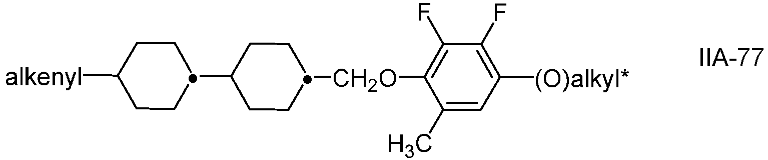 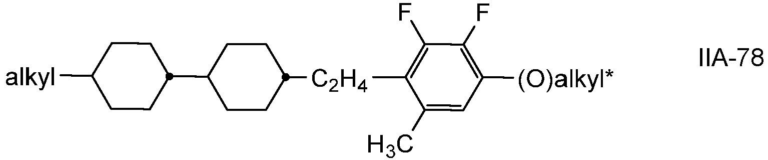 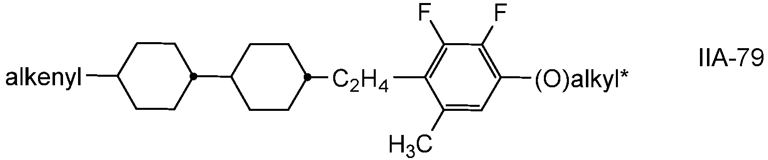 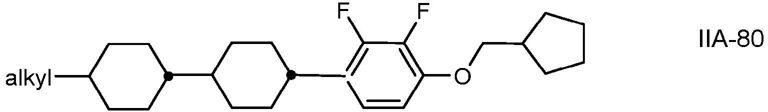 in which the index a denotes 1 or 2, alkyl and alkyl* each, independently of one another, denote a straight-chain alkyl radical having 1-6 C atoms, alkenyl denotes a straight-chain alkenyl radical having 2-6 C atoms, and (O) denotes an oxygen atom or a single bond, and alkenyl preferably denotes CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- or CH₃-CH=CH-(CH₂)₂-.

Particularly preferred LC media according to the invention comprise one or more compounds selected from the group consisting of formulae IIA-2, IIA-8, IIA-10, IIA-16, IIA-18, IIA-40, IIA-41, IIA-42 and IIA-43.

Preferred LC media additionally comprise one or more compounds of formula IIA-Y 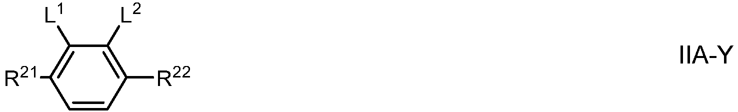 in which R²¹ and R²² have one of the meanings given in formula IIA above, and L¹ and L², identically or differently, denote F or Cl.

Preferred compounds of the formula IIA-Y are selected from the group consisting of the following subformulae 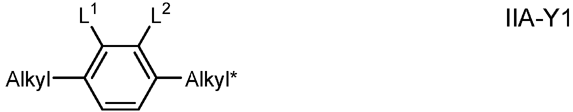 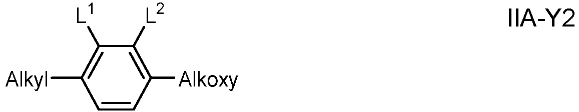 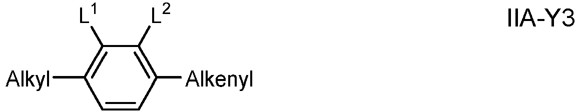 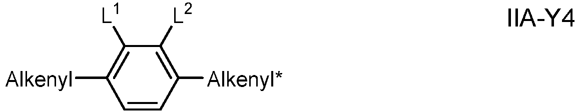 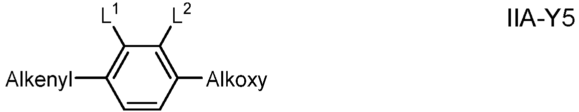 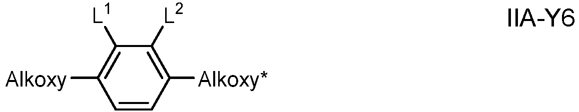 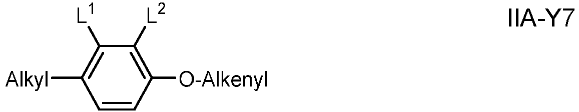 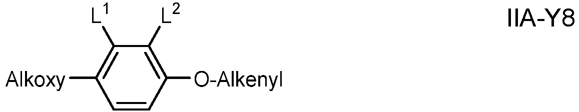 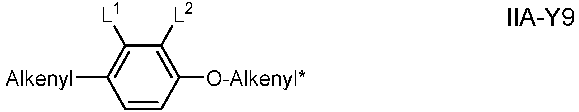 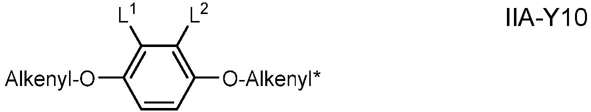 in which, Alkyl and Alkyl* each, independently of one another, denote a straight-chain alkyl radical having 1-6 C atoms, Alkoxy denotes a straight-chain alkoxy radical having 1-6 C atoms, Alkenyl and Alkenyl* each, independently of one another, denote a straight-chain alkenyl radical having 2-6 C atoms, and O denotes an oxygen atom or a single bond. Alkenyl and Alkenyl* preferably denote CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- or CH₃-CH=CH-(CH₂)₂-.

Particularly preferred compounds of the formula IIA-Y are selected from the group consisting of following subformulae: 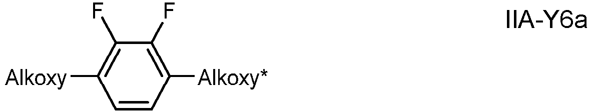 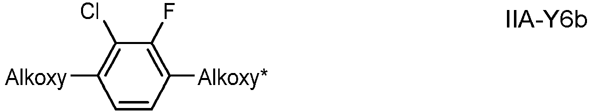 in which Alkoxy and Alkoxy* have the meanings defined above and preferably denote methoxy, ethoxy, n-propyloxy, n-butyloxy or n-pentyloxy.

In another preferred embodiment the LC medium comprises one or more compounds of the formula IIB selected from the group consisting of formulae IIB-1 to IIB-30, 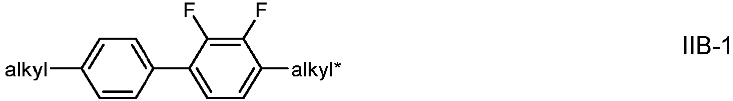 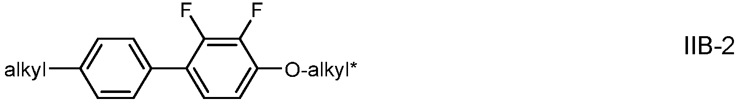 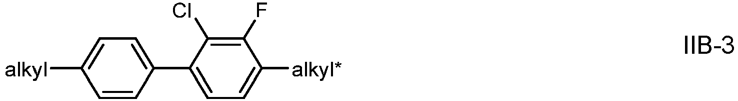 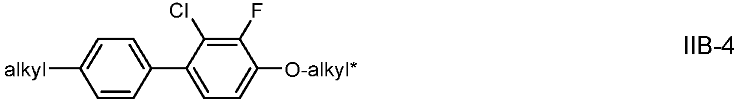 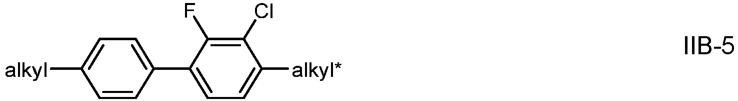 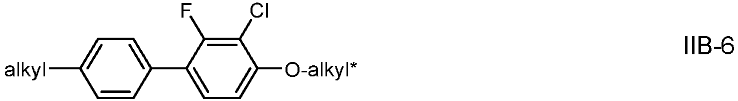 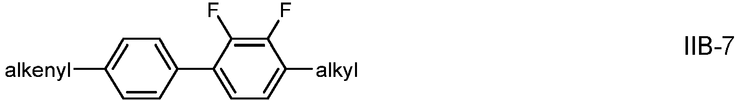 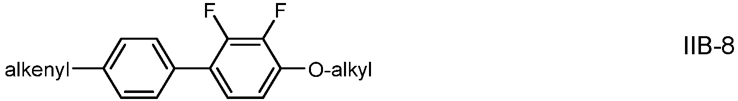 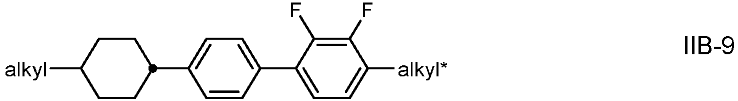 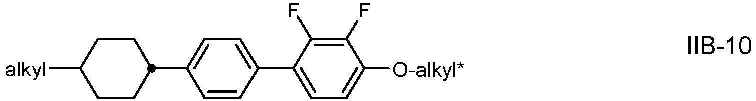 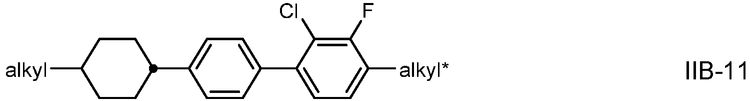 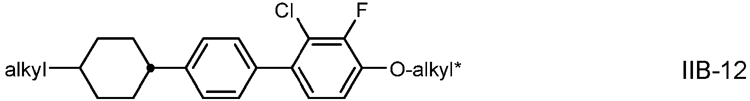 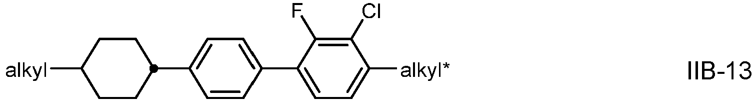 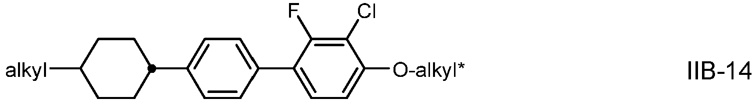 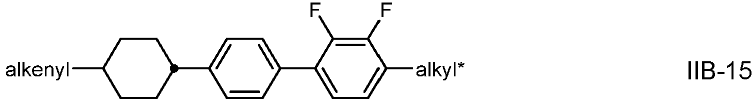 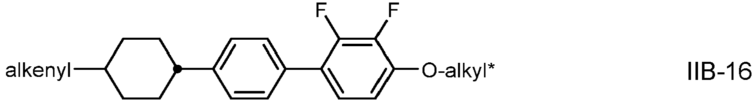 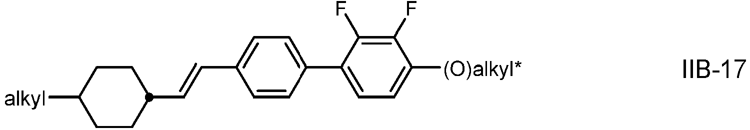 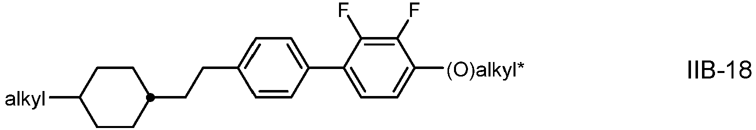 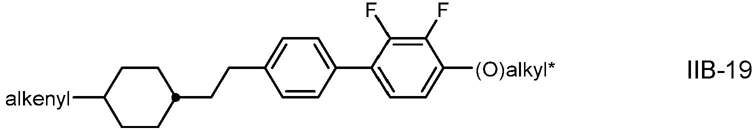 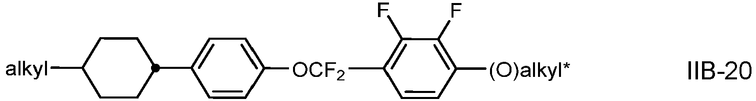 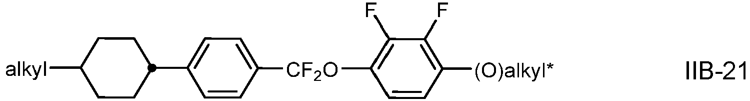 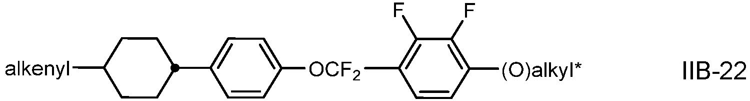 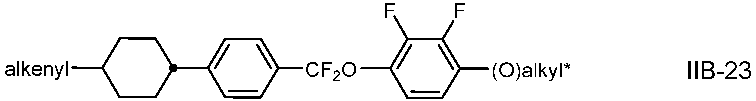 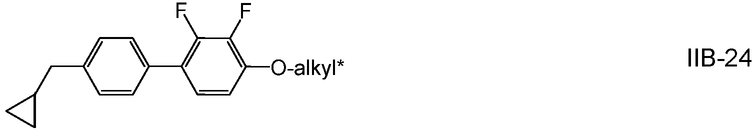 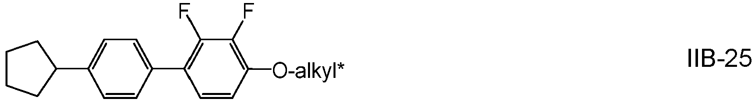 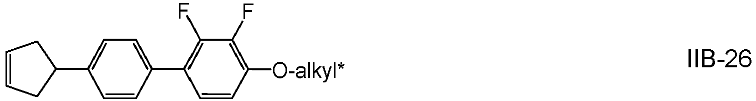 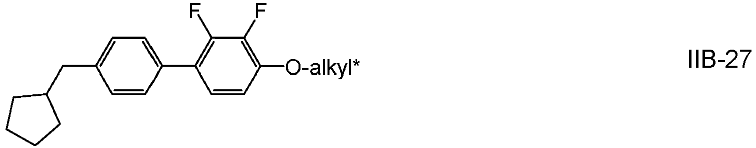 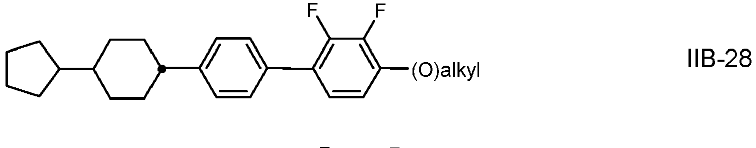 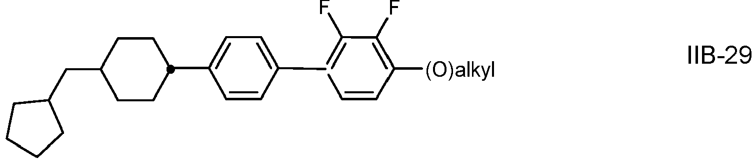 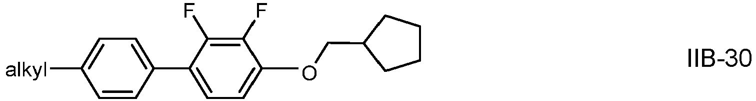 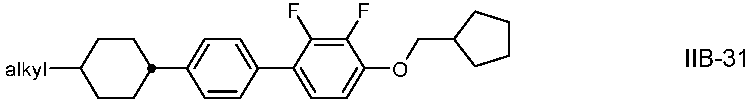 in which alkyl and alkyl* each, independently of one another, denote a straight-chain alkyl radical having 1-6 C atoms, alkenyl denotes a straight-chain alkenyl radical having 2-6 C atoms, and (O) denotes an oxygen atom or a single bond, and alkenyl preferably denotes CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- or CH₃-CH=CH-(CH₂)₂-.

Particularly preferred LC media according to the invention comprise one or more compounds selected from the group consisting of formulae IIB-2, IIB-10 and IIB-16.

In another preferred embodiment the LC medium comprises one or more compounds of the formula IIC selected from the formula IIC-1, 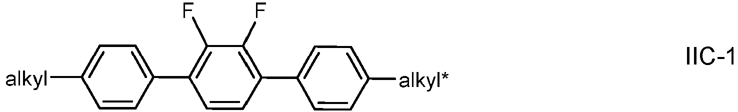 in which alkyl and alkyl* each, independently of one another, denote a straight-chain alkyl radical having 1-6 C atoms, preferably in amounts of 0.5% to 5 % by weight, in particular 1% to 3 % by weight.

In another preferred embodiment the LC medium comprises one or more compounds of the formula IID selected from the group consisting of the following formulae, 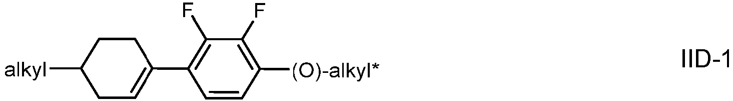 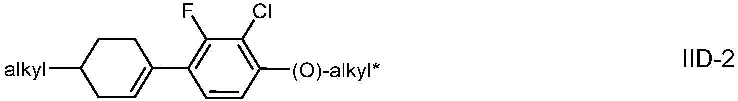 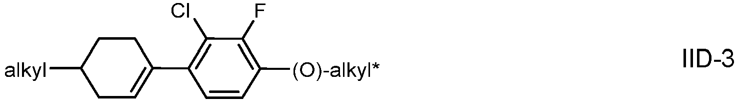 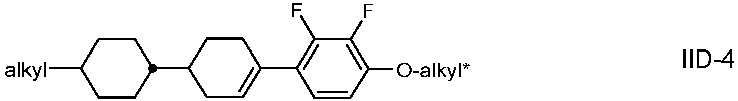 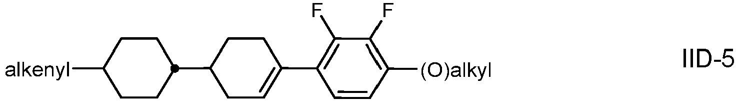 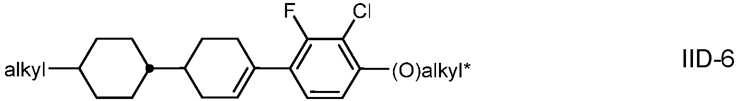 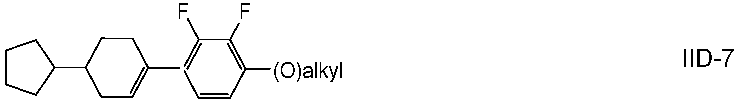 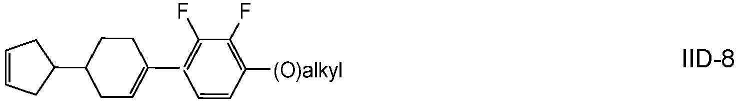 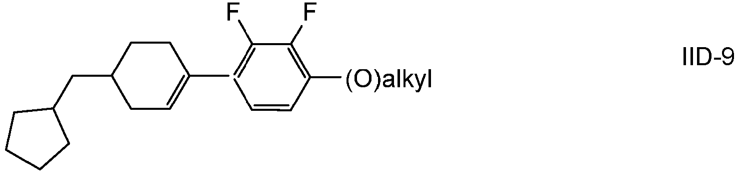 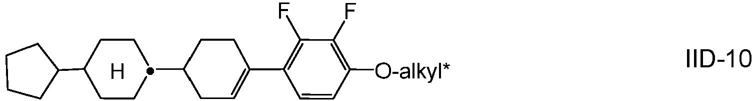 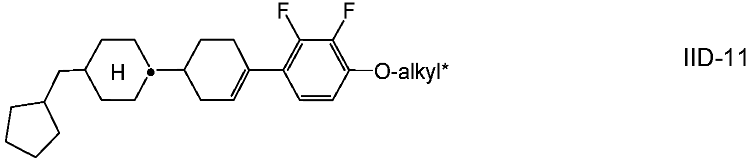 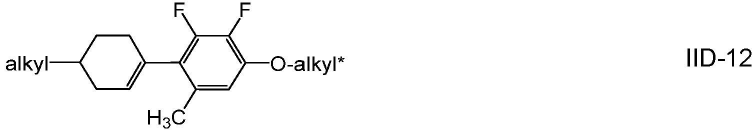 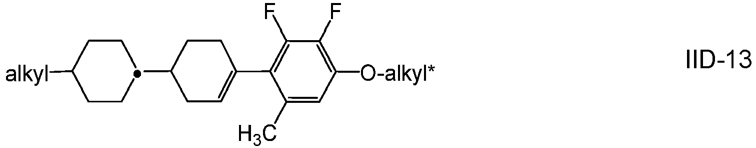 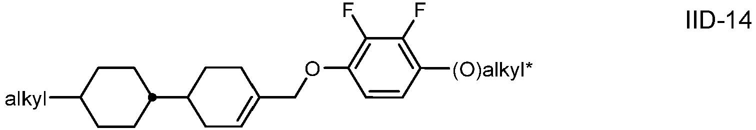 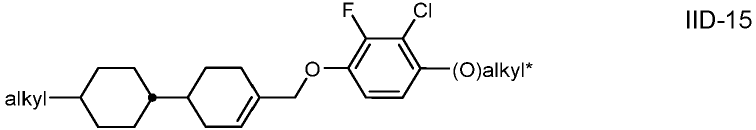 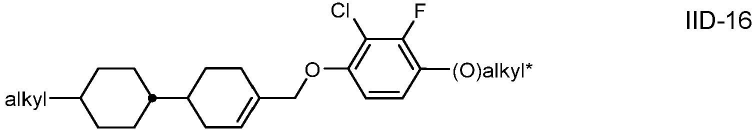 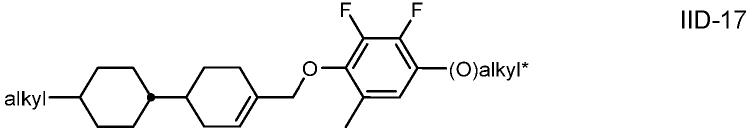 in which alkyl and alkyl* each, independently of one another, denote a straight-chain alkyl radical having 1-6 C atoms, alkenyl denotes a straight-chain alkenyl radical having 2-6 C atoms, and (O) denotes an oxygen atom or a single bond, and alkenyl preferably denotes CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- or CH₃-CH=CH-(CH₂)₂-.

Particularly preferred LC media according to the invention comprise one or more compounds of the formula IID-1 and/or IID-4.

In a preferred embodiment the LC medium comprises one or more compounds of the formula IIE selected from the group consisting of the following formulae: 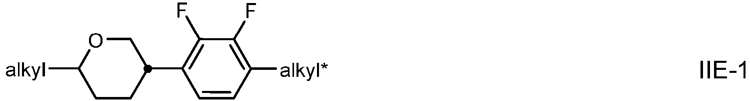 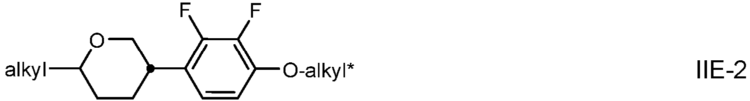 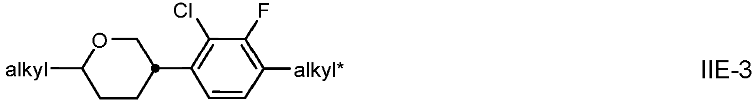 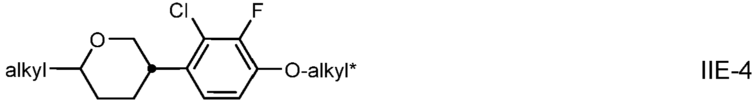 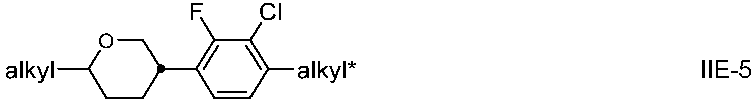 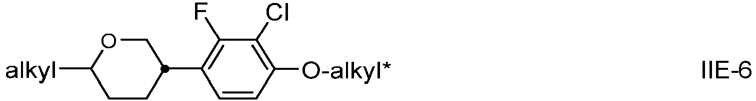 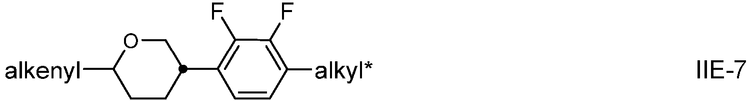 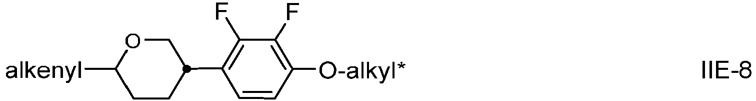 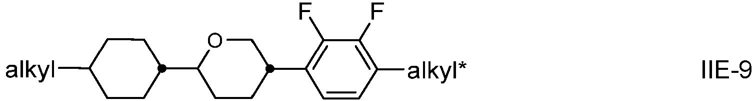 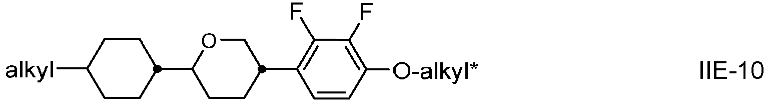 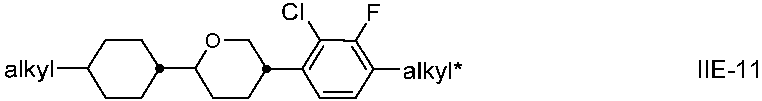 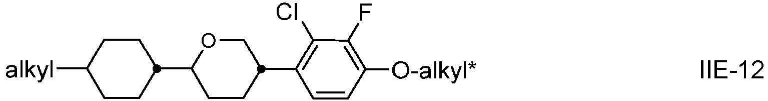 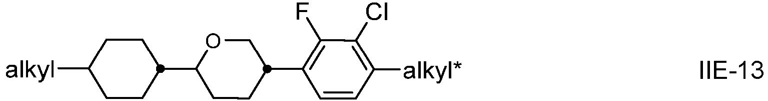 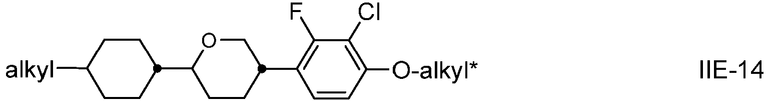 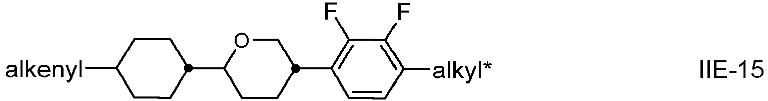 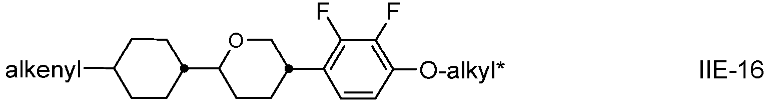 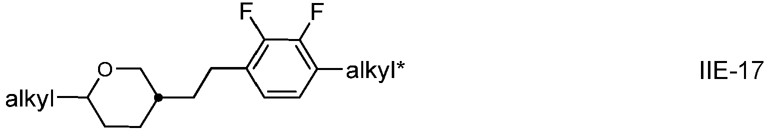 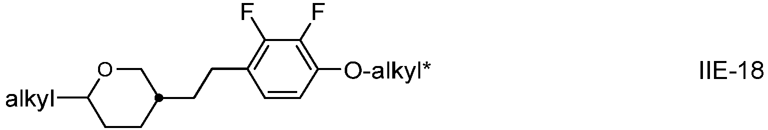 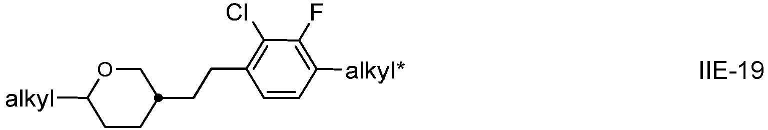 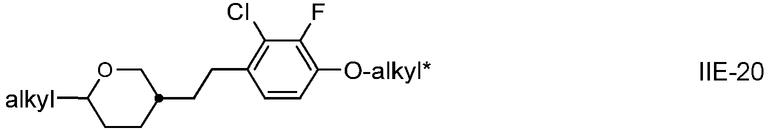 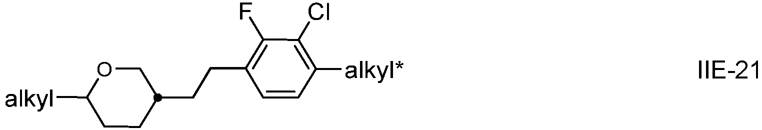 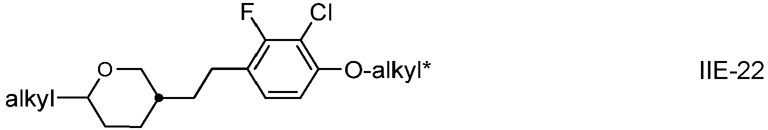 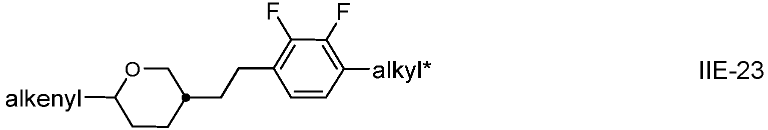 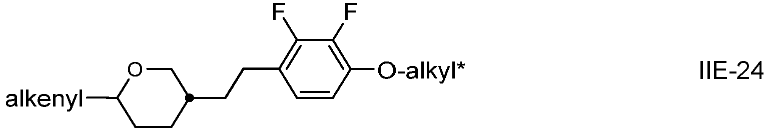 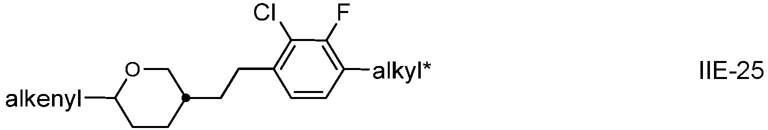 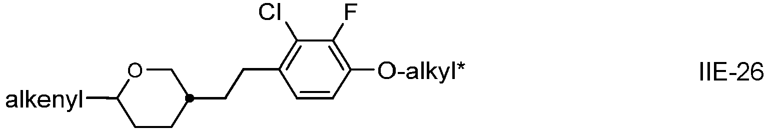 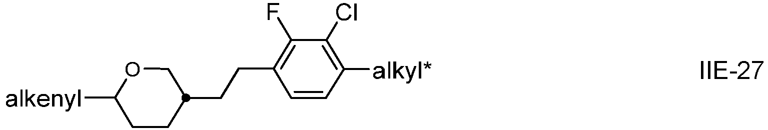 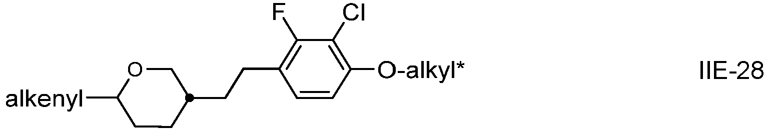 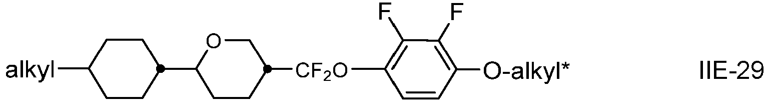 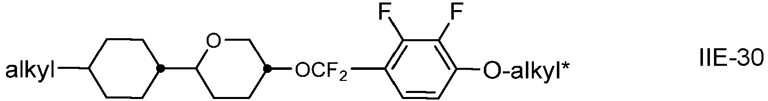 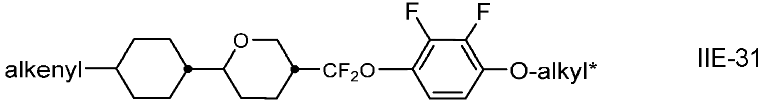 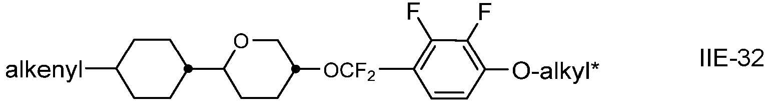 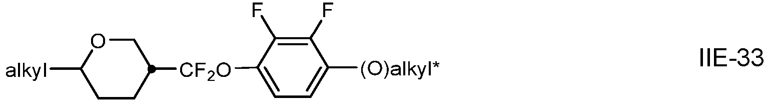 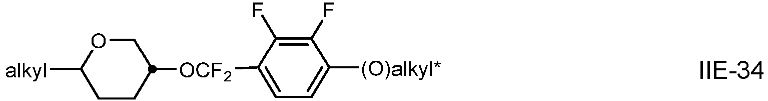 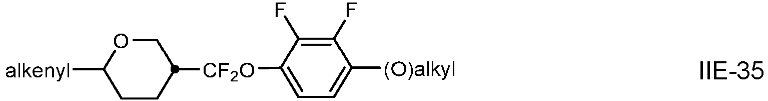 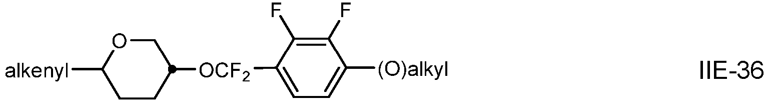 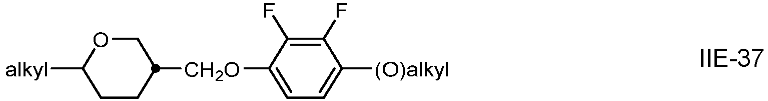 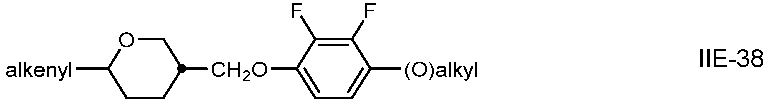 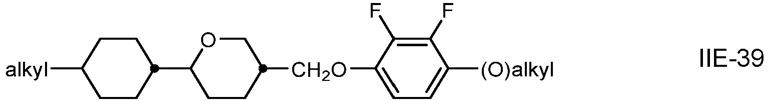 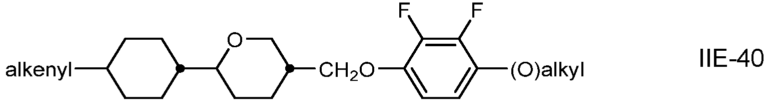 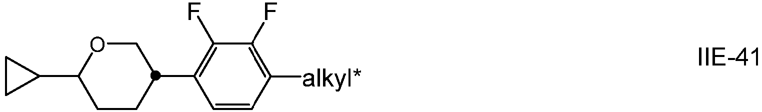 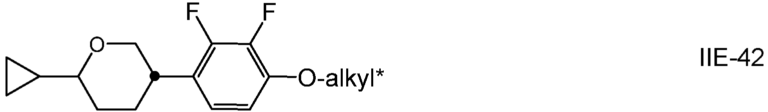 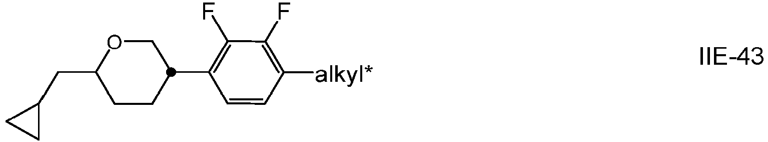 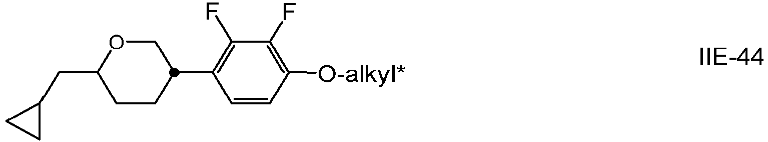 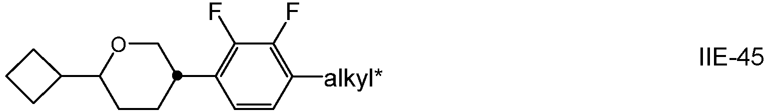 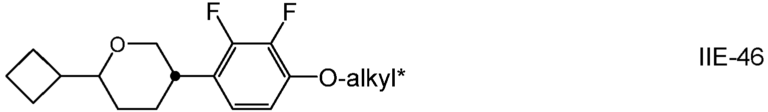 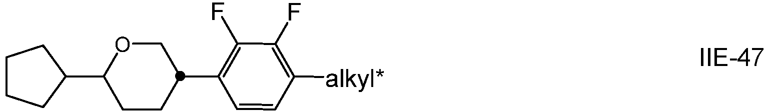 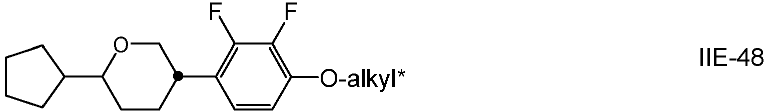 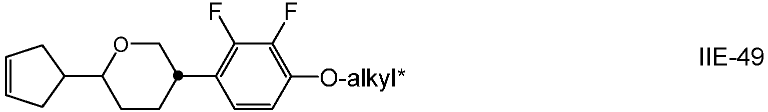 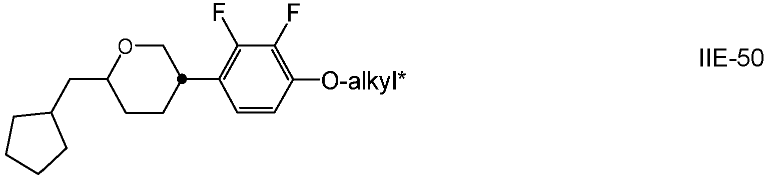 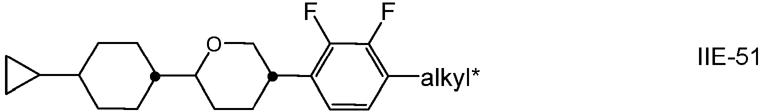 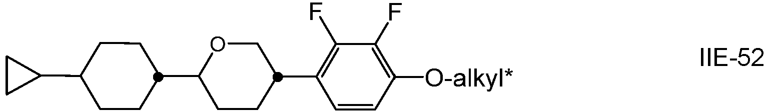 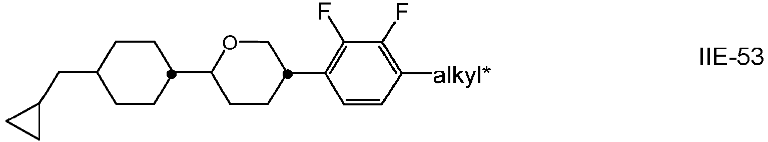 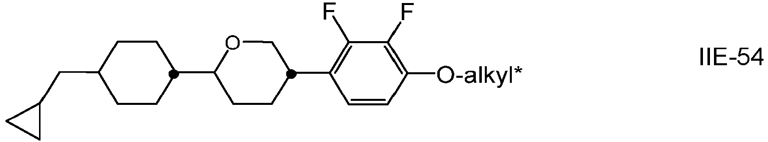 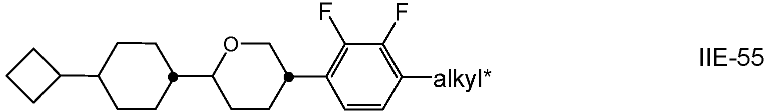 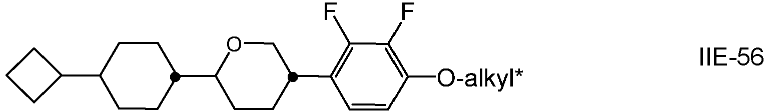 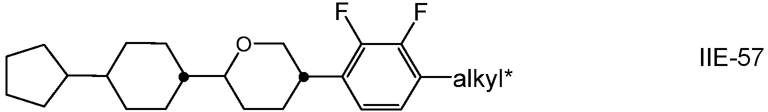 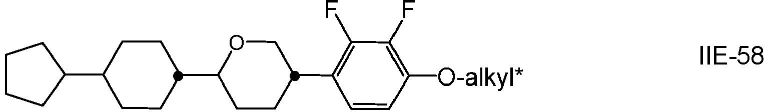 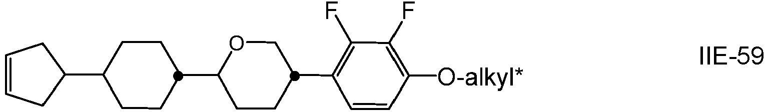 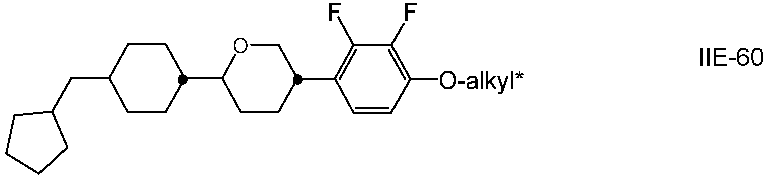 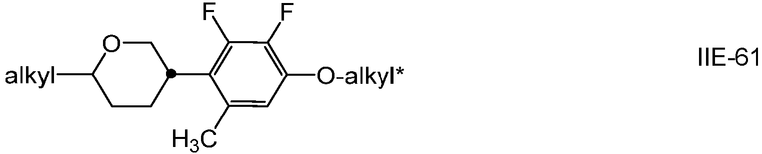 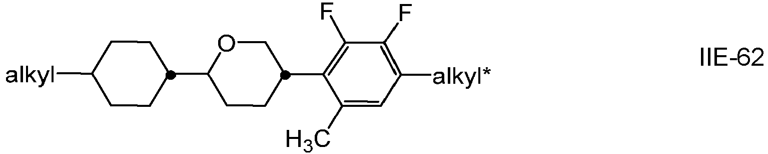 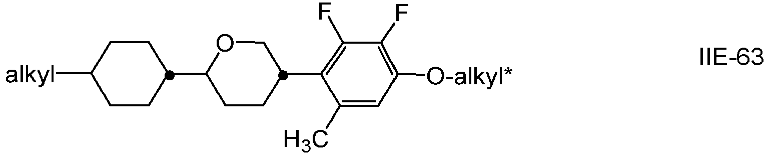 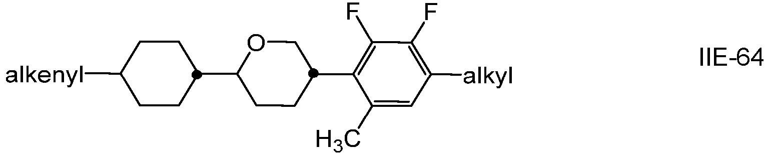 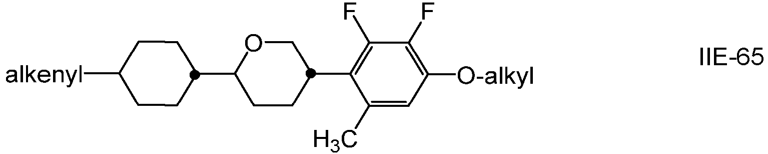 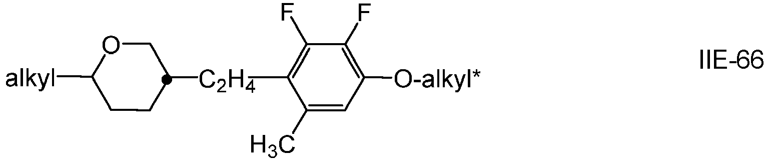 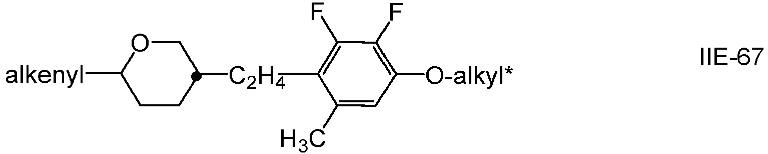 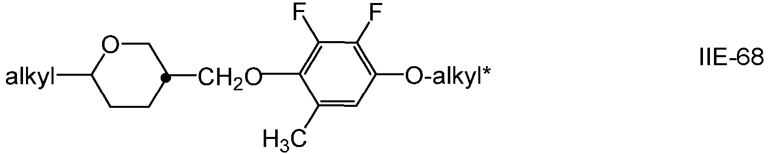 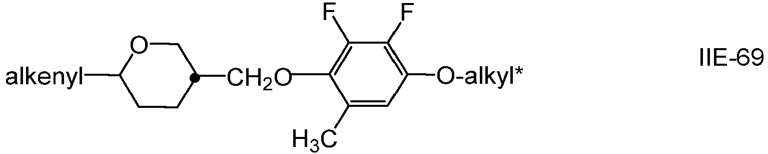 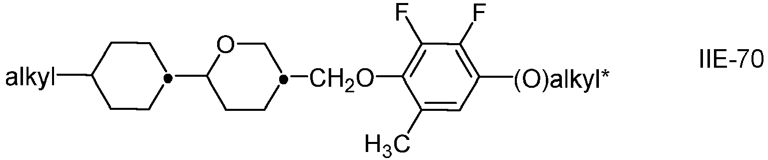 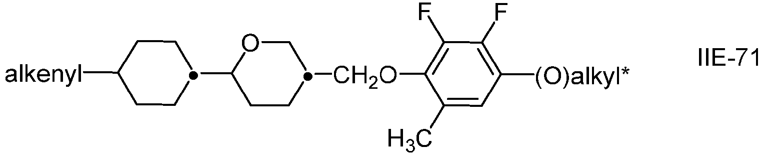 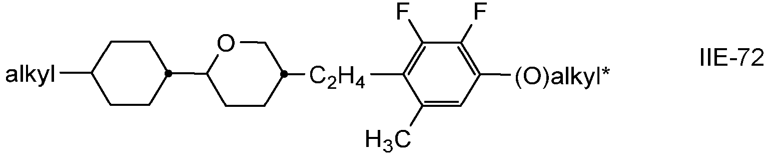 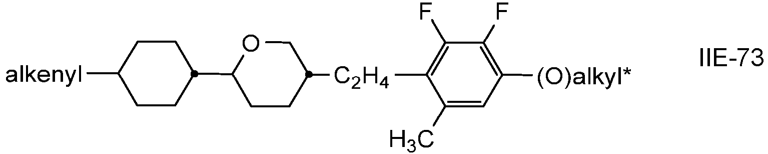 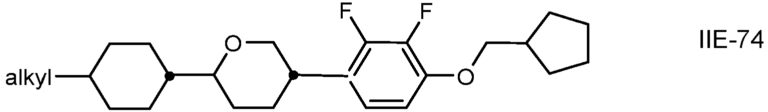 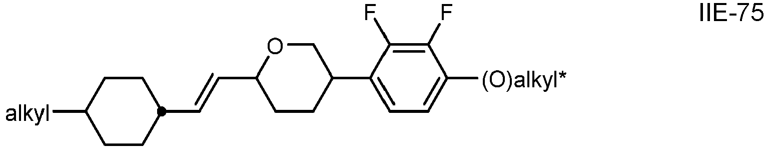 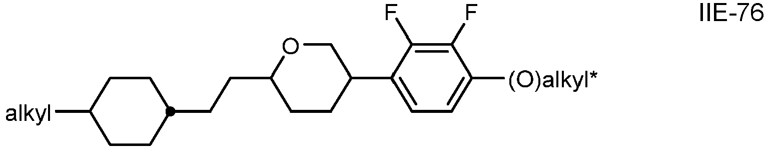 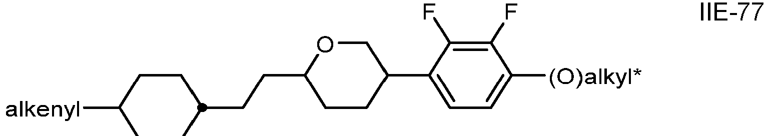 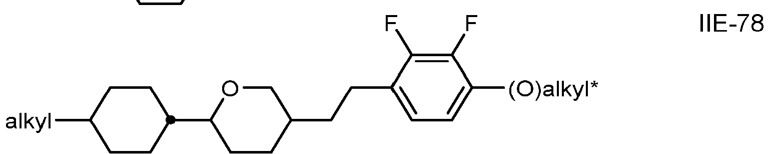 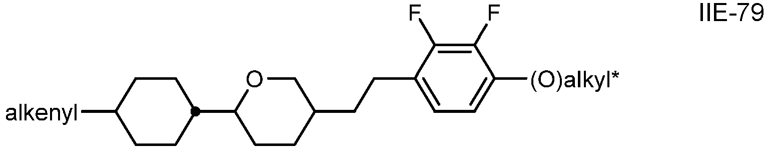 in which the index a denotes 1 or 2, alkyl and alkyl* each, independently of one another, denote a straight-chain alkyl radical having 1-6 C atoms, alkenyl denotes a straight-chain alkenyl radical having 2-6 C atoms, and (O) denotes an oxygen atom or a single bond, and alkenyl preferably denotes CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- or CH₃-CH=CH-(CH₂)₂-.

Particularly preferred LC media according to the invention comprise one or more compounds selected from the group consisting of formulae IIE-2, IIE-8, IIE-10, IIE-16, IIE-18, IIE-37, IIE-38, IIE-39 and IIE-40.

Very preferred compounds of the formula IID are selected from the following subformulae of IID-1, 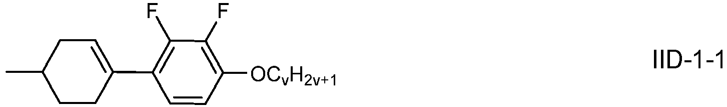 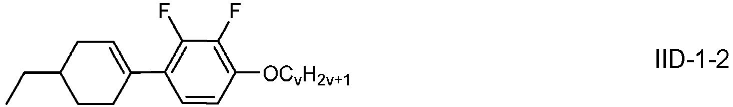 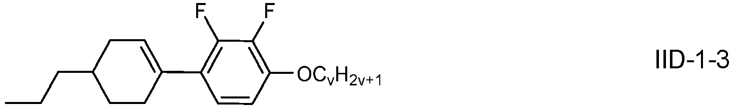 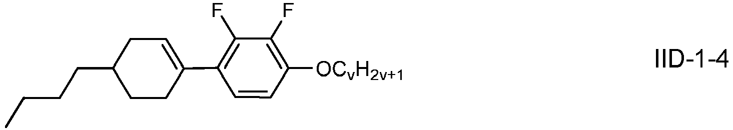 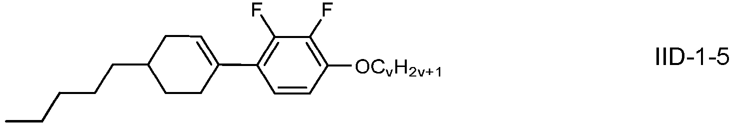 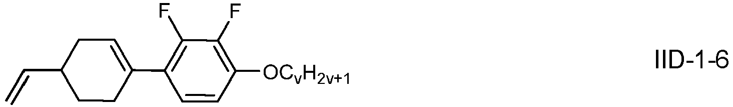 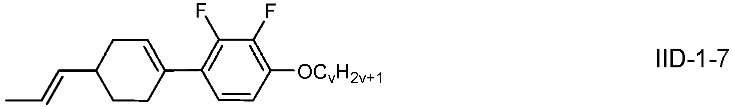 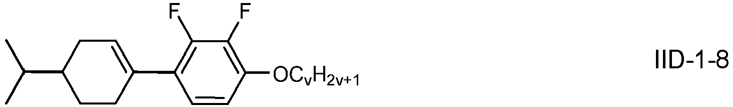 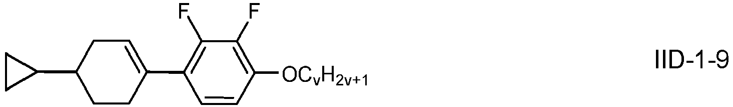 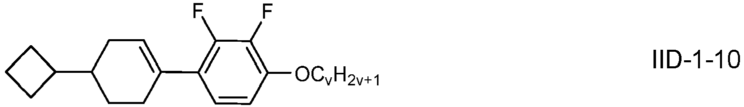 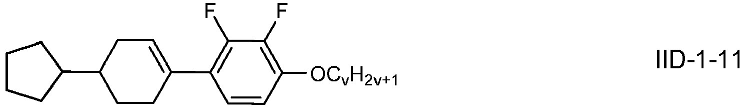 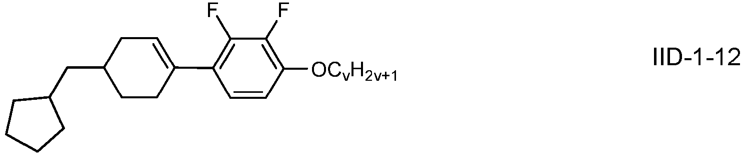 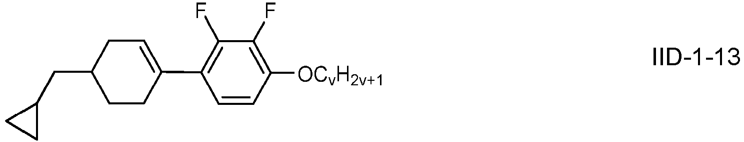 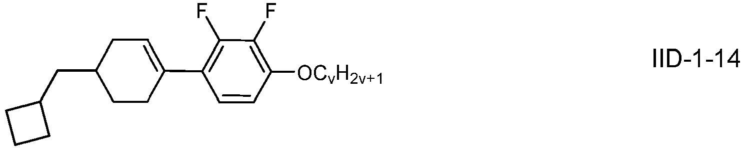 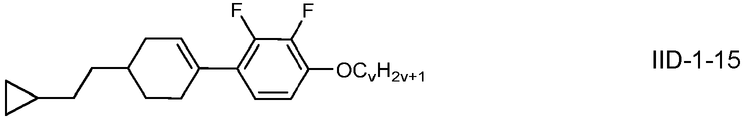 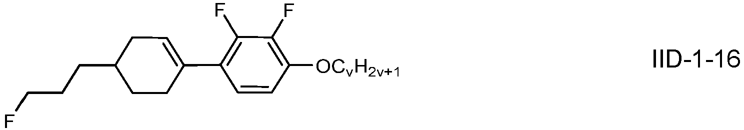 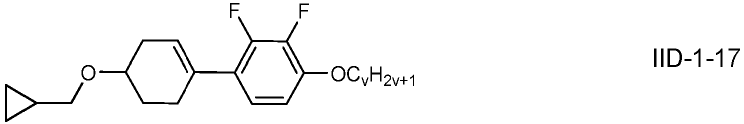 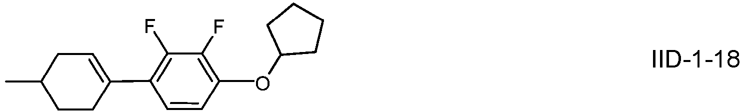 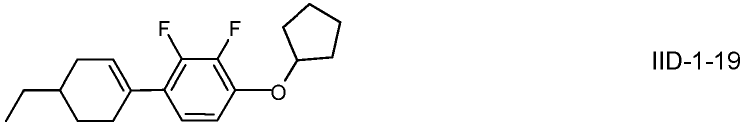 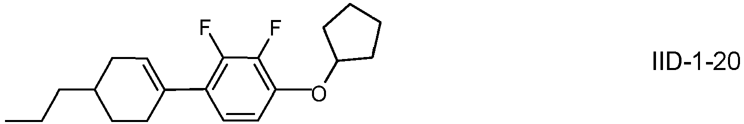 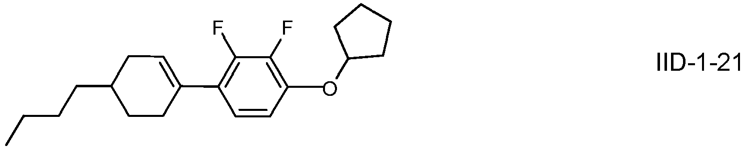 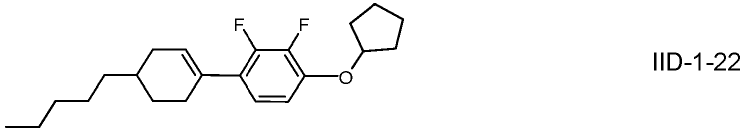 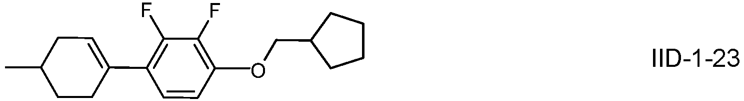 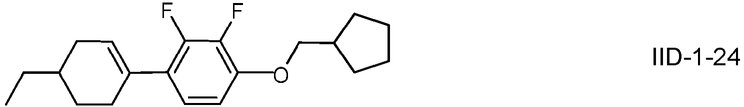 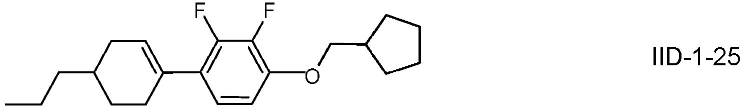 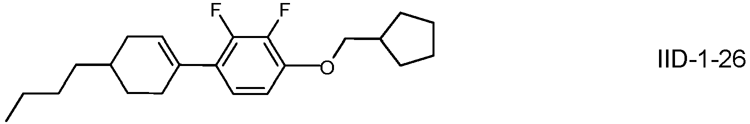 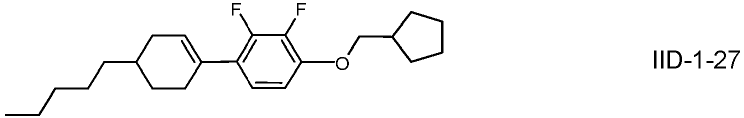 wherein v is 1, 2, 3, 4, 5 or 6.

Very preferred compounds of the formula IID are selected from the following subformulae of IID-4, 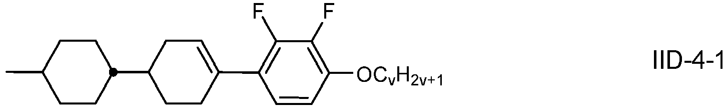 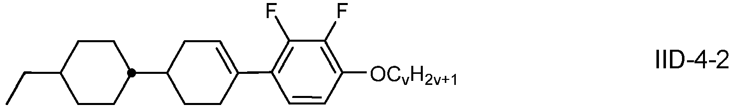 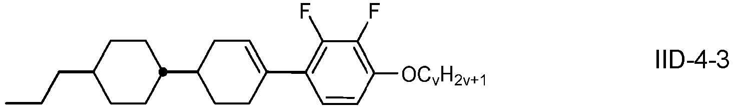 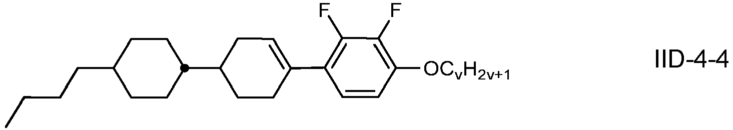 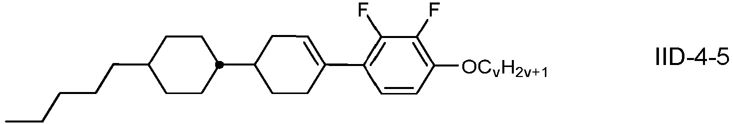 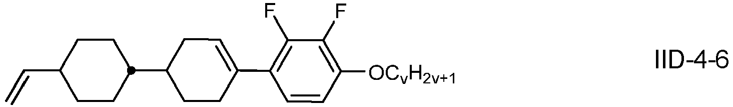 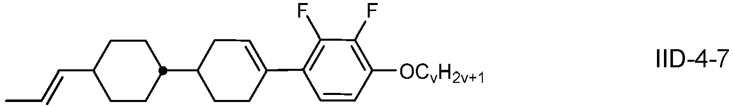 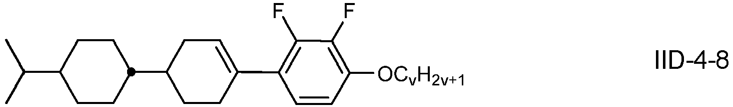 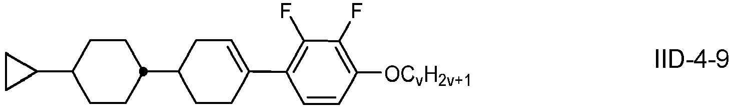 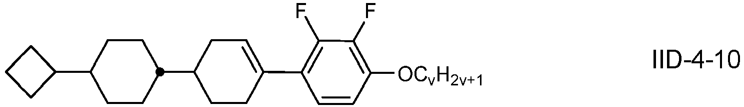 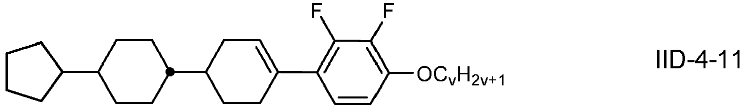 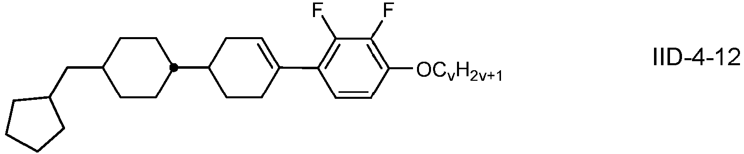 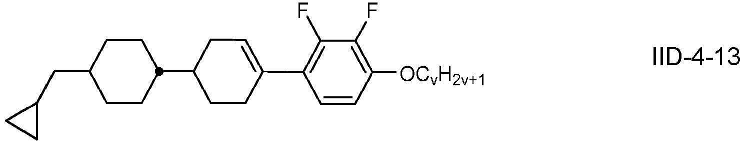 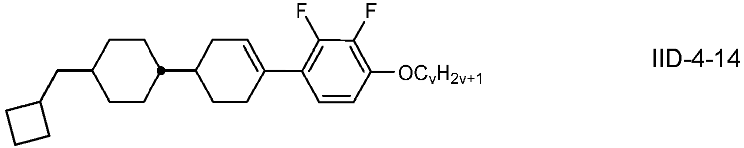 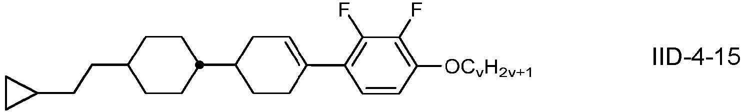 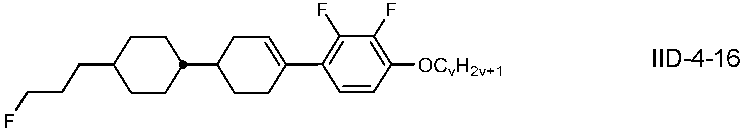 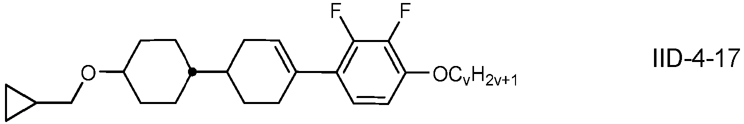 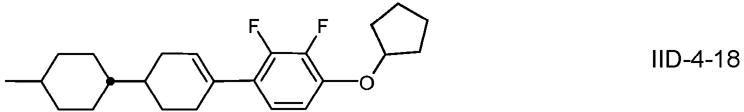 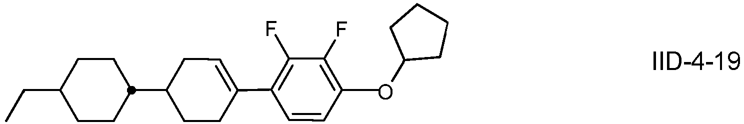 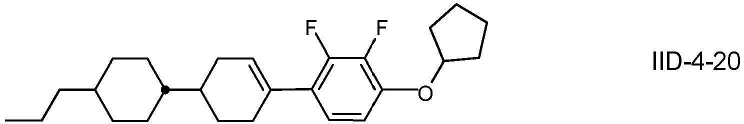 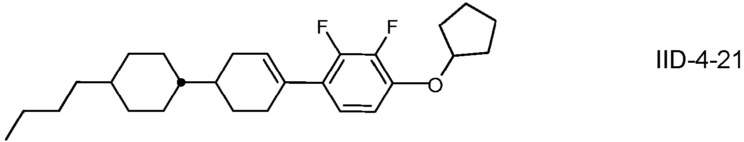 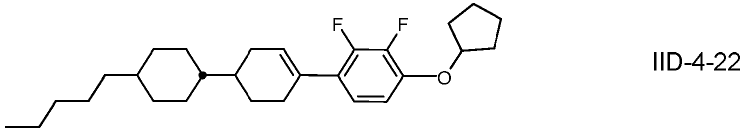 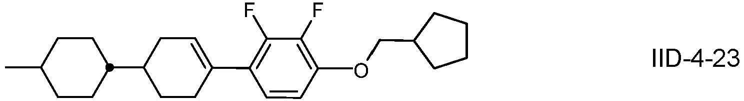 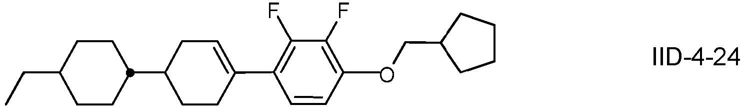 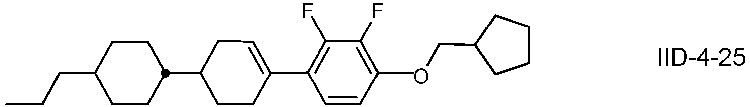 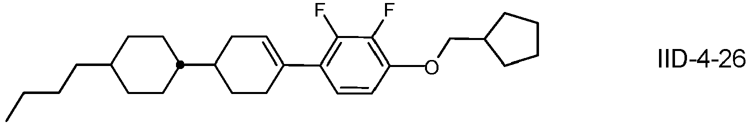 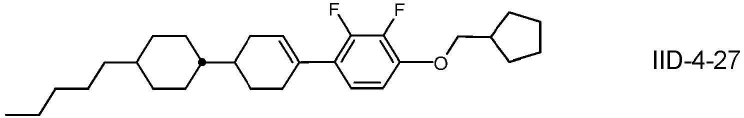 wherein v is 1, 2, 3, 4, 5 or 6.

Very preferred compounds of the formula IID are selected from the following subformulae of IID-14, 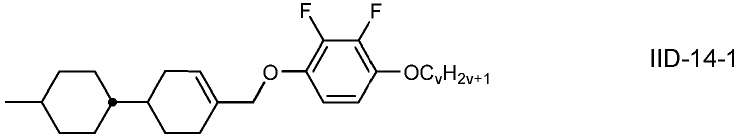 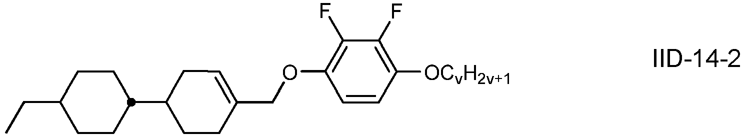 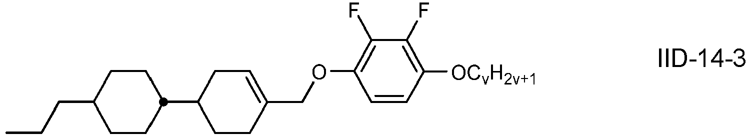 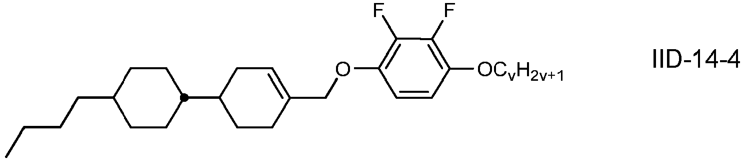 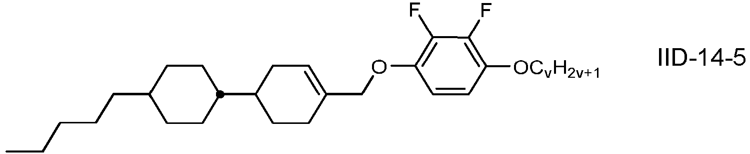 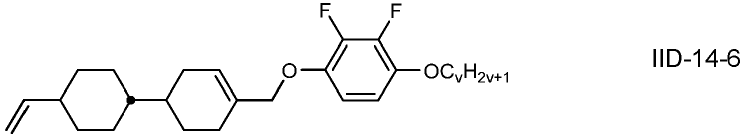 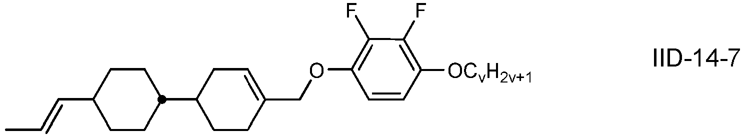 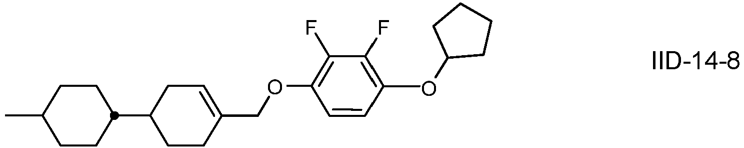 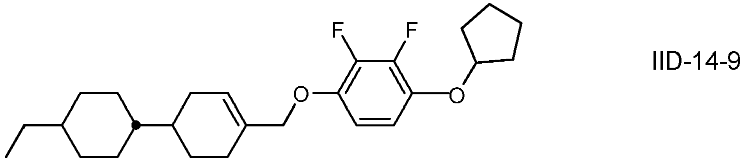 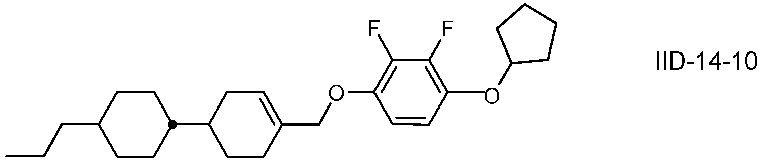 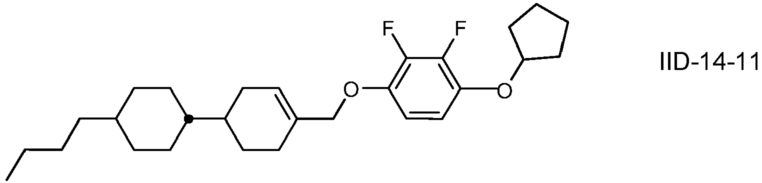 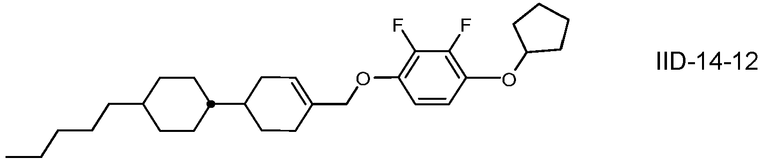 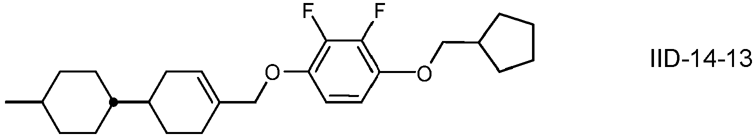 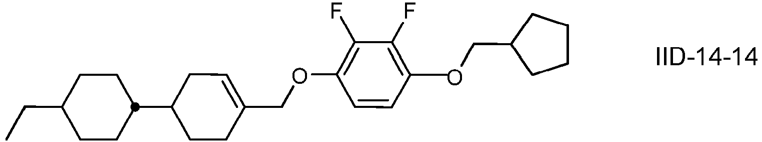 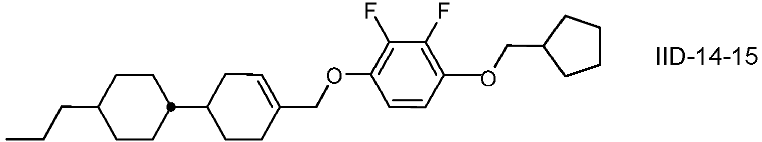 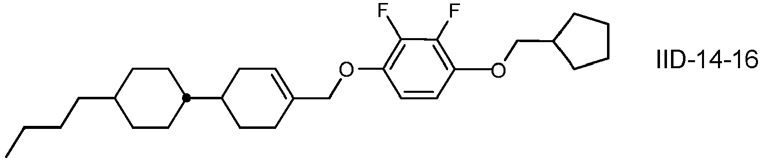 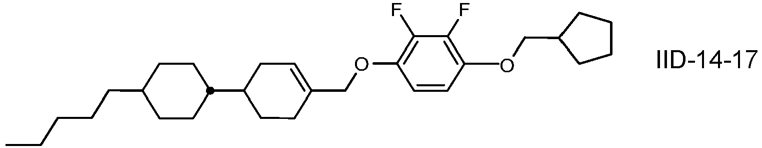 wherein v is 1, 2, 3, 4, 5 or 6.

Very preferred compounds of the formula IID are selected from the following subformulae of IID-17, 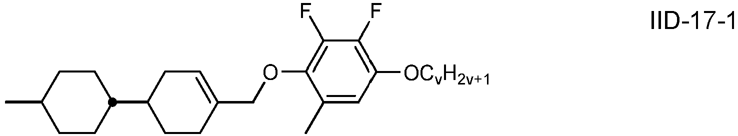 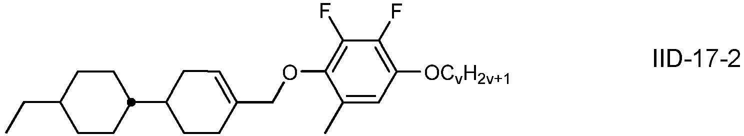 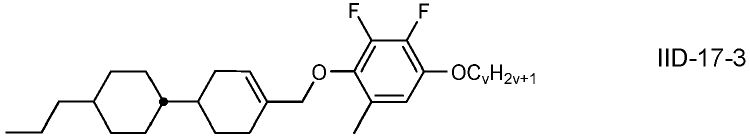 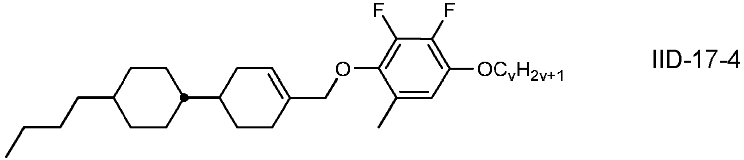 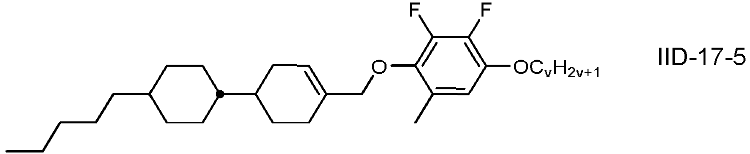 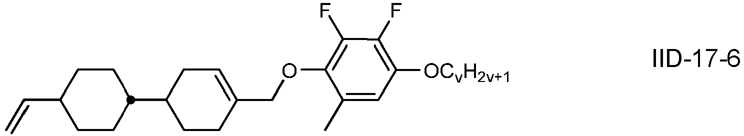 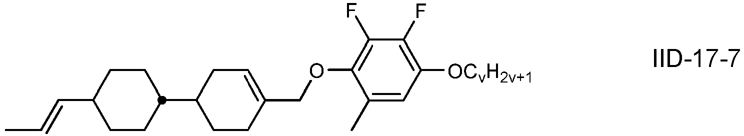 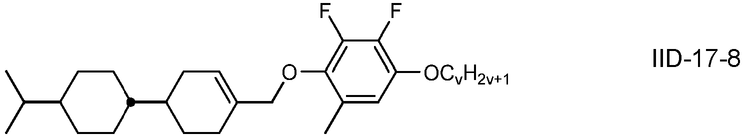 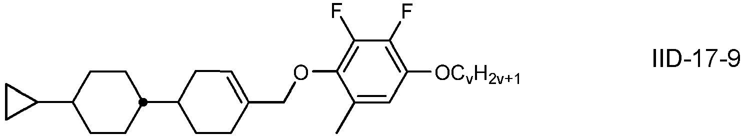 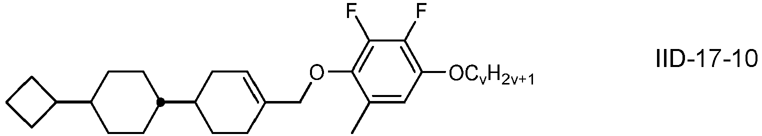 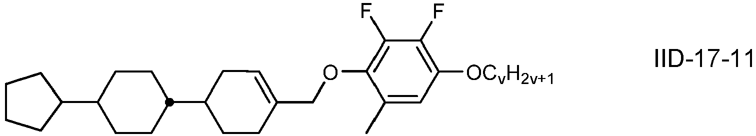 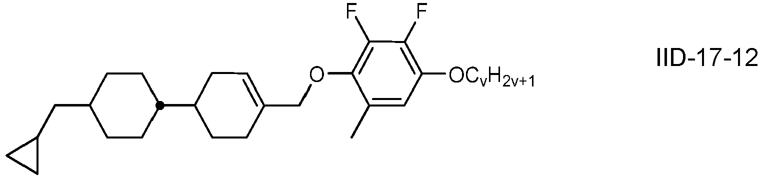 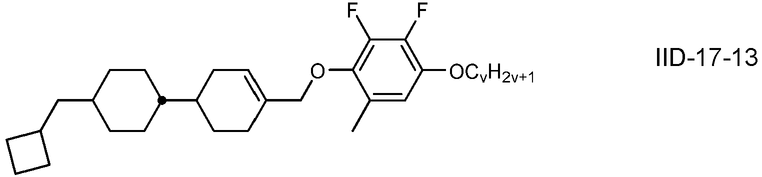 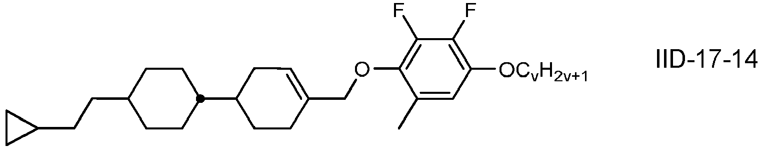 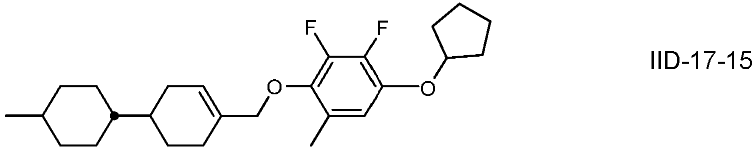 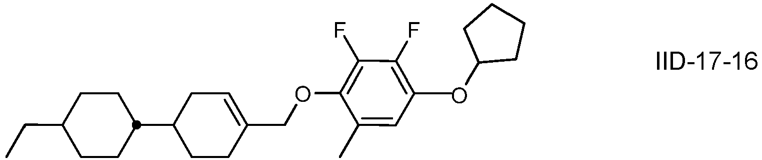 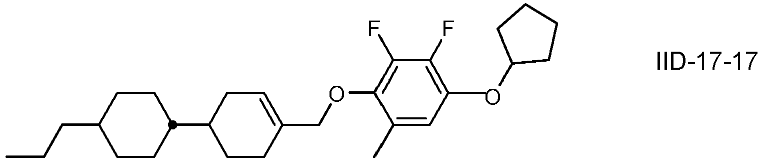 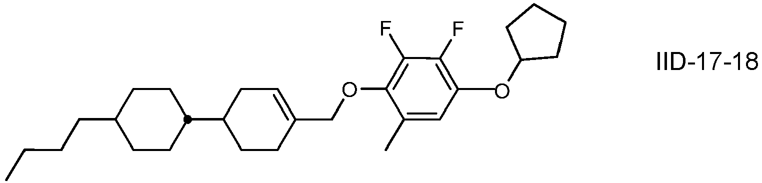 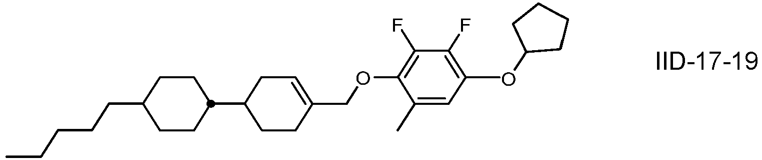 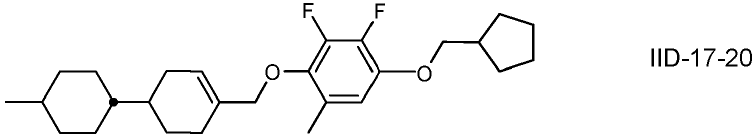 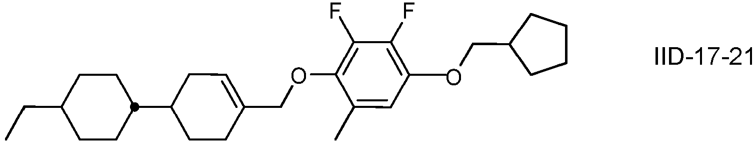 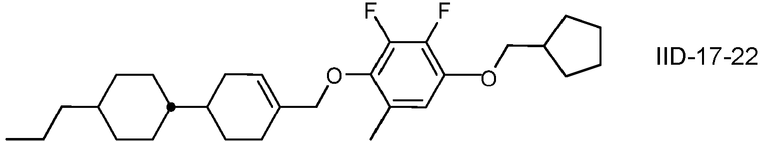 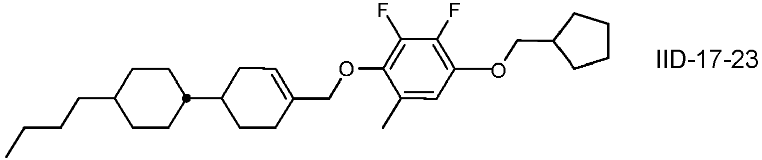 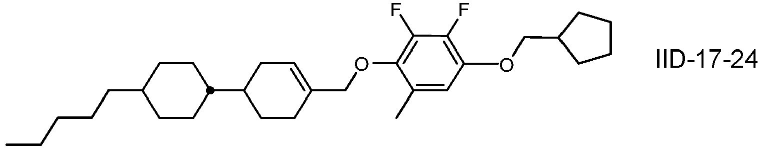 wherein v is 1, 2, 3, 4, 5 or 6.

In a preferred embodiment, the LC medium comprises one or more compounds of formula IID-14a 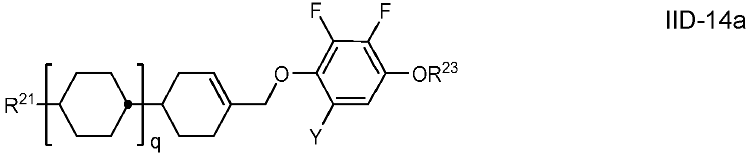 in which R²¹, Y and q have the meanings given in formula IID, and R²³ is 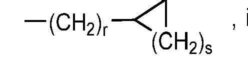 in which r is 0, 1, 2, 3, 4, 5 or 6 and s is 1, 2 or 3.

Preferred compounds of formula IID-14a are the compounds IID-14a-1 to IID-14a-14:

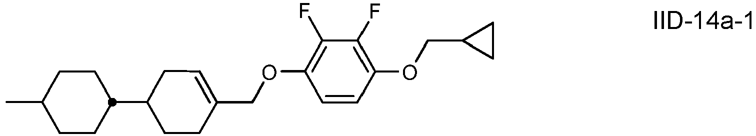

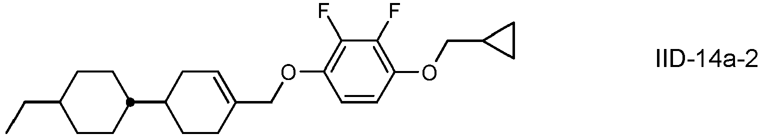

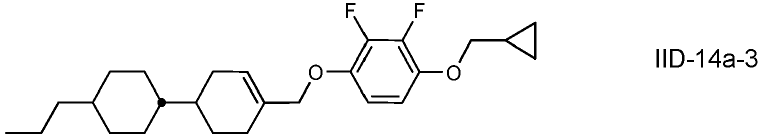

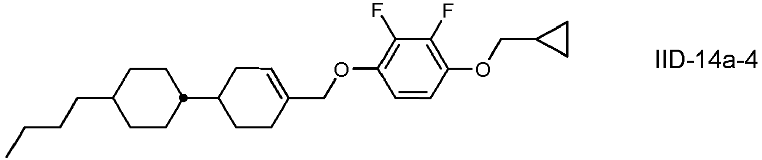

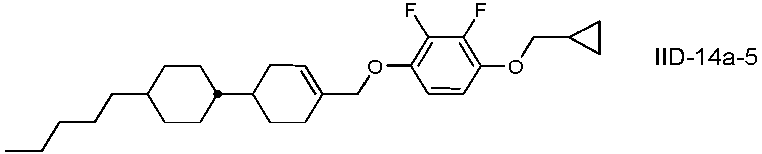

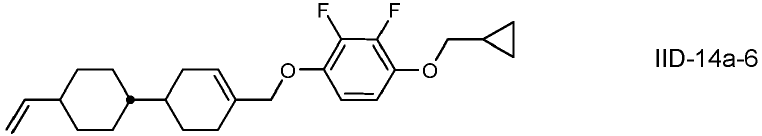

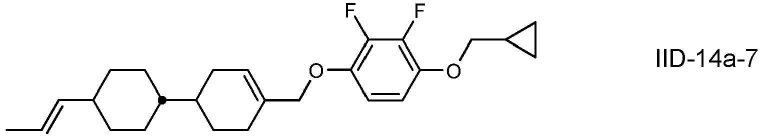

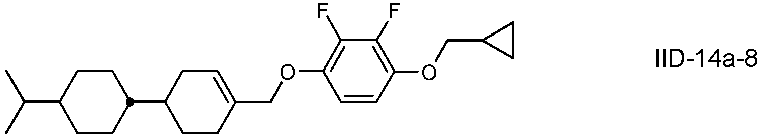

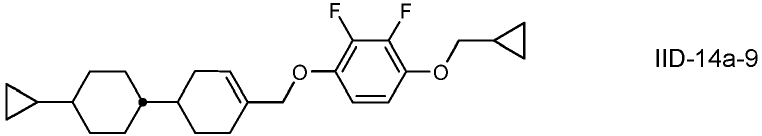

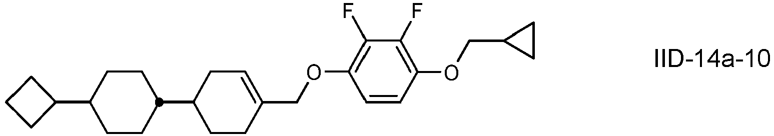

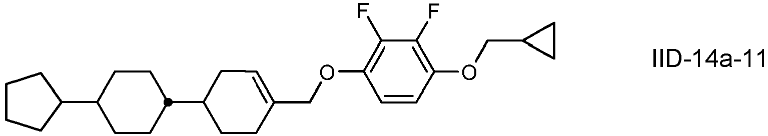

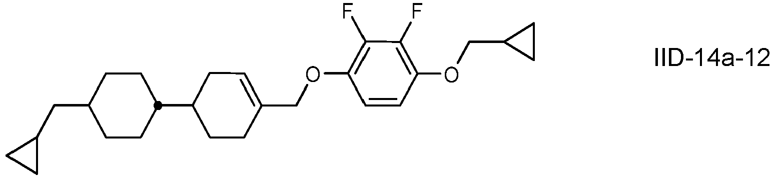

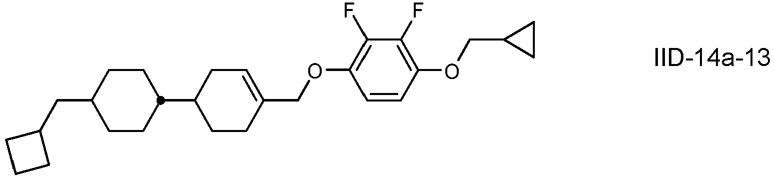

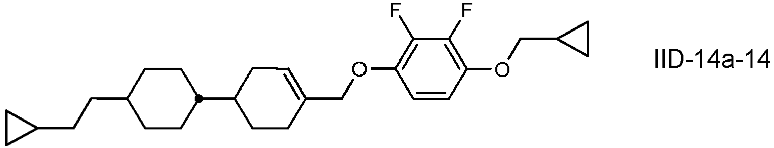

Particularly preferred LC media according to the invention comprise one or more compounds selected from the formulae IIA-2, IIA-8, IIA-10, IIA-16, IIA-18, IIA-40, IIA-41, IIA-42, IIA-43, IIB-2, IIB-10, IIB-16, IIC-1, IID-4, IID-10, IIE-2, IIE-8, IIE-10, IIE-16, IIE-18, IIE-37, IIE-38, IIE-39, and IIE-40 or their subformulae.

The proportion of compounds of the formulae IIA and/or IIB in the mixture as a whole is preferably at least 20 % by weight.

Preferably, the LC medium comprises one or more compounds of the formula IIA-2 selected from the following subformulae:

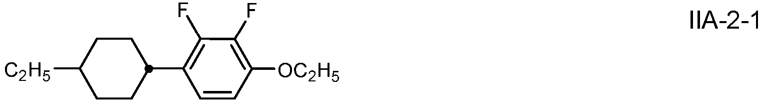

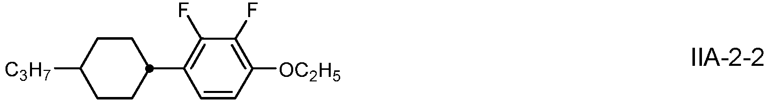

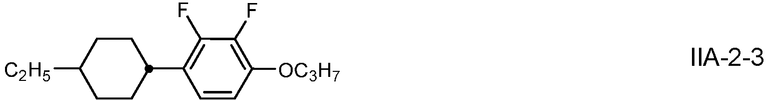

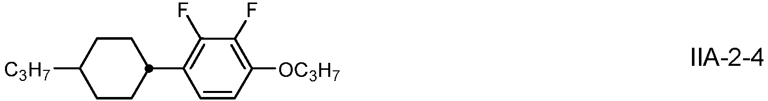

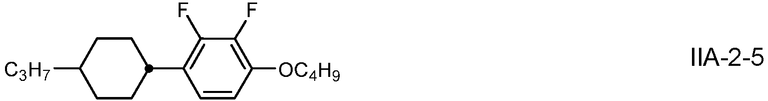

Alternatively, preferably in addition to the compounds of the formulae IIA-2-1 to IIA-2-5, the LC medium comprises one or more compounds of the following formulae:

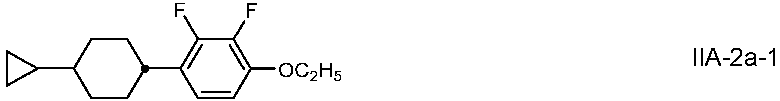

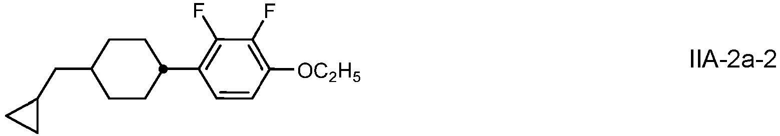

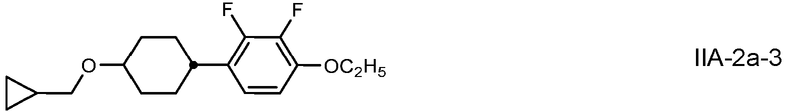

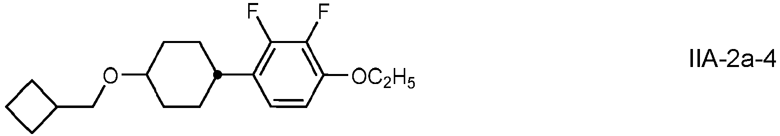

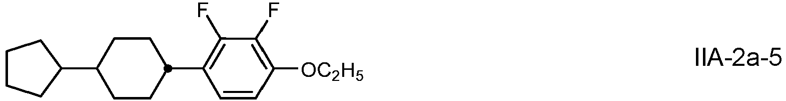

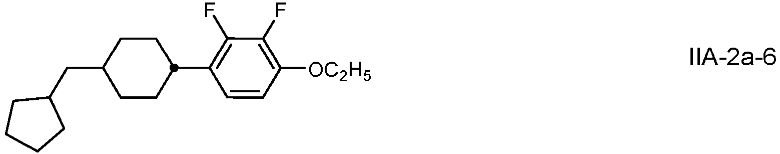

Further preferably, the LC medium comprises one or more compounds of the formula IIA-10 selected from the following sub-formulae:

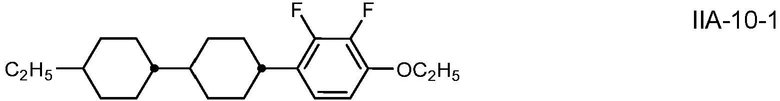

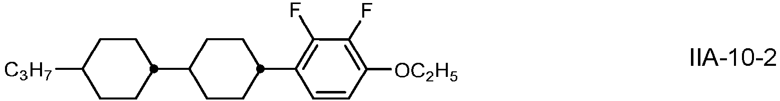

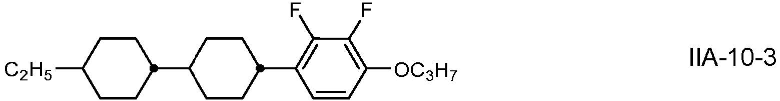

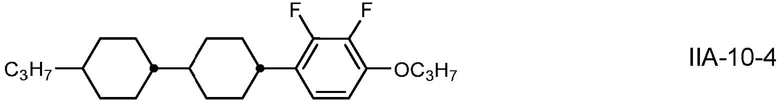

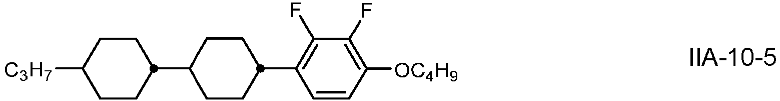

Alternatively, preferably in addition to the compounds of the formulae IIA-10-1 to IIA-10-5, the LC medium comprises one or more compounds of the following formulae:

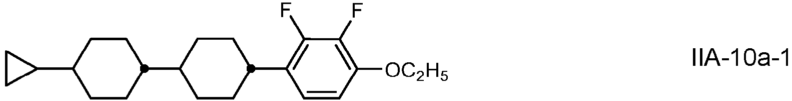

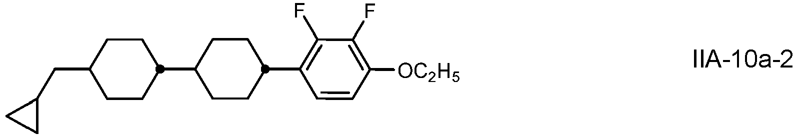

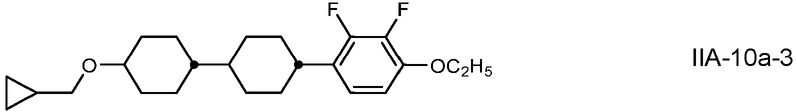

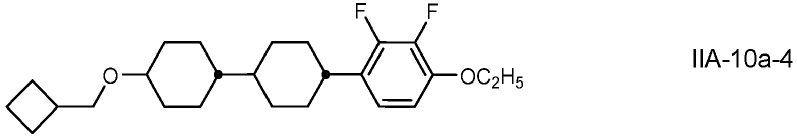

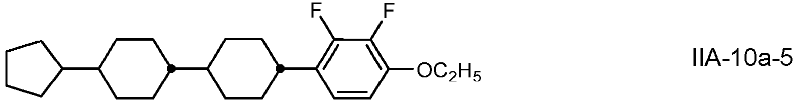

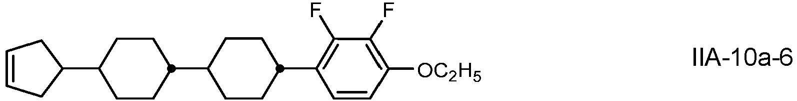

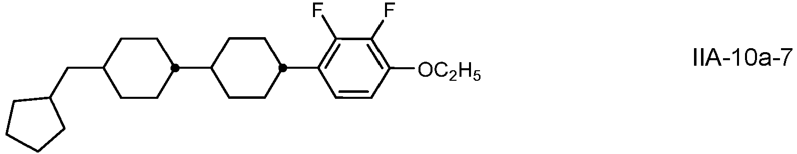

Preferably, the LC medium comprises one or more compounds of the formula IIB-10 selected from the following sub-formulae:

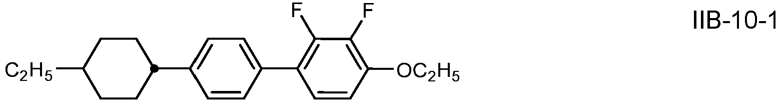

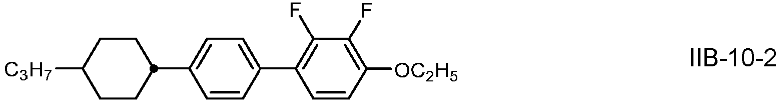

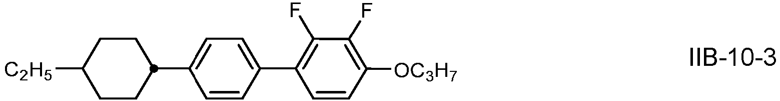

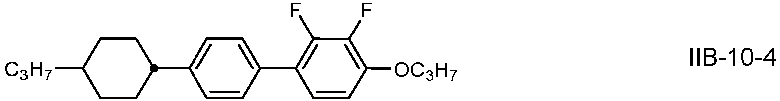

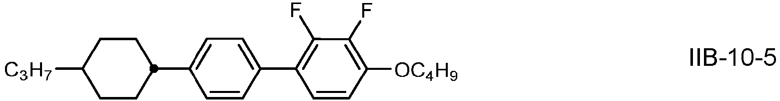

Alternatively, preferably in addition to the compounds of the formulae IIB-10-1 to IIB-10-5, the LC medium comprises one or more compounds of the formulae IIB-10a-1 to IIB-10a-5: 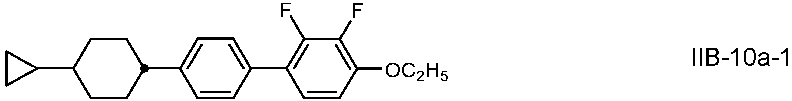 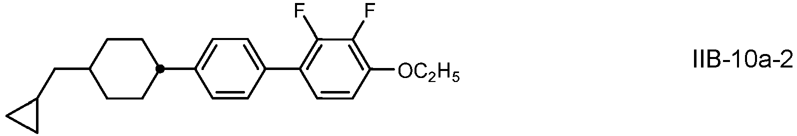 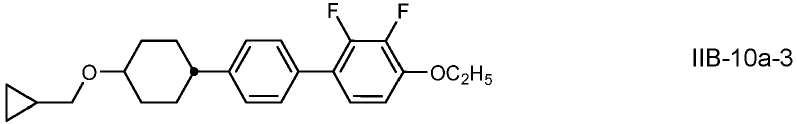 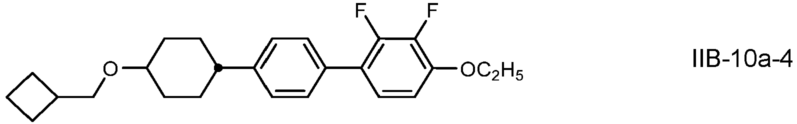 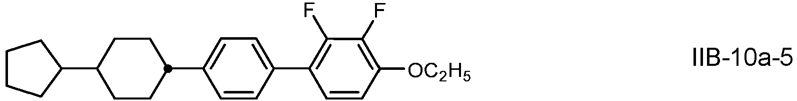 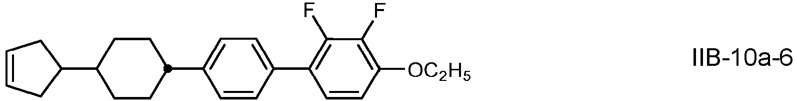 preferably, the LC medium comprises one or more compounds of the formula IIE-10 selected from the following sub-formulae:

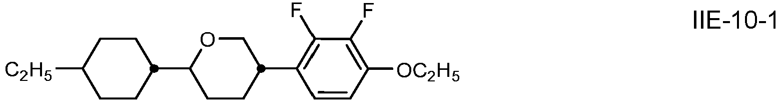

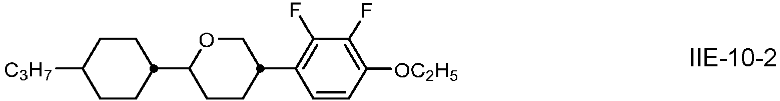

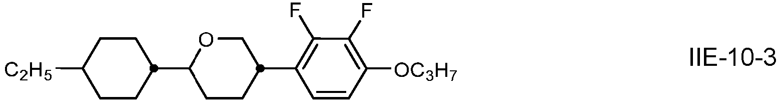

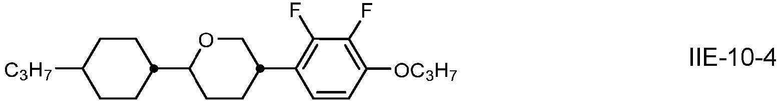

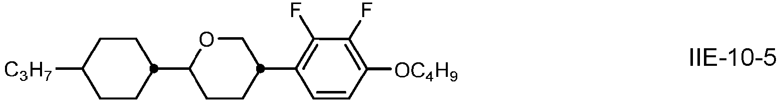

Preferably the LC medium further comprises one or more compounds of formula IIIA: 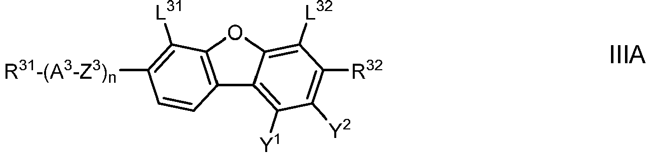 in which R³¹, R³², A³, Z³, L³¹, L³², Y¹, Y², and n have the meanings given above for formula III.

In a preferred embodiment of the present invention the LC medium comprises one or more compounds of the formula IIIA-1: 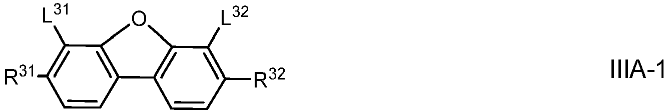 in which the occurring groups have the same meanings as given under formula IIIA above and preferably
- R³¹ and R³²: each, independently of one another, an alkyl, alkenyl or alkoxy radical having up to 15 C atoms, preferably having 1 to 7 C atoms, more preferably one or both of them denote an alkoxy radical and
- L³¹ and L³²: each, independently of one another, denote F or Cl, preferably both denote F.

In another preferred embodiment the LC medium comprises one or more compounds of the formula IIIA-1 selected from the group of compounds of formulae IIIA-1-1 to IIIA-1-10, preferably of formula IIIA-1-6, 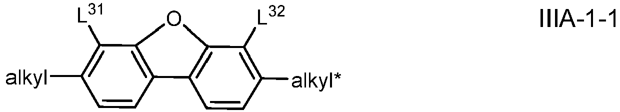 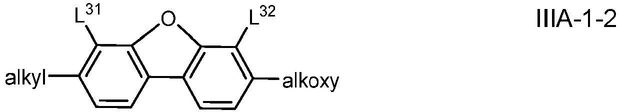 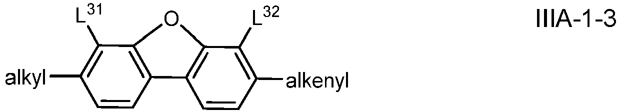 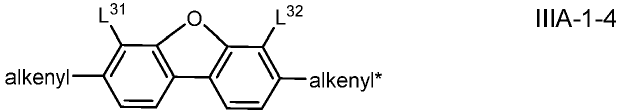 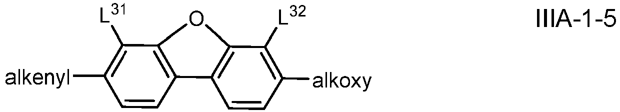 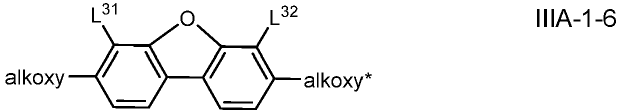 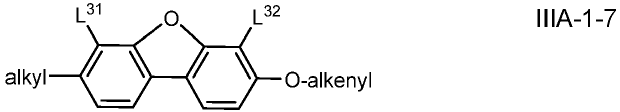 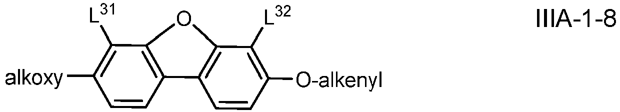 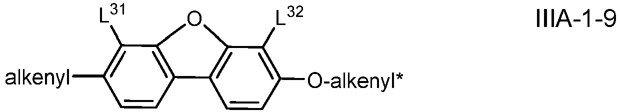 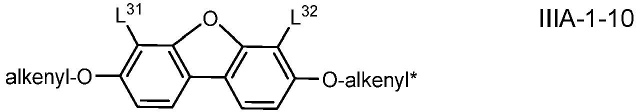 in which alkyl and alkyl* each, independently of one another, denote a straight-chain alkyl radical having 1-6 C atoms, alkenyl and alkenyl* each, independently of one another, denote a straight-chain alkenyl radical having 2-6 C atoms, alkoxy and alkoxy* each, independently of one another, denote a straight-chain alkoxy radical having 1-6 C atoms, and L³¹ and L³² each, independently of one another, denote F or Cl, preferably both F.

In another preferred embodiment of the present invention the LC medium comprises one or more compounds of the formula IIIA-2 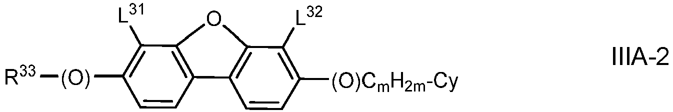 in which L³¹ and L³² have the same meanings as given under formula IIIA, (O) denotes O or a single bond,
- R³³: denotes alkyl or alkenyl having up to 7 C atoms or a group Cy-CₙH₂ₙ₊₁-,
- m and n: are, identically or differently, 0, 1, 2, 3, 4, 5 or 6, preferably 1, 2 or 3, very preferably 1, and
- Cy: denotes a cycloaliphatic group having 3, 4 or 5 ring atoms, which is optionally substituted with alkyl or alkenyl each having up to 3 C atoms, or with halogen or CN, and preferably denotes cyclopropyl, cyclobutyl or cyclopentyl.

The compounds of formula IIIA-2 are contained in the LC medium either alternatively or additionally to the compounds of formula III, preferably additionally.

Very preferred compounds of the formula IIIA-2 are the following, 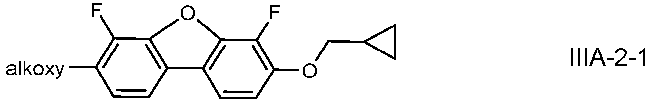 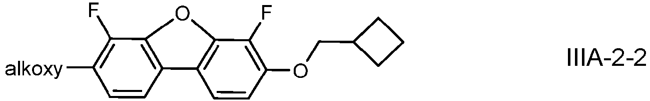 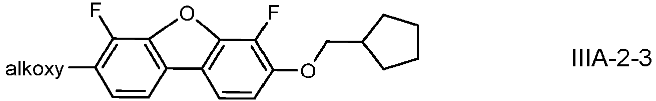 in which alkoxy denotes a straight-chain alkoxy radical having 1-6 C atoms.

In another preferred embodiment the LC medium comprises one or more compounds of the formula III selected from the group of compounds of formulae IIIA-3 to IIIA-5, preferably of formula III-8, 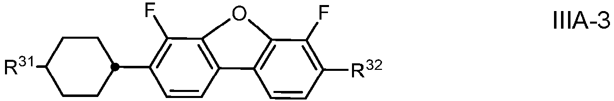 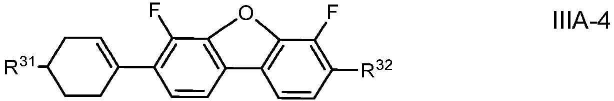 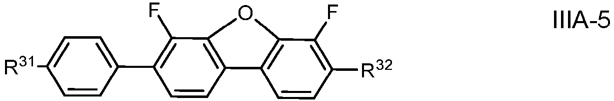 in which the parameters have the meanings given above, R³¹ preferably denotes straight-chain alkyl and R³² preferably denotes alkoxy each having 1 to 7 C atoms.

In a preferred embodiment of the present invention the LC medium comprises one or more compounds of the formula IIIA-6: 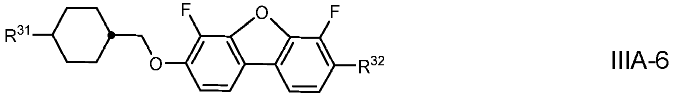 in which the occurring groups have the same meanings as given under formula III and preferably
- R³¹ and R³²: each, independently of one another, an alkyl, alkenyl or alkoxy radical having up to 15 C atoms, preferably having 1 to 7 C atoms, more preferably one or both of them denote an alkoxy radical:

Very preferred compounds of formula IIIA-6 are selected from the group consisting of the following formulae, 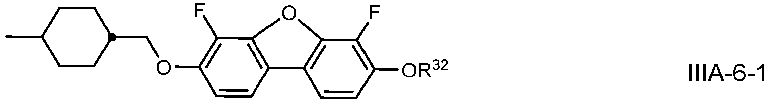 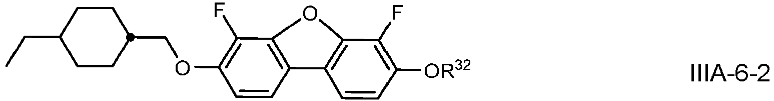 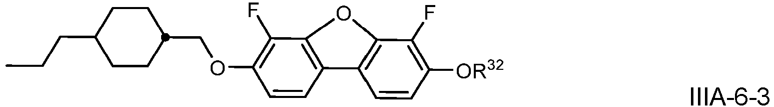 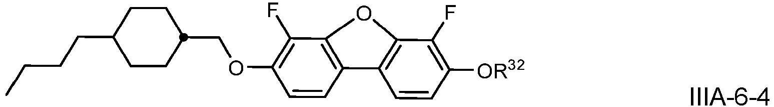 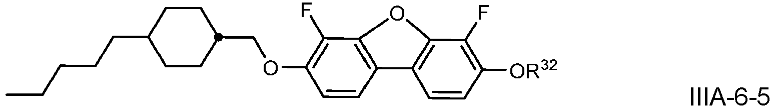 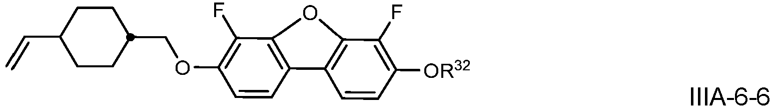 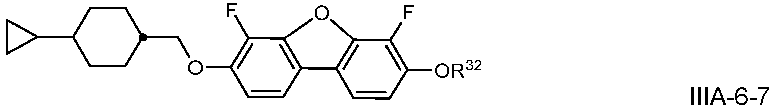 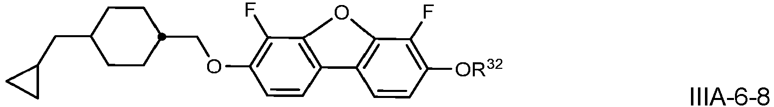 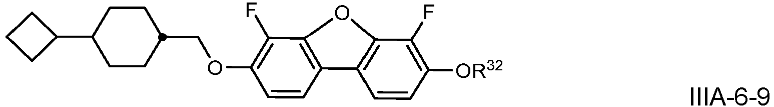 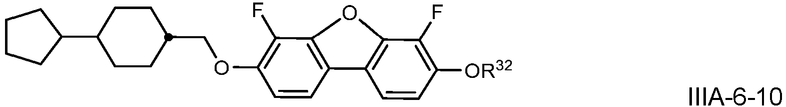 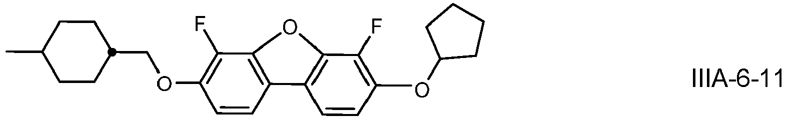 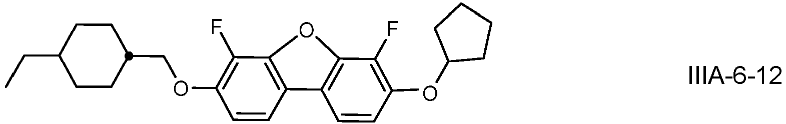 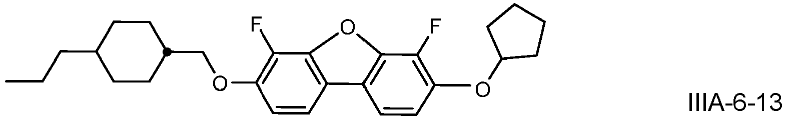 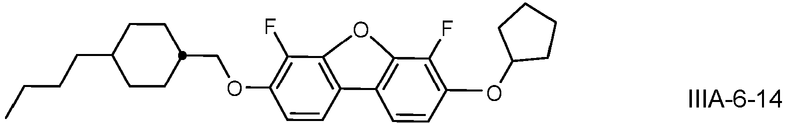 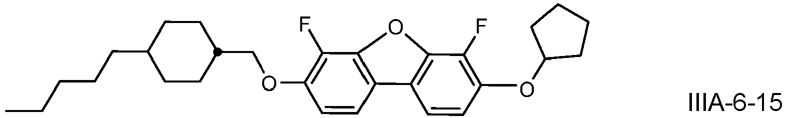 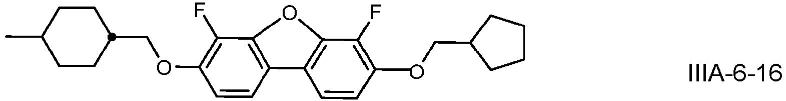 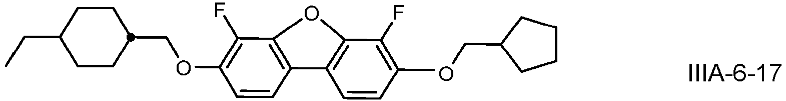 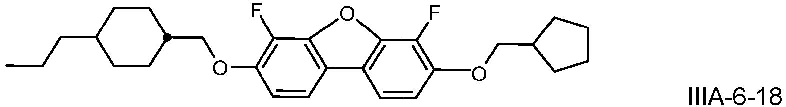 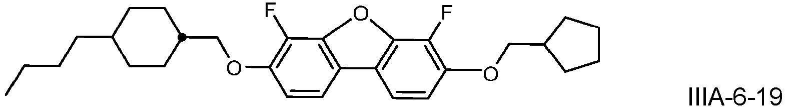 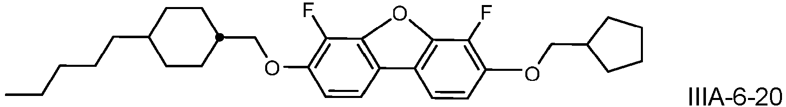 in which R³² denotes alkyl having 1 to 7 C-atoms, preferably ethyl, n-propyl or n-butyl, or alternatively cyclopropylmethyl, cyclobutylmethyl or cyclopentylmethyl or alternatively -(CH₂)ₙF in which n is 2,3,4, or 5, preferably C₂H₄F.

In a preferred embodiment, the LC medium comprises one or more compounds of the formula IV, 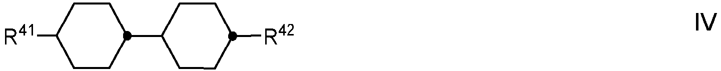 in which
- R⁴¹: denotes an unsubstituted alkyl radical having 1 to 7 C atoms where, in addition, one or more CH₂ groups may be replaced by 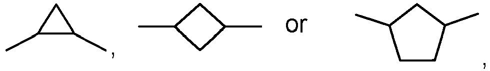 or an unsubstituted alkenyl radical having 2 to 7 C atoms, preferably an n-alkyl radical, particularly preferably having 2, 3, 4 or 5 C atoms, and
- R⁴²: denotes an unsubstituted alkyl radical having 1 to 7 C atoms or an unsubstituted alkoxy radical having 1 to 6 C atoms, both preferably having 2 to 5 C atoms, an unsubstituted alkenyl radical having 2 to 7 C atoms, preferably having 2, 3 or 4 C atoms, more preferably a vinyl radical or a 1-propenyl radical and in particular a vinyl radical.

The compounds of the formula IV are preferably selected from the group of the compounds of the formulae IV-1 to IV-4, 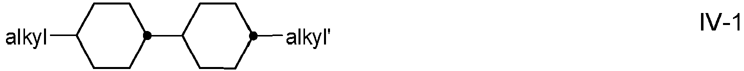 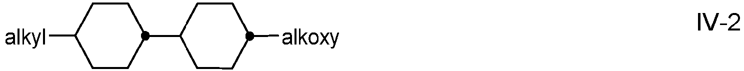 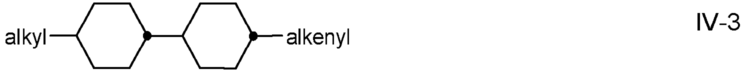 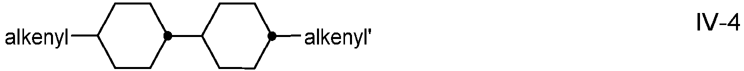 in which
- alkyl and alkyl',: independently of one another, denote alkyl having 1 to 7 C atoms, preferably having 2 to 5 C atoms,
- alkenyl: denotes an alkenyl radical having 2 to 5 C atoms, preferably having 2 to 4 C atoms, particularly preferably 2 C atoms,
- alkenyl': denotes an alkenyl radical having 2 to 5 C atoms, preferably having 2 to 4 C atoms, particularly preferably having 2 to 3 C atoms, and
- alkoxy: denotes alkoxy having 1 to 5 C atoms, preferably having 2 to 4 C atoms.

Preferably, the LC medium comprises one or more compounds selected from the compounds of the formulae IV-1-1 to IV-1-6:

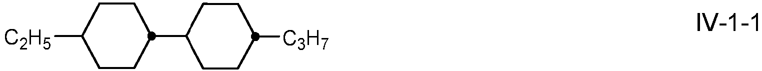

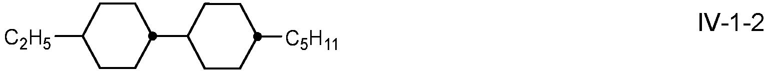

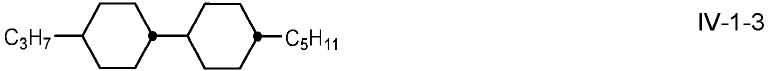

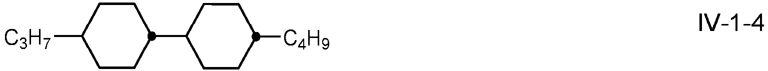

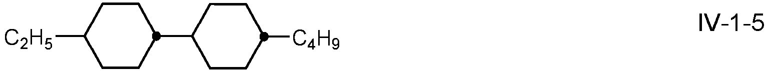

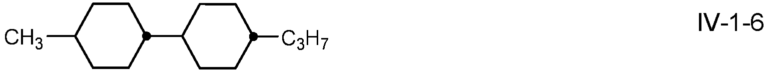

Very preferably, the LC medium according to the invention comprises one or more compounds of the formulae IV-2-1 and/or IV-2-2

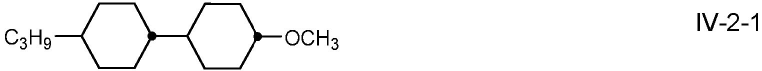

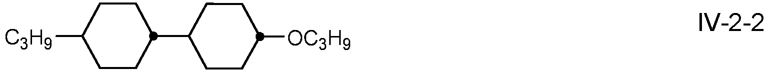

Very preferably, the LC medium according to the invention comprises a compound of formula IV-3, in particular selected from the compounds of the formulae IV-3-1 to IV-3-9:

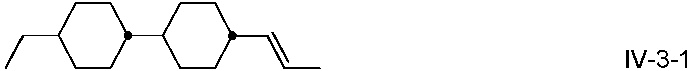

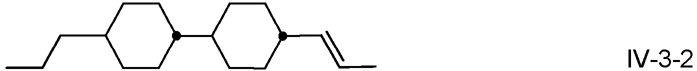

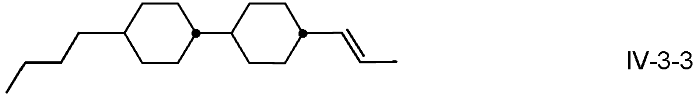

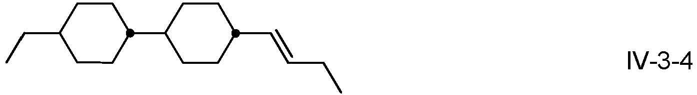

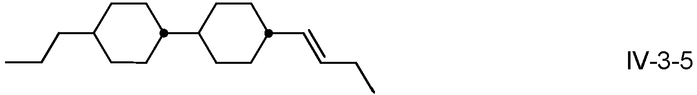

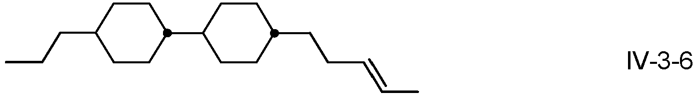

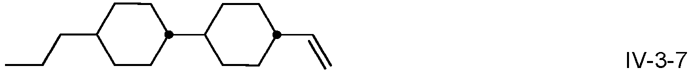

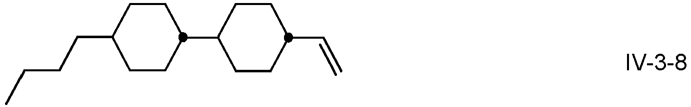

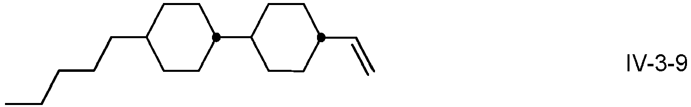

The LC medium according to the invention preferably comprises one or more compounds CC-n-V and/or CC-n-Vm, in particular CC-3-V, CC-4-V, CC-3-V1 and/or CC-4-V1, preferably in a total concentration in the range of from 20 to 70 %, preferably from 25 to 55 %, very preferably from 30 to 50 %. CC-3-V is preferably used in concentrations of 20-60 %, in particular 25-55 %.

In another preferred embodiment, the LC medium according to the invention comprises one or more compounds of formula IV-3 selected from the compounds of the formulae IV-3-10 to IV-3-33: 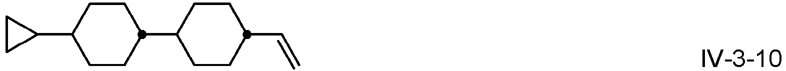 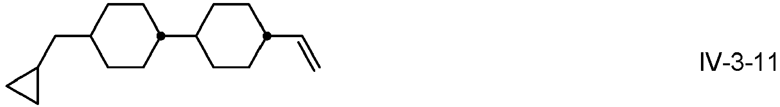 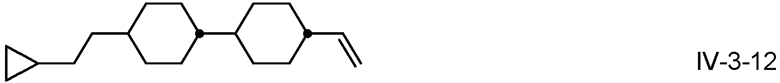 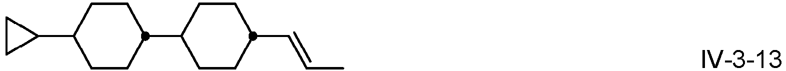 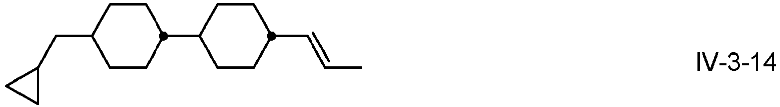 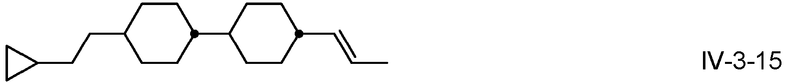 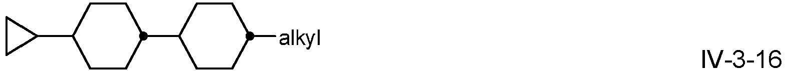 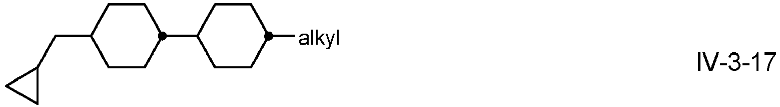 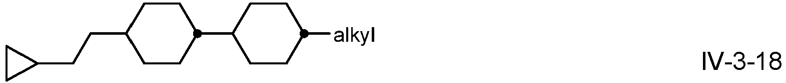 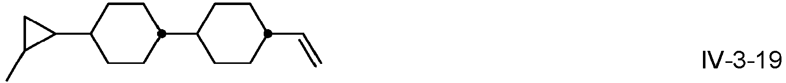 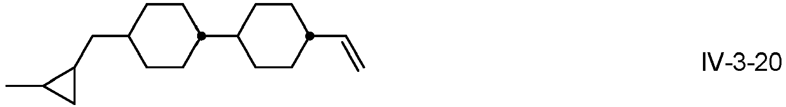 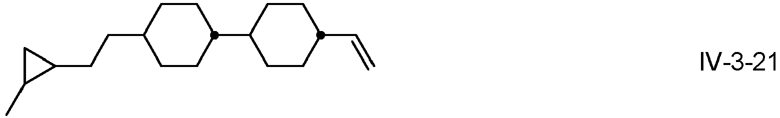 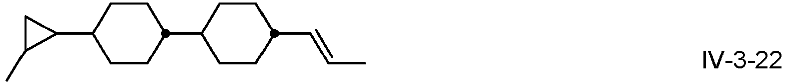 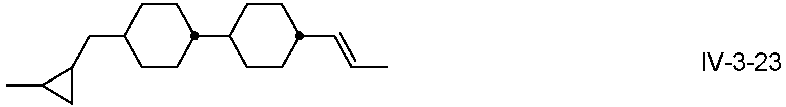 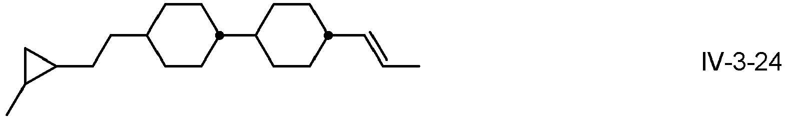 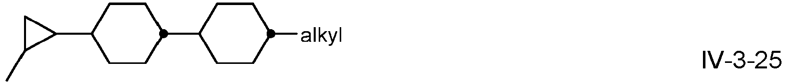 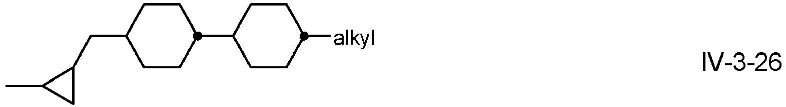 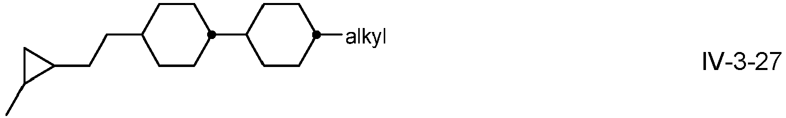 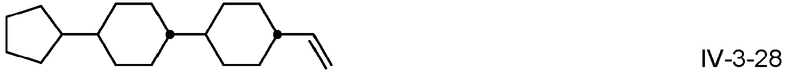 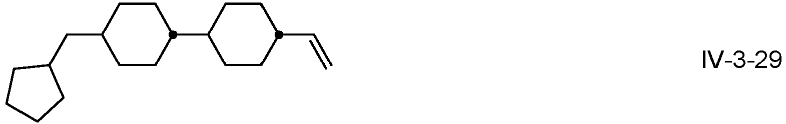 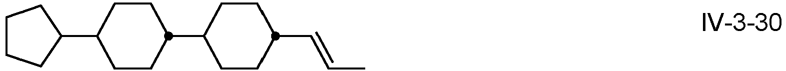 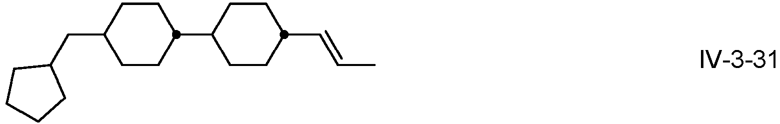 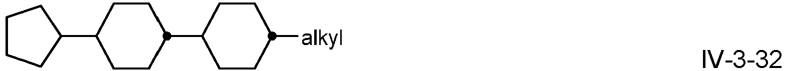 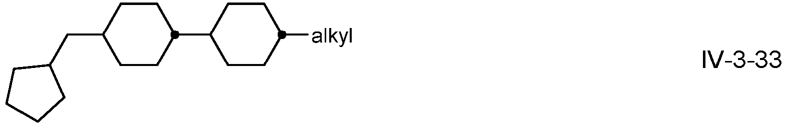 in which alkyl denotes methyl, ethyl, n-propyl, isopropyl, n-butyl, isobutyl, or n-pentyl.

Very preferably, the LC medium according to the invention comprises a compound of formula IV-4, in particular selected from the compounds of the following formulae:

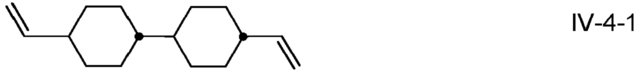

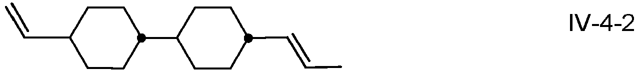

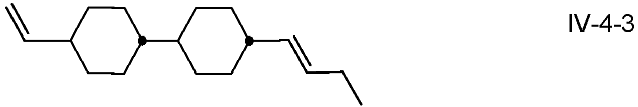

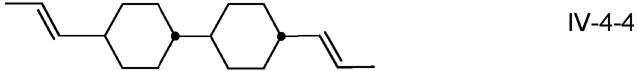

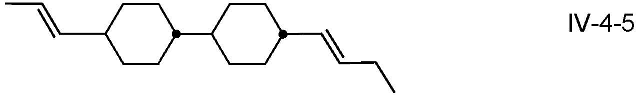

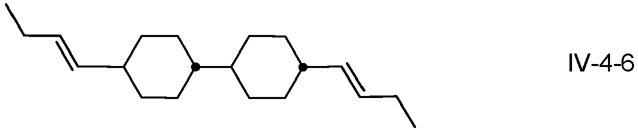

In another preferred embodiment the LC medium comprises one or more compounds of formula IV-4 and its subformulae in which one or both of "alkenyl" and "alkenyl' " denote 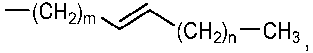 in which m is 0, 1 or 2, and n is 0, 1 or 2, very preferably selected from compounds of formulae IV-4-3 to IV-4-6.

Very preferably, the LC medium according to the invention comprises one or more compounds of the formula IV-1 or its subformulae and/or one or more compounds of the formula IV-3 or its subformulae and/or one or more compounds of the formula IV-4 or its subformulae, where the total concentration of these compounds of the formula IV-1 is in the range from 1% to 30%.

The LC medium according to the invention preferably additionally comprises one or more compounds of the formula IVa, 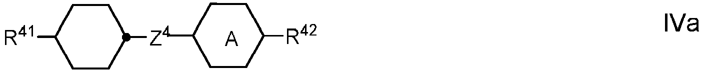 in which
- R⁴¹ and R⁴²: each, independently of one another, denote a straight-chain alkyl, alkoxy, alkenyl, alkoxyalkyl or alkoxy radical having up to 12 C atoms, 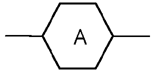 denotes 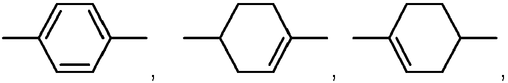 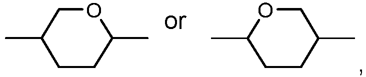
- Z⁴ denotes: a single bond, -CH₂CH₂-, -CH=CH-, -CF₂O-, -OCF₂-, -CH₂O-, -OCH₂-, -COO-, -OCO-, -C₂F₄-, -C₄H₈- or -CF=CF-.

Preferred compounds of the formula IVa are indicated below: 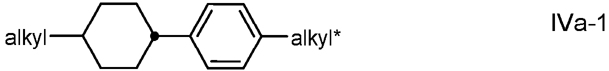 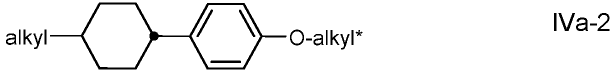 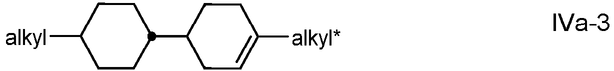 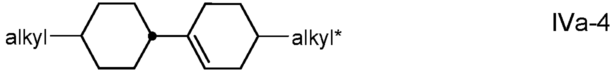 in which alkyl and alkyl* each, independently of one another, denote a straight-chain alkyl radical having 1 to 6 C atoms.

The LC medium according to the invention preferably comprises at least one compound of the formula IVa-1 and/or formula IVa-2.

The proportion of compounds of the formula IVa in the mixture as a whole is preferably at least 5 % by weight.

Preferably, the LC medium comprises one or more compounds of formula IVb-1 to IVb-3 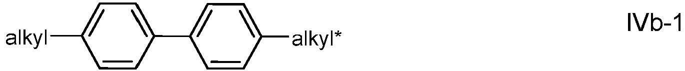 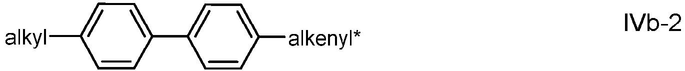 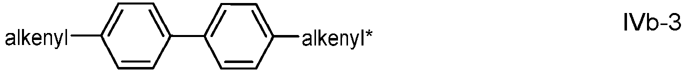 in which
- alkyl and alkyl*: each, independently of one another, denote a straight-chain alkyl radical having 1 to 6 C atoms, and
- alkenyl and alkenyl*: each, independently of one another, denote a straight-chain alkenyl radical having 2 to 6 C atoms.

The proportion of the compounds of the formulae IV-1 to IV-3 in the mixture as a whole is preferably at least 3 % by weight, in particular ≥ 5 % by weight.

Of the compounds of the formulae IVa-1 to IVa-4, the compounds of the formula IVa-2 are particularly preferred.

Of the compounds of the formulae IVb-1 to IVb-3, the compounds of the formula IVb-2 are particularly preferred.

Particularly preferred compounds of the formulae IV-1 to IV-3 are selected from the group consisting of the following formulae 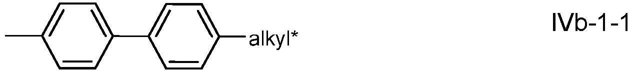 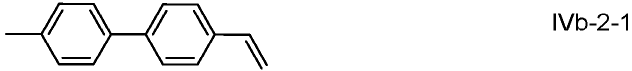 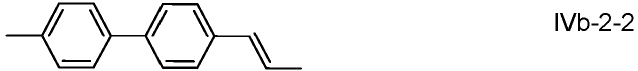 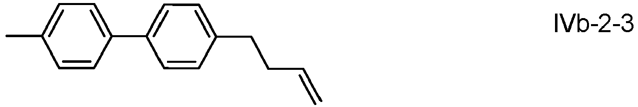 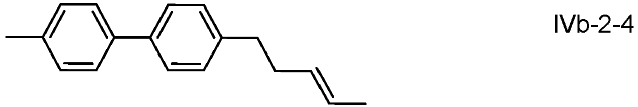 in which alkyl* denotes an alkyl radical having 1 to 6 C atoms and preferably denotes n-propyl.

The LC medium according to the invention particularly preferably comprises one or more compounds of the formulae IVb-1-1, IVb-2-3 and/or IVb-2-4.

In another preferred embodiment, the LC medium according to the invention comprises one or more compounds of formula V 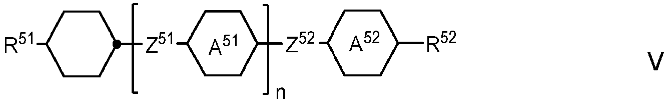 in which
- R⁵¹ and R⁵²: independently of one another, denote H, an alkyl, alkoxy or alkenyl radical having up to 15 C atoms which is unsubstituted, monosubstituted by F, Cl, CN or CF₃ or at least monosubstituted by halogen, where, in addition, one or more CH₂ groups in these radicals may be replaced by -O-, -S-,-C≡C-, -CF₂O-, -OCF₂-, - OC-O-, -O-CO- 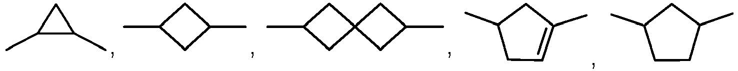 in such a way that O atoms are not linked directly to one another, and preferably denote alkyl having 1 to 7 C atoms, preferably n-alkyl, particularly preferably n-alkyl having 1 to 5 C atoms, alkoxy having 1 to 6 C atoms, preferably n-alkoxy, particularly preferably n-alkoxy having 2 to 5 C atoms, alkoxyalkyl, alkenyl or alkenyloxy having 2 to 7 C atoms, preferably having 2 to 4 C atoms, preferably alkenyloxy, 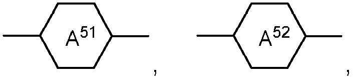 identically or differently, denote 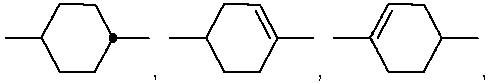 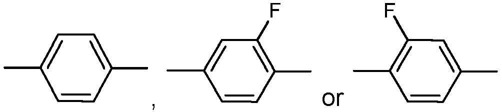 in which , 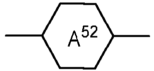 preferably denotes 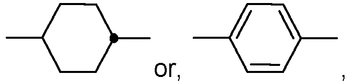
- Z⁵¹ , Z⁵²: each, independently of one another, denote -CH₂-CH₂-, -CH₂-O-,-CH=CH-, -C≡C-, -COO- or a single bond, preferably - CH₂-CH₂-, -CH₂-O- or a single bond and particularly preferably a single bond, and
- n: is 1 or 2.

The compounds of formula V are preferably selected from the compounds of the formulae V-1 to V-17: 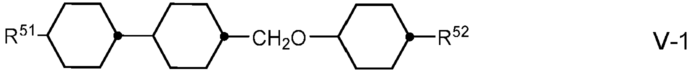 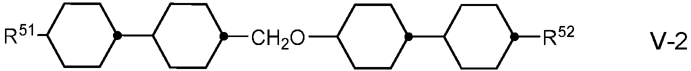 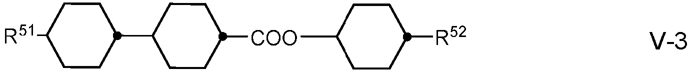 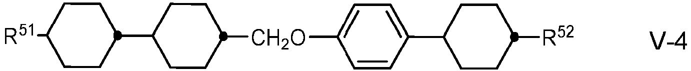 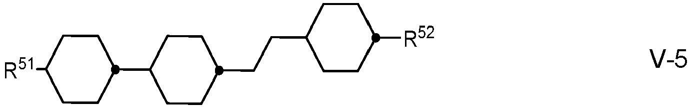 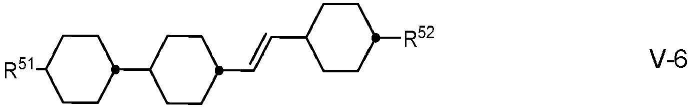 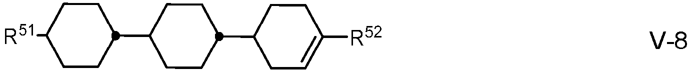 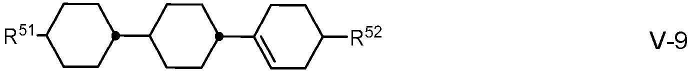 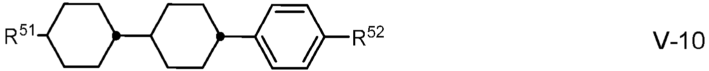 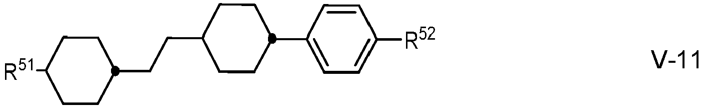 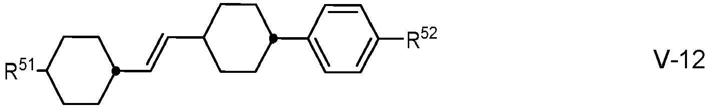 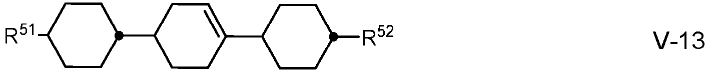 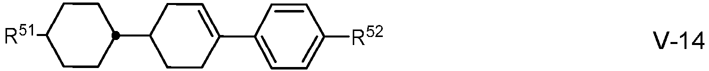 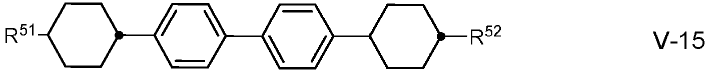 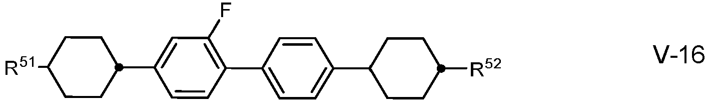 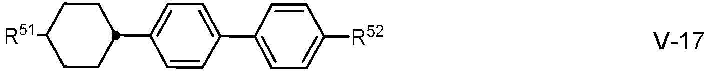 in which R⁵¹ and R⁵² have the meanings as indicated above.

R⁵¹ and R⁵² preferably each, independently of one another, denote straight-chain alkyl or alkenyl.

Preferred LC media comprise one or more compounds of the formulae V-1, V-3, V-4, V-6, V-7, V-10, V-11, V-12, V-14, V-15, and/or V-16.

LC media according to the invention very particularly preferably comprise the compounds of the formula V-10 and/or IV-1, in particular in amounts of 5 to 30 %.

Preferred compounds of the formulae V-10 are indicated below:

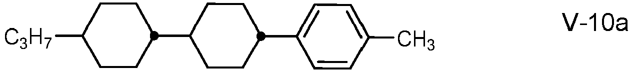

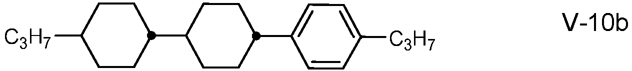

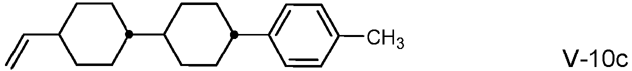

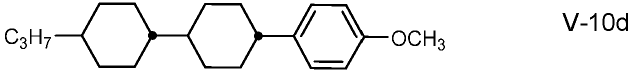

The LC medium according to the invention particularly preferably comprises the tricyclic compounds of the formula V-10a and/or of the formula V-10b in combination with one or more bicyclic compounds of the formulae IV-1 The total proportion of the compounds of the formulae V-10a and/or V-10b in combination with one or more compounds selected from the bicyclohexyl compounds of the formula IV-1 is 5 to 40 %, very particularly preferably 15 to 35 %.

Particularly preferred LC media comprise the compounds V-10a and/or IV-1-1

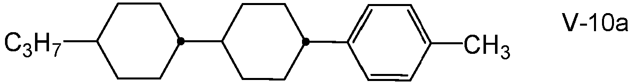

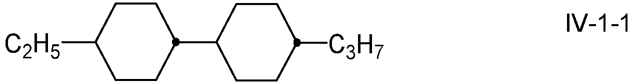

The compounds V-10a and IV-1-1 are preferably present in the mixture in a concentration of 5 to 30 %, very preferably 10 to 25 %, based on the mixture as a whole.

Preferred LC media comprise at least one compound selected from the group of the compounds 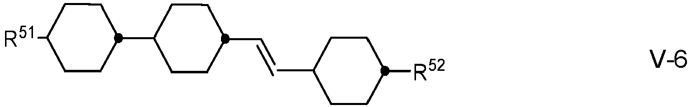 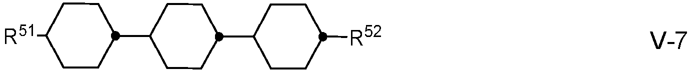 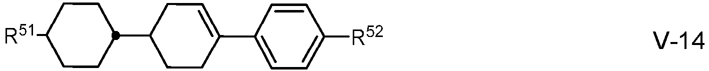 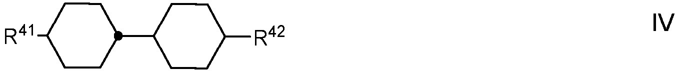 in which R⁵¹, R⁵², R⁴¹ and R⁴² have the meanings as indicated above. Preferably in the compounds V-6, V-7 and IV, R⁵¹ and R⁴¹ denotes alkyl or alkenyl having 1 to 6 or 2 to 6 C atoms, respectively, and R⁵² and R⁴² denotes alkenyl having 2 to 6 C atoms. Preferably in the compounds V-14, R⁵¹ denotes alkyl or alkenyl having 1 to 6 or 2 to 6 C atoms and R⁵² denotes alkyl having 1 to 6 C atoms, or alkoxy having 2 to 6 C atoms.

In another preferred embodiment the LC medium according to the invention comprises one or more compounds of the formula V-7, preferably selected from the compounds of the formulae V-7a to V-7e:

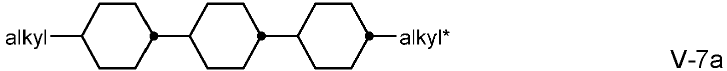

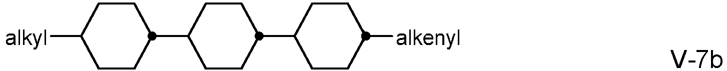

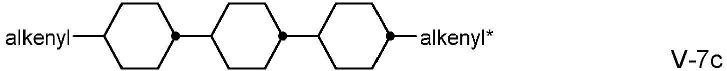

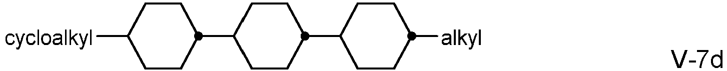

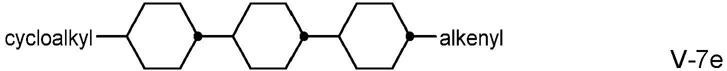

in which alkyl denotes an alkyl group having 1 to 7 C atoms, alkenyl denotes an alkenyl group having 2 to 7 C atoms, and cycloalkyl denotes a cyclic alkyl group having 3 to 12 C atoms, preferably cyclopropyl, cyclobutyl, cyclopentyl, cyclopropylalkyl, cyclobutylalkyl or cyclopentylalkyl.

Very preferred compounds of the formulae V-7a to V-7e are selected from the compounds of the formulae V7-b1 to V7-b3, V-7d-1 to V-7d-8 and V-7e-1 to V-7e-12. 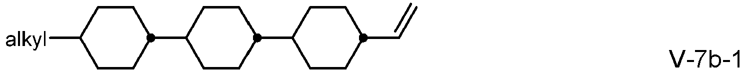 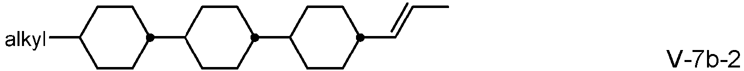 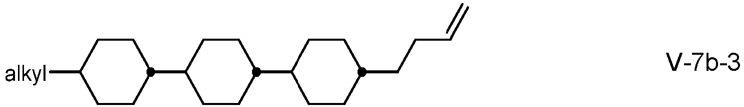 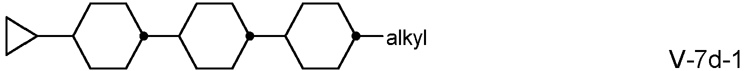 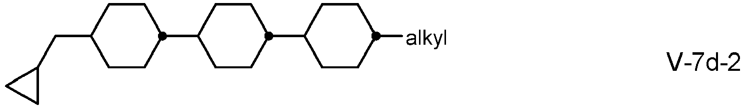 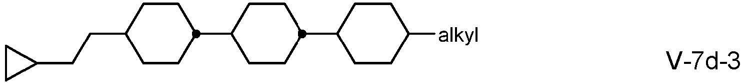 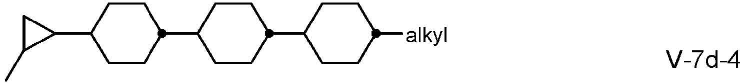 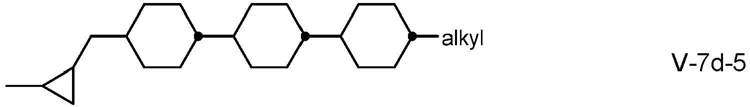 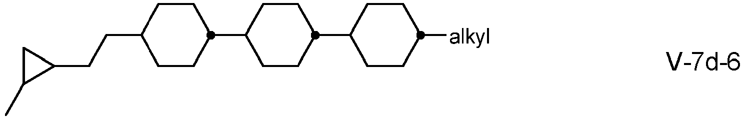 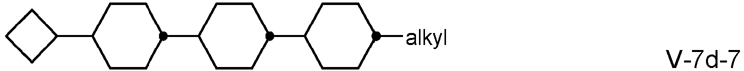 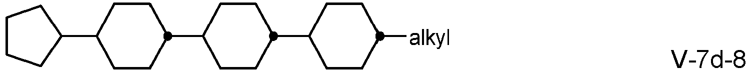 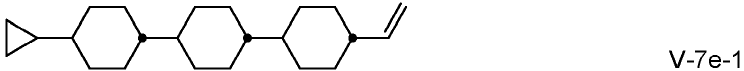 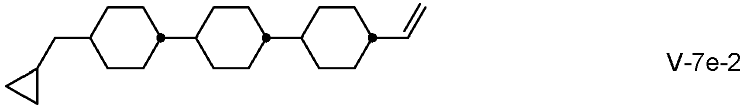 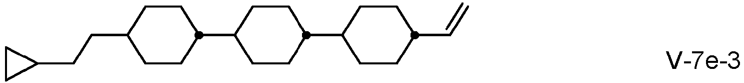 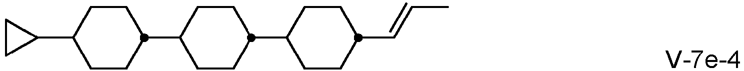 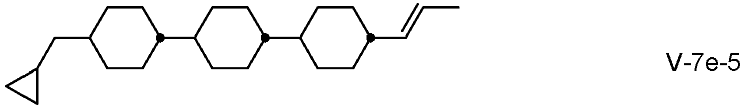 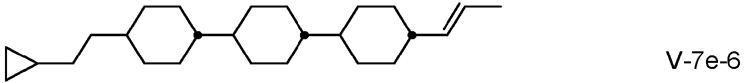 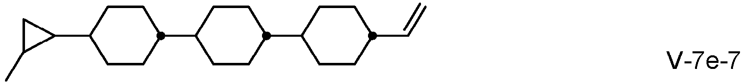 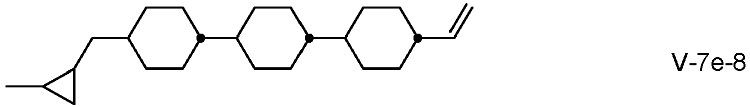 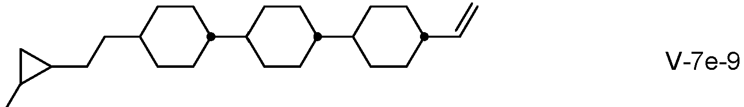 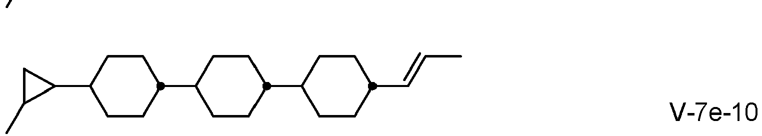 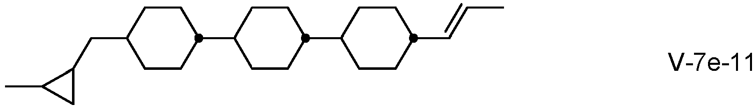 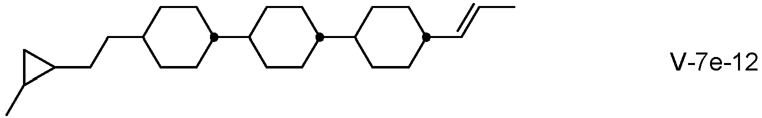 in which alkyl denotes ethyl, n-propyl, n-butyl or n-pentyl, preferably n-propyl.

Further preferred are compounds of formula V, wherein R⁵¹ and R⁵² independently of one another denote straight-chain alkyl having 1 to 7 C atoms or alkenyl having 2 to 7 C atoms.

In a preferred embodiment of the present invention the LC medium additionally comprises one or more compounds of the formulae VI-1 to VI-25, 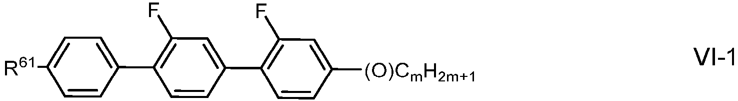 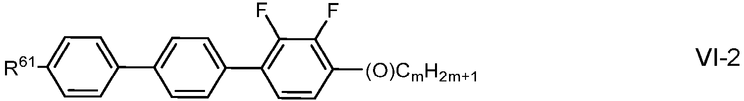 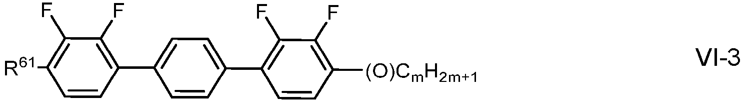 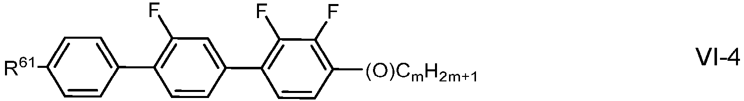 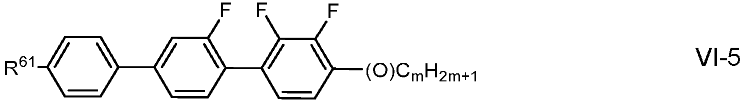 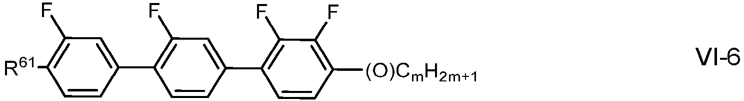 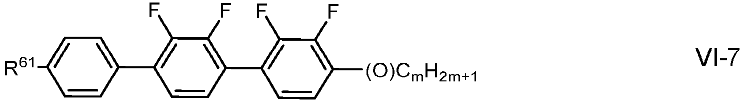 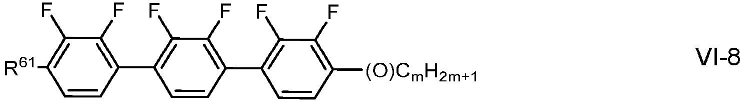 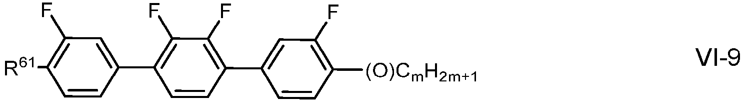 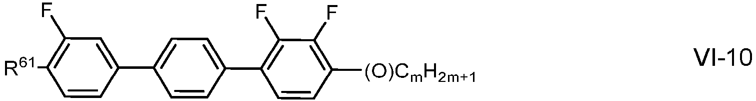 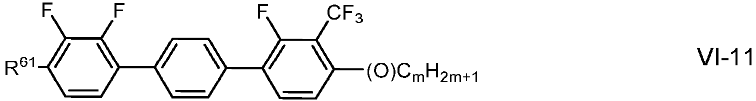 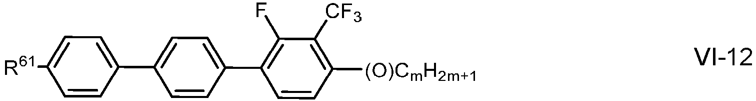 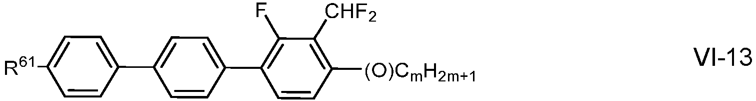 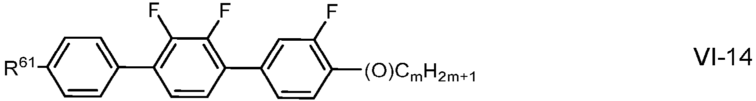 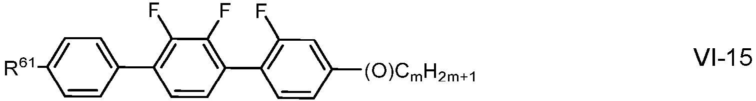 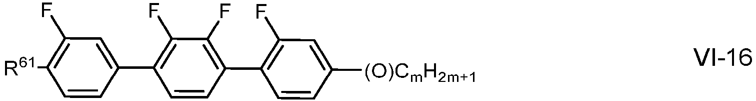 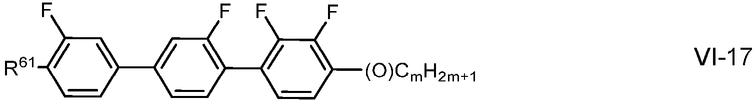 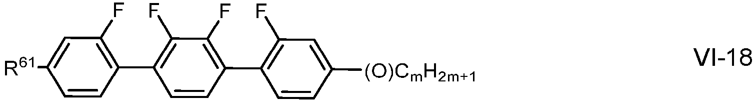 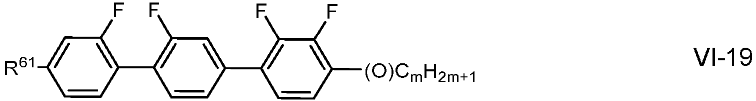 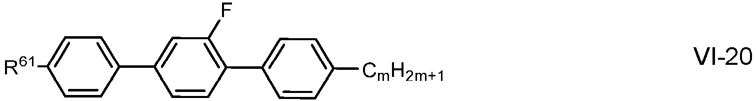 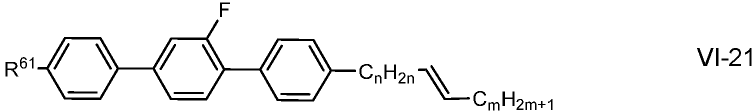 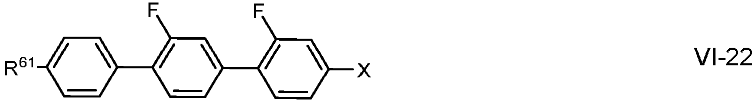 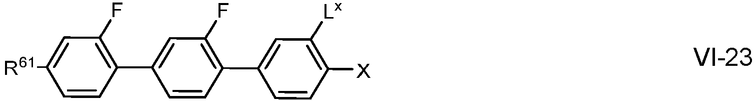 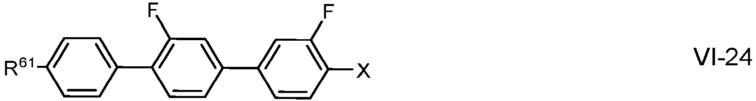 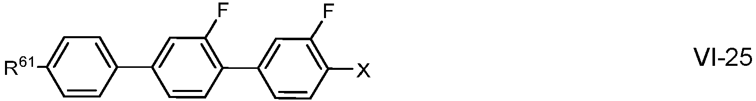 in which
R⁶¹ denotes a straight-chain alkyl or alkoxy radical having 1 to 6 C atoms, cycloalkyl having 3 to 6 C atoms, (O) denotes -O- or a single bond, X denotes F, Cl, OCF₃ or OCHF₂, L^{x} denotes H or F, m is 0, 1, 2, 3, 4, 5 or 6 and n is 0, 1, 2, 3 or 4.
R⁶¹ preferably denotes methyl, ethyl, propyl, butyl, pentyl, hexyl, methoxy, ethoxy, propoxy, butoxy, pentoxy.
X preferably denotes F or OCH₃, very preferably F.

The LC medium according to the invention preferably comprises the terphenyls of the formulae VI-1 to VI-25 in amounts of 2 to 30 % by weight, in particular 5 to 20 % by weight.

Particular preference is given to compounds of the formulae VI-1, VI-2, VI-4, VI-20, VI-21, and VI-22 wherein X denotes F. In these compounds, R⁶¹ preferably denotes alkyl, furthermore alkoxy, each having 1 to 5 C atoms. In the compounds of the formula VI-20, R⁶¹ preferably denotes alkyl or alkenyl, in particular alkyl. In the compounds of the formula VI-21, R⁶¹ preferably denotes alkyl. In the compounds of the formulae VI-22 to VI-25, X preferably denotes F.

The terphenyls of formula VI-1 to VI-25 are preferably employed in the LC media according to the invention if the Δn value of the mixture is to be ≥ 0.1. Preferred LC media comprise 2 to 20 % by weight of one or more terphenyl compounds selected from the group of the compounds of formulae VI-1 to VI-25.

In another preferred embodiment of the present invention the LC medium additionally comprises one or more compounds of the formulae VII-1 to VII-9 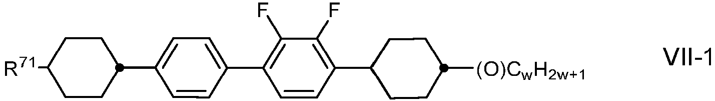 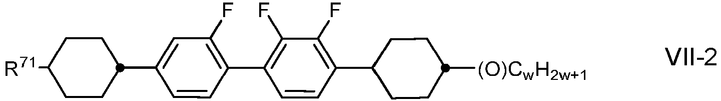 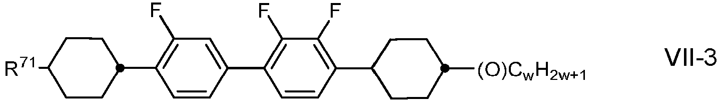 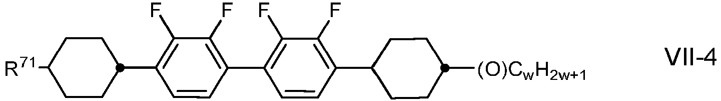 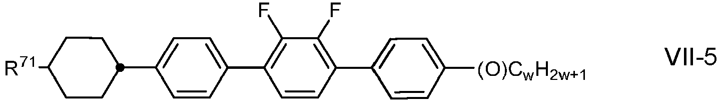 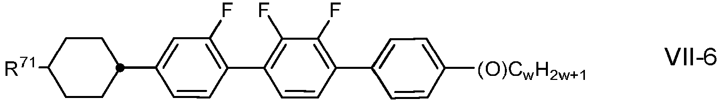 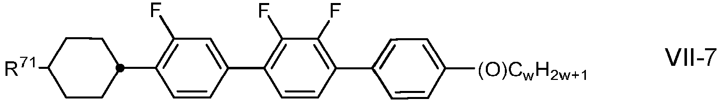 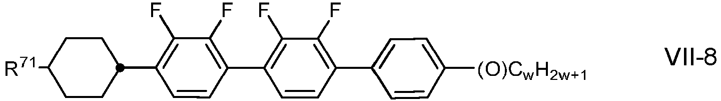 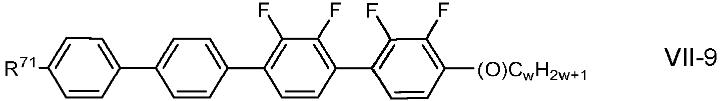 in which
- R⁷¹: each, independently of one another, have one of the meanings indicated for R²¹ in formula IIA, and
- w and x: each, independently of one another, denote 1 to 6.

Particular preference is given to LC media comprising at least one compound of the formula VII-9.

LC medium comprising one or more substances which contain a tetrahydronaphthyl or naphthyl unit, such as, for example, the compounds of the formulae N-1 to N-5, 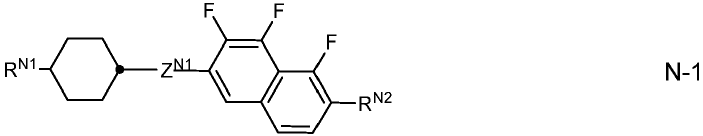 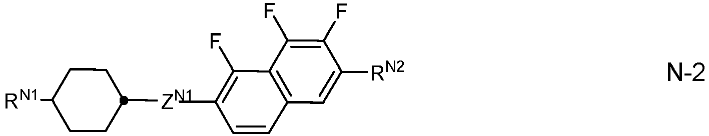 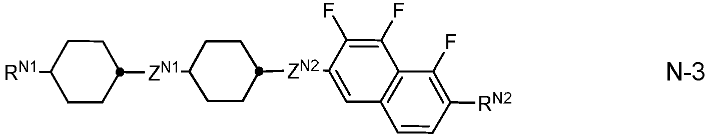 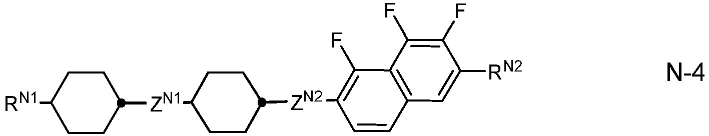 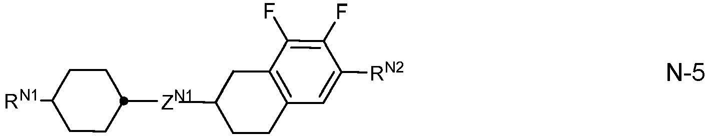 in which
R^{N1} and R^{N2} each, independently of one another, have the meanings indicated for R²¹, preferably denote straight-chain alkyl, straight-chain alkoxy or straight-chain alkenyl, and
Z^{N1} and Z^{N2} each, independently of one another, denote -C₂H₄-, - CH=CH-, -(CH₂)₄-, -(CH₂)₃O-, -O(CH₂)₃-, -CH=CHCH₂CH₂-, - CH₂CH₂CH=CH-, -CH₂O-, -OCH₂-, -COO-, -OCO-, -C₂F₄-, - CF=CF-, -CF=CH-, -CH=CF-, -CF₂O-, -OCF₂-, -CH₂- or a single bond.

LC medium comprising one or more compounds selected from the group of the difluorodibenzochroman compounds of the formula BC, chromans of the formula CR, and fluorinated phenanthrenes of the formulae PH-1 and PH-2, 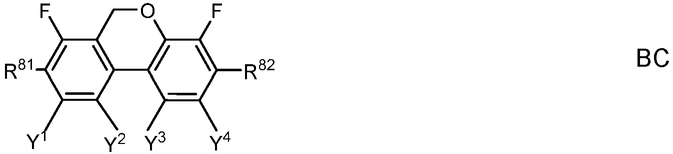 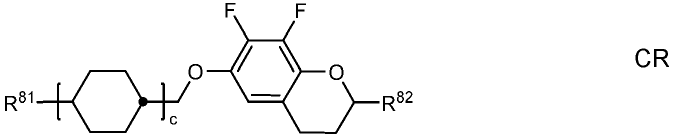 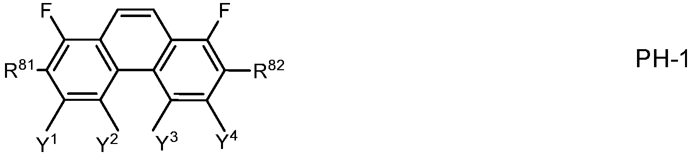 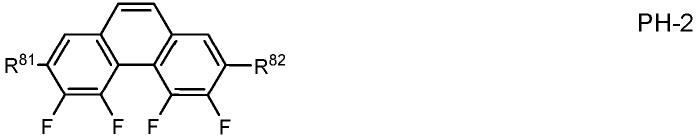 in which
R⁸¹ and R⁸² each, independently of one another, have the meaning of R²¹ and c is 0, 1 or 2. R⁸¹ and R⁸² preferably, independently of one another, denote alkyl or alkoxy having 1 to 6 C atoms.
Y¹, Y², Y³, Y⁴, each, independently of one another, denote H, F, Cl, CF₃, CHF₂, CH₃ or OCH₃.

The LC medium according to the invention preferably comprises the compounds of the formulae BC, CR, PH-1, PH-2 in amounts of 3 to 20 % by weight, in particular in amounts of 3 to 15 % by weight.

Particularly preferred compounds of the formulae BC and CR are the compounds BC-1 to BC-7 and CR-1 to CR-5, 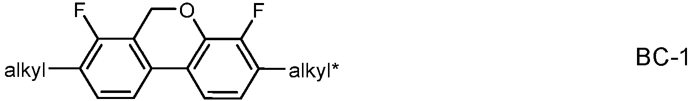 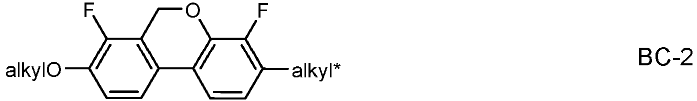 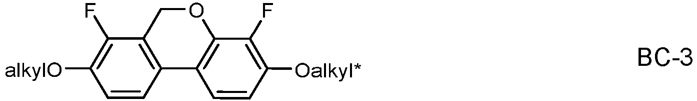 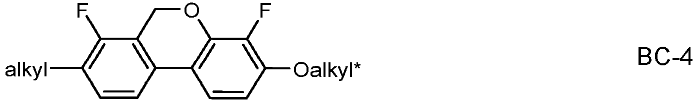 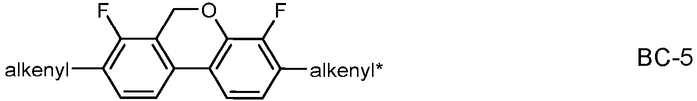 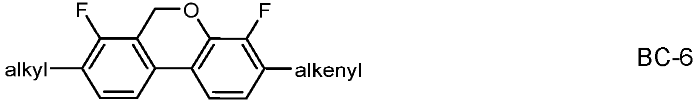 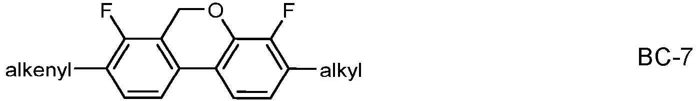 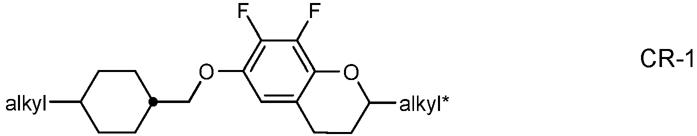 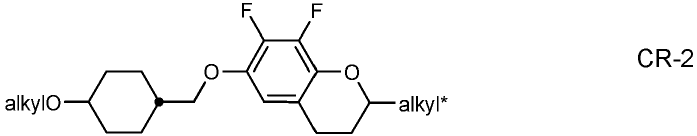 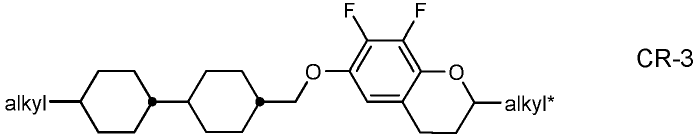 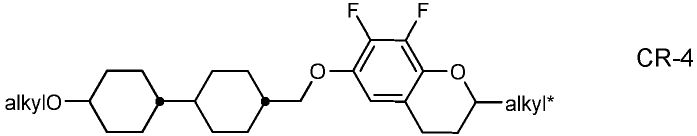 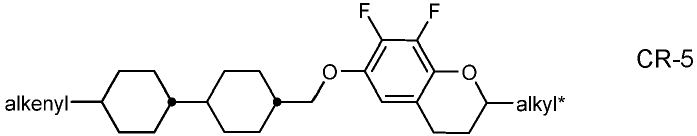 in which
- alkyl and alkyl*: each, independently of one another, denote a straight-chain alkyl radical having 1 to 6 C atoms, and
- alkenyl and alkenyl*: each, independently of one another, denote a straight-chain alkenyl radical having 2 to 6 C atoms.

Very particular preference is given to an LC medium comprising one, two or three compounds of the formula BC-2, BF-1 and/or BF-2.

Particularly preferred compounds of the formula BC the compounds B(A)-2O-O2,

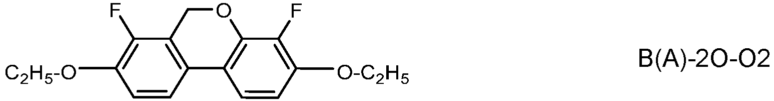

Particularly preferred compounds of the formula PH-1 the compounds B(P)-2O-O3 and B(P)-2O-O4, 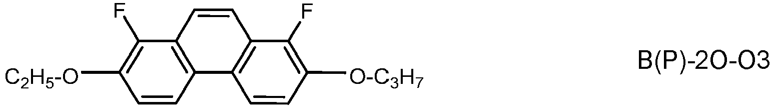 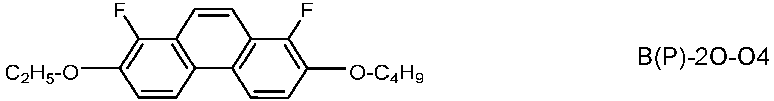 LC medium comprising one or more indane compounds of the formula In, 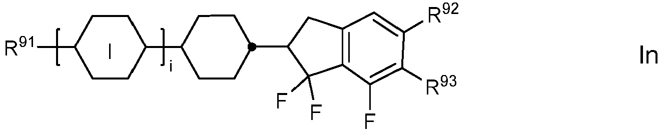 in which
- R⁹¹, R⁹², R⁹³: each, independently of one another, denote a straight-chain alkyl, alkoxy, alkoxyalkyl or alkenyl radical having 1 to 6 C atoms,
- R⁹² and R⁹³: may also denote halogen, preferably F, 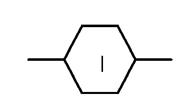 denotes 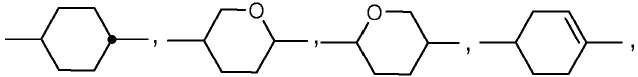 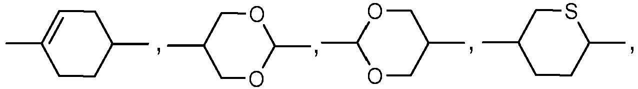 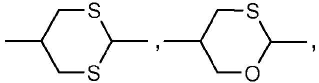
- i: denotes 0, 1 or 2.

Preferred compounds of the formula In are the compounds of the formulae In-1 to In-16 indicated below:

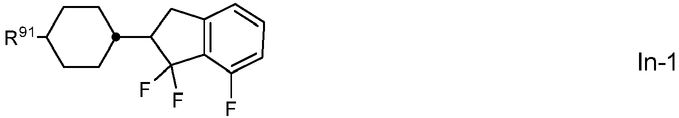

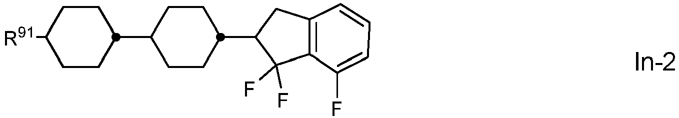

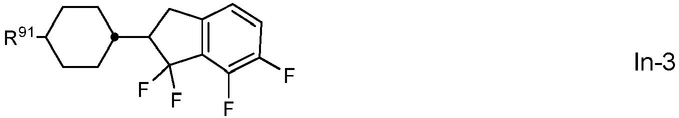

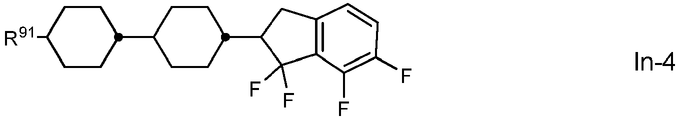

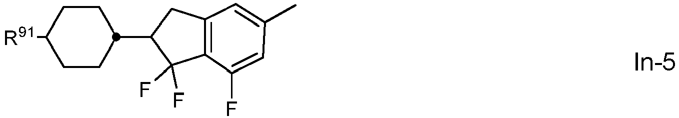

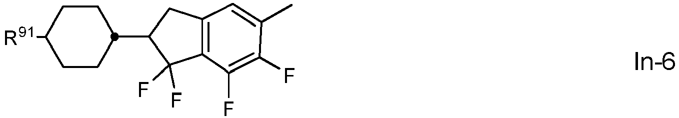

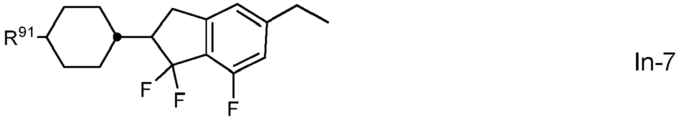

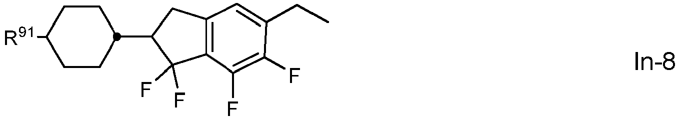

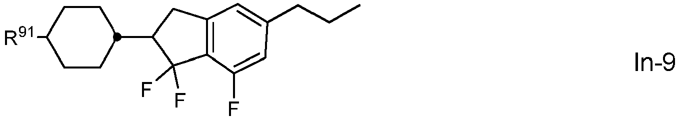

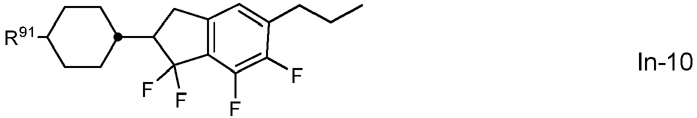

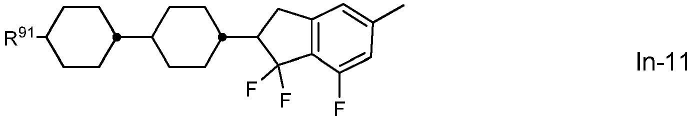

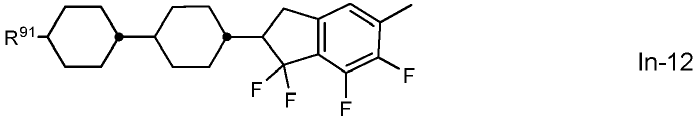

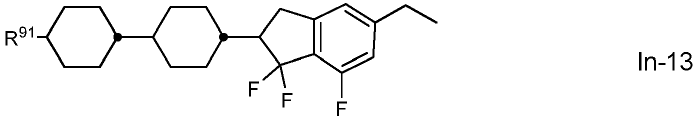

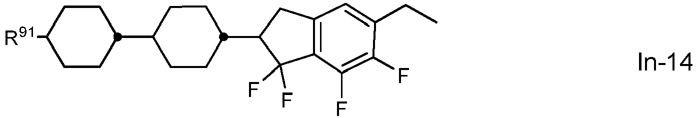

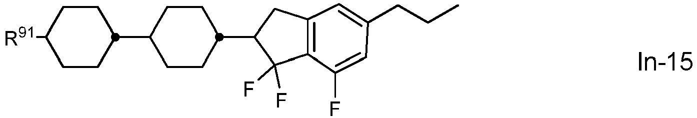

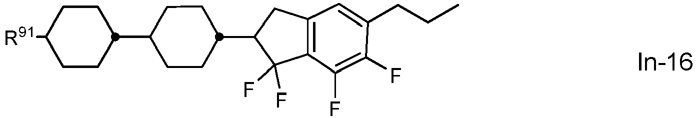

Particular preference is given to the compounds of the formulae In-1, In-2, In-3 and In-4.

The compounds of the formula In and the sub-formulae In-1 to In-16 are preferably employed in the LC media according to the invention in concentrations ≥ 5 % by weight, in particular 5 to 30 % by weight and very particularly preferably 5 to 25 % by weight.

LC medium comprising one or more compounds of the formulae L-1 to L-8, 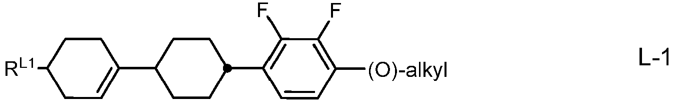 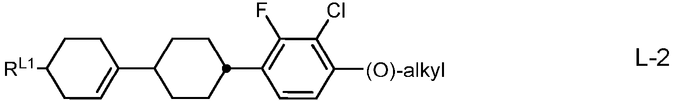 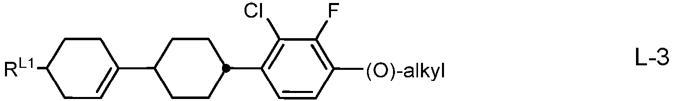 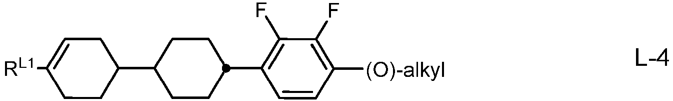 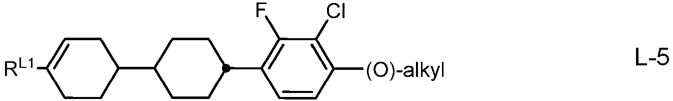 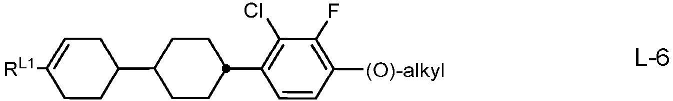 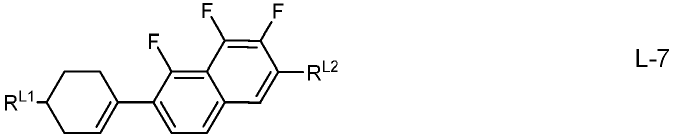 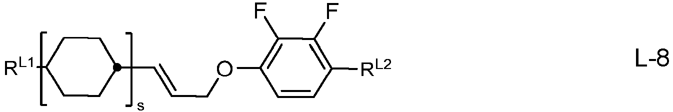 in which
R^{L1} and R^{L2} each, independently of one another, have the meanings indicated for R²¹ in formula IIA above, and alkyl denotes an alkyl radical having 1 to 6 C atoms. The parameter s denotes 1 or 2.
The compounds of the formulae L-1 to L8 are preferably employed in concentrations of 5 to 15 % by weight, in particular 5 to 12 % by weight and very particularly preferably 8 to 10 % by weight.

LC medium comprising one or more quaterphenyl compounds selected from the following formula: 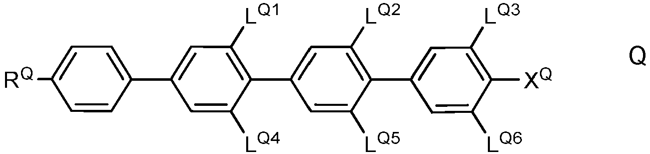 wherein
- R^{Q}: is alkyl, alkoxy, oxaalkyl or alkoxyalkyl having 1 to 9 C atoms or alkenyl or alkenyloxy having 2 to 9 C atoms, all of which are optionally fluorinated,
- X^{Q}: is F, Cl, halogenated alkyl or alkoxy having 1 to 6 C atoms or halogenated alkenyl or alkenyloxy having 2 to 6 C atoms,
- L^{Q1} to L^{Q6}: independently of each other are H or F, with at least one of L^{Q1} to L^{Q6} being F.

Preferred compounds of formula Q are those wherein R^{Q} denotes straight-chain alkyl with 2 to 6 C-atoms, very preferably ethyl, n-propyl or n-butyl.

Preferred compounds of formula Q are those wherein L^{Q3} and L^{Q4} are F. Further preferred compounds of formula Q are those wherein L^{Q3}, L^{Q4} and one or two of L^{Q1} and L^{Q2} are F.

Preferred compounds of formula Q are those wherein X^{Q} denotes F or OCF₃, very preferably F.

The compounds of formula Q are preferably selected from the following subformulae 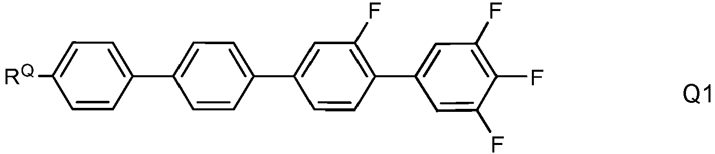 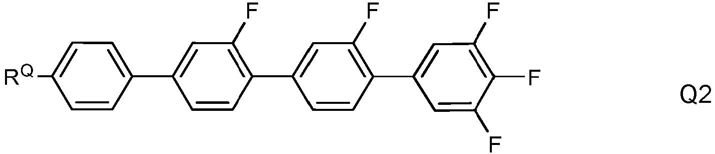 wherein R^{Q} has one of the meanings of formula Q or one of its preferred meanings given above and below, and is preferably ethyl, n-propyl or n-butyl.

Especially preferred are compounds of formula Q1, in particular those wherein R^{Q} is n-propyl.

Preferably the proportion of compounds of formula Q in the LC medium is from >0 to ≤5% by weight, very preferably from 0.05 to 2% by weight, more preferably from 0.1 to 1% by weight, most preferably from 0.1 to 0.8% by weight.

Preferably the LC medium contains 1 to 5, preferably 1 or 2 compounds of formula Q.

The addition of quaterphenyl compounds of formula Q to the LC mixture of a polymerizable LC medium enables to reduce ODF mura, whilst maintaining high UV absorption, enabling quick and complete polymerization, enabling strong and quick tilt angle generation, and increasing the UV stability of the LC medium.

Besides, the addition of compounds of formula Q, which have positive dielectric anisotropy, to the LC medium with negative dielectric anisotropy allows a better control of the values of the dielectric constants ε_{∥} and ε_{⊥}, and in particular enables to achieve a high value of the dielectric constant ε_{∥} while keeping the dielectric anisotropy Δε constant, thereby reducing the kick-back voltage and reducing image sticking.

The LC medium according to the invention preferably comprises
- one or more compounds of formula I or its subformulae, in a proportion from 0.1 to 5.5%, very preferably from 0.2 to 5%, most preferably from 0.5 to 3.5% by weight,
   and/or
- one or more compounds of formula III, preferably of formulae III-1 and III-6, very preferably of formulae III-1-1 and III-6-2, preferably in a total concentration in the range of 2% to 25%, very preferably 4% to 15%.
   and/or
- one or more compounds of formula II, or its subformulae, preferably of formula IIA and/or IID, preferably in a total concentration in the range of from 30% to 65%, more preferably from 35% to 60%, particularly preferably from 40 to 55%;
   and/or
- one or more compounds of formula IV, or its subformulae, preferably of formula IV-3, preferably in a total concentration in the range of 35% to 60%, more preferably 40% to 55%, particularly preferably 40% to 50%;
   and/or
- one or more compounds of formula V, or its subformulae, preferably of formula V-9, preferably in a total concentration in the range of 0.1% to 30%, more preferably 0.25% to 25%, particularly preferably 0.5% to 20%;

Further preferred embodiments are listed below, where the acronyms used are explained in Table B:
- one or more compounds of CCZPC-n-m, in particular CCZPC-3-3, preferably in a proportion from 0.1 to 5.5%, very preferably from 0.2 to 5 %, most preferably from 0.5 to 3.5% by weight;
   and/or
- one or more compounds B(S)-nO-Om and/or COB(S)-n-Om, in particular B(S)-2O-O5 and/or COB(S)-2-O4, preferably in a total concentration in the range of from 2 to 25 %, more preferably from 3 to 20 %, very preferably from 4 to 15 %;
   and/or
- Y-nO-Om, CCY-n-Om, LY-n-Om, and/or CLY-n-Om, in particular Y-4O-O4, CCY-3-O1, CCY-3-O2, CCY-3-O3, CLY-2-O4, CLY-3-O2, CLY-3-O3, CLY-4-O2, and/or CLY-5-O2, preferably in a total concentration in the range of from 30% to 65%, more preferably from 35% to 60%, based on the mixture as a whole;
   and/or
- one or more compounds CC-n-V, in particular CC-3-V, preferably in a total concentration in the range of from 20 % to 60 %, preferably from 25 % to 50%, very preferably from 35 to 45%;
- one or more compounds CY-n-Om, in particular CY-3-O4, CY-5-O4 and/or CY-3-O2, preferably in a total concentration in the range of from 5% to 30%, preferably 10% to 20%, based on the mixture as a whole;
- one or more compounds PY-n-Om, in particular PY-1-O2, PY-2-O2 and/or PY-3-O2, preferably in a total concentration in the range of from 5% to 40%, preferably 10% to 30%, based on the mixture as a whole;
   and/or
- one or more compounds CPY-n-Om, in particular CPY-2-O2, CPY-3-O2 and/or CPY-5-O2, preferably in concentrations > 5%, in particular 7% to 20%, based on the mixture as a whole,
   and/or
- one or more compounds CCY-n-Om, preferably CCY-4-O2, CCY-3-O2, CCY-3-O3, CCY-3-O1 and/or CCY-5-O2, preferably in concentrations > 3%, in particular 5 to 15%, based on the mixture as a whole;
   and/or
- one or more compounds CPY-n-Om and CY-n-Om, preferably in concentrations of 10 to 80%, based on the mixture as a whole,
   and/or
- one or more compounds CPY-n-Om and PY-n-Om, preferably CPY-2-O2 and/or CPY-3-O2 and PY-3-O2 or PY-1-O2, preferably in concentrations of 5 to 20%, more preferably 10 to 15% to based on the mixture as a whole,
   and/or
- one or more compound(s) selected from the group consisting of CCH-13, CCH-23, CCH-34, CCH-35, CCH-301 and CCH-303, preferably in a total concentration of 3 to 40%, preferably 3 to 25% based on the mixture as a whole,
   and/or
- one or more compounds selected from the group consisting of CC-2-V1, CC-3-V1, CC-3-V2, CC-4-V1, CC-3-V, CC-4-V and CC-5-V, preferably in a total concentration of 3 to 50%, more preferably from 5 to 45% based on the mixture as a whole,
   and/or
- one or more compound(s) CCP-n-m and/or CCP-Vn-m and/or CPP-n-m, preferably selected from the group consisting of CCP-3-1, CCP-V-1, CCP-V2-1 and CPP-3-2, preferably in a total concentration of 4 to 35%, preferably 5 to 25% based on the mixture as a whole,
   and/or
- one or more compound(s) CLP-n-m, CLP-n-Om and/or CLP-Vn-m, preferably selected from the group consisting of CLP-3-1, CLP-3-2, CLP-3-O1, CLP-3-O2 and CLP-V-1, preferably in a total concentration of 1 to 25%, preferably 2 to 15% based on the mixture as a whole,
   and/or
- one or more compounds selected from the group consisting of PYP-n-m, PGIY-n-Om and PGP-n-2V, preferably in a total concentration of 2 to 20%, more preferably 2% to 15%, most preferably 2 to 10%, based on the mixture as a whole,
   and/or
- one or more compound(s) PP-n-m and/or PP-n-nVm, preferably selected from the group consisting of PP-1-3, PP-1-4, PP-1-5, PP-1-2V and PP-1-2V1, preferably in a total concentration of 1 to 15%, preferably 2 to 10% based on the mixture as a whole,
   and/or
- the compound PPGU-3-F, preferably in a concentration of 0.1% to 3% based on the mixture as a whole.

It is advantageous for the liquid-crystalline medium according to the invention to preferably have a nematic phase from ≤ -20°C to ≥ 70°C, particularly preferably from ≤ -30°C to ≥ 80°C, very particularly preferably from ≤ -40°C to ≥ 90°C.

The LC medium according to the invention has a clearing temperature of 70°C or more, preferably of 74°C or more.

The expression "have a nematic phase" here means on the one hand that no smectic phase and no crystallisation are observed at low temperatures at the corresponding temperature and on the other hand that clearing still does not occur on heating from the nematic phase. The investigation at low temperatures is carried out in a flow viscometer at the corresponding temperature and checked by storage in test cells having a layer thickness corresponding to the electro-optical use for at least 100 hours. If the storage stability at a temperature of -20°C in a corresponding test cell is 1000 h or more, the LC medium is referred to as stable at this temperature. At temperatures of -30°C and -40°C, the corresponding times are 500 h and 250 h respectively. At high temperatures, the clearing point is measured by conventional methods in capillaries.

The liquid-crystal mixture preferably has a nematic phase range of at least 60 K and a flow viscosity ν₂₀ of at most 30 mm² · s⁻¹ at 20°C.

The mixture is nematic at a temperature of -20°C or less, preferably at -30°C or less, very preferably at -40°C or less.

The values of the birefringence Δn in the liquid-crystal mixture are generally between 0.07 and 0.16, preferably between 0.08 and 0.15, very preferably between 0.09 and 0.14. In a preferred embodiment of the present invention, the LC medium has a birefringence in the range of from 0.085 to 0.110, preferably from 0.097 to 0.108, in particular from 0.090 to 0.107.

The liquid-crystal mixture according to the invention has a dielectric anisotropy Δε of -1.5 to -8.0, preferably of -2.0 to -4.0, in particular -2.5 to -3.6.

The rotational viscosity γ₁ at 20°C is preferably ≤ 120 mPa·s, in particular ≤ 105 mPa·s. In a preferred embodiment, the rotational viscosity γ₁ at 20°C is ≤ 100 mPa·s, in particular ≤ 95 mPa·s.

The liquid-crystal media according to the invention have relatively low values for the threshold voltage (V₀). They are preferably in the range from 1.7 V to 3.0 V, particularly preferably ≤ 2.7 V and very particularly preferably ≤ 2.5 V.

For the present invention, the term "threshold voltage" relates to the capacitive threshold (V₀), also called the Freedericks threshold, unless explicitly indicated otherwise.

In addition, the liquid-crystal media according to the invention have high values for the voltage holding ratio in liquid-crystal cells.

In general, liquid-crystal media having a low addressing voltage or threshold voltage exhibit a lower voltage holding ratio than those having a higher addressing voltage or threshold voltage and vice versa.

For the present invention, the term "dielectrically positive compounds" denotes compounds having a Δε > 1.5, the term "dielectrically neutral compounds" denotes those having -1.5 ≤ Δε ≤ 1.5 and the term "dielectrically negative compounds" denotes those having Δε < -1.5. The dielectric anisotropy of the compounds is determined here by dissolving 10% of the compounds in a liquid-crystalline host and determining the capacitance of the resultant mixture in at least one test cell in each case having a layer thickness of 20 µm with homeotropic and with homogeneous surface alignment at 1 kHz. The measurement voltage is typically 0.5 V to 1.0 V, but is always lower than the capacitive threshold of the respective liquid-crystal mixture investigated.

All temperature values indicated for the present invention are in °C.

The LC media according to the invention are suitable for all FFS (fringe field switching) and UB-FFS (Ultra Brightness FFS) applications having negative Δε. The LC media according to the invention are further suitable for all VA-TFT (vertical alignment-thin film transistor) applications, such as, for example, VAN (vertically aligned nematic), MVA (multidomain VA), (S)-PVA (super patterned VA), ASV (advanced super view, or axially symmetric VA), PSA (polymer sustained VA) and PS-VA (polymer stabilised VA). They are furthermore suitable for IPS (in-plane switching) applications having negative Δε.

The nematic LC media in the displays according to the invention generally comprise two components A and B, which themselves consist of one or more individual compounds.

Component A has significantly negative dielectric anisotropy and gives the nematic phase a dielectric anisotropy of ≤ -0.5. Besides one or more compounds of the formula III, it preferably comprises the compounds of the formulae IIA, IIB and/or IID.

The proportion of component A is preferably between 45 and 100 %, in particular between 60 and 85 %.

For component A, one (or more) individual compound(s) which has (have) a value of Δε ≤ -1.5 is (are) preferably selected. This value must be more negative, the smaller the proportion A in the mixture as a whole.

Component B are dielectrically neutral compounds which has -1.5 ≤ Δε ≤ 1.5. Furthermore, component B has pronounced nematogeneity and a flow viscosity of not greater than 30 mm² · s⁻¹, preferably not greater than 25 mm² . s⁻¹, at 20°C.

A multiplicity of suitable materials is known to the person skilled in the art from the literature.

Particularly preferred individual compounds in component B are extremely low-viscosity nematic liquid crystals having a flow viscosity of not greater than 18 mm² · s⁻¹, preferably not greater than 12 mm² · s⁻¹, at 20°C.

Component B is monotropically or enantiotropically nematic, has no smectic phases and is able to prevent the occurrence of smectic phases down to very low temperatures in LC media. For example, if various materials of high nematogeneity are added to a smectic liquid-crystal mixture, the nematogeneity of these materials can be compared through the degree of suppression of smectic phases that is achieved.

The mixture may optionally also comprise a component C, comprising compounds having a dielectric anisotropy of Δε ≥1.5. These so-called positive compounds are generally present in a mixture of negative dielectric anisotropy in amounts of ≤ 20 % by weight, based on the mixture as a whole.

Besides one or more compounds of the formula III, the LC medium preferably comprises 4 to 15, in particular 5 to 12, and particularly preferably < 10, compounds of the formulae IIA and/or IID.

Besides compounds of the formula III and the compounds of the formulae IIA and/or IID, other constituents may also be present, for example in an amount of up to 45 % of the mixture as a whole, but preferably up to 35 %, in particular up to 10%.

The other constituents are preferably selected from nematic or nematogenic substances, in particular known substances, from the classes of the azoxybenzenes, benzylideneanilines, biphenyls, terphenyls, phenyl or cyclohexyl benzoates, phenyl or cyclohexyl cyclohexanecarboxylates, phenylcyclohexanes, cyclohexylbiphenyls, cyclohexylcyclohexanes, cyclo-hexylnaphthalenes, 1,4-biscyclohexylbiphenyls or cyclohexylpyrimidines, phenyl- or cyclohexyldioxanes, optionally halogenated stilbenes, benzyl phenyl ethers, tolanes and substituted cinnamic acid esters.

The most important compounds which are suitable as constituents of liquid-crystal phases of this type can be characterised by the formula R

R^{R1}-L-G-E-R^{R2} R

in which L and E each denote a carbo- or heterocyclic ring system from the group formed by 1,4-disubstituted benzene and cyclohexane rings, 4,4'-disubstituted biphenyl, phenylcyclohexane and cyclohexylcyclohexane systems, 2,5-disubstituted pyrimidine and 1,3-dioxane rings, 2,6-disubstituted naphthalene, di- and tetrahydronaphthalene, quinazoline and tetrahydroquinazoline,

| | | |
|---|---|---|
| G denotes | -CH=CH- | -N(O)=N- |
| | -CH=CQ- | -CH=N(O)- |
| | -C≡C- | -CH₂-CH₂- |
| | -CO-O- | -CH₂-O- |
| | -CO-S- | -CH₂-S- |
| | -CH=N- | -COO-Phe-COO- |
| | -CF₂O- | -CF=CF- |
| | -OCF₂- | -OCH₂- |
| | -(CH₂)₄- | -(CH₂)₃O- |

or a C-C single bond, Q denotes halogen, preferably chlorine, or -CN, and R^{R1} and R^{R2} each denote alkyl, alkenyl, alkoxy, alkoxyalkyl or alkoxycarbonyloxy having up to 18, preferably up to 8, carbon atoms, or one of these radicals alternatively denotes CN, NC, NO₂, NCS, CF₃, SFs, OCF₃, F, Cl or Br.

In most of these compounds, R^{R1} and R^{R2} are different from one another, one of these radicals usually being an alkyl or alkoxy group. Other variants of the proposed substituents are also common. Many such substances or also mixtures thereof are commercially available. All these substances can be prepared by methods known from the literature.

It goes without saying for the person skilled in the art that the VA, IPS or FFS mixture according to the invention may also comprise compounds in which, for example, H, N, O, Cl and F have been replaced by the corresponding isotopes.

The LC medium has preferably a nematic LC phase.

Preferably the LC medium comprises one or more polymerizable compounds, preferably selected from polymerizable mesogenic compounds, also known as "reactive mesogens" or RMs, very preferably from formula M

R^{a}-B¹-(Z^{m}-B²)ₘ-R^{b} M

in which the individual radicals, on each occurrence identically or differently, and each, independently of one another, have the following meaning:
- R^{a} and R^{b}: P, P-Sp-, H, F, Cl, Br, I, -CN, -NO₂, -NCO, -NCS, -OCN, -SCN, SFs or straight-chain or branched alkyl having 1 to 25 C atoms, in which, in addition, one or more non-adjacent CH₂ groups may each be replaced, independently of one another, by -C(R⁰)=C(R⁰⁰)-, -C≡C-, -N(R⁰⁰)-, -O-, -S-, -CO-, -COO-, -O-CO-, -O-CO-O- in such a way that O and/or S atoms are not linked directly to one another, and in which, in addition, one or more H atoms may be replaced by F, Cl, Br, I, CN, P or P-Sp-, where, if B¹ and/or B² contain a saturated C atom, R^{a} and/or R^{b} may also denote a radical which is spiro-linked to this saturated C atom,
wherein at least one of the radicals R^{a} and R^{b} denotes or contains a group P or P-Sp-,
- P: a polymerizable group,
- Sp: a spacer group or a single bond,
- B¹ and B²: an aromatic, heteroaromatic, alicyclic or heterocyclic group, preferably having 4 to 25 ring atoms, which may also contain fused rings, and which is unsubstituted, or mono- or polysubstituted by L,
- Z^{m}: -O-, -S-, -CO-, -CO-O-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₁-, -CF₂CH₂-, -CH₂CF₂-, -(CF₂)ₙ₁-, -CH=CH-, -CF=CF-, -CH=CF-, - CF=CH-, -C≡C-, -CH=CH-COO-, -OCO-CH=CH-, -CH2CH2-COO-, O-CO-CH₂-CH₂-, -CR⁰R⁰⁰- or a single bond,
- R⁰ and R⁰⁰: H or alkyl having 1 to 12 C atoms,
- m: 0, 1, 2, 3 or 4,
- n1: 1, 2, 3 or 4,
- L: P, P-Sp-, OH, CH₂OH, F, Cl, Br, I, -CN, -NO₂, -NCO, -NCS, - OCN, -SCN, -C(=O)N(R^{x})₂, -C(=O)Y¹, -C(=O)R^{x}, -N(R^{x})₂, optionally substituted silyl, optionally substituted aryl having 6 to 20 C atoms, or straight-chain or branched alkyl, alkoxy, alkylcarbonyl, alkoxycarbonyl, alkylcarbonyloxy or alkoxycarbonyloxy having 1 to 25 C atoms, in which, in addition, one or more H atoms may be replaced by F, Cl, P or P-Sp-,
- Y¹: halogen,
- R^{x}: P, P-Sp-, H, halogen, straight-chain, branched or cyclic alkyl having 1 to 25 C atoms, in which, in addition, one or more non-adjacent CH₂ groups may be replaced by -O-, -S-, -CO-, -CO-O-, -O-CO-, -O-CO-O- in such a way that O and/or S atoms are not linked directly to one another, and in which, in addition, one or more H atoms may be replaced by F, Cl, P or P-Sp-, an optionally substituted aryl or aryloxy group having 6 to 40 C atoms, or an optionally substituted heteroaryl or heteroaryloxy group having 2 to 40 C atoms.

The polymerizable group P is a group which is suitable for a polymerization reaction, such as, for example, free-radical or ionic chain polymerization, polyaddition or polycondensation, or for a polymer-analogous reaction, for example addition or condensation onto a main polymer chain. Particular preference is given to groups for chain polymerization, in particular those containing a C=C double bond or -C≡C- triple bond, and groups which are suitable for polymerization with ring opening, such as, for example, oxetane or epoxide groups.

Very preferred compounds of formula M are selected from the following formulae: 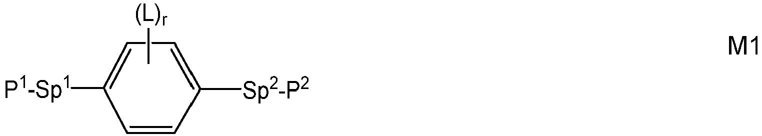 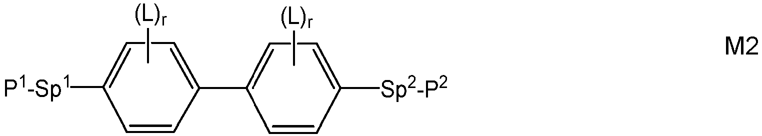 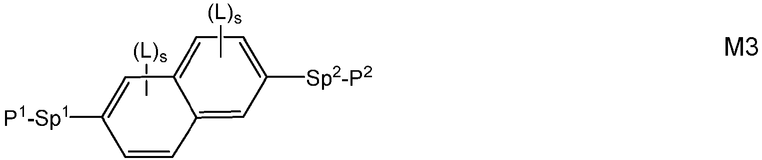 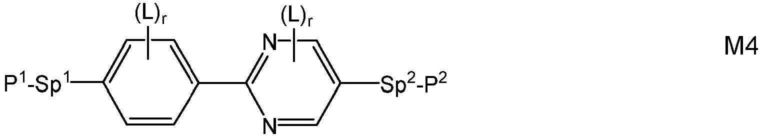 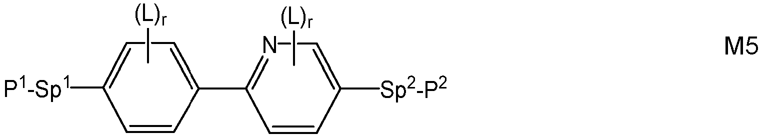 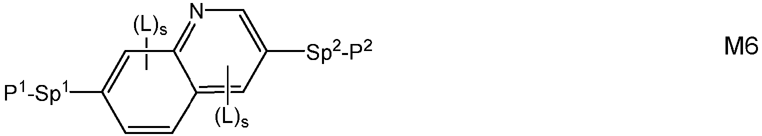 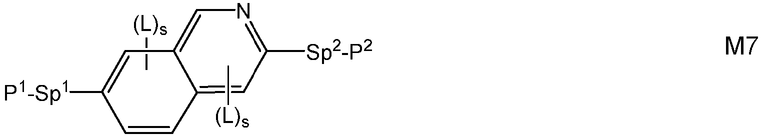 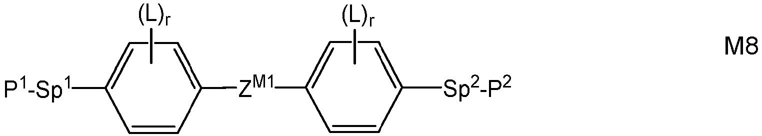 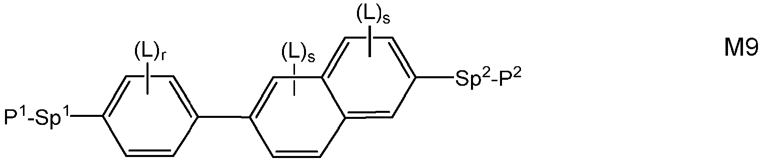 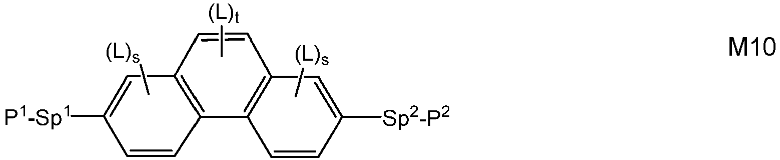 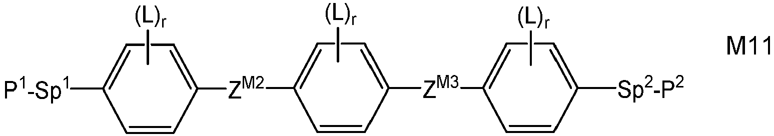 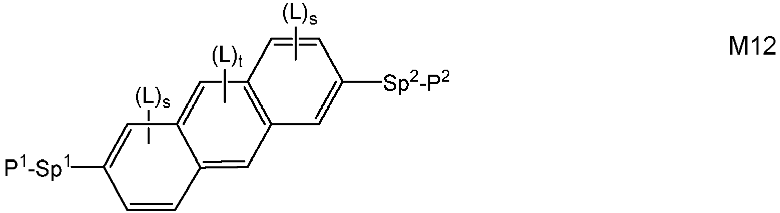 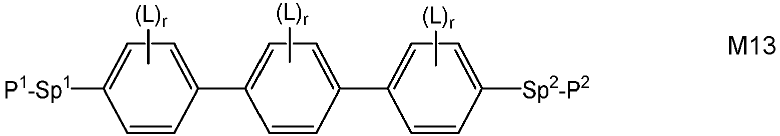 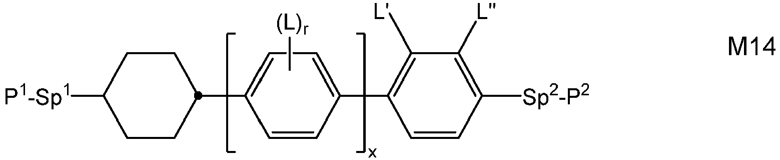 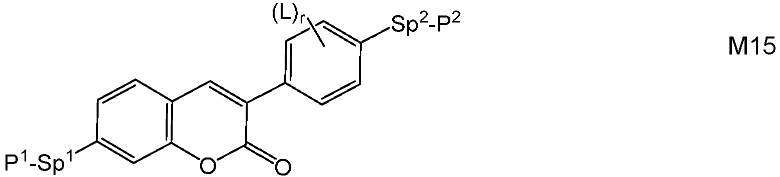 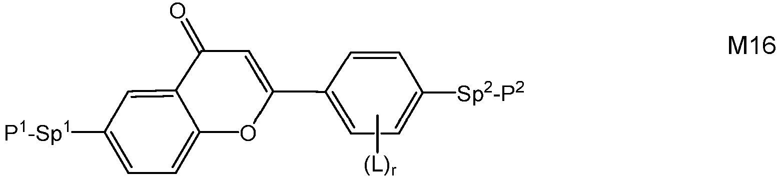 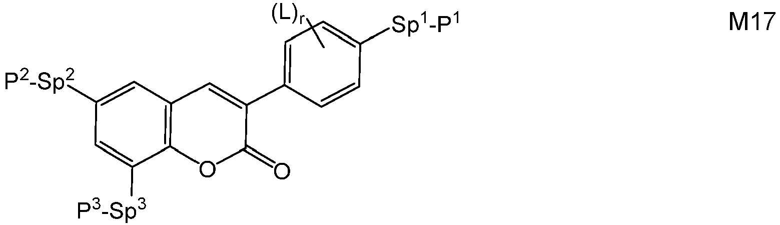 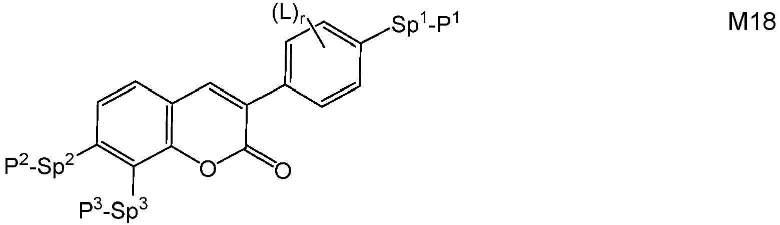 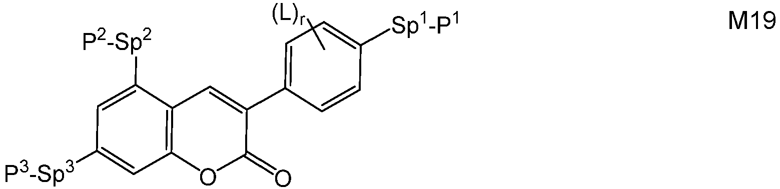 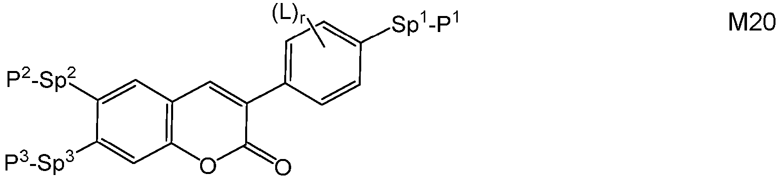 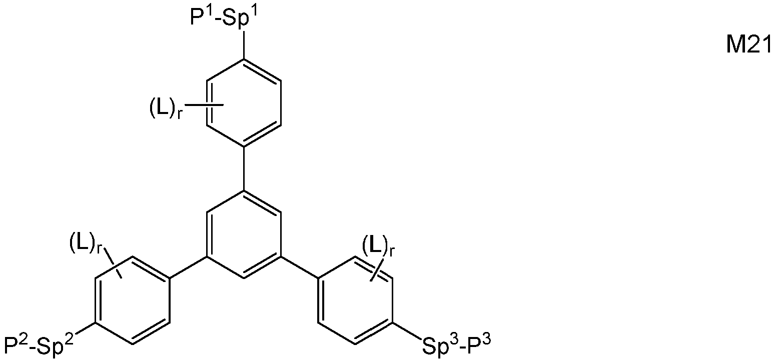 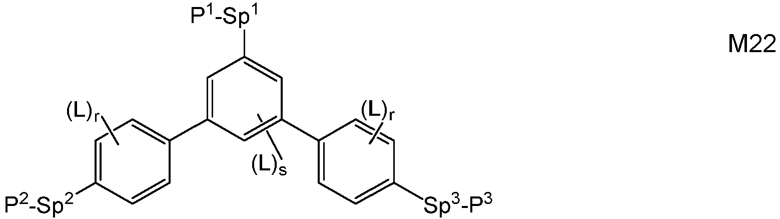 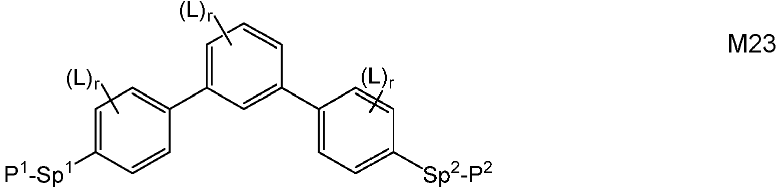 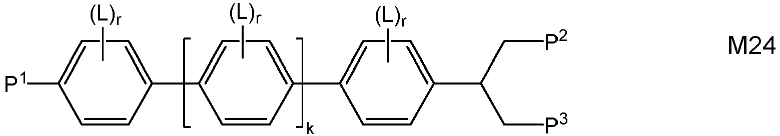 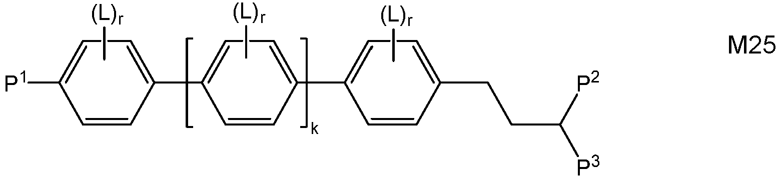 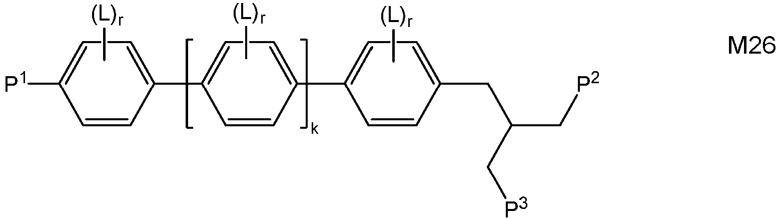 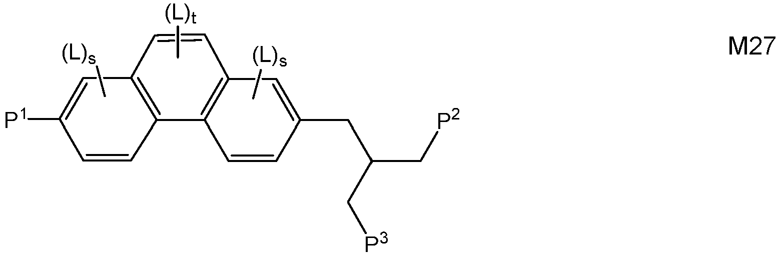 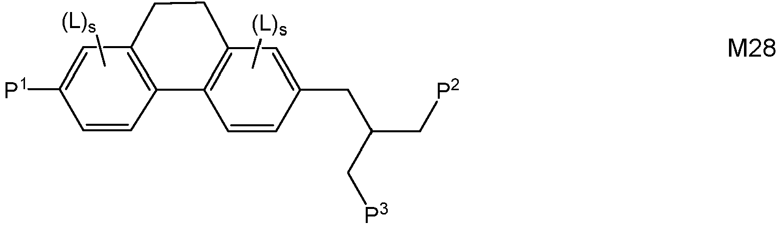 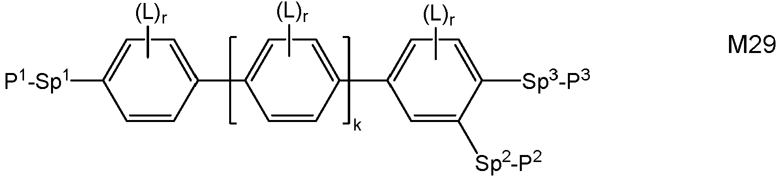 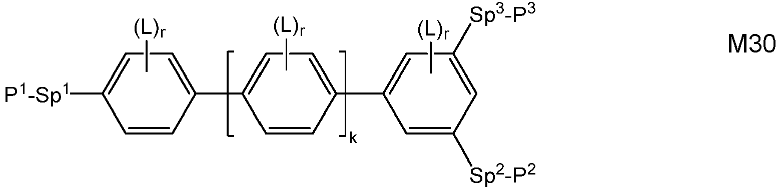 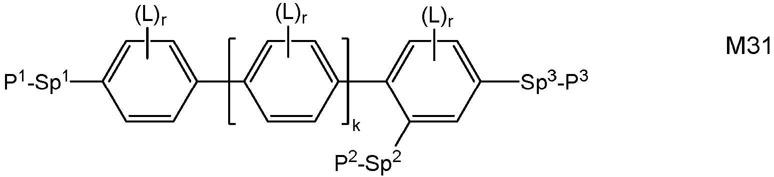 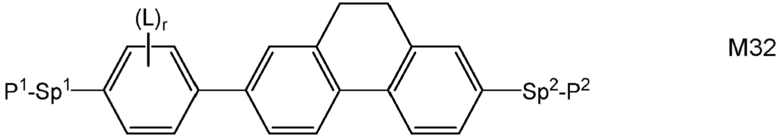 in which the individual radicals, on each occurrence identically or differently, and each, independently of one another, have the following meaning:
- P¹, P², P³: a polymerizable group, preferably selected from vinyloxy, acrylate, methacrylate, fluoroacrylate, chloroacrylate, oxetane and epoxy, very preferably acrylate or methacrylate,
- Sp¹, Sp², Sp³: a single bond or a spacer group where, in addition, one or more of the radicals P¹-Sp¹-, P²-Sp²- and P³-Sp³- may denote R^{M}, with the proviso that at least one of the radicals P¹-Sp¹-, P²-Sp² and P³-Sp³- present is different from R^{M}, preferably having one of the preferred meanings of Sp as given above, very preferably -(CH₂)ₚ₁-, -(CH₂)ₚ₁-O-, -(CH₂)ₚ₁-CO-O- or - (CH₂)ₚ₁-O-CO-O-, wherein p1 is an integer from 1 to 12,
- R^{M}: H, F, Cl, CN or straight-chain or branched alkyl having 1 to 25 C atoms, in which, in addition, one or more non-adjacent CH₂ groups may each be replaced, independently of one another, by -C(R⁰)=C(R⁰⁰)-, -C≡C-, -N(R⁰)-, -O-, -S-, -CO-, -CO-O-, -O-CO-, -O-CO-O- in such a way that O and/or S atoms are not linked directly to one another, and in which, in addition, one or more H atoms may be replaced by F, Cl, CN or P¹-Sp¹-, particularly preferably straight-chain or branched, optionally mono- or polyfluorinated alkyl, alkoxy, alkenyl, alkynyl, alkylcarbonyl, alkoxycarbonyl, alkylcarbonyloxy or alkoxycarbonyloxy having 1 to 12 C atoms (where the alkenyl and alkynyl radicals have at least two C atoms and the branched radicals have at least three C atoms), and wherein R^{aa} does not denote or contain a group P¹, P² or P³,
- R⁰, R⁰⁰: H or alkyl having 1 to 12 C atoms,
- R^{y} and R^{z}: H, F, CH₃ or CF₃,
- X¹, X², X³: -CO-O-, -O-CO- or a single bond,
- Z^{M1}: -O-, -CO-, -C(R^{y}R^{z})- or -CF₂CF₂-,
- Z^{M2}, Z^{M3}: -CO-O-, -O-CO-, -CH₂O-, -OCH₂-, -CF₂O-, -OCF₂- or -(CH₂)ₙ-, where n is 2, 3 or 4,
- L: F, Cl, CN or straight-chain or branched, optionally mono- or polyfluorinated alkyl, alkoxy, thioalkyl, alkenyl, alkynyl, alkylcarbonyl, alkoxycarbonyl, alkylcarbonyloxy or alkoxycarbonyloxy having 1 to 12 C atoms,
- L', L": H, F or Cl,
- k: 0 or 1,
- r: 0, 1, 2, 3 or 4,
- s: 0, 1, 2 or 3,
- t: 0, 1 or 2,
- x: 0 or 1.

Very preferred are compounds of formulae M2, M13 and M32, especially direactive compounds containing exactly two polymerizable groups P¹ and P².

Further preferred are compounds selected from formulae M17 to M31, in particular from formulae M20, M22, M26, M29 and M31, especially trireactive compounds containing exactly three polymerizable groups P¹, P² and P³.

In the compounds of formulae M1 to M32 the group 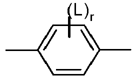 is preferably 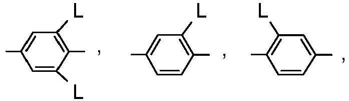 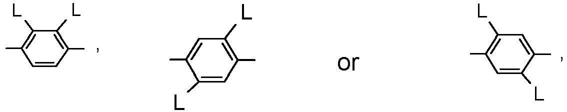 wherein L on each occurrence, identically or differently, has one of the meanings given above or below, and is preferably F, Cl, CN, NO₂, CH₃, C₂H₅, C(CH₃)₃, CH(CH₃)₂, CH₂CH(CH₃)C₂H₅, -CH=CH₂, C(CH₃)=CH₂, SCH₃, OCH₃, OC₂H₅, COCH₃, COC₂H₅, COOCH₃, COOC₂H₅, CF₃, OCF₃, OCHF₂, OC₂F₅ or P-Sp-, very preferably F, Cl, CN, CH₃, C₂H₅, -CH=CH₂, C(CH₃)=CH₂, SCH₃, OCH₃, COCH₃, OCF₃ or P-Sp-, more preferably F, Cl, CH₃, -CH=CH₂, C(CH₃)=CH₂, SCH₃, OCH₃, COCH₃ or OCF₃ , most preferably F, SCH₃ or OCH₃.

Preferred compounds of formulae M1 to M32 are those wherein P¹, P² and P³ denote an acrylate, methacrylate, oxetane or epoxy group, very preferably an acrylate or methacrylate group, most preferably a methacrylate group.

Further preferred compounds of formulae M1 to M32 are those wherein Sp¹, Sp² and Sp³ are a single bond.

Further preferred compounds of formulae M1 to M32 are those wherein one of Sp¹, Sp² and Sp³ is a single bond and another one of Sp¹, Sp² and Sp³ is different from a single bond.

Further preferred compounds of formulae M1 to M32 are those wherein those groups Sp¹, Sp² and Sp³ that are different from a single bond denote -(CH₂)ₛ₁-X"-, wherein s1 is an integer from 1 to 6, preferably 2, 3, 4 or 5, and X" is X" is the linkage to the benzene ring and is -O-, -O-CO-, -CO-O, -O-CO-O- or a single bond.

Further preferred polymerizable compounds are selected from Table E below, especially selected from the group consisting of formulae RM-1, RM-4, RM-8, RM-17, RM-19, RM-35, RM-37, RM-39, RM-40, RM-41, RM-48, RM-52, RM-54, RM-57, RM-58, RM-64, RM-74, RM-76, RM-88, RM-91, RM-102, RM-103, RM-109, RM-116, RM-117, RM-120, RM-121, RM-122, RM-139, RM-140, RM-142, RM-143, RM-145, RM-146, RM-147, RM-149, RM-156 to RM-163, RM-169, RM-170 and RM-171 to RM-183.

Particularly preferred are LC media comprising one, two or three polymerizable compounds of formula M.

Further preferred are LC media comprising two or more direactive polymerizable compounds of formula M, preferably selected from formulae M1 to M16 and M32, very preferably selected from formulae M2, M13 and M32.

Further preferred are LC media comprising one or more direactive polymerizable compounds of formula M, preferably selected from formulae M1 to M16 and M32, very preferably from formulae M2, M13 and M32, and one or more trireactive polymerizable compounds of formula M, preferably selected from formulae M17 to M32, very preferably from formulae M20, M22, M26, M29 and M31.

Further preferred are LC media comprising one or more polymerizable compounds of formula M wherein at least one r is not 0, or at least one of s and t is not 0, very preferably selected from formulae M2, M13, M22, M24, M27, M29, M31 and M32, and wherein L is selected from the preferred groups shown above, most preferably from F, OCH₃ and SCH₃.

Further preferred are LC media comprising one or more polymerizable compounds which show absorption in the wavelength range from 320 to 380nm, preferably selected from formula M, very preferably from formulae M1 to M32.

Particular preference is given to LC media comprising one, two or three polymerizable compounds selected from formula M or formulae M1 to M32.

The combination of compounds of the preferred embodiments mentioned above with the polymerized compounds described above and below causes low threshold voltages, low rotational viscosities and very good low-temperature stabilities in the LC media according to the invention at the same time as constantly high clearing points and high HR values, and allows the rapid establishment of a particularly low tilt angle (i.e. a large tilt) in PSA displays. In particular, the LC media exhibit significantly shortened response times, in particular also the grey-shade response times, in PSA displays compared with the LC media from the prior art.

For use in PSA displays the total proportion of the polymerizable compounds, like those of formula M or M1 to M32, in the LC medium is preferably from 0.01 to 2.0%, very preferably from 0.1 to 1.0%, most preferably from 0.2 to 0.8%.

For use in SA-VA displays the total proportion of the polymerizable compounds, like those of formula M or M1 to M32, in the LC medium is preferably from > 0 to < 3%, very preferably from > 0 to < 2%, more preferably from 0.05 to 2.0, most preferably from 0.05 to 1.0%.

The compounds of the formulae M and its subformulae can be prepared analogously to processes known to the person skilled in the art and described in standard works of organic chemistry, such as, for example, in Houben-Weyl, Methoden der organischen Chemie [Methods of Organic Chemistry], Thieme-Verlag, Stuttgart.

For example, acrylic or methacrylic esters can be prepared by esterification of the corresponding alcohols with acid derivatives like, for example, (meth)acryloyl chloride or (meth)acrylic anhydride in the presence of a base like pyridine or triethyl amine, and 4-(*N*,*N*-dimethylamino)pyridine (DMAP). Alternatively the esters can be prepared by esterification of the alcohols with (meth)acrylic acid in the presence of a dehydrating reagent, for example according to Steglich with dicyclohexylcarbodiimide (DCC), *N*-(3-dimethylaminopropyl)-*N'*-ethylcarbodiimide (EDC) or *N*-(3-dimethylaminopropyl)-*N'*-ethylcarbodiimide hydrochloride and DMAP.

The invention furthermore relates to an LC medium or LC display as described above, wherein the polymerizable compounds, like those of formula M and its subformulae, are present in polymerized form.

Optionally one or more polymerization initiators are added to the LC medium. Suitable conditions for the polymerization and suitable types and amounts of initiators are known to the person skilled in the art and are described in the literature. Suitable for free-radical polymerization are, for example, the commercially available photoinitiators Irgacure651^{®}, Irgacure184^{®}, Irgacure907^{®}, Irgacure369^{®} or Darocure1173^{®} (Ciba AG). If a polymerization initiator is employed, its proportion is preferably 0.001 to 5% by weight, particularly preferably 0.001 to 1% by weight.

The polymerizable compounds according to the invention are also suitable for polymerization without an initiator, which is accompanied by considerable advantages, such, for example, lower material costs and in particular less contamination of the LC medium by possible residual amounts of the initiator or degradation products thereof. The polymerization can thus also be carried out without the addition of an initiator. In a preferred embodiment, the LC medium thus does not contain a polymerization initiator.

The LC medium may also comprise one or more stabilisers in order to prevent undesired spontaneous polymerization of the RMs, for example during storage or transport. Suitable types and amounts of stabilisers are known to the person skilled in the art and are described in the literature. Particularly suitable are, for example, the commercially available stabilisers from the Irganox^{®} series (Ciba AG), such as, for example, Irganox^{®} 1076. If stabilisers are employed, their proportion, based on the total amount of RMs or the polymerizable component (component A), is preferably 10-50,000 ppm, particularly preferably 50-5,000 ppm.

In a preferred embodiment the LC media contain one or more chiral dopants, preferably in a concentration from 0.01 to 1% by weight, very preferably from 0.05 to 0.5% by weight. The chiral dopants are preferably selected from the group consisting of compounds from Table C below, very preferably from the group consisting of R- or S-1011, R- or S-2011, R- or S-3011, R- or S-4011, and R- or S-5011.

In another preferred embodiment the LC media contain a racemate of one or more chiral dopants, which are preferably selected from the chiral dopants mentioned in the previous paragraph.

In another preferred embodiment of the present invention the LC media contain one or more further stabilisers.

Preferred stabilisers are selected from the compounds of formula H 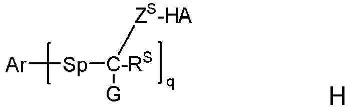 in which
- Ar: denotes an aromatic or heteroaromatic hydrocarbon group having 4 to 40 C atoms, preferably 6 to 30 C atoms;
- Sp: denotes a spacer group;
- R^{S}: denotes H, alkyl having 1 to 12 C atoms or alkenyl having 2 to 12 C atoms;
- Z^{S}: denotes -O-, -C(O)O-, -(CH₂)_{z}- or -(CH₂)_{z}O-, or a single bond;
- HA: denotes 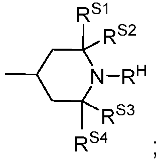
- R^{H}: denotes H, O·, CH₃, OH or OR^{S}, preferably H or O·;
- R^{S1}, R^{S2}, R^{S3} and R^{S4},: identically or differently, denote alkyl having 1 to 6 C atoms, preferably having 1 to 3 C atoms, very preferably CH₃;
- G: denotes H or R^{S} or a group Z^{S}-HA;
- z: is an integer from 1 to 6; and
- q: is 3 or 4.

The compounds of formula H are described in EP3354710 A1 and EP3354709 A1.

Preferred compounds of formula H are selected from the formulae H-1, H-2 and H-3: 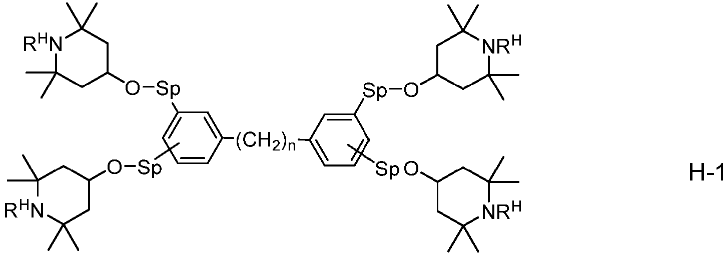 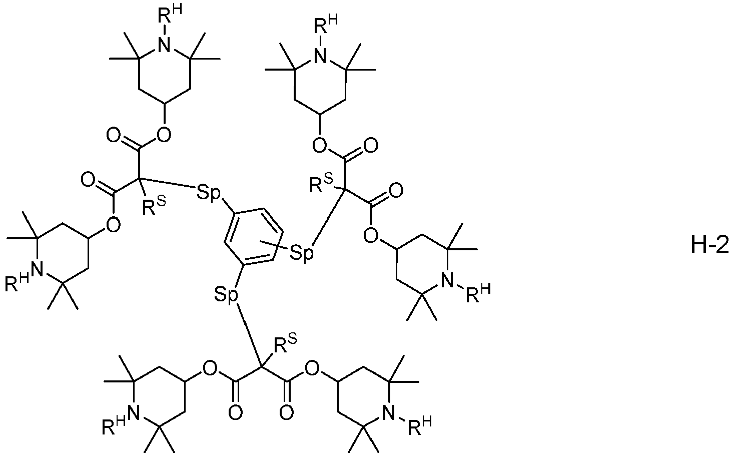 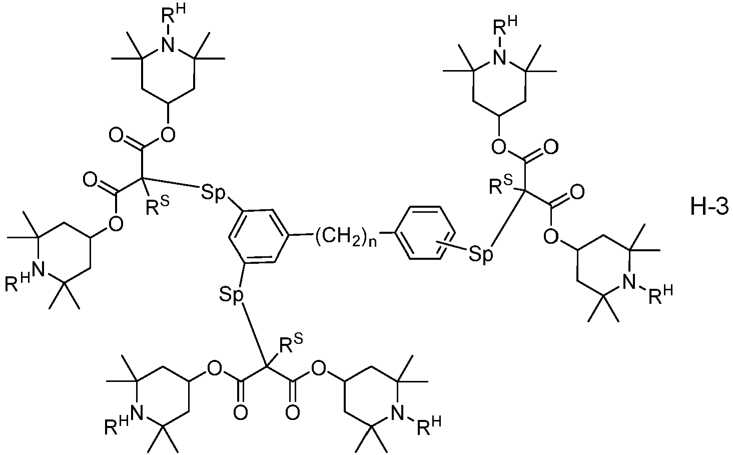 in which R^{H} has the meanings given above and preferably denotes H or O·, and n is an integer from 0 to 12, preferably 5, 6, 7, 8 or 9, very preferably 7, and Sp denotes a spacer group, preferably alkylene having 1 to 12 C atoms in which one or more non-adjacent -CH₂- groups may be replaced with -O-.

Preferred compounds of formula H-1 are those of formula H-1-1: 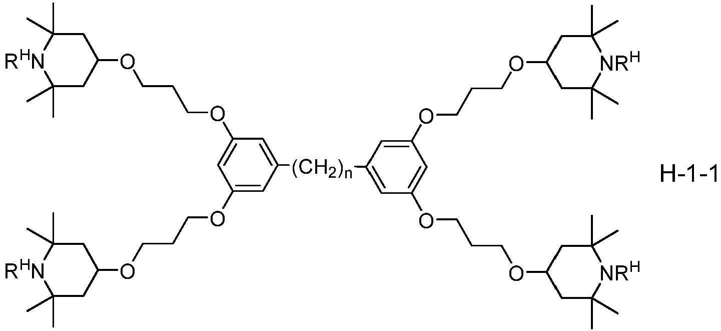 in which R^{H} has the meanings given above and preferably denotes H or O·, and n is an integer from 0 to 12, preferably 5, 6, 7, 8 or 9, very preferably 7.

Very preferred compounds of formula H-1-1 are those of formula H-1-1-1:

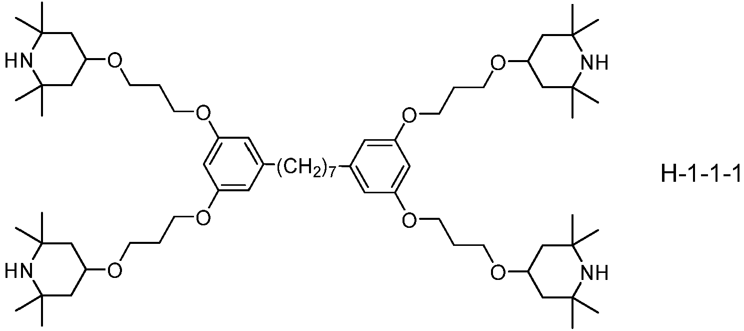

Preferred compounds of formula H-2 are those of formula H-2-1: 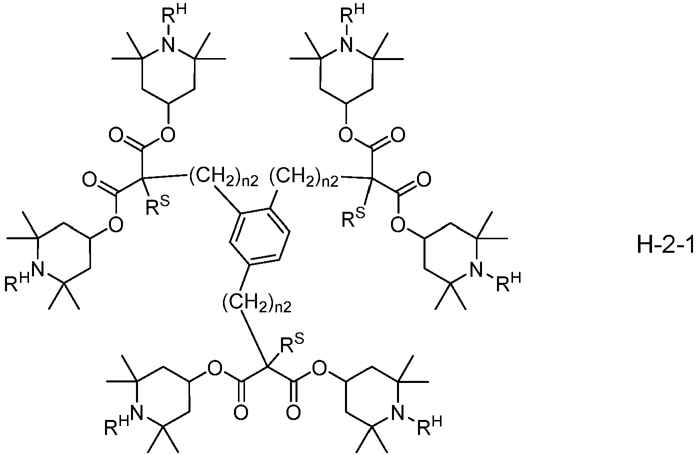 in which R^{H} has the meanings given above and preferably denotes H or O·, and n2, on each occurrence identically or differently, preferably identically, is an integer from 1 to 12, preferably 2, 3, 4, 5, or 6, very preferably 3, and R^{S} on each occurrence identically or differently, preferably identically, denotes alkyl having 1 to 6 C atoms, preferably n-butyl.

Very preferred compounds of formula H-2-1 are those of formula H-2-1-1:

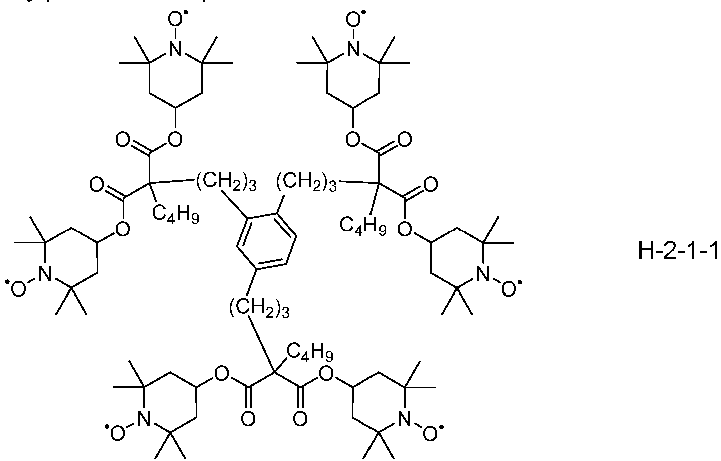

Preferred compounds of formula H-3 are selected from the formula H-3-1: 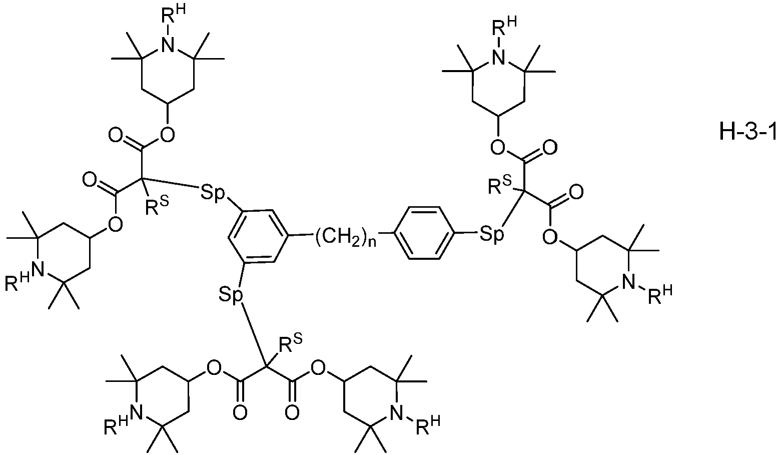 in which Sp and R^{H} have the meanings given above and R^{H} preferably denotes H or O·, and n is an integer from 0 to 12, preferably 5, 6, 7, 8 or 9, very preferably 7.

Further preferred stabilisers are selected from the group consisting of the formulae ST-1 to ST-18: 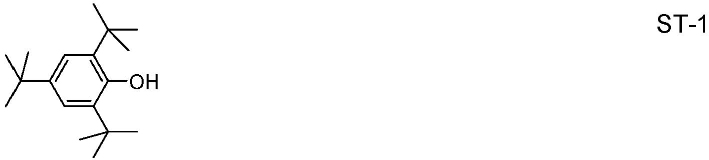 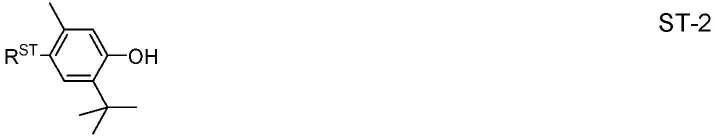 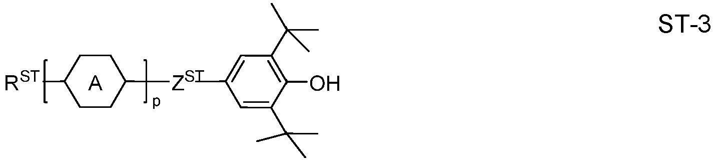 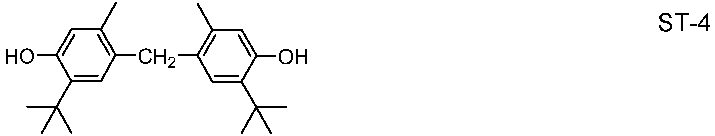 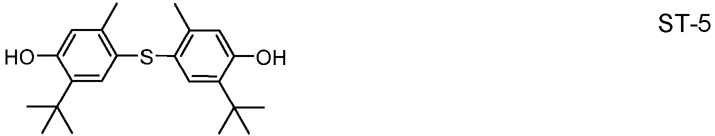 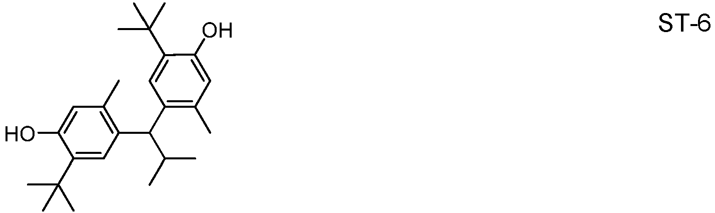 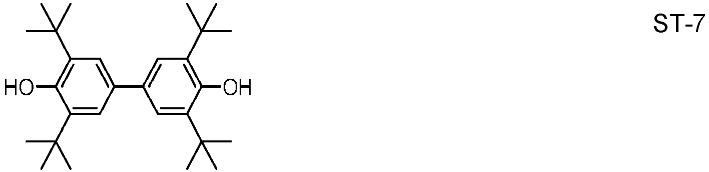 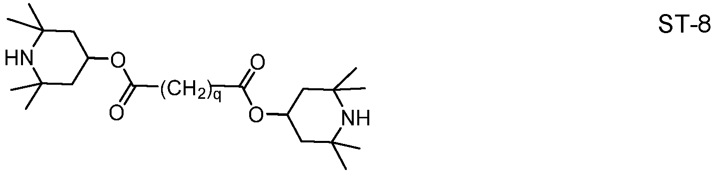 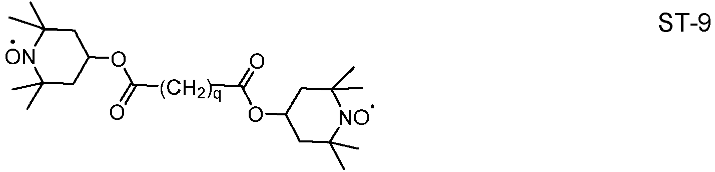 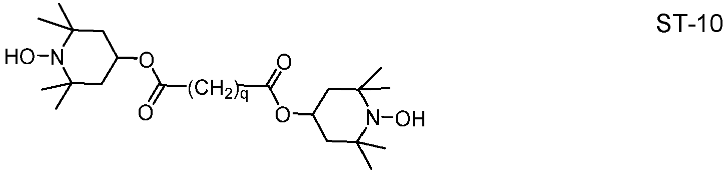 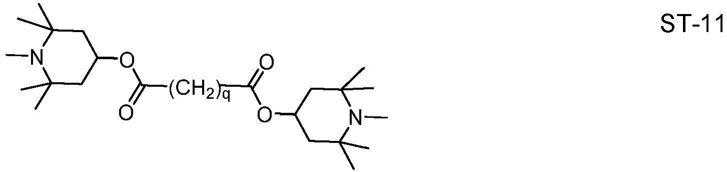 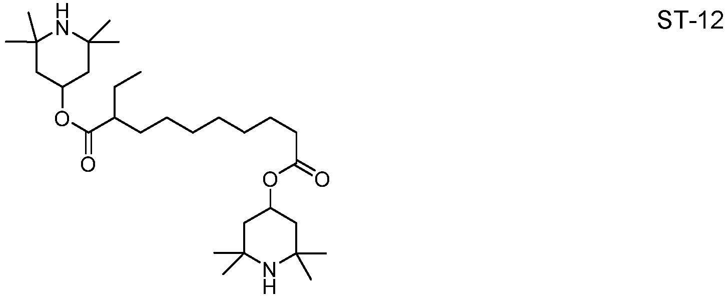 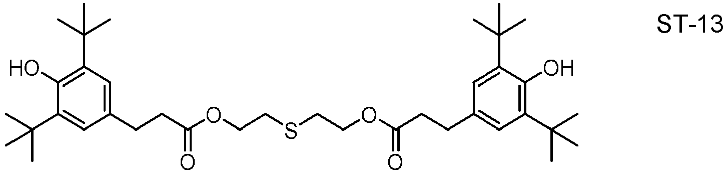 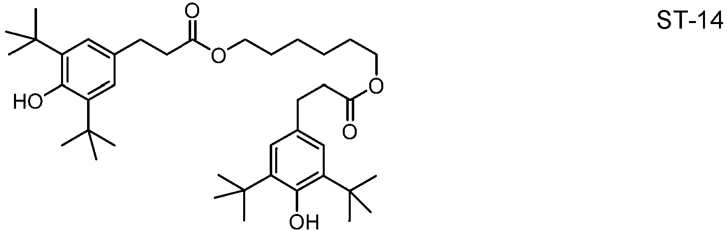 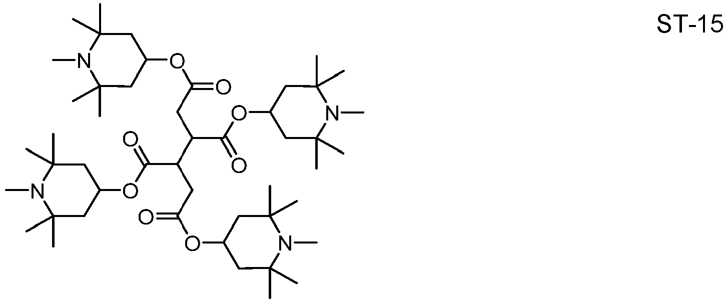 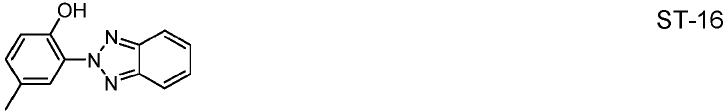 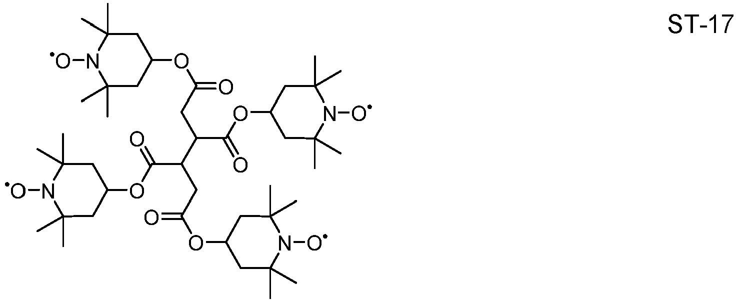 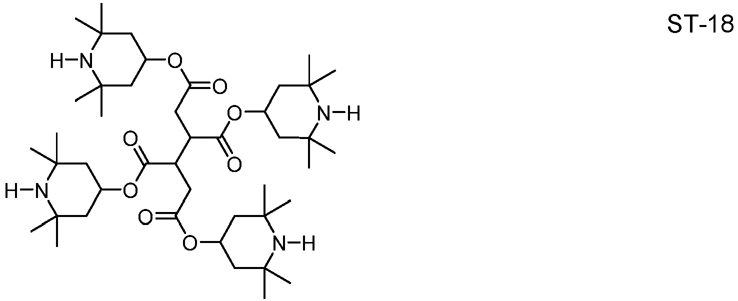 in which
- R^{ST}: denotes H, an alkyl or alkoxy radical having 1 to 15 C atoms, wherein, in addition, one or more CH₂ groups may each be replaced, independently of one another, by -C≡C-, -CF₂O-, -OCF₂-, -CH=CH-, 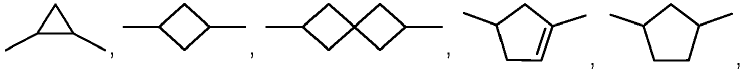 -O-, -CO-O-, -O-CO- in such a way that O atoms are not linked directly to one another, and in which, in addition, one or more H atoms may be replaced by halogen, 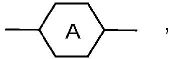 on each occurrence, identically or differently, denotes 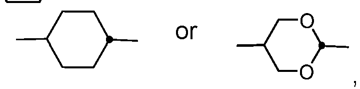
- Z^{ST}: each, independently of one another, denote -CO-O-, -O-CO-, -CF₂O-, -OCF₂-, -CH₂O-, -OCH₂-, -CH₂-, -CH₂CH₂-, -(CH₂)₄-, -CH=CH-, -CH₂O-, -C₂F₄-, -CH₂CF₂-, -CF₂CH₂-, -CF=CF-, -CH=CF-, -CF=CH-, -CH=CH-, - C≡C- or a single bond,
- L¹ and L²: each, independently of one another, denote F, Cl, CH₃, CF₃ or CHF₂,
- p: denotes 0, 1 or 2,
- q: denotes 1, 2, 3, 4, 5, 6, 7, 8, 9 or 10.

Preferred compounds of formula ST are those selected from the formulae ST-3 and in particular: 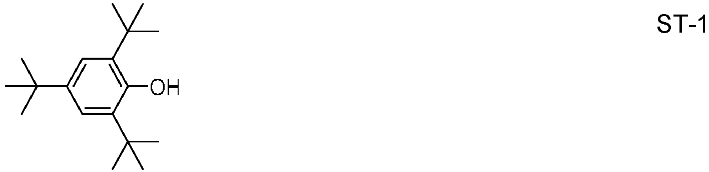 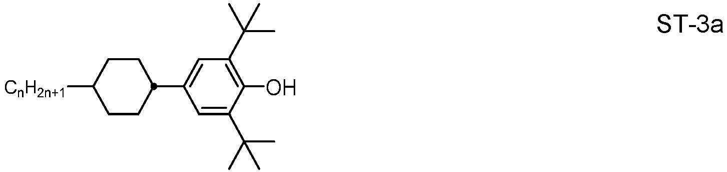 in which n = 1, 2, 3, 4, 5, 6 or 7, preferably n = 3 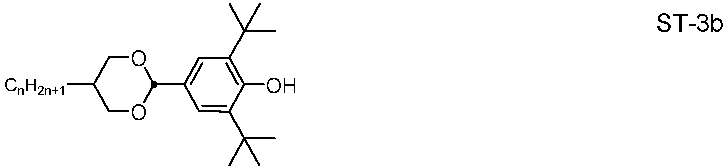 in which n = 1, 2, 3, 4, 5, 6 or 7, preferably n = 3 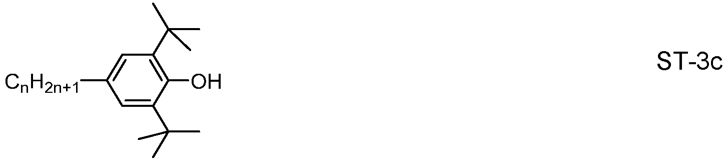 in which n = 1, 2, 3, 4, 5, 6 or 7, preferably n = 1 or 7

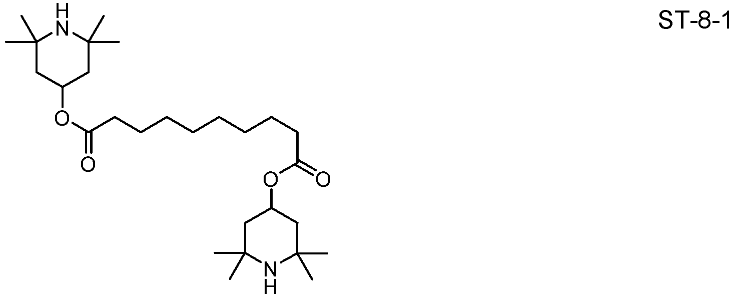

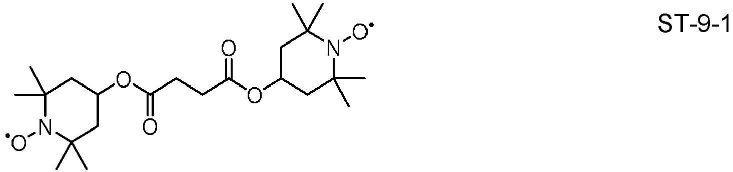

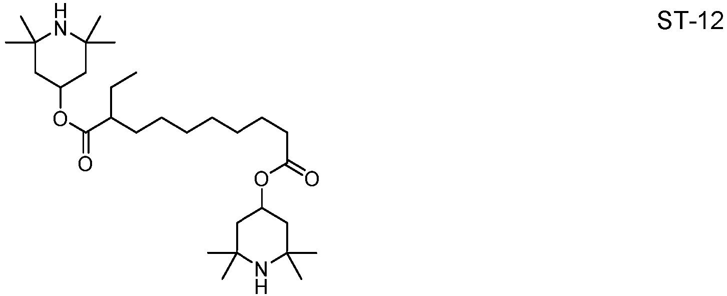

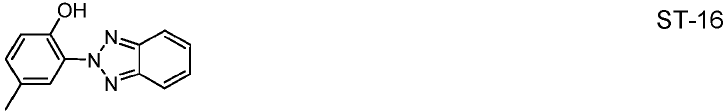

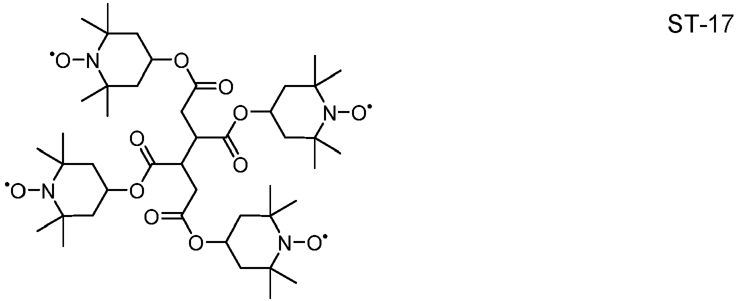

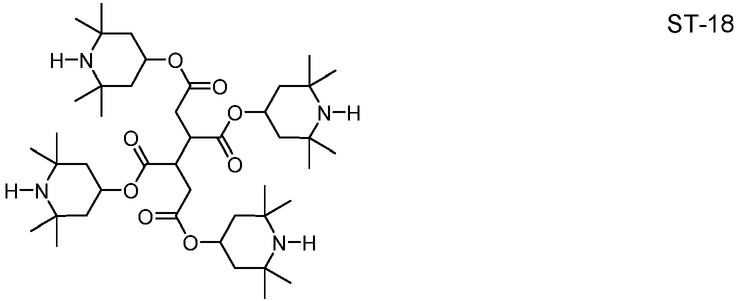

In the compounds of the formulae ST-3a and ST-3b, n preferably denotes 3. In the compounds of the formula ST-2a, n preferably denotes 7.

Very preferred stabilisers are selected from the group of the compounds of the formulae ST-2a-1, ST-3a-1, ST-3a-2, ST-3b-1, ST-3b-2, ST-7, ST-8-1, ST-9-1 and ST-12:

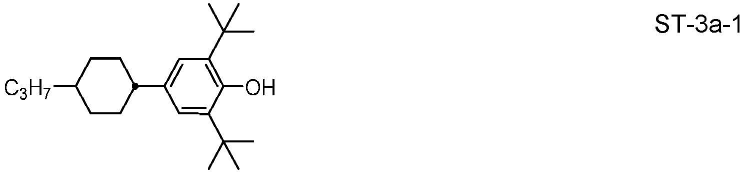

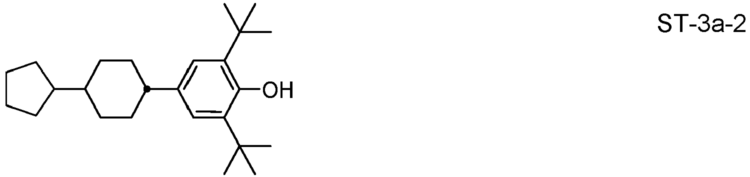

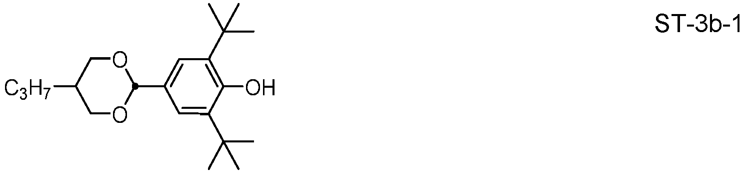

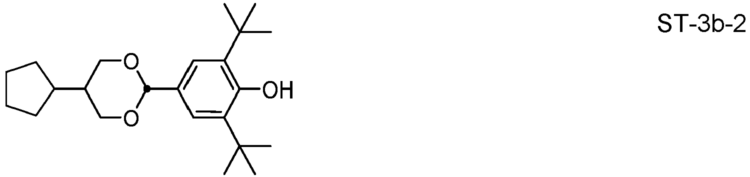

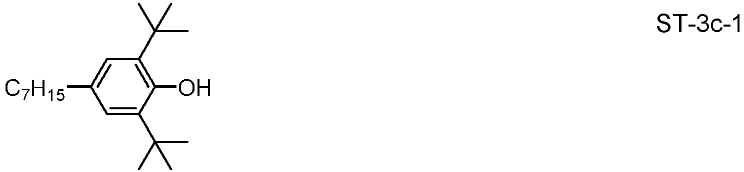

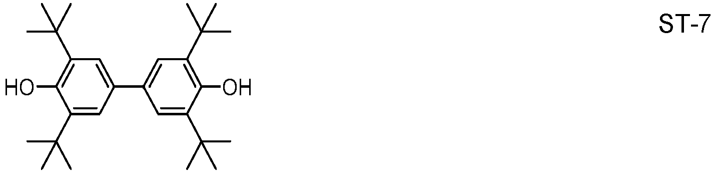

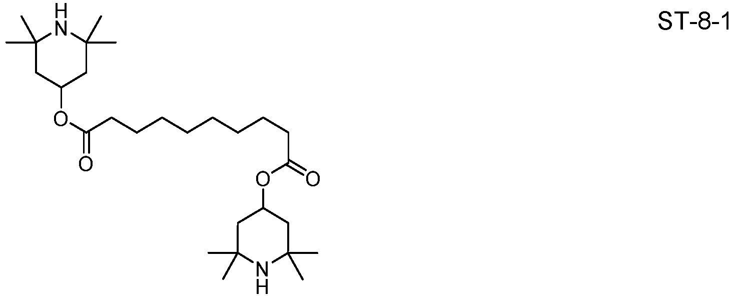

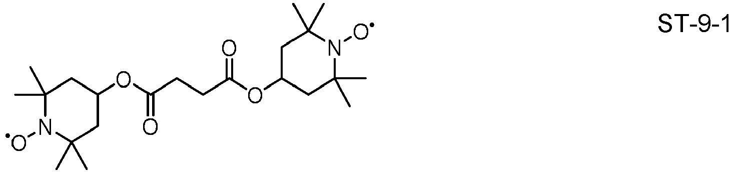

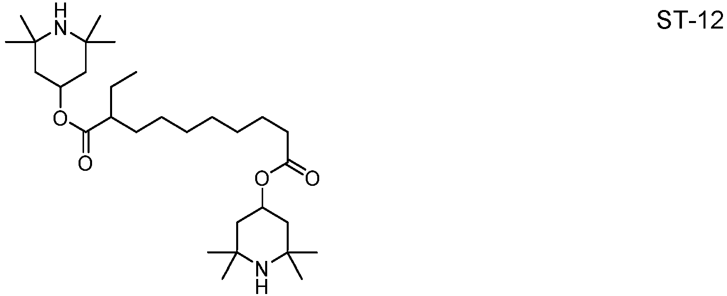

In another preferred embodiment the LC medium comprises one or more stabilisers selected from Table D below.

Preferably the proportion of stabilisers in the LC medium is from 10 to 500 ppm, very preferably from 20 to 100 ppm.

The LC medium according to the present invention may additionally comprise one or more further components or additives, preferably selected from the list including but not limited to co-monomers, chiral dopants, polymerization initiators, inhibitors, stabilisers, surfactants, wetting agents, lubricating agents, dispersing agents, hydrophobing agents, adhesive agents, flow improvers, defoaming agents, deaerators, diluents, reactive diluents, auxiliaries, colourants, dyes, pigments and nanoparticles.

Furthermore, it is possible to add to the LC media, for example, 0 to 15% by weight of pleochroic dyes, furthermore nanoparticles, conductive salts, preferably ethyldimethyldodecylammonium 4-hexoxybenzoate, tetrabutylammonium tetraphenylborate or complex salts of crown ethers (cf., for example, Haller et al., Mol. Cryst. Liq. Cryst. 24, 249-258 (1973)), for improving the conductivity, or substances for modifying the dielectric anisotropy, the viscosity and/or the alignment of the nematic phases. Substances of this type are described, for example, in DE-A 22 09 127, 22 40 864, 23 21 632, 23 38 281, 24 50 088, 26 37 430 and 28 53 728.

The individual components of the above-listed preferred embodiments of the LC media according to the invention are either known or methods for the preparation thereof can readily be derived from the prior art by the person skilled in the relevant art, since they are based on standard methods described in the literature. Corresponding compounds of the formula CY are described, for example, in EP-A-0 364 538. Corresponding compounds of the formula IV are described, for example, in DE-A-26 36 684 and DE-A-33 21 373.

The LC media which can be used in accordance with the invention are prepared in a manner conventional per se, for example by mixing one or more of the above-mentioned compounds with one or more polymerizable compounds as defined above, and optionally with further liquid-crystalline compounds and/or additives. In general, the desired amount of the components used in lesser amount is dissolved in the components making up the principal constituent, advantageously at elevated temperature. It is also possible to mix solutions of the components in an organic solvent, for example in acetone, chloroform or methanol, and to remove the solvent again, for example by distillation, after thorough mixing. The invention furthermore relates to the process for the preparation of the LC media according to the invention.

It goes without saying to the person skilled in the art that the LC media according to the invention may also comprise compounds in which, for example, H, N, O, Cl, F have been replaced by the corresponding isotopes like deuterium etc.

The following examples explain the present invention without restricting it. However, they show the person skilled in the art preferred mixture concepts with compounds preferably to be employed and the respective concentrations thereof and combinations thereof with one another. In addition, the examples illustrate which properties and property combinations are accessible.

For the present invention and in the following examples, the structures of the liquid-crystal compounds are indicated by means of acronyms. Unless stated otherwise, the transformation into chemical formulae is done in accordance with Tables A.1 to A.3 below. All radicals CₙH₂ₙ₊₁, CₘH₂ₘ₊₁ and CₗH₂ₗ₊₁ or CₙH₂ₙ, CₘH₂ₘ and CₗH₂ₗ are straight-chain alkyl radicals or alkylene radicals, in each case having n, m and l C atoms respectively. Preferably n, m and l are independently of each other 1, 2, 3, 4, 5, 6, or 7. Table A.1 shows the codes for the ring elements of the nuclei of the compound, Table A.2 lists the bridging units, and Table A.3 lists the meanings of the symbols for the left- and right-hand end groups of the molecules. The acronyms are composed of the codes for the ring elements with optional linking groups, followed by a first hyphen and the codes for the left-hand end group, and a second hyphen and the codes for the right-hand end group.

**Table A.1: Ring elements**

| | | | |
|---|---|---|---|
| **C** | 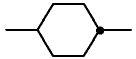 | | |
| **D** | 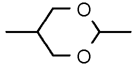 | **DI** | 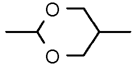 |
| **A** | 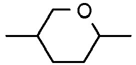 | **AI** | 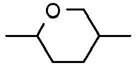 |
| **P** | 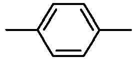 | | |
| **G** | 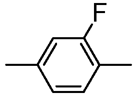 | **GI** | 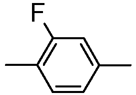 |
| **U** | 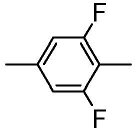 | **UI** | 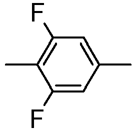 |
| **Y** | 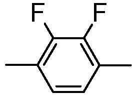 | | |
| **P(F, CI)Y** | 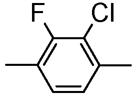 | **P(CI,F)Y** | 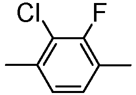 |
| **np** | 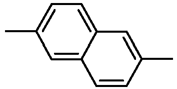 | | |
| **n3f** | 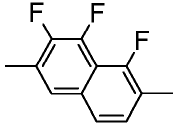 | **nN3fl** | 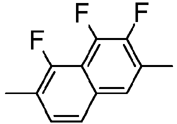 |
| **th** | 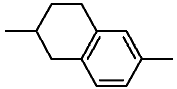 | **thl** | 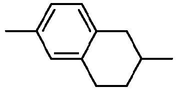 |
| **tH2f** | 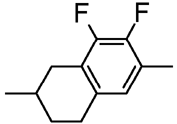 | **tH2fl** | 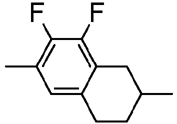 |
| **o2f** | 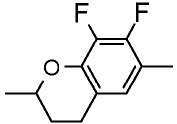 | **o2fl** | 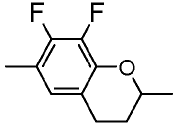 |
| **dh** | 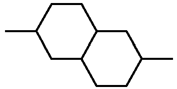 | **nf** | 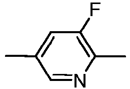 |
| **B** | 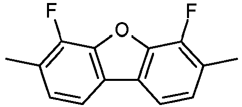 | **B(S)** | 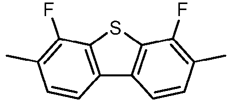 |
| **O** | 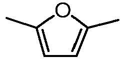 | **S** | 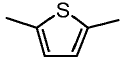 |
| **K** | 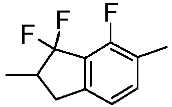 | **KI** | 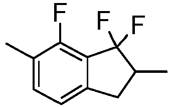 |
| **L** | 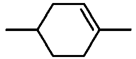 | **LI** | 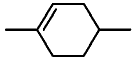 |
| **F** | 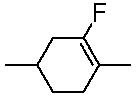 | **FI** | 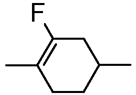 |
| **Bh** | 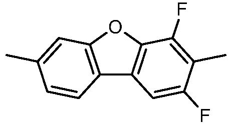 | **Bh(S)** | 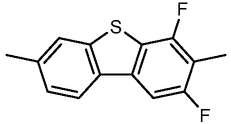 |
| **Bf** | 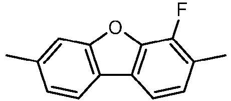 | **Bf(S)** | 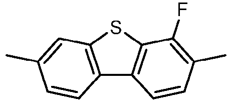 |
| **Bfi** | 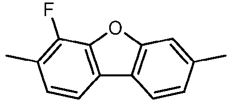 | **Bfi(S)** | 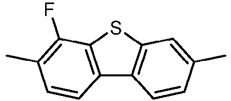 |

**Table A.2: Bridging units**

| | | | |
|---|---|---|---|
| **E** | -CH₂-CH₂- | | |
| **V** | -CH=CH- | | |
| **T** | -C≡C- | | |
| **W** | **-**CF₂-CF₂- | | |
| **B** | -CF=CF- | | |
| **Z** | -CO-O- | **ZI** | -O-CO- |
| **X** | -CF=CH- | **XI** | -CH=CF- |
| **O** | -CH₂-O- | **OI** | -O-CH₂- |
| **Q** | -CF₂-O- | **QI** | -O-CF₂- |

**Table A.3: End groups**

| **On the left individually or in combination** | | **On the right individually or in combination** | |
|---|---|---|---|
| **-n-** | CₙH₂ₙ₊₁- | **-n** | -CₙH₂ₙ₊₁ |
| **-nO-** | CₙH₂ₙ₊₁-O- | **-On** | **-**O-CₙH₂ₙ₊₁ |
| | | **-m** | -CₘH₂ₘ₊₁ |
| | | **-Om** | -O-CₘH₂ₘ₊₁ |
| **-V-** | CH₂=CH- | **-V** | -CH=CH₂ |
| **-nV-** | CₙH₂ₙ₊₁-CH=CH- | **-nV** | -CₙH₂ₙ-CH=CH₂ |
| **-Vn-** | CH₂=CH- CₙH₂ₙ- | **-Vn** | -CH=CH-CₙH₂ₙ₊₁ |
| **-nVm-** | CₙH₂ₙ₊₁-CH=CH-CₘH₂ₘ- | **-nVm** | - CₙH₂ₙ-CH=CH-CₘH₂ₘ₊₁ |
| **-N-** | N≡C- | **-N** | -C≡N |
| **-S-** | S=C=N- | **-S** | -N=C=S |
| **-F-** | F- | **-F** | -F |
| **-CL-** | Cl- | **-CL** | -Cl |
| **-M-** | CFH₂- | **-M** | -CFH₂ |
| **-D-** | CF₂H- | **-D** | -CF₂H |
| **-T-** | CF₃- | **-T** | -CF₃ |
| **-MO-** | CFH₂O - | **-OM** | -OCFH₂ |
| **-DO-** | CF₂HO - | **-OD** | -OCF₂H |
| **-TO-** | CF₃O - | **-OT** | -OCF₃ |
| **-A-** | H-C≡C- | **-A** | -C≡C-H |
| **-nA-** | CₙH₂ₙ₊₁-C≡C- | **-An** | -C≡C-CₙH₂ₙ₊₁ |
| **-NA-** | N≡C-C≡C- | **-AN** | -C≡C-C≡N |
| **-(cn)-** | 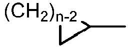 | **-(cn)** | 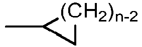 |
| **-(cn)m-** | 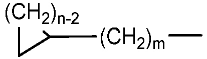 | **-m(cn)** | 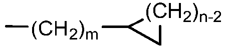 |

| **On the left only in combination** | | **On the right only in combination** | |
|---|---|---|---|
| **-...n...-** | -CₙH₂ₙ- | **-...n...-** | -CₙH₂ₙ- |
| | | **-...m...-** | -CₘH₂ₘ- |
| **-...M...-** | -CFH- | **-...M...-** | -CFH- |
| **-...D...-** | -CF₂- | **-...D...-** | -CF₂- |
| **-...V...-** | -CH=CH- | **-...V...** | **-** -CH=CH- |
| **-...Z...-** | -CO-O- | **-...z...-** | -CO-O- |
| **-...ZI...-** | -O-CO- | **-...ZI...-** | -O-CO- |
| **-...K...-** | -CO- | **-...K...-** | -CO- |
| **-...W...-** | -CF=CF- | **-...W...-** | -CF=CF- |
| **-...O...-** | -O- | **-...O...-** | -O- |

in which n and m are each integers, and the three dots "..." are placeholders for other abbreviations from this table.

Table B shows illustrative structures of compounds together with their respective abbreviations which are preferred co-compounds according to the claimed mixture concept of the present invention.

**Table B**

| In Table B, n, m, k and l are, independently of one another, each an integer, preferably 1 to 9 preferably 1 to 7, k and l may also be 0 and are preferably 0 to 4, more preferably 0 or 2 and most preferably 2, n is preferably 1, 2, 3, 4 or 5 or, in the combination "-nO-", n is preferably 1, 2, 3 or 4, very preferably 2 or 4, m is preferably 1, 2, 3, 4 or 5 or, in the combination "-Om", m is preferably 1, 2, 3 or 4, more preferably 2 or 4. The combination "-nVm" preferably is "2V1". (O)CₘH₂ₘ₊₁ means CₘH₂ₘ₊₁ or OCₘH₂ₘ₊₁. | |
|---|---|
| 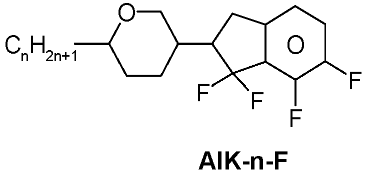 | 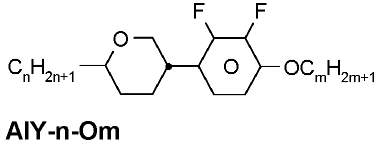 |
| 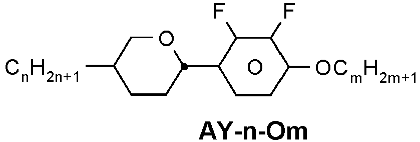 | 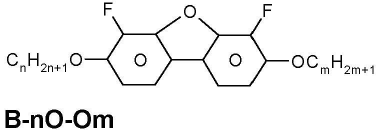 |
| 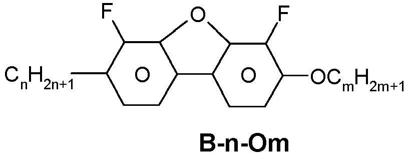 | 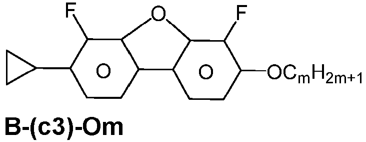 |
| 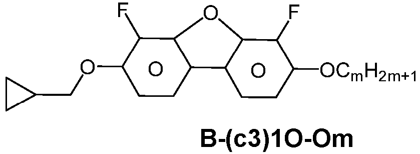 | 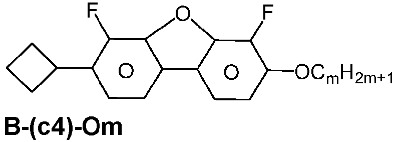 |
| 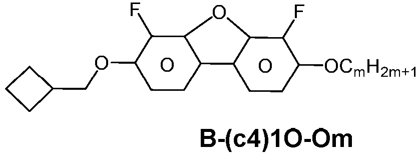 | 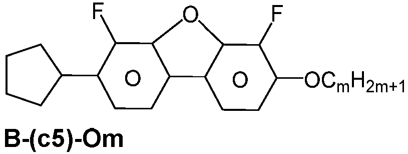 |
| 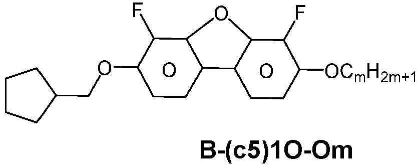 | 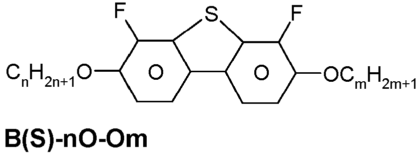 |
| 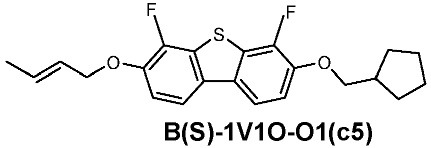 | |
| 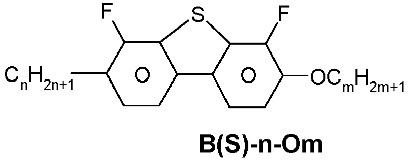 | 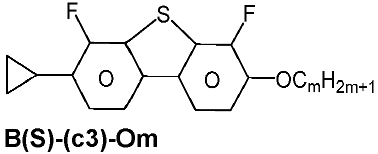 |
| 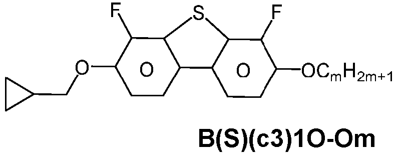 | 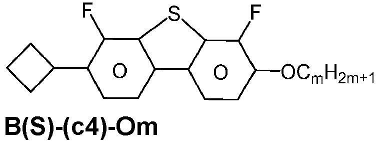 |
| 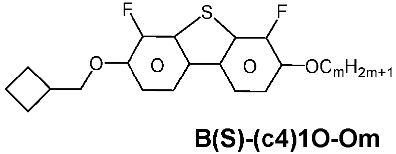 | 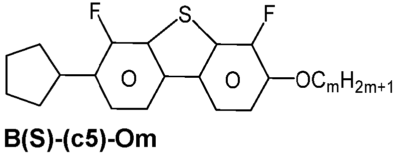 |
| 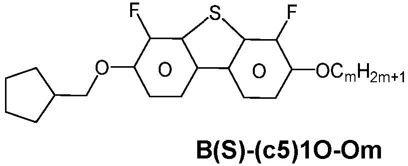 | 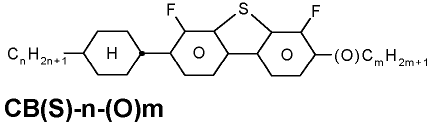 |
| 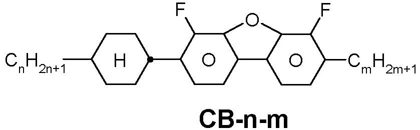 | 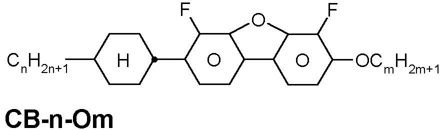 |
| 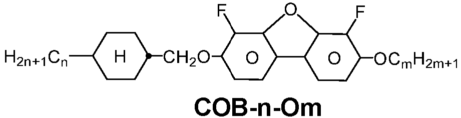 | |
| 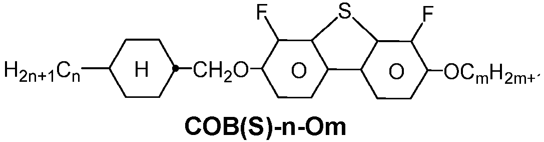 | |
| 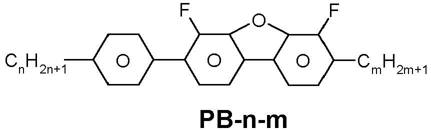 | 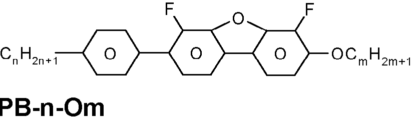 |
| 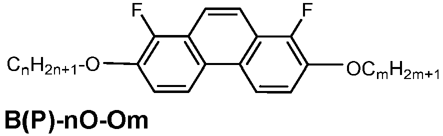 | 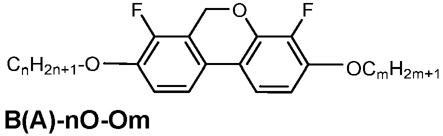 |
| 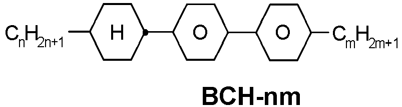 | 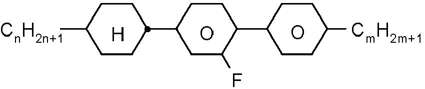 |
| 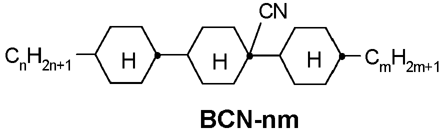 | 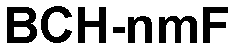 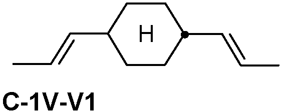 |
| 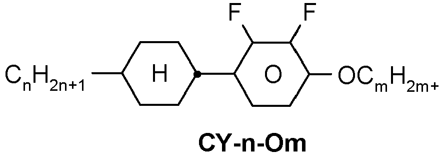 | 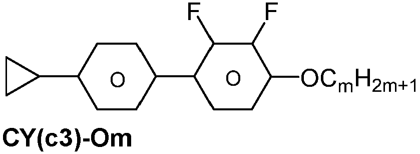 |
| 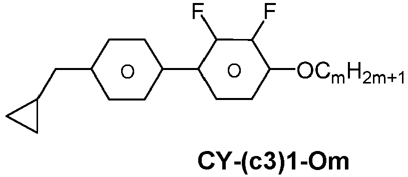 | 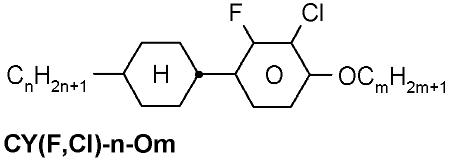 |
| 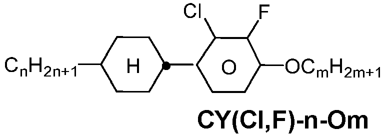 | 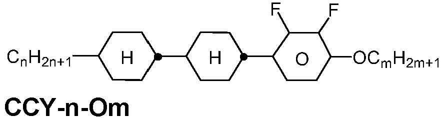 |
| 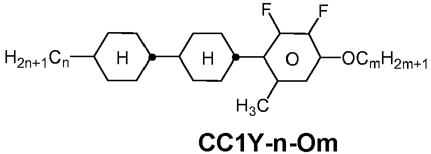 | 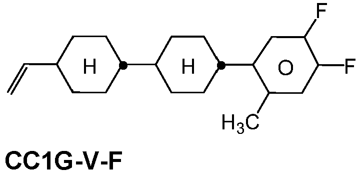 |
| 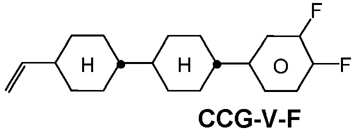 | 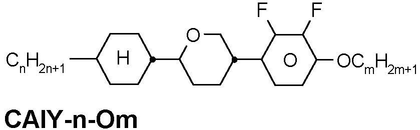 |
| 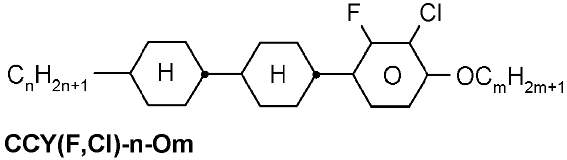 | |
| 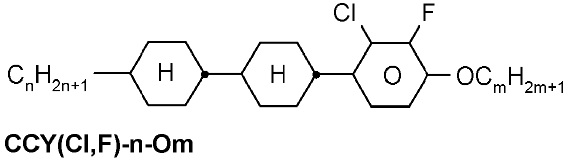 | |
| 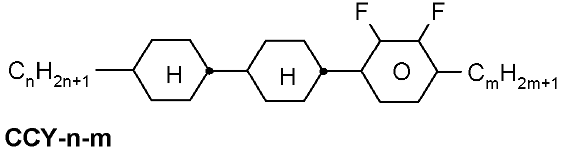 | |
| 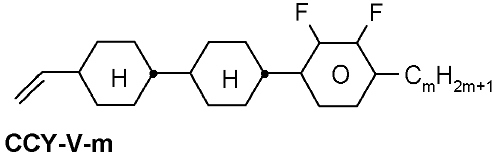 | |
| 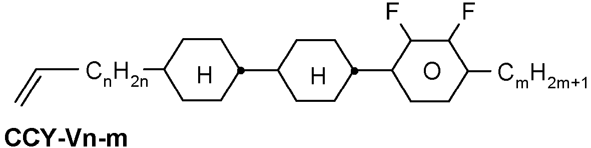 | |
| 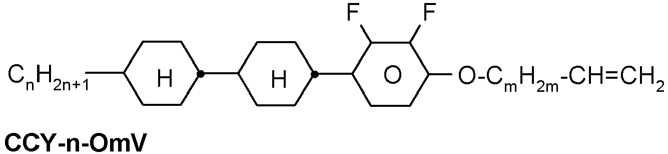 | |
| 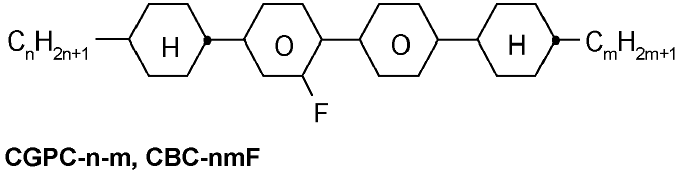 | |
| 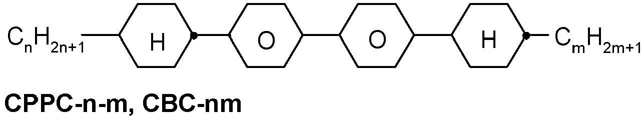 | |
| 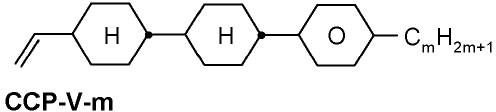 | |
| 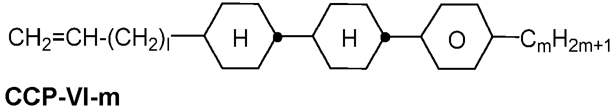 | |
| 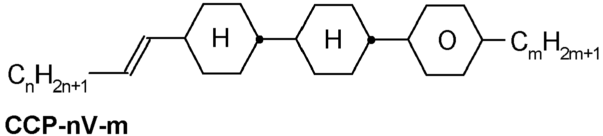 | |
| 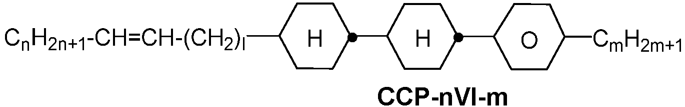 | |
| 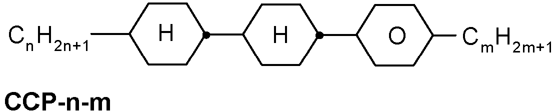 | |
| 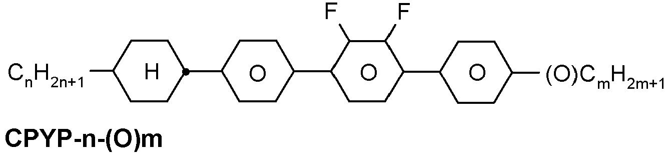 | |
| 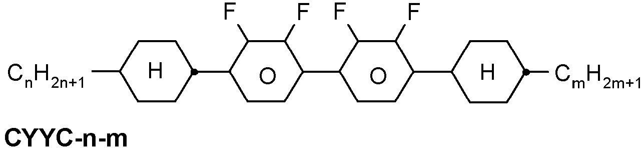 | |
| 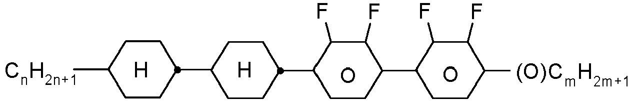 | |
| 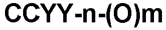 | |
| 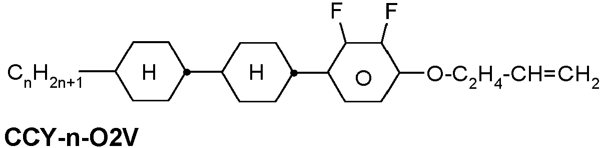 | |
| 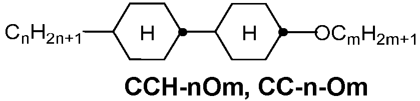 | 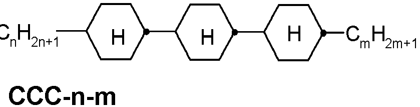 |
| 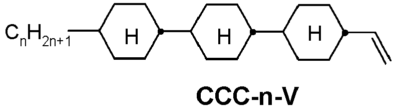 | 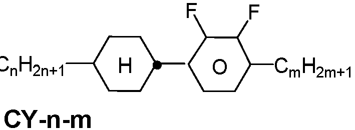 |
| 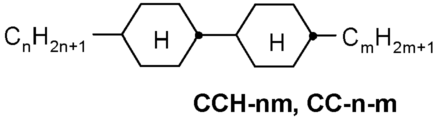 | 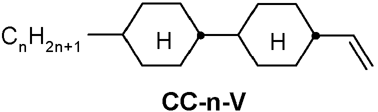 |
| 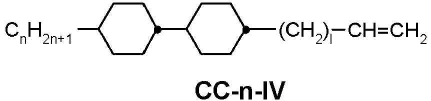 | 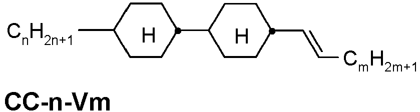 |
| 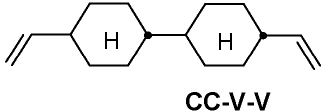 | 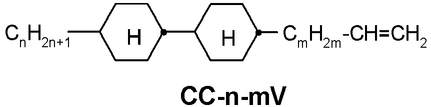 |
| 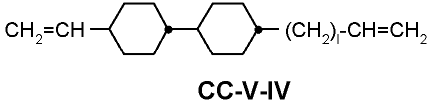 | 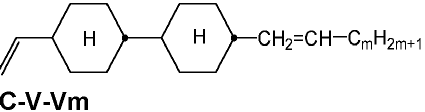 |
| 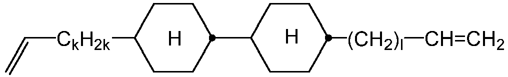 | |
| 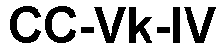 | |
| 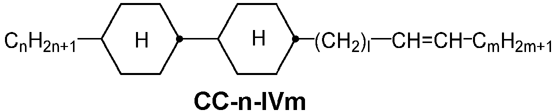 | |
| 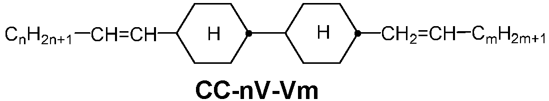 | |
| 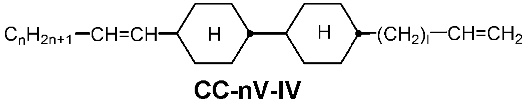 | |
| 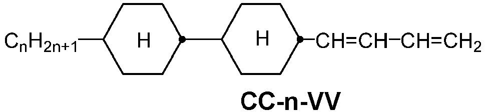 | |
| 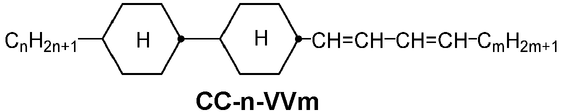 | |
| 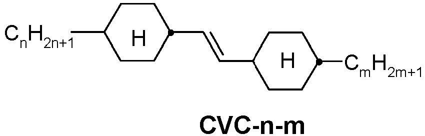 | |
| 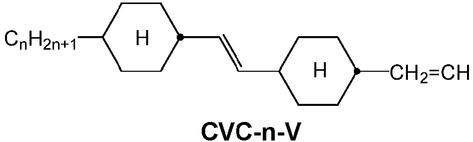 | |
| 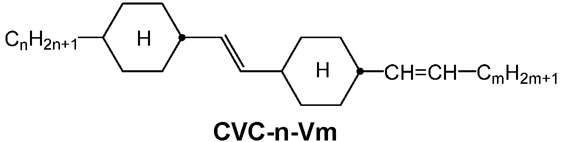 | |
| 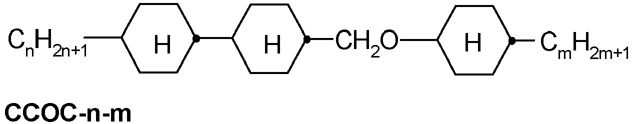 | |
| 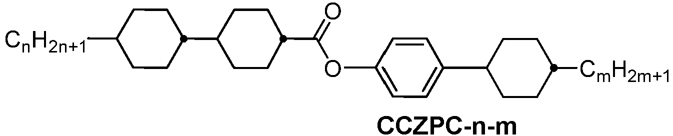 | |
| 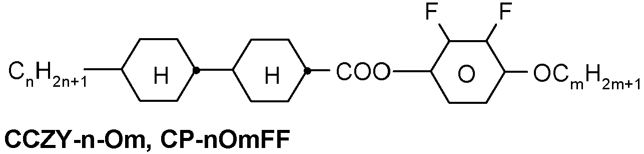 | |
| 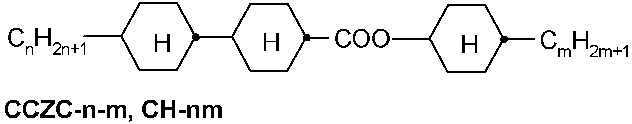 | |
| 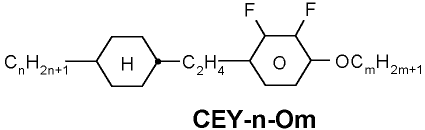 | 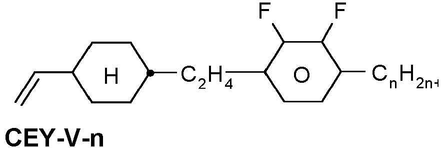 |
| 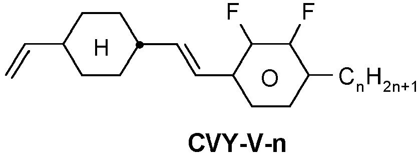 | 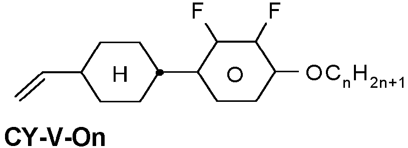 |
| 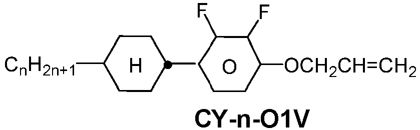 | 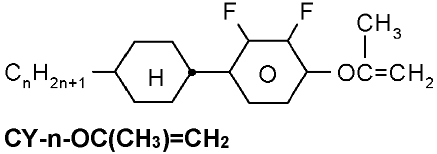 |
| 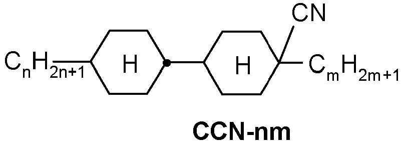 | 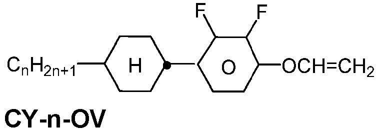 |
| 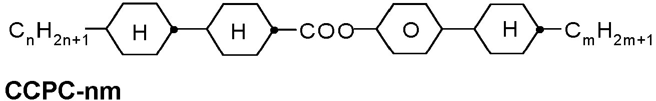 | |
| 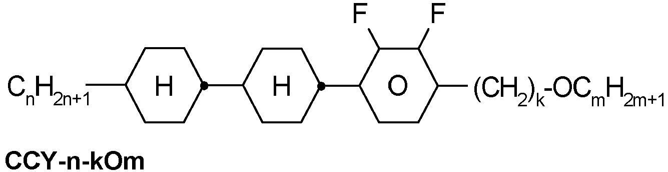 | |
| 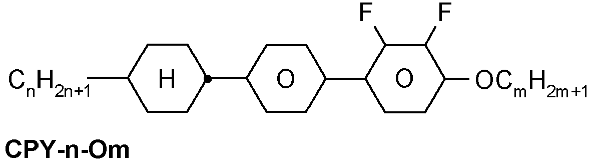 | |
| 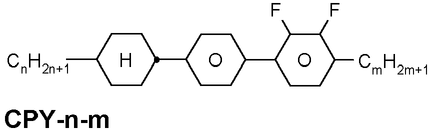 | 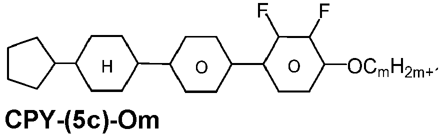 |
| 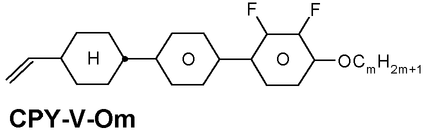 | 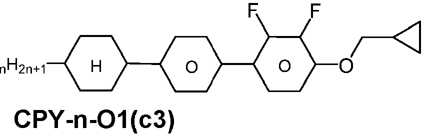 |
| 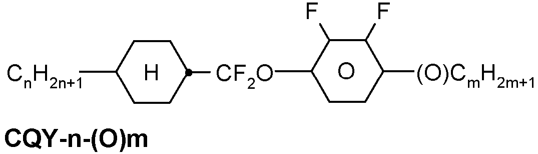 | |
| 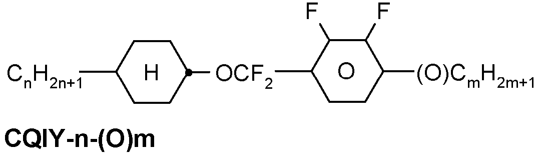 | |
| 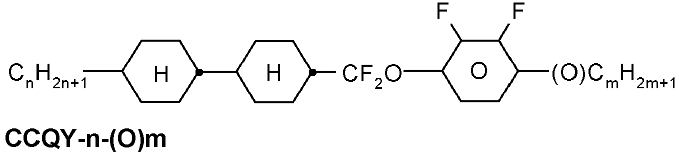 | |
| 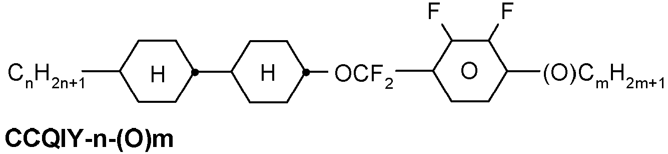 | |
| 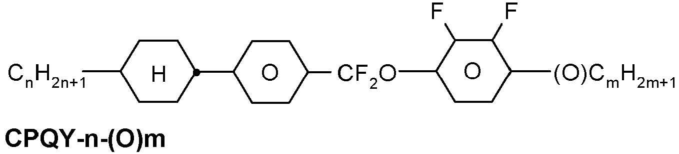 | |
| 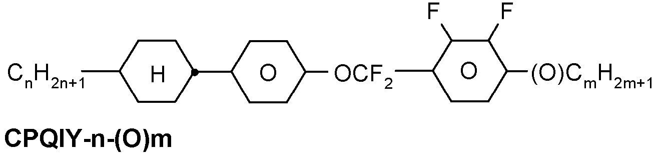 | |
| 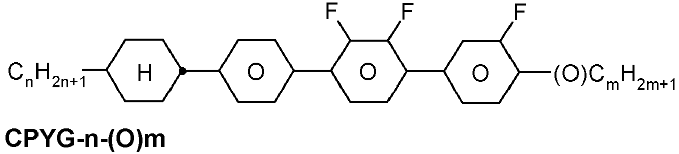 | |
| 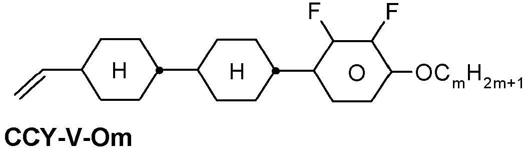 | |
| 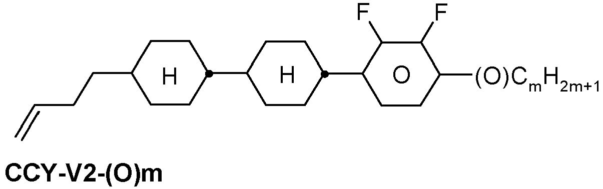 | |
| 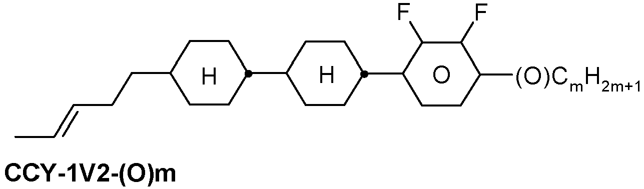 | |
| 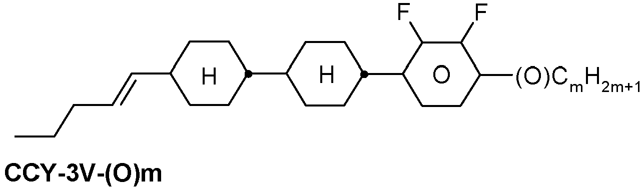 | |
| 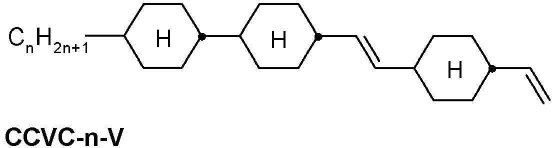 | |
| 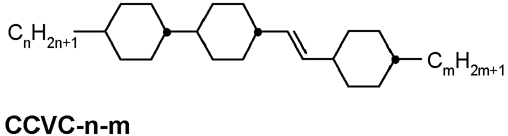 | |
| 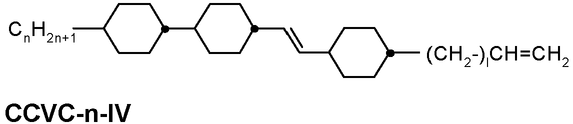 | |
| 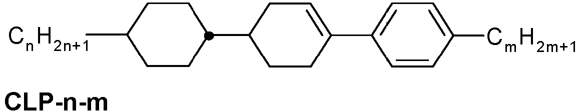 | |
| 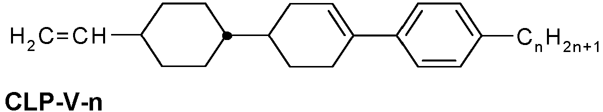 | |
| 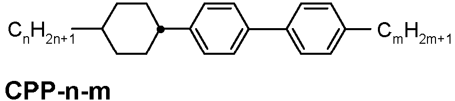 | |
| 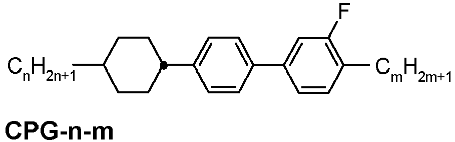 | |
| 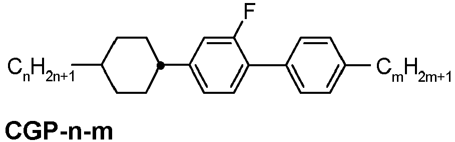 | |
| 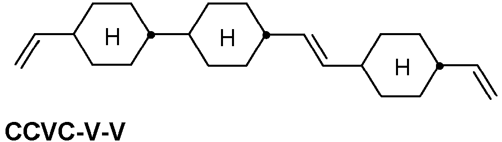 | |
| 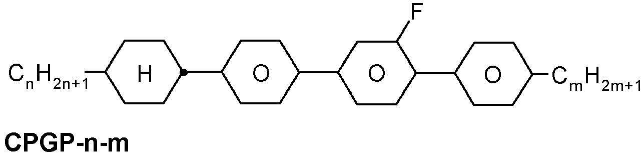 | |
| 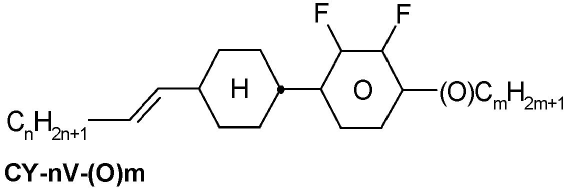 | |
| 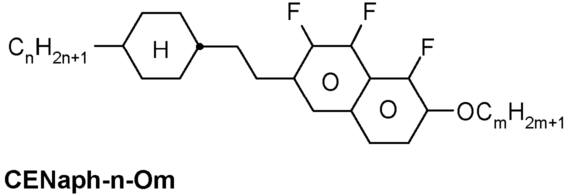 | |
| 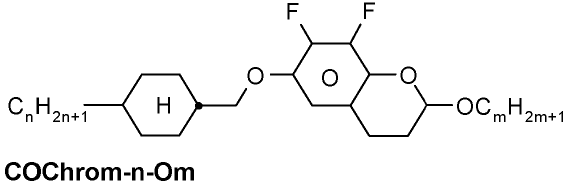 | |
| 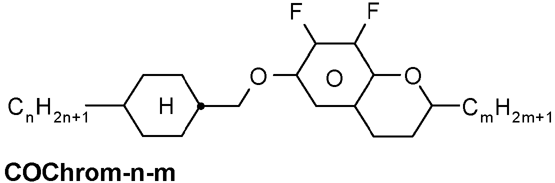 | |
| 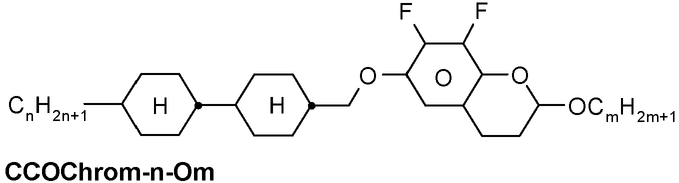 | |
| 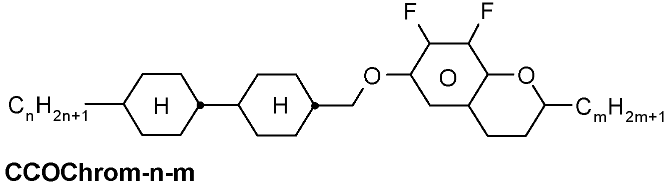 | |
| 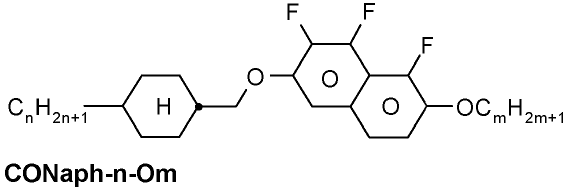 | |
| 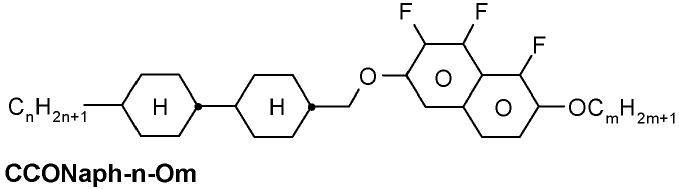 | |
| 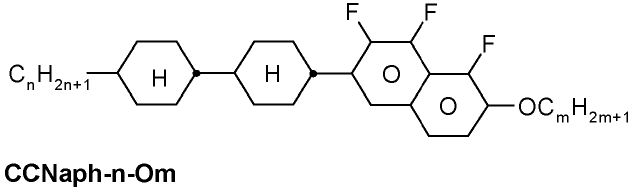 | |
| 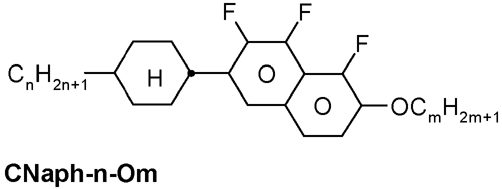 | |
| 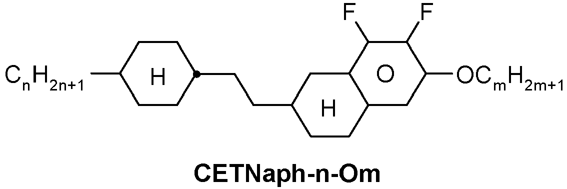 | |
| 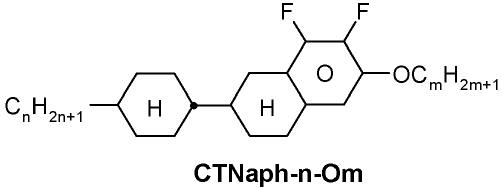 | |
| 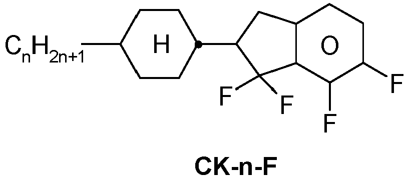 | |
| 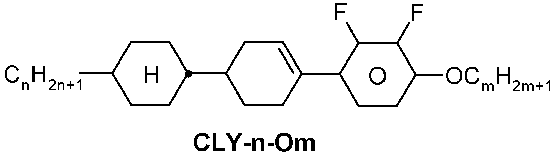 | |
| 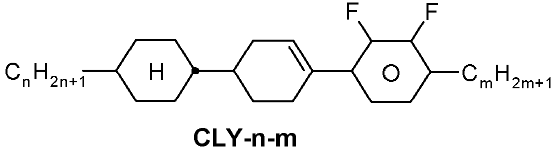 | |
| 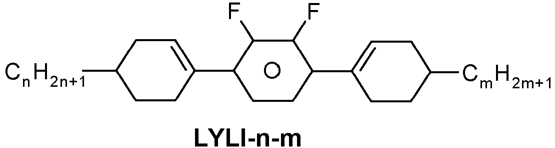 | |
| 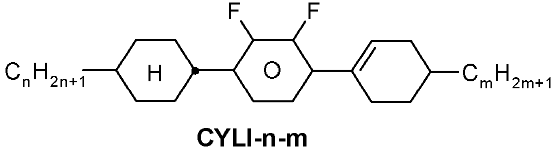 | |
| 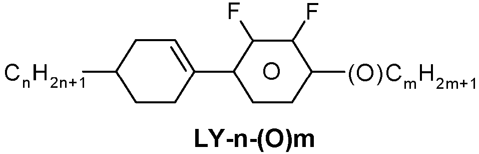 | |
| 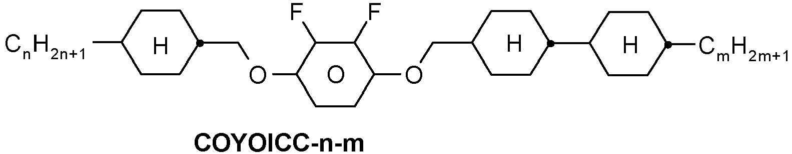 | |
| 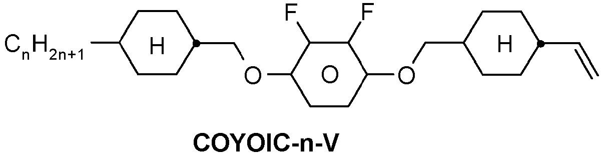 | |
| 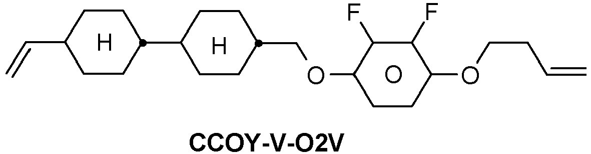 | |
| 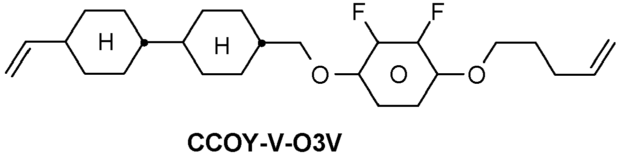 | |
| 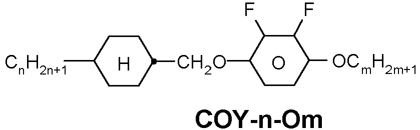 | |
| 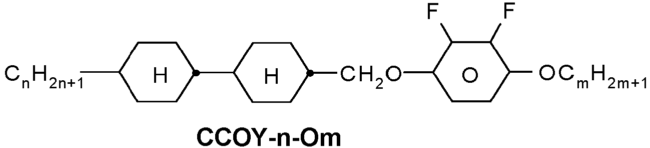 | |
| 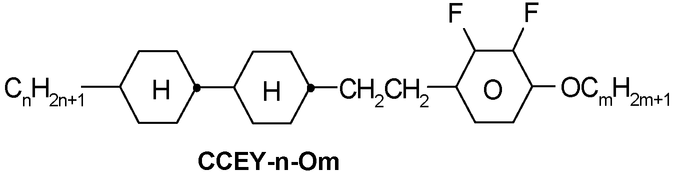 | |
| 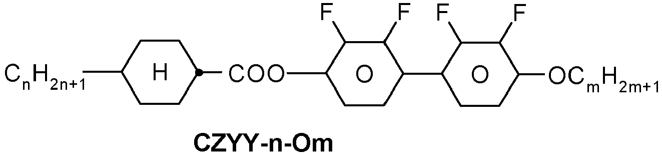 | |
| 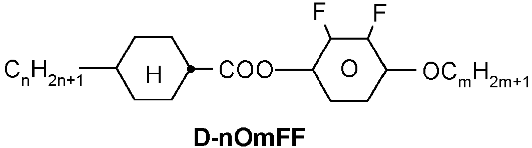 | |
| 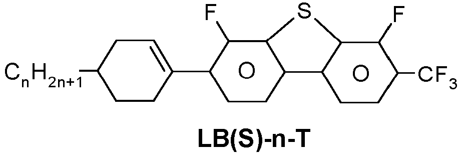 | |
| 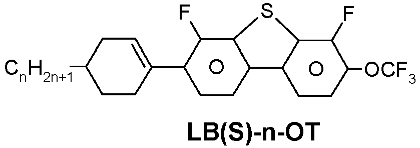 | 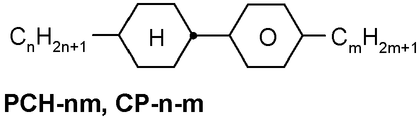 |
| 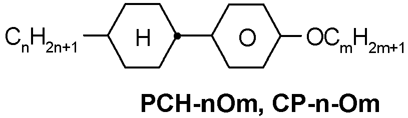 | 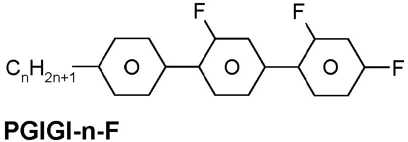 |
| 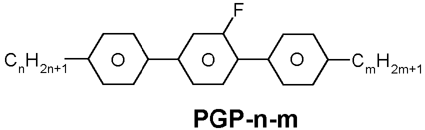 | 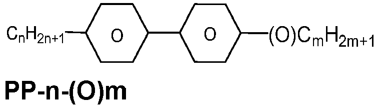 |
| 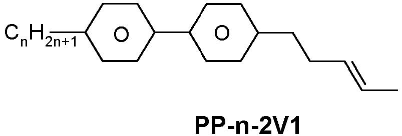 | 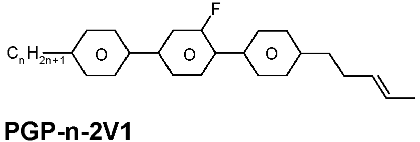 |
| 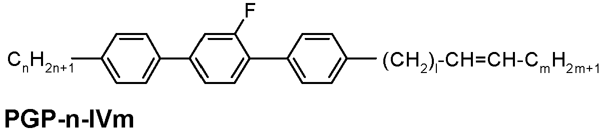 | |
| 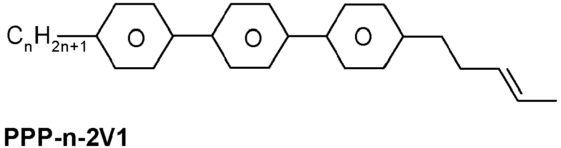 | |
| 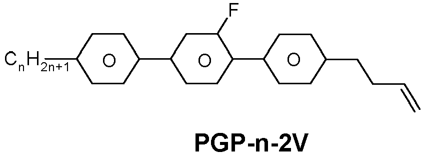 | 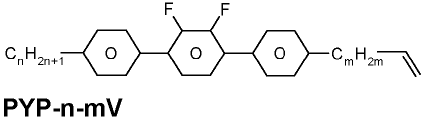 |
| 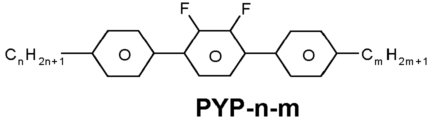 | 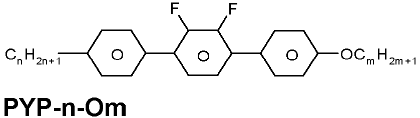 |
| 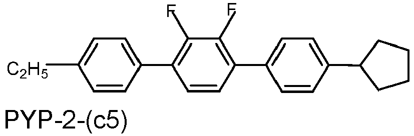 | 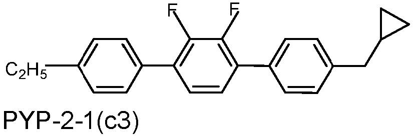 |
| 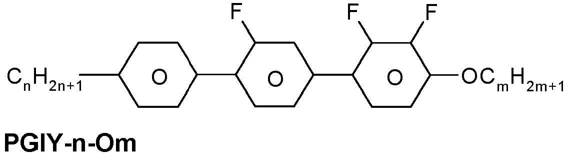 | |
| 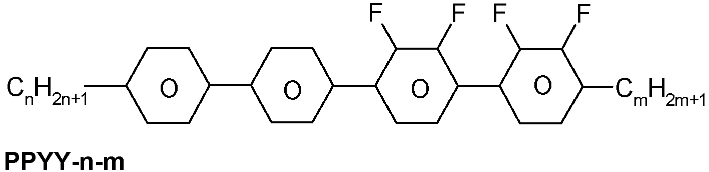 | |
| 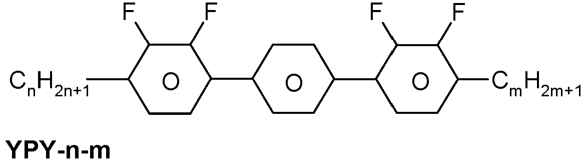 | |
| 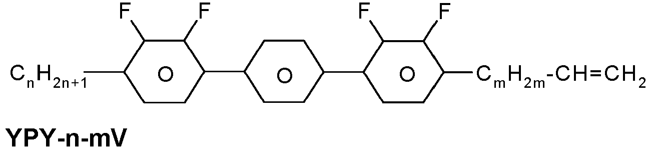 | |
| 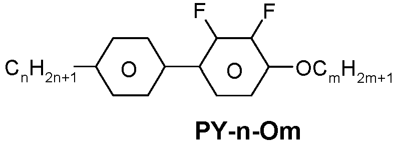 | 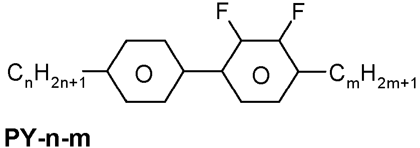 |
| 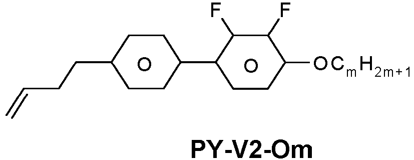 | 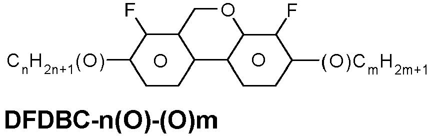 |
| 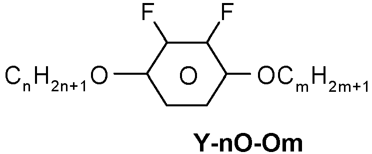 | 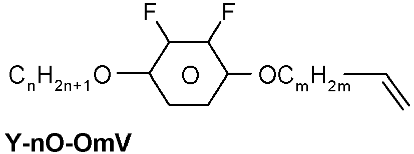 |
| 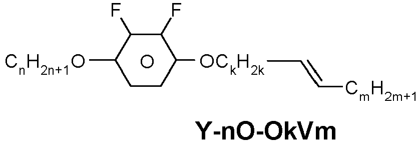 | 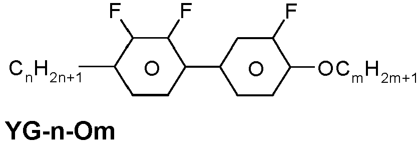 |
| 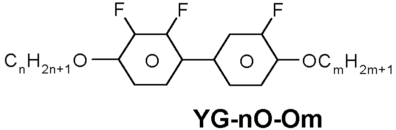 | 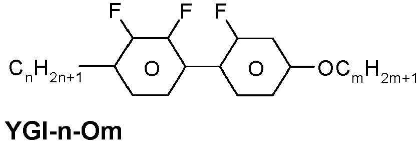 |
| 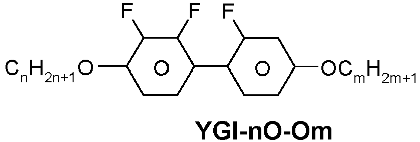 | 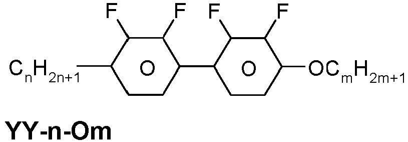 |
| 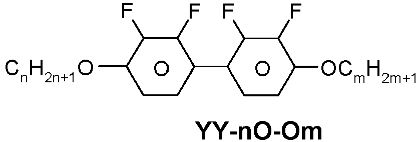 | 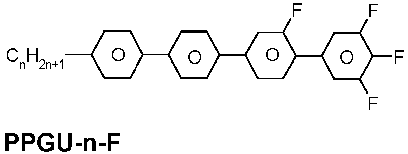 |
| 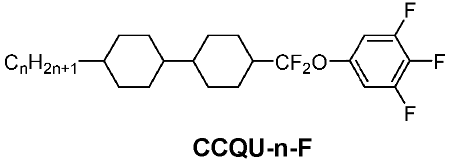 | |

In a preferred embodiment of the present invention, the LC media according to the invention comprise one or more compounds selected from the group consisting of compounds from Table B.

**Table C**

| Table C shows possible chiral dopants which can be added to the LC media according to the invention with the concentration from 0 to 5 wt %, preferably 0.01 to 3 wt %. | |
|---|---|
| 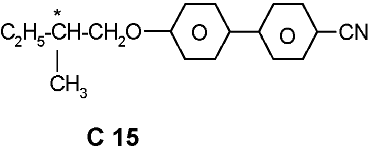 | 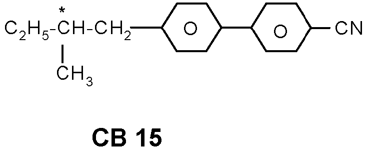 |
| 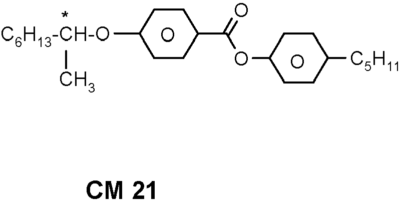 | 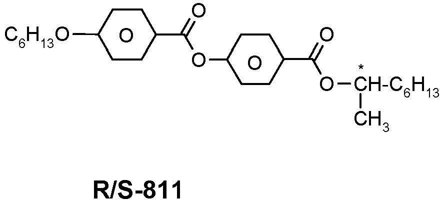 |
| 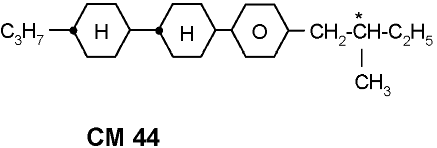 | 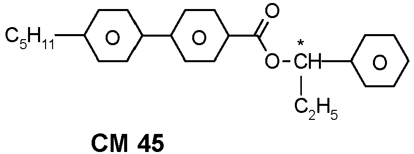 |
| 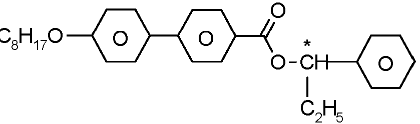 | 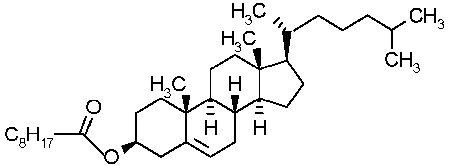 |
| 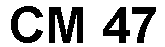 | 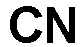 |
| 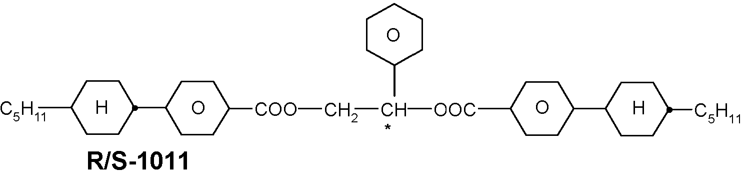 | |
| 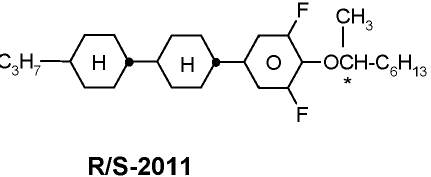 | 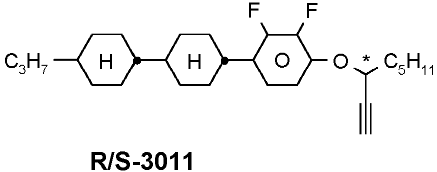 |
| 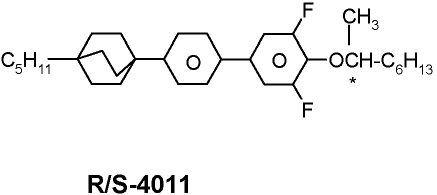 | 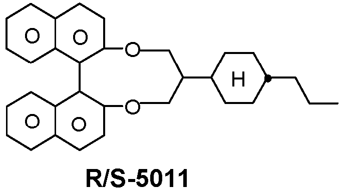 |

The LC media preferably comprise 0 to 10% by weight, in particular 0.01 to 5% by weight, particularly preferably 0.1 to 3% by weight, of dopants. The LC media preferably comprise one or more dopants selected from the group consisting of compounds from Table C.

**Table D**

| Table D shows possible stabilisers which can be added to the LC media according to the invention. Therein n denotes an integer from 1 to 12, preferably 1, 2, 3, 4, 5, 6, 7 or 8, and terminal methyl groups are not shown. | |
|---|---|
| 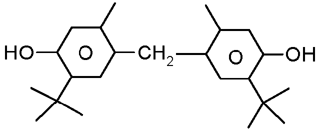 | 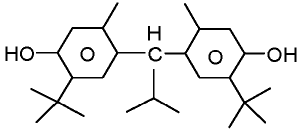 |
| 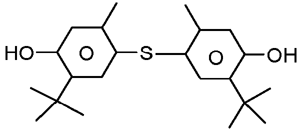 | 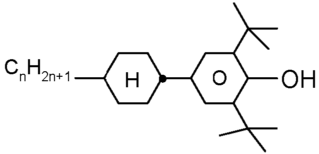 |
| 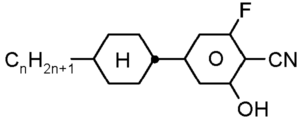 | 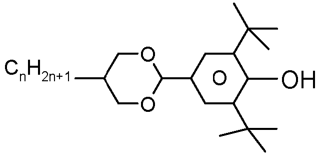 |
| 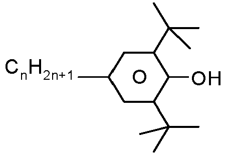 | 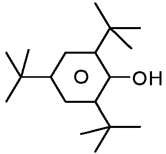 |
| 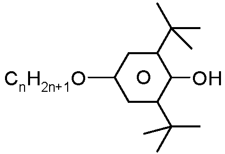 | 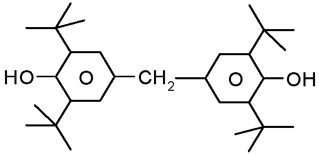 |
| 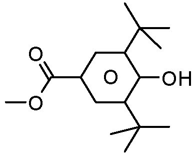 | 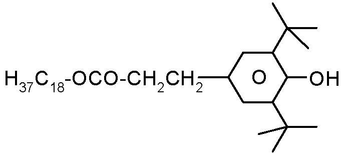 |
| 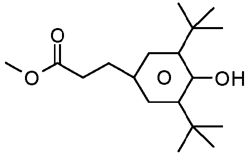 | 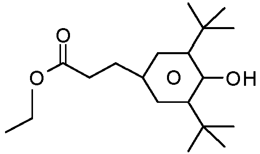 |
| 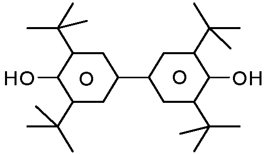 | 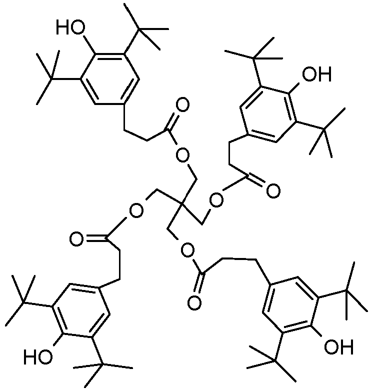 |
| 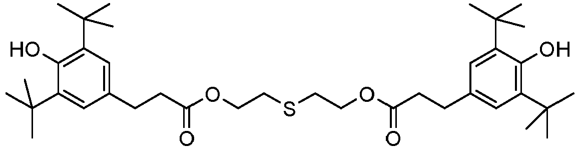 | |
| 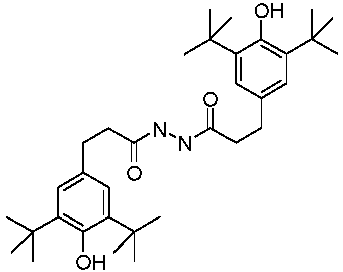 | 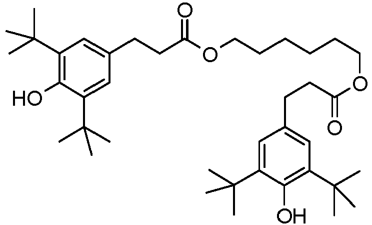 |
| 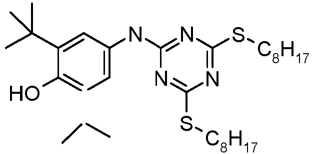 | 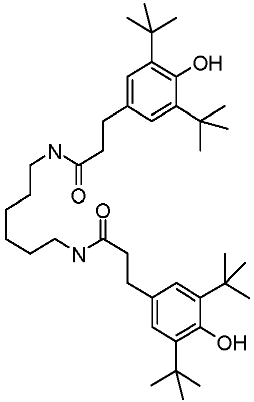 |
| 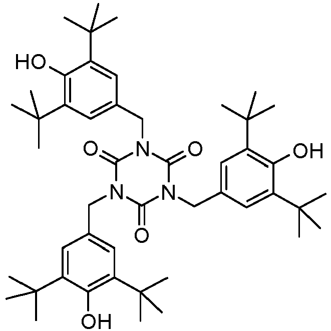 | 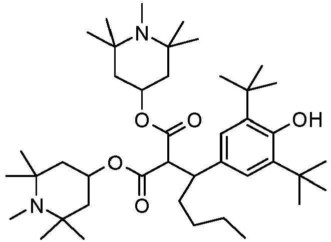 |
| 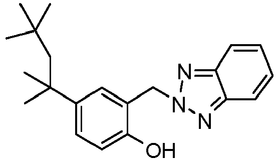 | 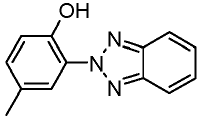 |
| 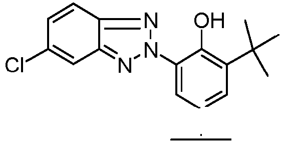 | 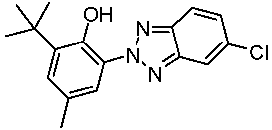 |
| 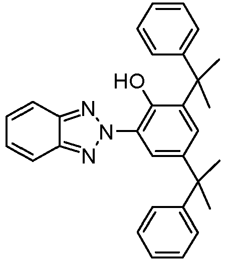 | 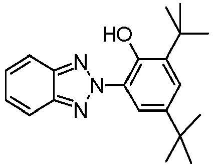 |
| 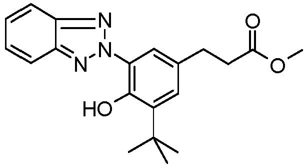 | 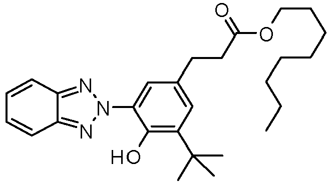 |
| 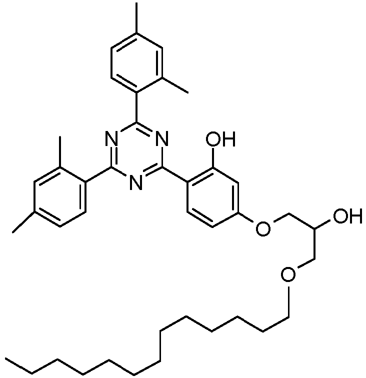 | 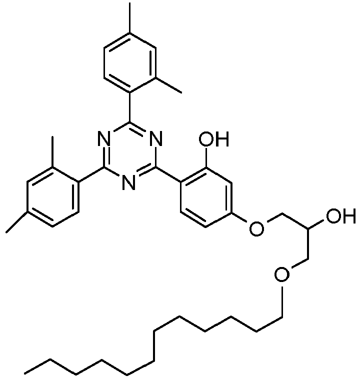 |
| 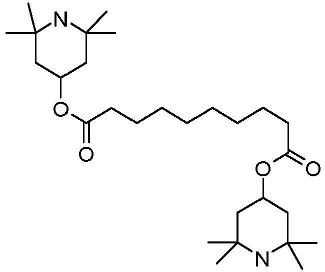 | 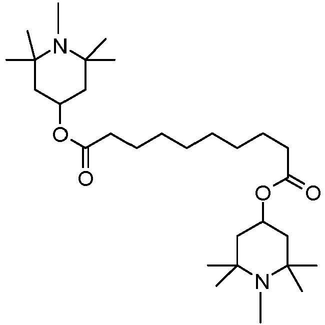 |
| 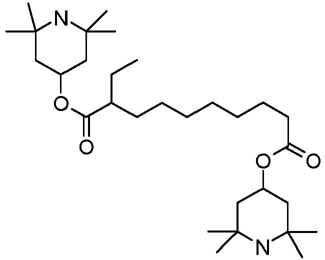 | 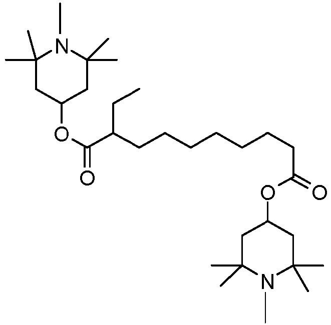 |
| 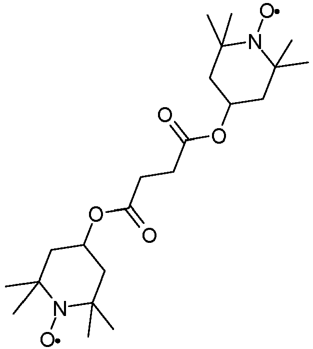 | 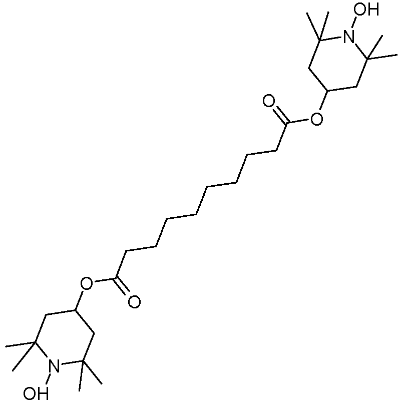 |
| 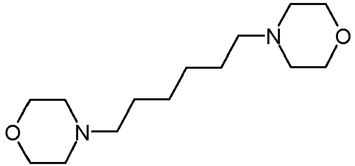 | |
| 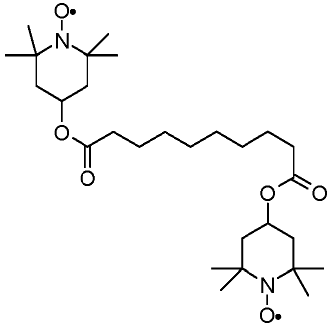 | 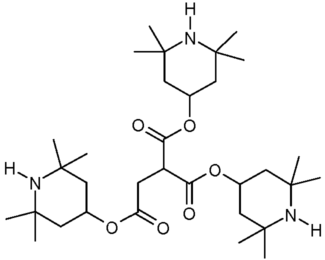 |
| 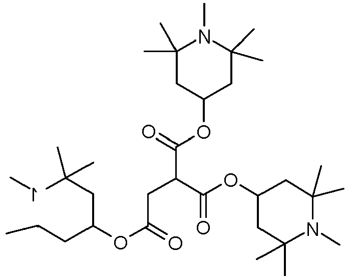 | 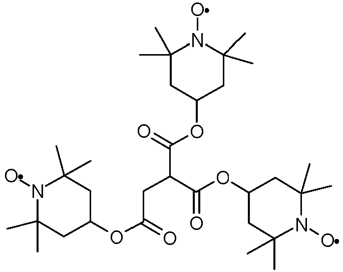 |
| 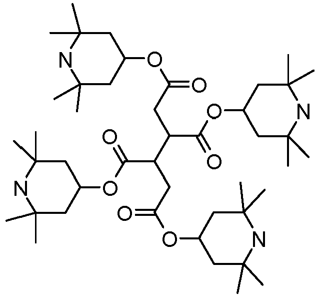 | 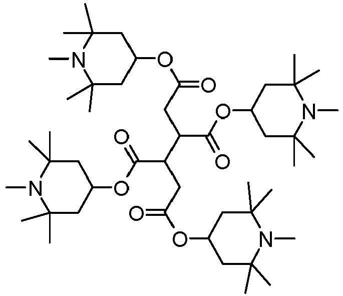 |
| 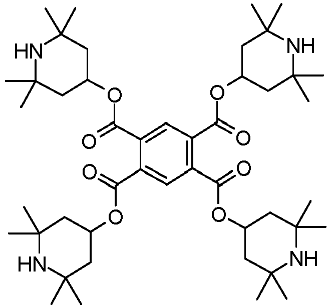 | 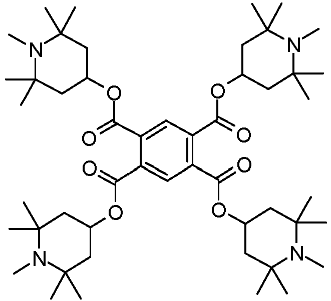 |
| 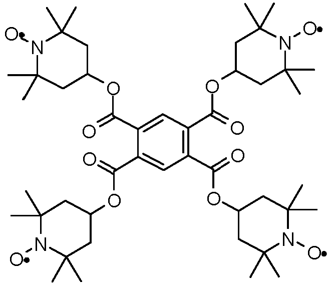 | 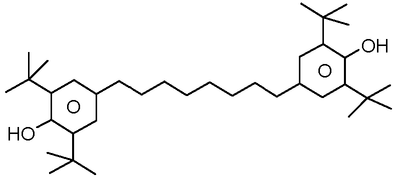 |
| 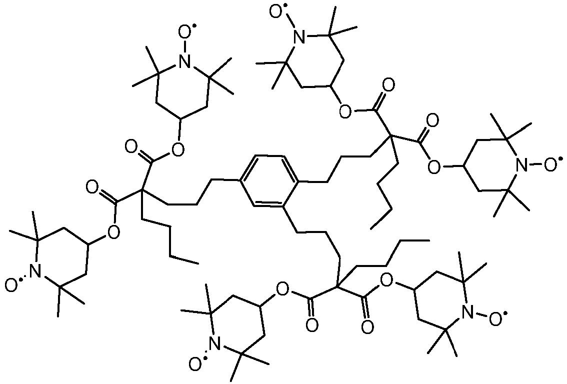 | |

The LC media preferably comprise 0 to 10% by weight, in particular 1 ppm to 5% by weight, particularly preferably 1 ppm to 1% by weight, of stabilisers. The LC media preferably comprise one or more stabilisers selected from the group consisting of compounds from Table D.

**Table E**

| Table E shows illustrative reactive mesogenic compounds which can be used in the LC media in accordance with the present invention. | |
|---|---|
| 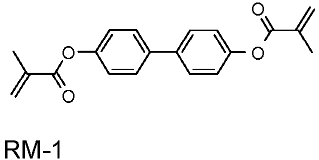 | 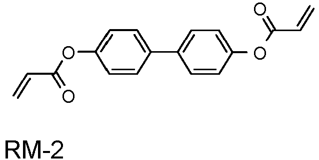 |
| 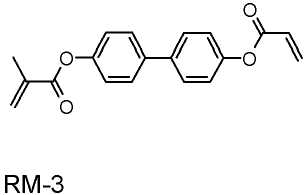 | 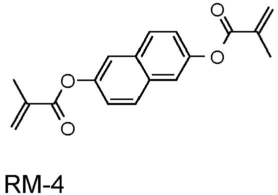 |
| 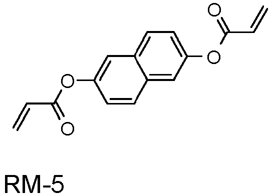 | 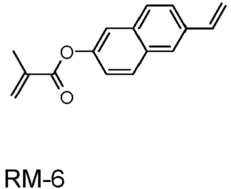 |
| 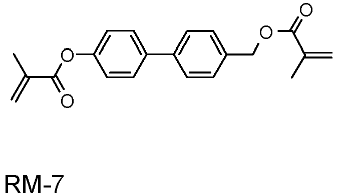 | 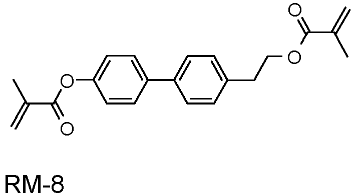 |
| 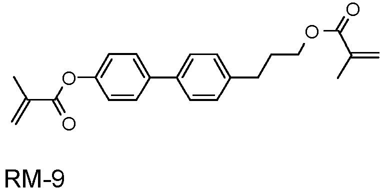 | 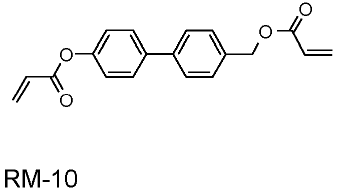 |
| 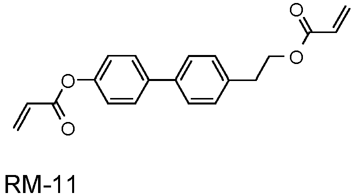 | 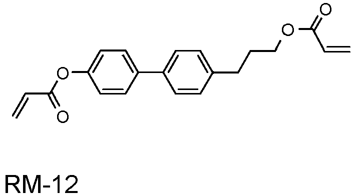 |
| 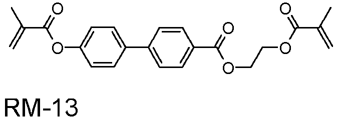 | 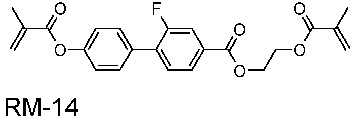 |
| 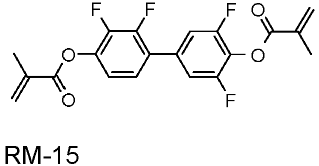 | 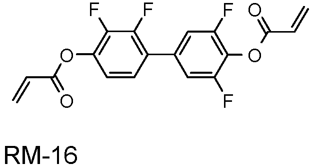 |
| 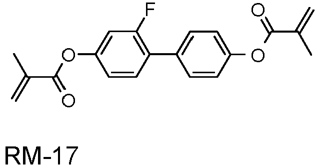 | 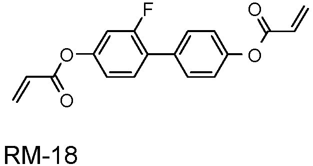 |
| 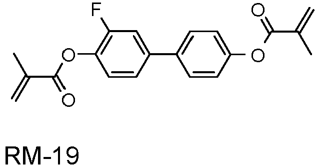 | 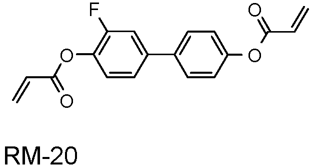 |
| 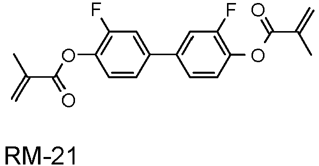 | 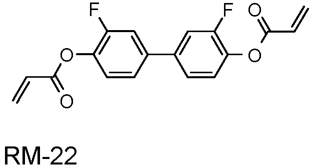 |
| 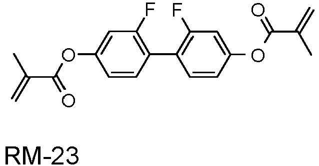 | 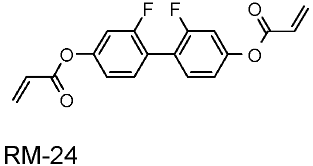 |
| 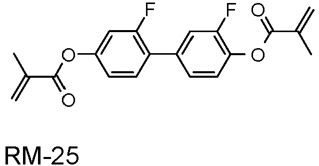 | 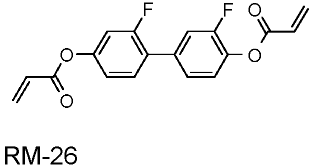 |
| 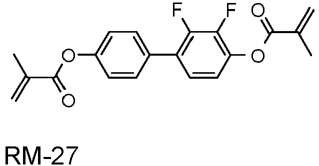 | 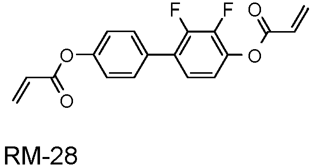 |
| 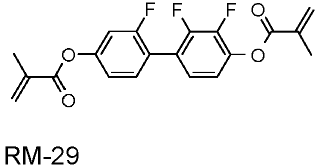 | 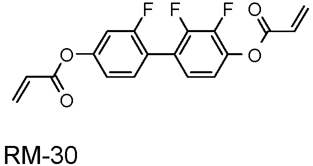 |
| 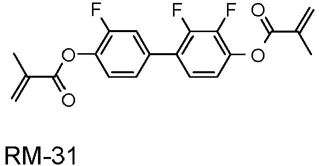 | 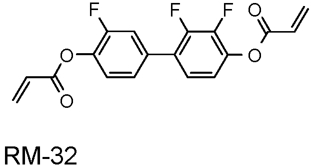 |
| 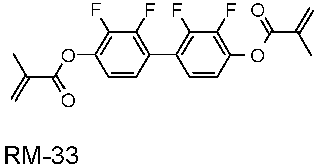 | 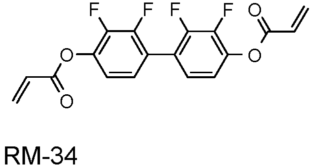 |
| 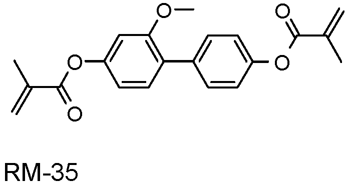 | 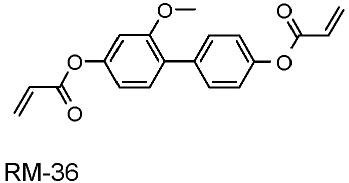 |
| 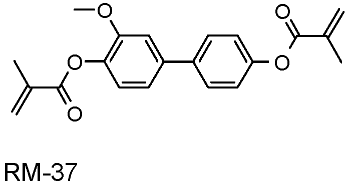 | 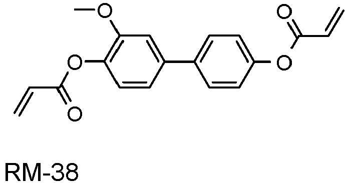 |
| 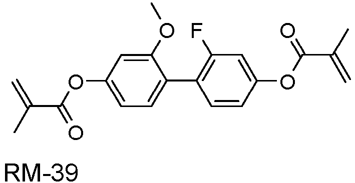 | 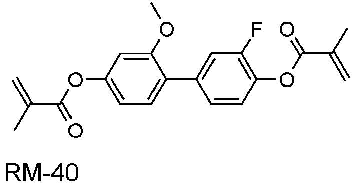 |
| 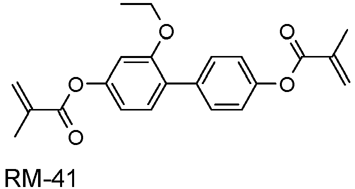 | 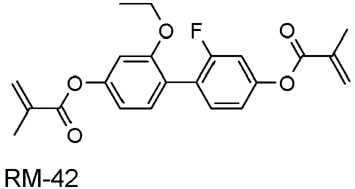 |
| 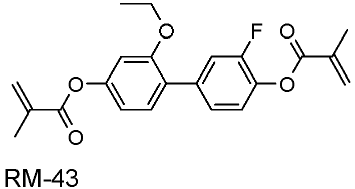 | 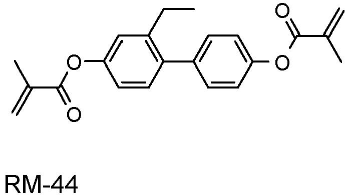 |
| 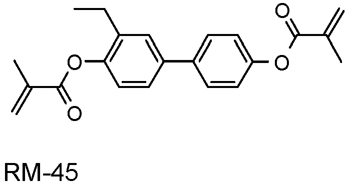 | 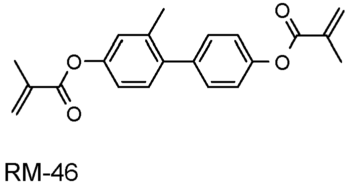 |
| 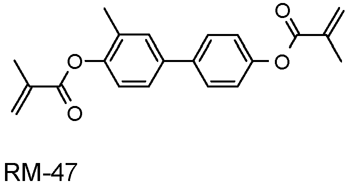 | 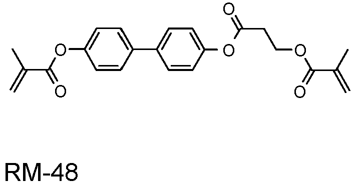 |
| 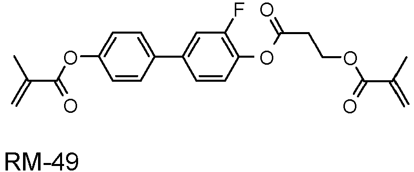 | |
| 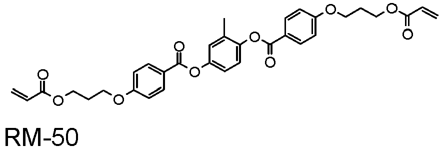 | |
| 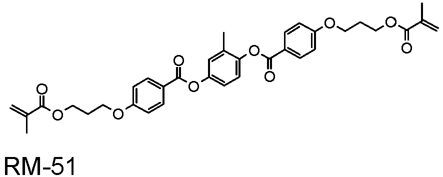 | |
| 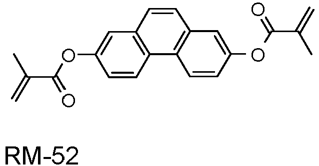 | 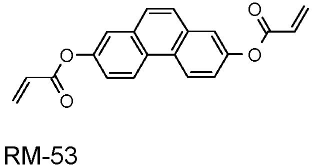 |
| 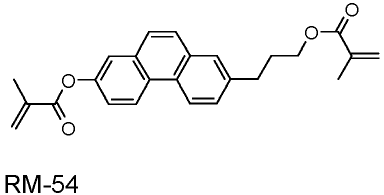 | 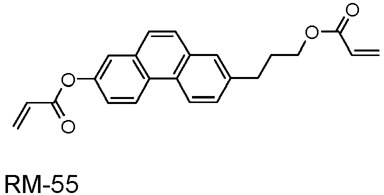 |
| 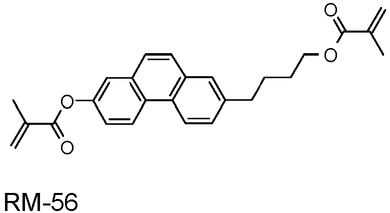 | 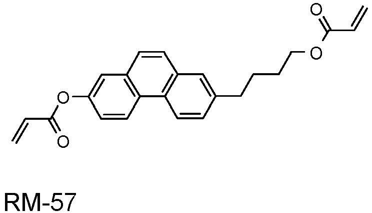 |
| 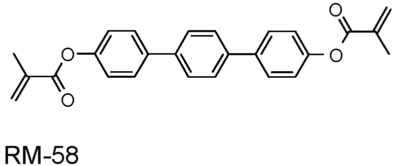 | 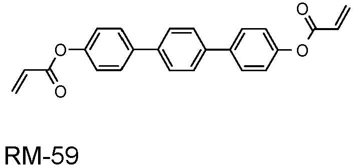 |
| 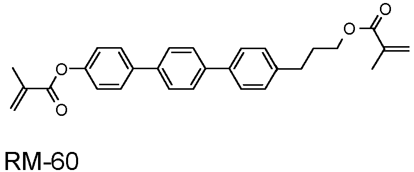 | 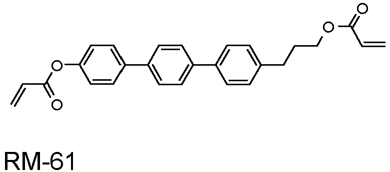 |
| 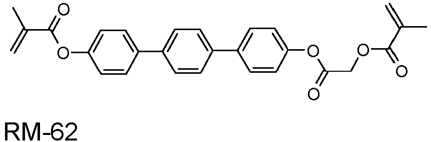 | 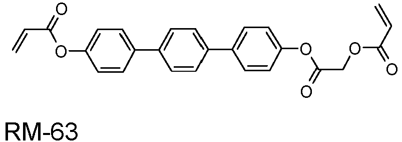 |
| 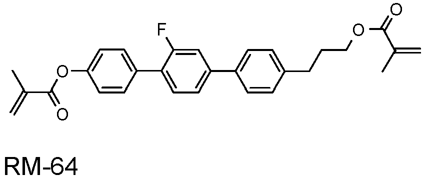 | 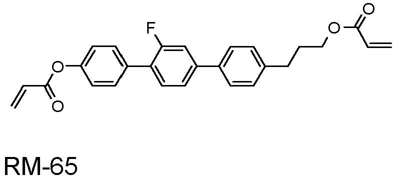 |
| 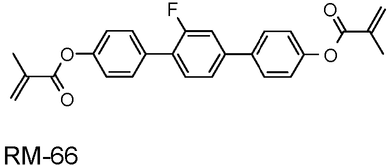 | 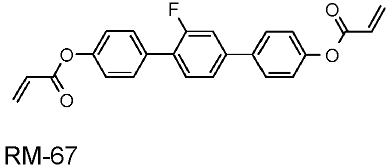 |
| 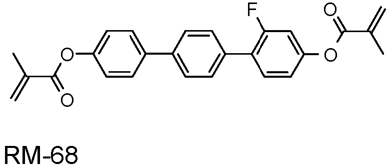 | 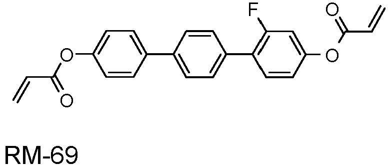 |
| 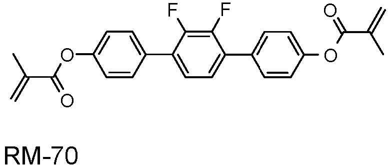 | 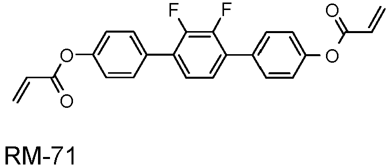 |
| 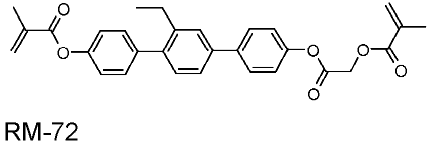 | 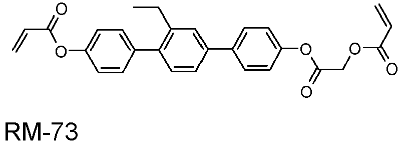 |
| 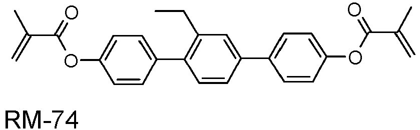 | 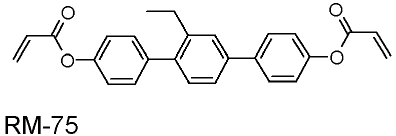 |
| 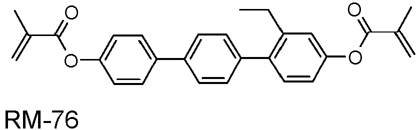 | 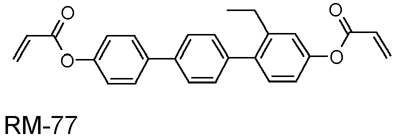 |
| 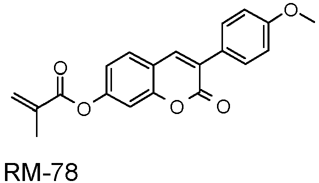 | 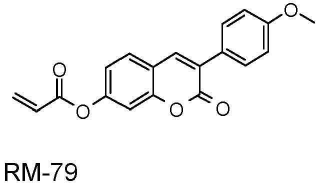 |
| 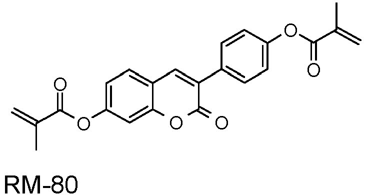 | 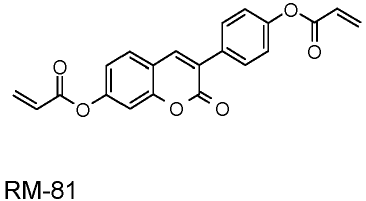 |
| 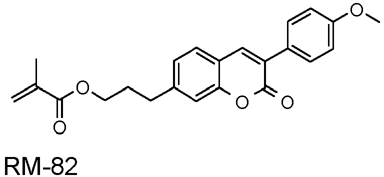 | 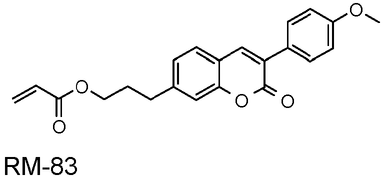 |
| 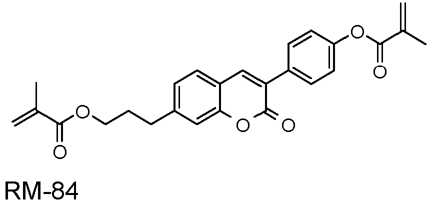 | 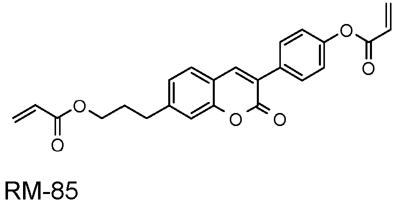 |
| 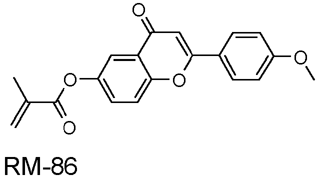 | 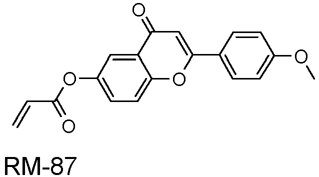 |
| 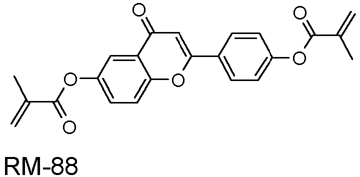 | 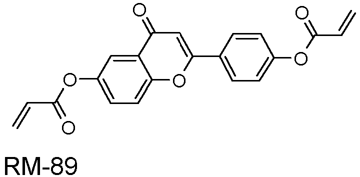 |
| 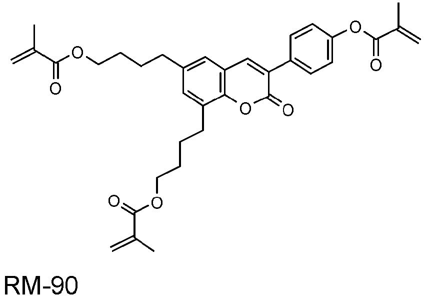 | 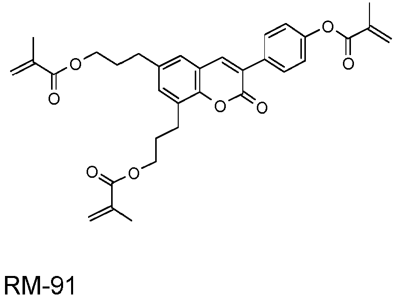 |
| 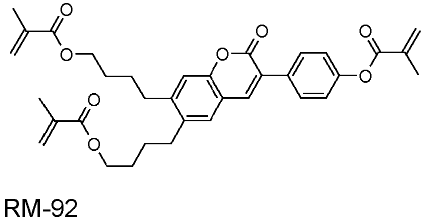 | 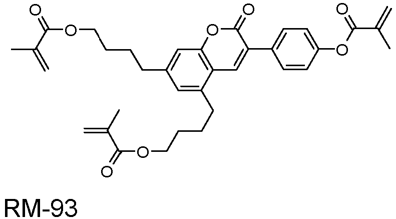 |
| 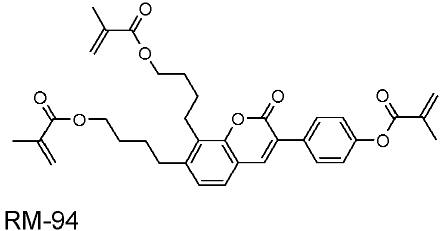 | 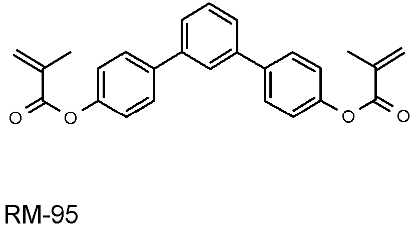 |
| 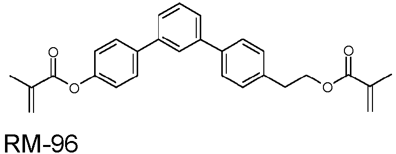 | 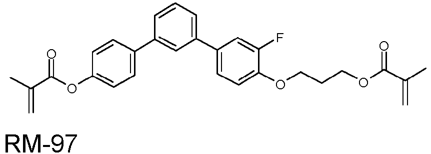 |
| 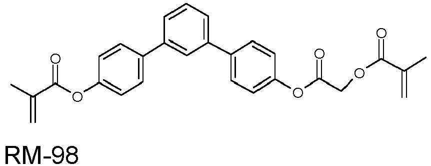 | 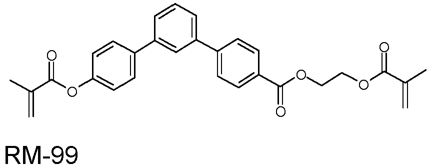 |
| 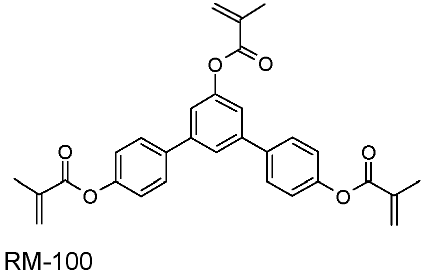 | |
| 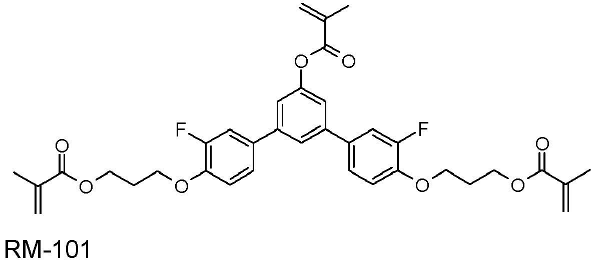 | |
| 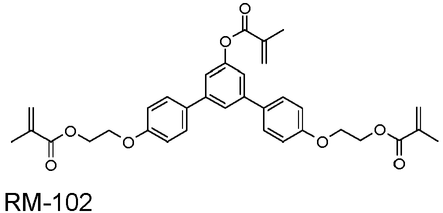 | |
| 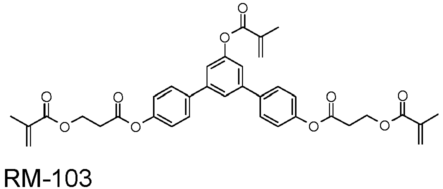 | |
| 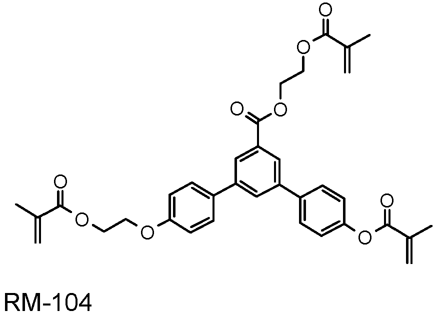 | |
| 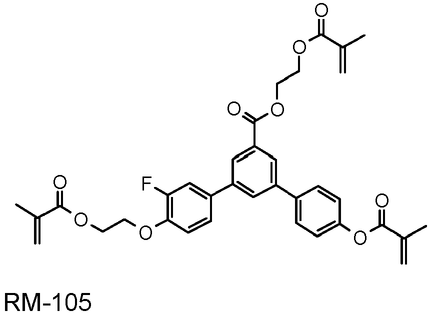 | 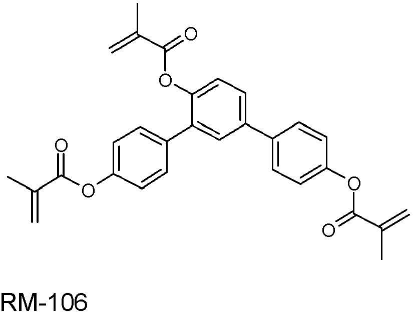 |
| 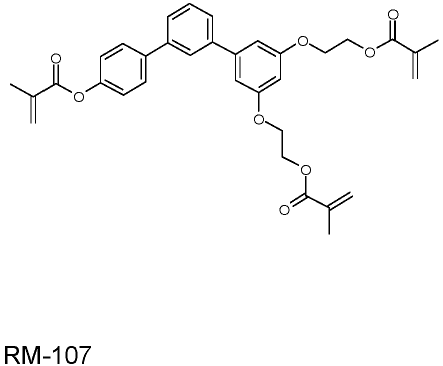 | 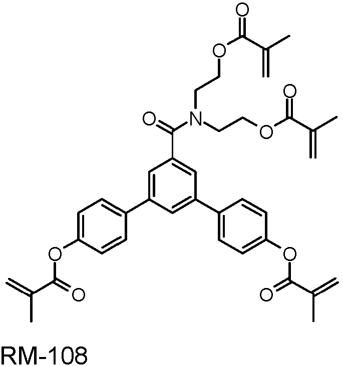 |
| 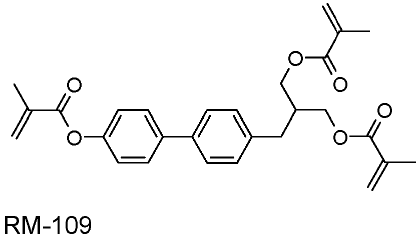 | 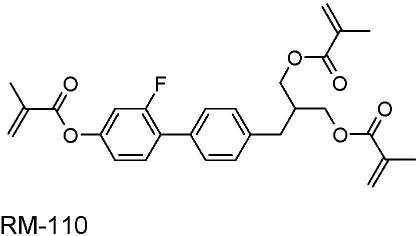 |
| 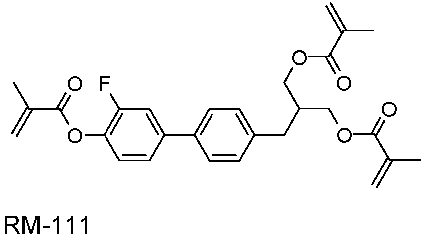 | 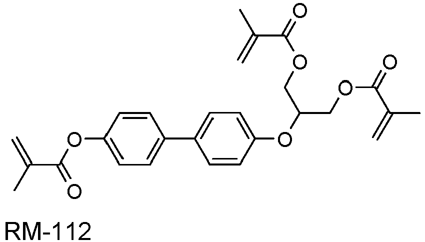 |
| 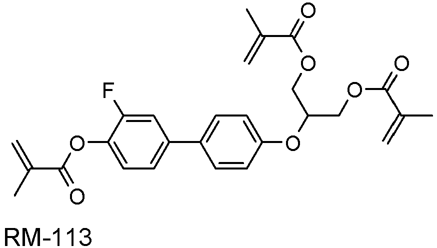 | 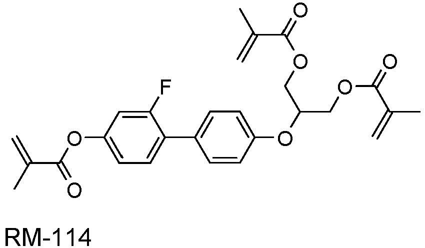 |
| 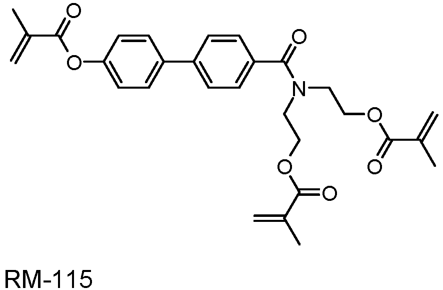 | 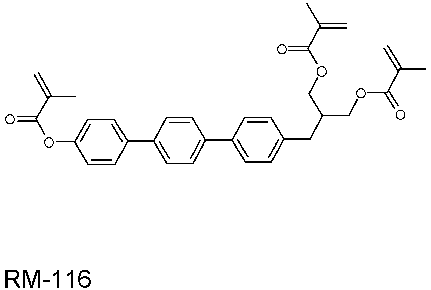 |
| 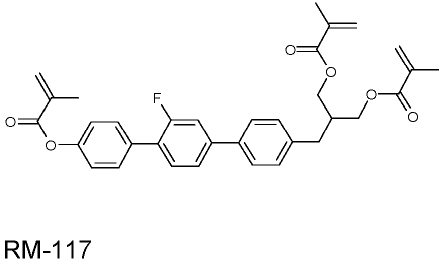 | 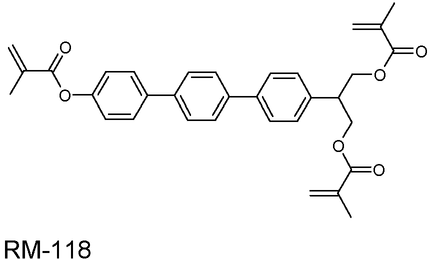 |
| 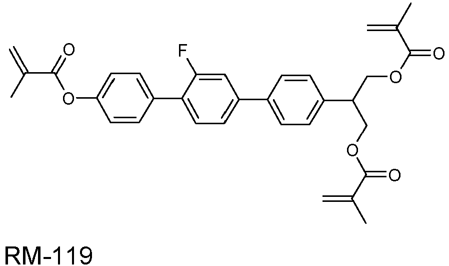 | 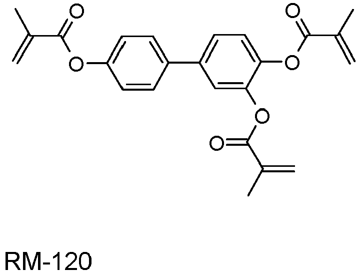 |
| 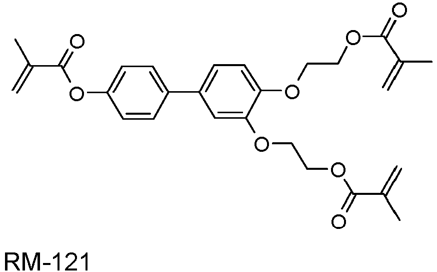 | 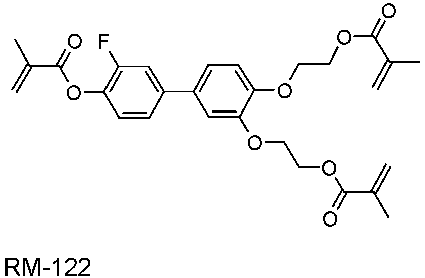 |
| 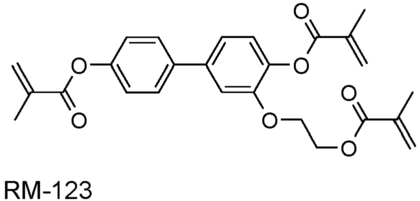 | 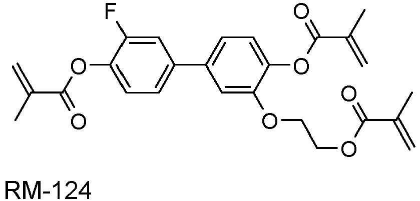 |
| 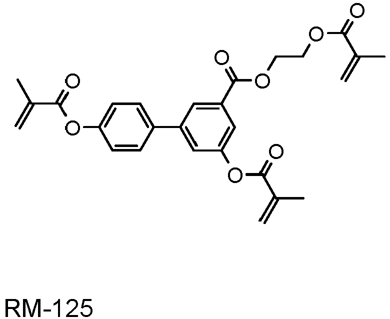 | 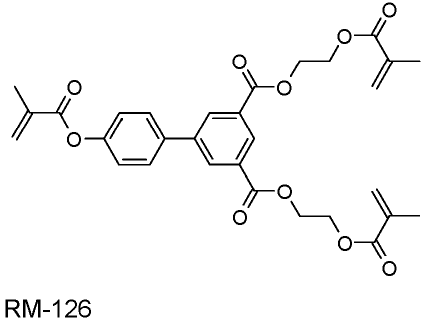 |
| 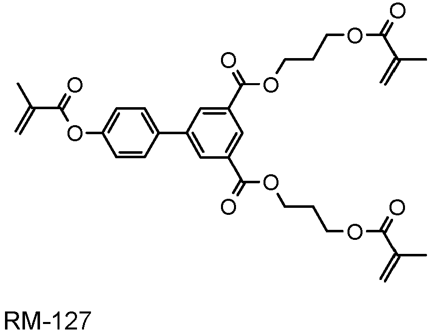 | 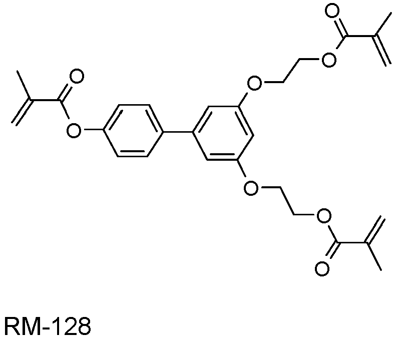 |
| 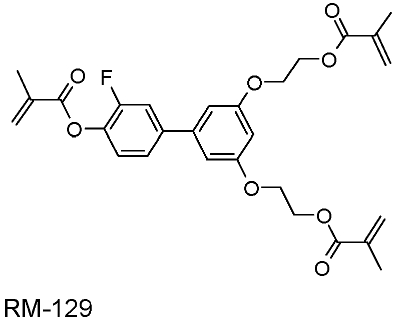 | 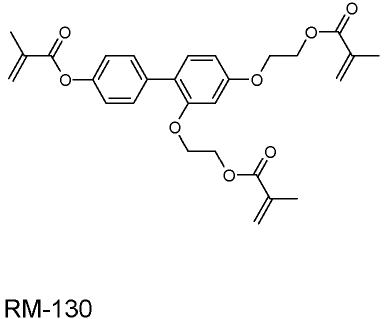 |
| 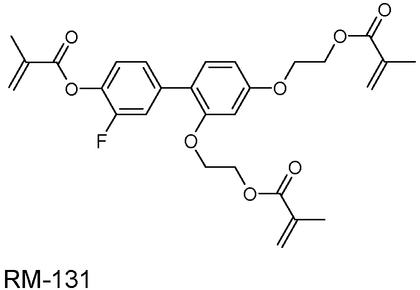 | 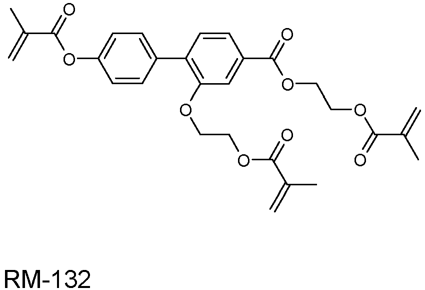 |
| 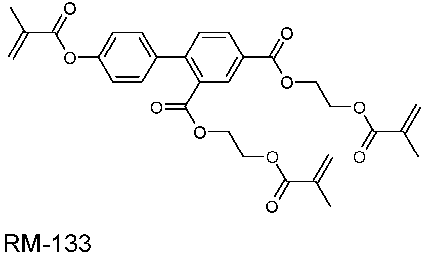 | 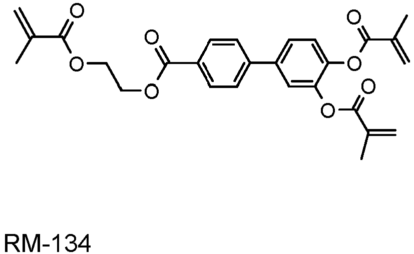 |
| 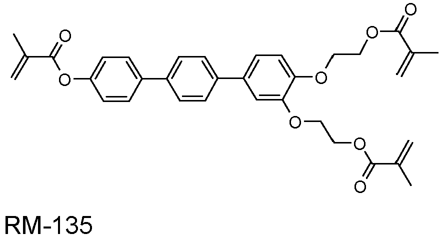 | 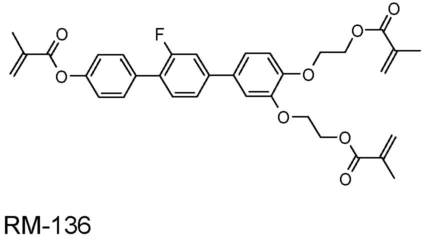 |
| 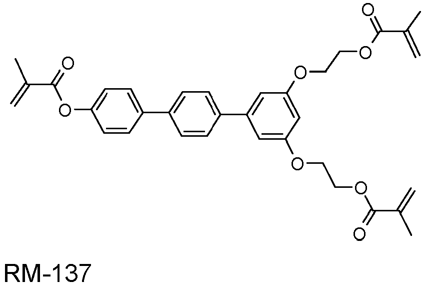 | 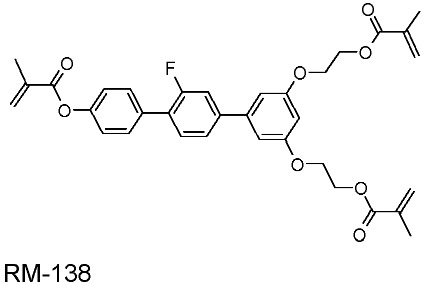 |
| 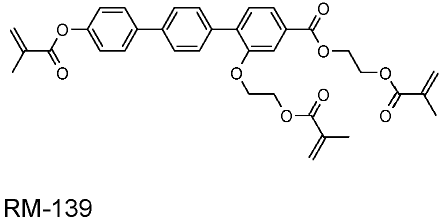 | 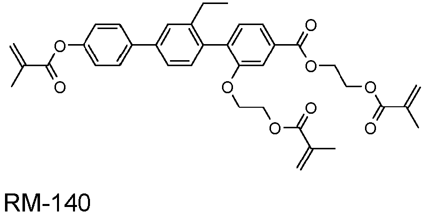 |
| 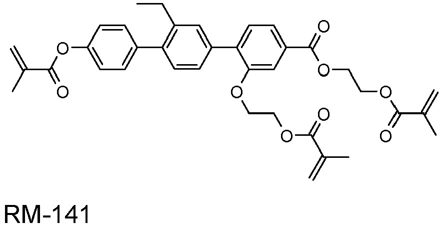 | 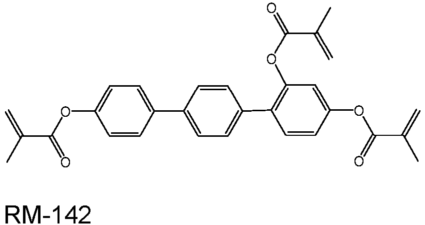 |
| 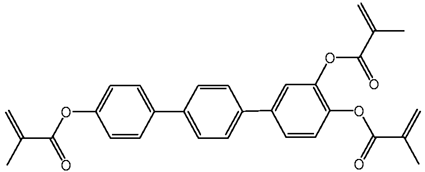 | 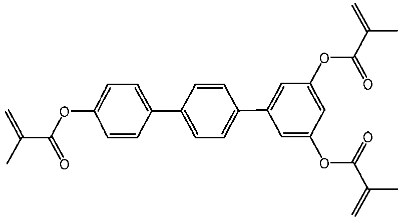 |
| 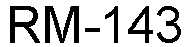 | 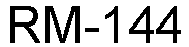 |
| 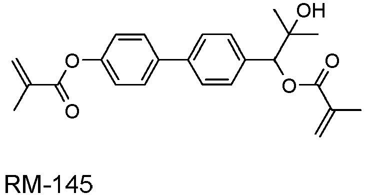 | 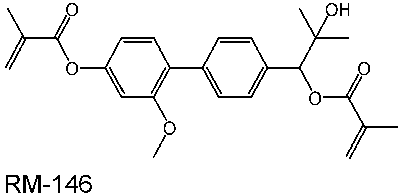 |
| 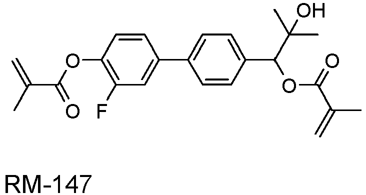 | 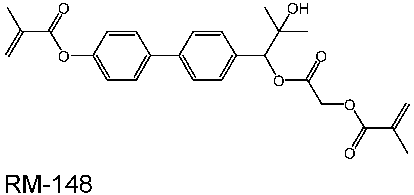 |
| 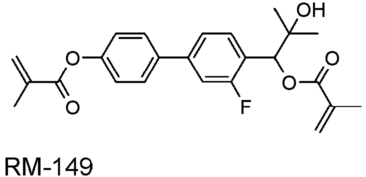 | 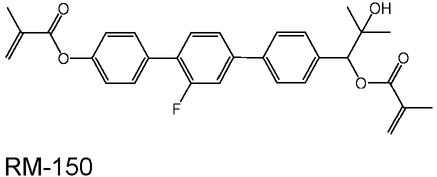 |
| 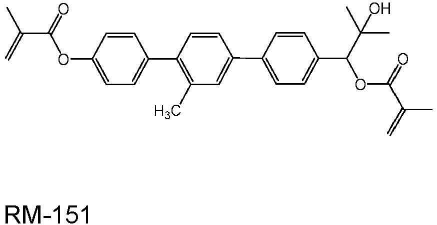 | 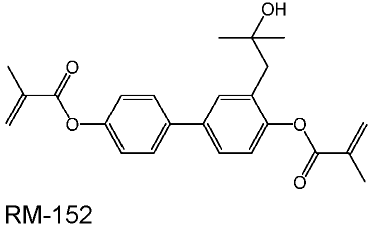 |
| 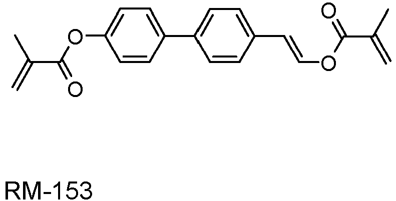 | 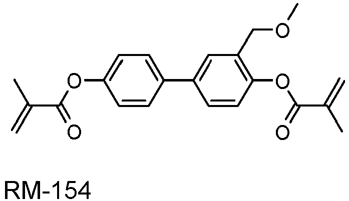 |
| 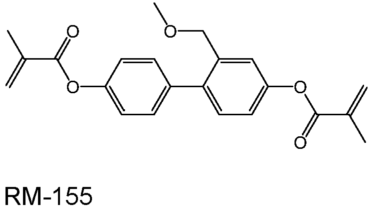 | 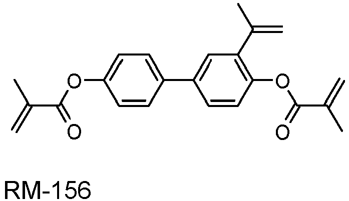 |
| 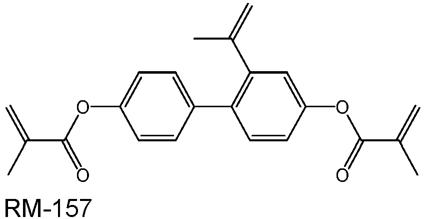 | 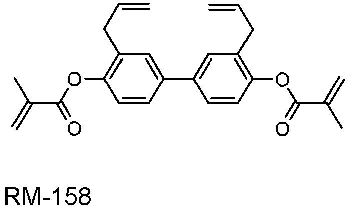 |
| 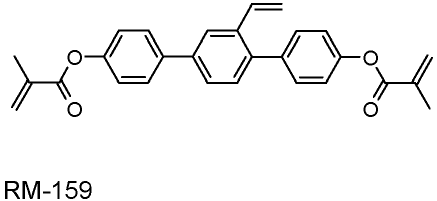 | 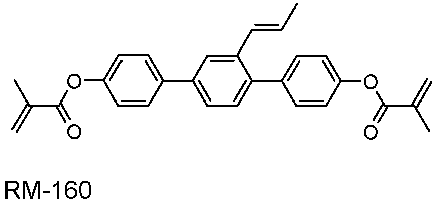 |
| 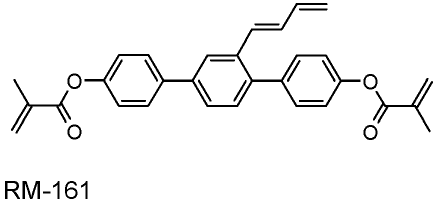 | 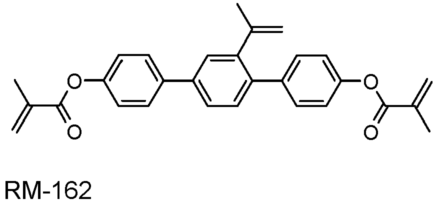 |
| 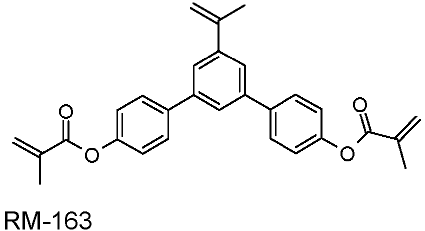 | 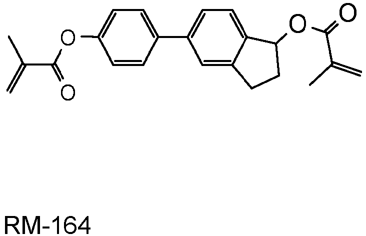 |
| 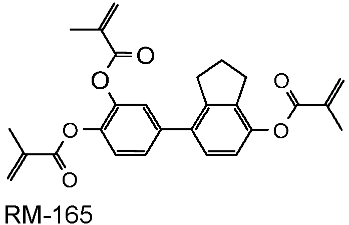 | 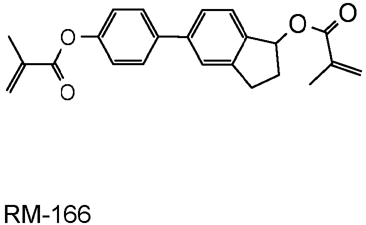 |
| 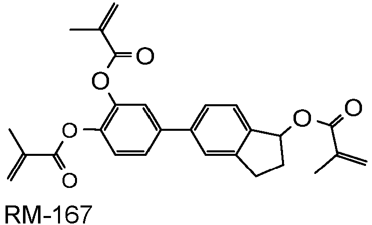 | 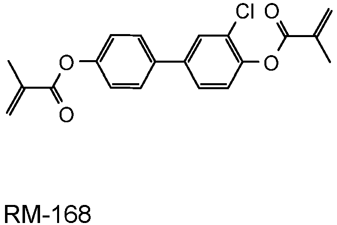 |
| 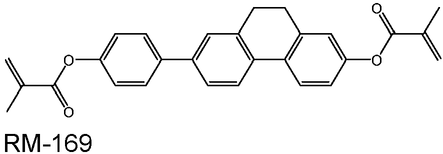 | 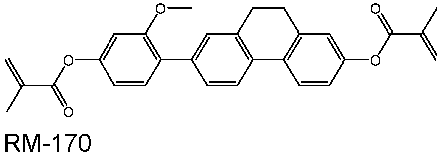 |
| 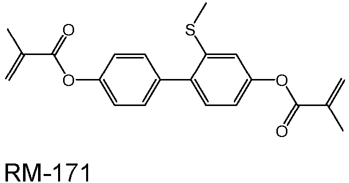 | 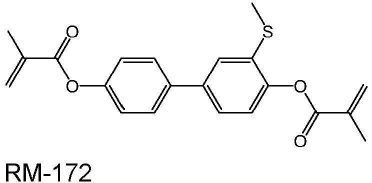 |
| 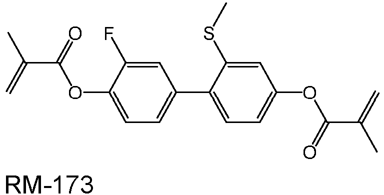 | 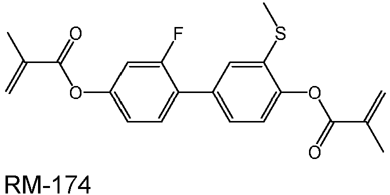 |
| 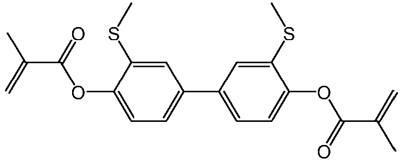 | 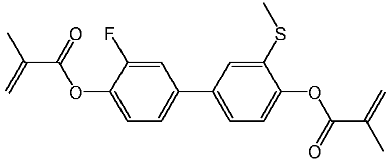 |
| 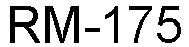 | 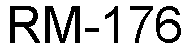 |
| 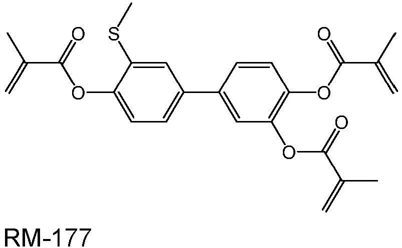 | 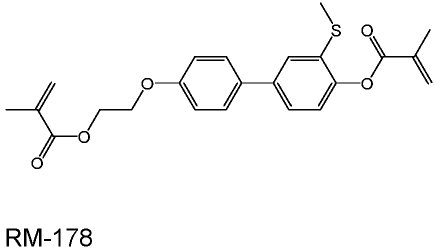 |
| 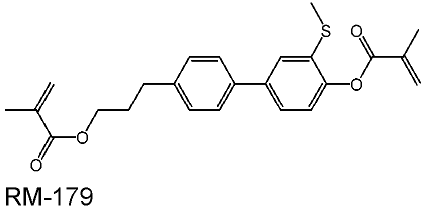 | 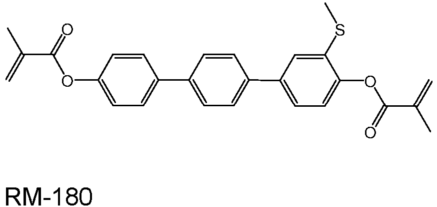 |
| 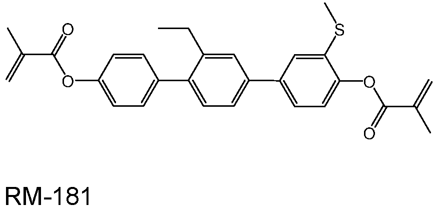 | 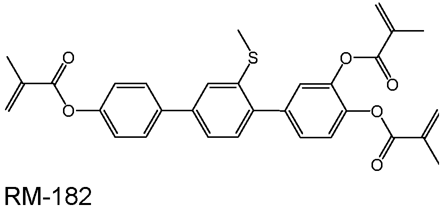 |
| 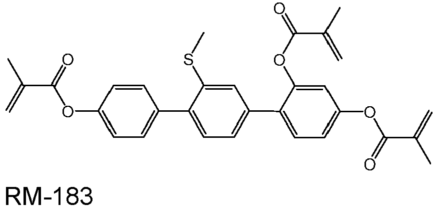 | |

In a preferred embodiment, the mixtures according to the invention comprise one or more polymerizable compounds, preferably selected from the polymerizable compounds of the formulae RM-1 to RM-182. Of these, compounds RM-1, RM-4, RM-8, RM-17, RM-19, RM-35, RM-37, RM-39, RM-40, RM-41, RM-48, RM-52, RM-54, RM-57, RM-58, RM-64, RM-74, RM-76, RM-88, RM-91, RM-102, RM-103, RM-109, RM-116, RM-117, RM-120, RM-121, RM-122, RM-139, RM-140, RM-142, RM-143, RM-145, RM-146, RM-147, RM-149, RM-156 to RM-163, RM-169, RM-170 and RM-171 to RM-183 are particularly preferred.

### Examples

The following examples explain the present invention without restricting it. However, they show the person skilled in the art preferred mixture concepts with compounds preferably to be employed and the respective concentrations thereof and combinations thereof with one another. In addition, the examples illustrate which properties and property combinations are accessible.

In addition, the following abbreviations and symbols are used:
- V₀: threshold voltage, capacitive [V] at 20°C,
- nₑ: extraordinary refractive index at 20°C and 589 nm,
- nₒ: ordinary refractive index at 20°C and 589 nm,
- Δn: optical anisotropy at 20°C and 589 nm,
- ε_{⊥}: dielectric permittivity perpendicular to the director at 20°C and 1 kHz,
- ε_{∥}: dielectric permittivity parallel to the director at 20°C and 1 kHz,
- Δε: dielectric anisotropy at 20°C and 1 kHz,
- cl.p., T(N,I): clearing point [°C],
- γ₁: rotational viscosity at 20°C [mPa·s],
- K₁: elastic constant, "splay" deformation at 20°C [pN],
- K₂: elastic constant, "twist" deformation at 20°C [pN],
- K₃: elastic constant, "bend" deformation at 20°C [pN]
- K_{avg}: average elastic constant at 20°C [pN] defined here as ${K}_{avg} = \left(\frac{3}{2} {K}_{1}+{K}_{3}\right) / 3 \approx \left({K}_{1}+{K}_{2}+{K}_{3}\right) / 3$ ,
- LTS: low-temperature stability of the phase, determined in test cells,
- VHR: voltage holding ratio.

Unless explicitly noted otherwise, all concentrations in the present application are quoted in per cent by weight and relate to the corresponding mixture as a whole, comprising all solid or liquid-crystalline components, without solvents.

Unless explicitly noted otherwise, all temperature values indicated in the present application, such as, for example, for the melting point T(C,N), the transition from the smectic (S) to the nematic (N) phase T(S,N) and the clearing point T(N,I), are quoted in degrees Celsius (°C). M.p. denotes melting point, cl.p. = clearing point. Furthermore, C = crystalline state, N = nematic phase, S = smectic phase and l = isotropic phase. The data between these symbols represent the transition temperatures.

All physical properties are and have been determined in accordance with "Merck Liquid Crystals, Physical Properties of Liquid Crystals", Status Nov. 1997, Merck KGaA, Germany, and apply for a temperature of 20°C, and Δn is determined at 589 nm and Δε at 1 kHz, unless explicitly indicated otherwise in each case.

The term "threshold voltage" for the present invention relates to the capacitive threshold (V₀), also known as the Freedericks threshold, unless explicitly indicated otherwise. In the examples, the optical threshold may also, as generally usual, be quoted for 10% relative contrast (V₁₀).

Unless stated otherwise, the process of polymerizing the polymerizable compounds in the PSA displays as described above and below is carried out at a temperature where the LC medium exhibits a liquid crystal phase, preferably a nematic phase, and most preferably is carried out at room temperature.

Unless stated otherwise, methods of preparing test cells and measuring their electrooptical and other properties are carried out by the methods as described hereinafter or in analogy thereto.

The polymerizable compounds are polymerized in the display or test cell by irradiation with UV light of defined intensity for a prespecified time, with a voltage simultaneously being applied to the display (usually 10 V to 30 V alternating current, 1 kHz).

The tilt angle is determined using the Mueller Matrix Polarimeter "AxoScan" from Axometrics. A low value (i.e. a large deviation from the 90° angle) corresponds to a large tilt here.

Unless stated otherwise, the term "tilt angle" means the angle between the LC director and the substrate, and "LC director" means in a layer of LC molecules with uniform orientation the preferred orientation direction of the optical main axis of the LC molecules, which corresponds, in case of calamitic, uniaxially positive birefringent LC molecules, to their molecular long axis.

### Comparison example 1

The nematic LC mixture C1 is formulated as follows.

| | | | |
|---|---|---|---|
| B(S)-2O-O5 | 1.5 % | Clearing point [°C]: | 102.2 |
| CC-3-V | 39.0 % | Δn [589 nm, 20°C]: | 0.0924 |
| CC-3-V1 | 5.5 % | ε_{∥} [1 kHz, 20°C]: | 3.3 |
| CCY-3-O1 | 2.0 % | ε_{⊥} [1 kHz, 20°C]: | 7.1 |
| CCY-3-O2 | 8.0 % | Δε [1 kHz, 20°C]: | -3.8 |
| CCY-3-O3 | 5.0 % | γ₁ [mPa s, 20°C]: | 125 |
| CLY-2-O4 | 5.0 % | K₁ [pN, 20°C]: | 18.7 |
| CLY-3-O2 | 8.5 % | K₃ [pN, 20°C]: | 18.4 |
| CLY-3-O3 | 5.0 % | V₀ [pN, 20°C]: | 2.33 |
| CLY-4-O2 | 5.0 % | LTS bulk [h, -20°C] | 1000 |
| CLY-5-O2 | 5.0 % | | |
| COB(S)-2-O4 | 8.0 % | | |
| Y-4O-O4 | 2.5 % | | |
| ∑ | 100.0 % | | |

To 99.96% of the mixture C1 are added 0.03% of ST-3a-1 and 0.01% of ST-12:

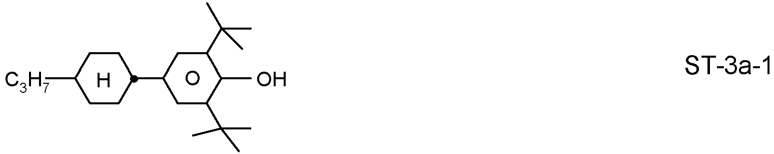

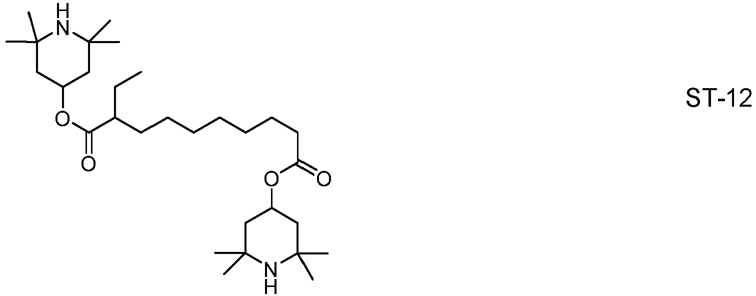

### Example 1

The nematic LC mixture N1 is formulated as follows.

| | | | |
|---|---|---|---|
| B(S)-2O-O5 | 1.5 % | Clearing point [°C]: | 102.7 |
| CC-3-V | 39.0 % | Δn [589 nm, 20°C]: | 0.0930 |
| CC-3-V1 | 5.5 % | ε_{∥} [1 kHz, 20°C]: | 3.3 |
| CCZPC-3-3 | 0.5 % | ε_{⊥} [1 kHz, 20°C]: | 7.1 |
| CCY-3-O1 | 2.0 % | Δε [1 kHz, 20°C]: | -3.8 |
| CCY-3-O2 | 8.0 % | γ₁ [mPa s, 20°C]: | 125 |
| CCY-3-O3 | 5.0 % | K₁ [pN, 20°C]: | 18.5 |
| CLY-2-O4 | 5.0 % | K₃ [pN, 20°C]: | 18.5 |
| CLY-3-O2 | 8.0 % | V₀ [pN, 20°C]: | 2.34 |
| CLY-3-O3 | 5.0 % | LTS bulk [h, -20°C] | 1000 |
| CLY-4-O2 | 5.0 % | | |
| CLY-5-O2 | 5.0 % | | |
| COB(S)-2-O4 | 8.0 % | | |
| Y-4O-O4 | 2.5 % | | |
| ∑ | 100.0 % | | |

To 99.96% of the mixture N1 are added 0.03% of ST-3a-1 and 0.01% of ST-12.

### Example 2

The nematic LC mixture N2 is formulated as follows.

| | | | |
|---|---|---|---|
| B(S)-2O-O5 | 1.0 % | Clearing point [°C]: | 102.9 |
| CC-3-V | 38.5 % | Δn [589 nm, 20°C]: | 0.0920 |
| CC-3-V1 | 5.5 % | ε_{∥} [1 kHz, 20°C]: | 3.3 |
| CCZPC-3-3 | 1.0 % | ε_{⊥} [1 kHz, 20°C]: | 7.1 |
| CCY-3-O1 | 2.0 % | Δε [1 kHz, 20°C]: | -3.8 |
| CCY-3-O2 | 8.0 % | γ₁ [mPa s, 20°C]: | 130 |
| CCY-3-O3 | 5.0 % | K₁ [pN, 20°C]: | 18.6 |
| CLY-2-O4 | 5.0 % | K₃ [pN, 20°C]: | 18.5 |
| CLY-3-O2 | 8.0 % | V₀ [pN, 20°C]: | 2.34 |
| CLY-3-O3 | 5.0 % | | |
| CLY-4-O2 | 5.0 % | | |
| CLY-5-O2 | 5.0 % | | |
| COB(S)-2-O4 | 8.0 % | | |
| Y-4O-O4 | 3.0 % | | |
| ∑ | 100.0 % | | |

To 99.96% of the mixture N2 are added 0.03% of ST-3a-1 and 0.01% of ST-12.

### Example 3

The nematic LC mixture N3 is formulated as follows.

| | | | |
|---|---|---|---|
| B(S)-2O-O5 | 3.5 % | Clearing point [°C]: | 104.4 |
| CC-3-V | 43.0 % | Δn [589 nm, 20°C]: | 0.0922 |
| CCZPC-3-3 | 3.0 % | ε_{∥} [1 kHz, 20°C]: | 3.3 |
| CCY-3-O1 | 2.0 % | ε_{⊥} [1 kHz, 20°C]: | 7.1 |
| CCY-3-O2 | 8.0 % | Δε [1 kHz, 20°C]: | -3.8 |
| CCY-3-O3 | 5.0 % | γ₁ [mPa s, 20°C]: | 132 |
| CLY-2-O4 | 5.0 % | K₁ [pN, 20°C]: | 18.2 |
| CLY-3-O2 | 8.0 % | K₃ [pN, 20°C]: | 18.5 |
| CLY-3-O3 | 4.5 % | V₀ [pN, 20°C]: | 2.36 |
| CLY-4-O2 | 5.0 % | LTS bulk [h, -20°C] | 384 |
| CLY-5-O2 | 5.0 % | | |
| COB(S)-2-O4 | 5.5 % | | |
| Y-4O-O4 | 2.5 % | | |
| ∑ | 100.0 % | | |

To 99.96% of the mixture N3 are added 0.03% of ST-3a-1 and 0.01% of ST-12.

### Example 4

The nematic LC mixture N4 is formulated as follows.

| | | | |
|---|---|---|---|
| B(S)-(c5)2O-O4 | 1.5 % | Clearing point [°C]: | 102.6 |
| CC-3-V | 39.0 % | Δn [589 nm, 20°C]: | 0.0929 |
| CC-3-V1 | 5.5 % | ε_{∥} [1 kHz, 20°C]: | 3.3 |
| CCZPC-3-3 | 0.5 % | ε_{⊥} [1 kHz, 20°C]: | 7.1 |
| CCY-3-O1 | 2.0 % | Δε [1 kHz, 20°C]: | -3.8 |
| CCY-3-O2 | 8.0 % | γ₁ [mPa s, 20°C]: | 126 |
| CCY-3-O3 | 5.0 % | K₁ [pN, 20°C]: | 18.5 |
| CLY-2-O4 | 5.0 % | K₃ [pN, 20°C]: | 18.4 |
| CLY-3-O2 | 8.0 % | V₀ [V, 20°C]: | 2.34 |
| CLY-3-O3 | 5.0 % | | |
| CLY-4-O2 | 5.0 % | | |
| CLY-5-O2 | 5.0 % | | |
| COB(S)-2-O4 | 8.0 % | | |
| Y-4O-O4 | 2.5 % | | |
| ∑ | 100.0 % | | |

wherein B(S)-(c5)2O-O4 is

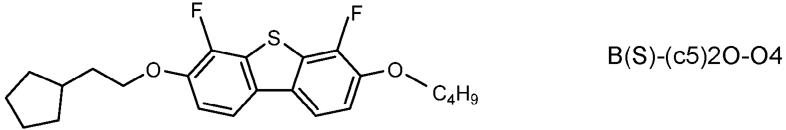

To the mixture N4 are added 100 ppm of the stabiliser H-1-1-1.

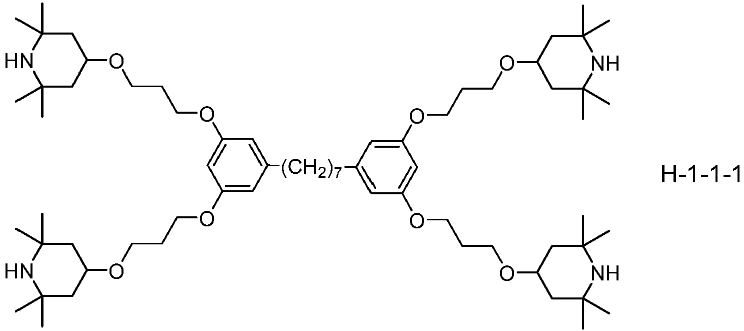

### Example 5

The nematic LC mixture N5 is formulated as follows.

| | | | |
|---|---|---|---|
| B-2O-O5 | 1.5 % | Clearing point [°C]: | 102.0 |
| CC-3-V | 39.0 % | Δn [589 nm, 20°C]: | 0.0927 |
| CC-3-V1 | 5.5 % | ε_{∥} [1 kHz, 20°C]: | 3.3 |
| CCZPC-3-3 | 0.5 % | ε_{⊥} [1 kHz, 20°C]: | 7.1 |
| CCY-3-O1 | 2.0 % | Δε [1 kHz, 20°C]: | -3.8 |
| CCY-3-O2 | 8.0 % | γ₁ [mPa s, 20°C]: | 124 |
| CCY-3-O3 | 5.0 % | K₁ [pN, 20°C]: | 18.2 |
| CLY-2-O4 | 5.0 % | K₃ [pN, 20°C]: | 18.3 |
| CLY-3-O2 | 8.0 % | V₀ [V, 20°C]: | 2.33 |
| CLY-3-O3 | 5.0 % | | |
| CLY-4-O2 | 5.0 % | | |
| CLY-5-O2 | 5.0 % | | |
| COB(S)-2-O4 | 8.0 % | | |
| Y-4O-O4 | 2.5 % | | |
| ∑ | 100.0 % | | |

To the mixture N5 are added 150 ppm of the stabiliser ST-3a-1.

### Example 6

The nematic LC mixture N6 is formulated as follows.

| | | | |
|---|---|---|---|
| B(S)-2O-O5 | 1.5 % | Clearing point [°C]: | 99.0 |
| CC-3-V | 39.0 % | Δn [589 nm, 20°C]: | 0.0924 |
| CC-3-V1 | 5.5 % | ε_{∥} [1 kHz, 20°C]: | 3.3 |
| CCZPC-3-3 | 0.5 % | ε_{⊥} [1 kHz, 20°C]: | 8.4 |
| CCOY-2-O2 | 7.0 % | Δε [1 kHz, 20°C]: | -4.7 |
| CCOY-3-O2 | 8.0 % | γ₁ [mPa s, 20°C]: | 128 |
| CLY-2-O4 | 5.0 % | K₁ [pN, 20°C]: | 18.1 |
| CLY-3-O2 | 8.0 % | K₃ [pN, 20°C]: | 18.1 |
| CLY-3-O3 | 5.0 % | V₀ [V, 20°C]: | 2.20 |
| CLY-4-O2 | 5.0 % | | |
| CLY-5-O2 | 5.0 % | | |
| COB(S)-2-O4 | 8.0 % | | |
| Y-4O-O4 | 2.5 % | | |
| ∑ | 100.0 % | | |

To the mixture N6 are added 150 ppm of the stabiliser ST-3b-1.

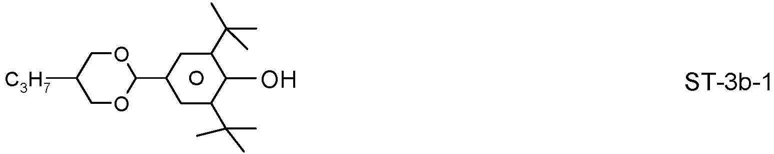

### Example 7

The nematic LC mixture N7 is formulated as follows.

| | | | |
|---|---|---|---|
| B(S)-2O-O5 | 1.5 % | Clearing point [°C]: | 100.5 |
| CC-3-V | 39.0 % | Δn [589 nm, 20°C] | 0.0923 |
| CC-3-V1 | 5.5 % | ε_{∥} [1 kHz, 20°C]: | 3.3 |
| CCZPC-3-3 | 0.5 % | ε_{⊥} [1 kHz, 20°C]: | 8.0 |
| CCEY-3-O2 | 9.0 % | Δε [1 kHz, 20°C]: | -4.7 |
| CCEY-3-O4 | 6.0 % | γ₁ [mPa s, 20°C]: | 134 |
| CLY-2-O4 | 5.0 % | K₁ [pN, 20°C]: | 18.3 |
| CLY-3-O2 | 8.0 % | K₃ [pN, 20°C]: | 19.1 |
| CLY-3-O3 | 5.0 % | V₀ [V, 20°C]: | 2.23 |
| CLY-4-O2 | 5.0 % | | |
| CLY-5-O2 | 5.0 % | | |
| COB(S)-2-O4 | 8.0 % | | |
| Y-4O-O4 | 2.5 % | | |
| ∑ | 100.0 % | | |

To the mixture N7 are added 50 ppm of the stabiliser H-2-1-1.

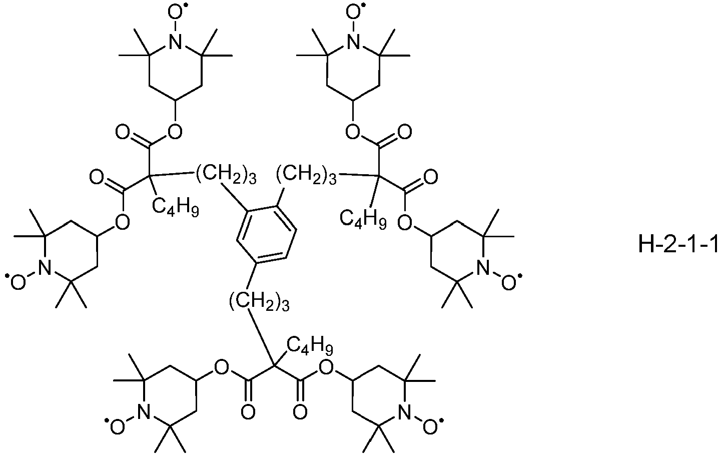

### Example 8

The nematic LC mixture N8 is formulated as follows.

| | | | |
|---|---|---|---|
| B(S)-2O-O5 | 1.5 % | Clearing point [°C]: | 97.5 |
| CC-3-V | 29.0 % | Δn [589 nm, 20°C]: | 0.0979 |
| CC-3-V1 | 5.5 % | ε_{∥} [1 kHz, 20°C]: | 3.3 |
| CCZPC-3-3 | 0.5 % | ε_{⊥} [1 kHz, 20°C]: | 7.2 |
| CCY-3-O1 | 2.0 % | Δε [1 kHz, 20°C]: | -3.9 |
| CCY-3-O2 | 8.0 % | γ₁ [mPa s, 20°C]: | 125 |
| CCY-3-O3 | 5.0 % | K₁ [pN, 20°C]: | 17.3 |
| CLY-2-O4 | 5.0 % | K₃ [pN, 20°C]: | 18.2 |
| CLY-3-O2 | 8.0 % | V₀ [V, 20°C]: | 2.28 |
| CLY-3-O3 | 5.0 % | | |
| LY-3-O2 | 10.0 % | | |
| CCP-V-1 | 10.0 % | | |
| COB(S)-2-O4 | 8.0 % | | |
| Y-4O-O4 | 2.5 % | | |
| ∑ | 100.0 % | | |

To the mixture N8 are added 100 ppm of the stabiliser ST-8-1.

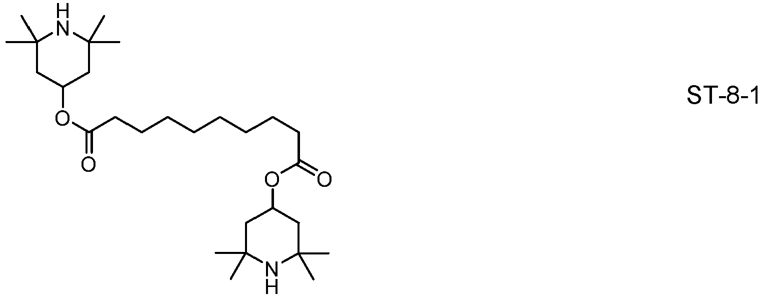

### Example 9

The nematic LC mixture N9 is formulated as follows.

| | | | |
|---|---|---|---|
| B(S)-2O-O5 | 1.5 % | Clearing point [°C]: | 81.0 |
| CC-3-V | 19.0 % | Δn [589 nm, 20°C]: | 0.1000 |
| CC-3-V1 | 5.5 % | ε_{∥} [1 kHz, 20°C]: | 3.3 |
| CCZPC-3-3 | 0.5 % | ε_{⊥} [1 kHz, 20°C]: | 7.4 |
| CCY-3-O1 | 2.0 % | Δε [1 kHz, 20°C]: | -4.1 |
| CCY-3-O2 | 8.0 % | γ₁ [mPa s, 20°C]: | 115 |
| CCY-3-O3 | 5.0 % | K₁ [pN, 20°C]: | 15.3 |
| LY-3-O2 | 28.0 % | K₃ [pN, 20°C]: | 17.8 |
| CCP-V-1 | 10.0 % | V₀ [V, 20°C]: | 2.20 |
| CCP-3-1 | 10.0 % | | |
| CLY-4-O2 | 5.0 % | | |
| CLY-5-O2 | 5.0 % | | |
| COB(S)-2-O4 | 8.0 % | | |
| Y-4O-O4 | 2.5 % | | |
| ∑ | 100.0 % | | |

To the mixture N9 are added 50 ppm of the stabiliser ST-9-1.

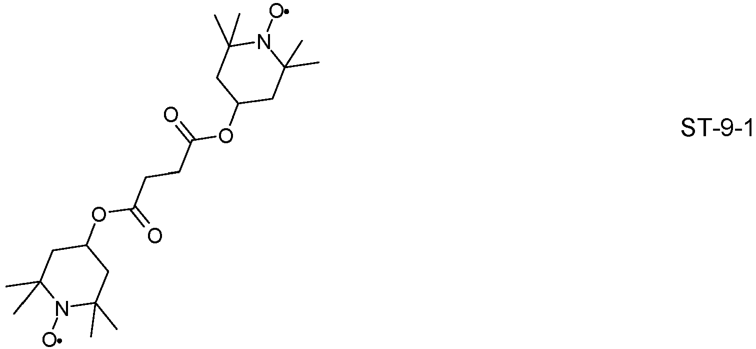

### Example 10

The nematic LC mixture N10 is formulated as follows.

| | | | |
|---|---|---|---|
| B(S)-2O-O5 | 1.5 % | Clearing point [°C]: | 99.5 |
| CC-3-V | 19.0 % | Δn [589 nm, 20°C]: | 0.1021 |
| CC-3-V1 | 5.5 % | ε_{∥} [1 kHz, 20°C]: | 3.3 |
| CCZPC-3-3 | 0.5 % | ε_{⊥} [1 kHz, 20°C]: | 7.5 |
| CEY-3-O2 | 15.0 % | Δε [1 kHz, 20°C]: | -4.2 |
| CCP-V-1 | 10.0 % | γ₁ [mPa s, 20°C]: | 152 |
| CCP-3-1 | 10.0 % | K₁ [pN, 20°C]: | 19.1 |
| CLY-2-O4 | 5.0 % | K₃ [pN, 20°C]: | 20.2 |
| CLY-3-O2 | 8.0 % | V₀ [V, 20°C]: | 2.41 |
| CLY-3-O3 | 5.0 % | | |
| CLY-4-O2L | 5.0 % | | |
| CLY-5-O2 | 5.0 % | | |
| COB(S)-2-O4 | 8.0 % | | |
| Y-4O-O4 | 2.5 % | | |
| ∑ | 100.0 % | | |

To the mixture N7 are added 50 ppm of the stabiliser ST-12.

### Example 11

The nematic LC mixture N11 is formulated as follows.

| | | | |
|---|---|---|---|
| B(S)-2O-O5 | 1.5 % | Clearing point [°C]: | 99.5 |
| CC-3-V | 39.0 % | Δn [589 nm, 20°C]: | 0.0908 |
| CC-3-V1 | 5.5 % | ε_{∥} [1 kHz, 20°C]: | 3.3 |
| CCZPC-3-3 | 0.5 % | ε_{⊥} [1 kHz, 20°C]: | 7.5 |
| CCY-3-O1 | 2.0 % | Δε [1 kHz, 20°C]: | -4.2 |
| CCY-3-O2 | 5.0 % | γ₁ [mPa s, 20°C]: | 130 |
| CAIY-3-O2 | 8.0 % | K₁ [pN, 20°C]: | 17.6 |
| CLY-2-O4 | 5.0 % | K₃ [pN, 20°C]: | 18.7 |
| CLY-3-O2 | 8.0 % | V₀ [V, 20°C]: | 2.24 |
| CLY-3-O3 | 5.0 % | | |
| CLY-4-O2 | 5.0 % | | |
| CLY-5-O2 | 5.0 % | | |
| COB(S)-2-O4 | 8.0 % | | |
| Y-4O-O4 | 2.5 % | | |
| ∑ | 100.0 % | | |

To the mixture N11 are added 100 ppm of the stabiliser H-1-1-1.

### Example 12

The nematic LC mixture N12 is formulated as follows.

| | | | |
|---|---|---|---|
| B(S)-2O-O5 | 1.5 % | Clearing point [°C]: | 100.0 |
| CC-3-V | 20.0 % | Δn [589 nm, 20°C]: | 0.0900 |
| CC-3-V1 | 5.5 % | ε_{∥} [1 kHz, 20°C]: | 3.3 |
| CCZPC-3-3 | 0.5 % | ε_{⊥} [1 kHz, 20°C]: | 7.1 |
| CCY-3-O1 | 2.0 % | Δε [1 kHz, 20°C]: | -3.8 |
| CCY-3-O2 | 8.0 % | γ₁ [mPa s, 20°C]: | 128 |
| CCY-3-O3 | 5.0 % | K₁ [pN, 20°C]: | 18.7 |
| CLY-2-O4 | 5.0 % | K₃ [pN, 20°C]: | 17.5 |
| CLY-3-O2 | 8.0 % | V₀ [V, 20°C]: | 2.28 |
| CLY-3-O3 | 5.0 % | | |
| CLY-4-O2 | 5.0 % | | |
| CLY-5-O2 | 5.0 % | | |
| COB(S)-2-O4 | 8.0 % | | |
| Y-4O-O4 | 2.5 % | | |
| CC-2-3 | 19.0 % | | |
| ∑ | 100.0 % | | |

To the mixture N12 are added 150 ppm of the stabiliser ST-3a-1.

### Example 13

The nematic LC mixture N13 is formulated as follows.

| | | | |
|---|---|---|---|
| B(S)-2O-O5 | 1.5 % | Clearing point [°C]: | 107.0 |
| CC-3-V | 29.0 % | Δn [589 nm, 20°C]: | 0.0947 |
| CC-3-V1 | 5.5 % | ε_{∥} [1 kHz, 20°C]: | 3.3 |
| CCZPC-3-3 | 0.5 % | ε_{⊥} [1 kHz, 20°C]: | 7.1 |
| CCY-3-O1 | 2.0 % | Δε [1 kHz, 20°C]: | -3.8 |
| CCY-3-O2 | 8.0 % | γ₁ [mPa s, 20°C]: | 138 |
| CCY-3-O3 | 5.0 % | K₁ [pN, 20°C]: | 19.8 |
| CLY-2-O4 | 5.0 % | K₃ [pN, 20°C]: | 19.4 |
| CLY-3-O2 | 8.0 % | V₀ [V, 20°C]: | 2.36 |
| CLY-3-O3 | 5.0 % | | |
| CLY-4-O2 | 5.0 % | | |
| CLY-5-O2 | 5.0 % | | |
| COB(S)-2-O4 | 8.0 % | | |
| Y-4O-O4 | 2.5 % | | |
| CC-4-V1 | 10.0 % | | |
| ∑ | 100.0 % | | |

To the mixture N13 are added 150 ppm of the stabiliser ST-3b-1.

### Example 14

The nematic LC mixture N14 is formulated as follows.

| | | | |
|---|---|---|---|
| B(S)-2O-O5 | 1.5 % | Clearing point [°C]: | 106.0 |
| CC-3-V1 | 5.5 % | ε_{∥} [1 kHz, 20°C]: | 3.3 |
| CCZPC-3-3 | 0.5 % | ε_{⊥} [1 kHz, 20°C]: | 7.1 |
| CCY-3-O1 | 2.0 % | Δε [1 kHz, 20°C]: | -3.8 |
| CCY-3-O2 | 8.0 % | γ₁ [mPa s, 20°C]: | 152 |
| CCY-3-O3 | 5.0 % | K₁ [pN, 20°C]: | 21.4 |
| CLY-2-O4 | 5.0 % | K₃ [pN, 20°C]: | 18.5 |
| CLY-3-O2 | 8.0 % | V₀ [V, 20°C]: | 2.31 |
| CLY-3-O3 | 5.0 % | | |
| CLY-4-O2 | 5.0 % | | |
| CLY-5-O2 | 5.0 % | | |
| COB(S)-2-O4 | 8.0 % | | |
| Y-4O-O4 | 2.5 % | | |
| CC-2-3 | 22.0 % | | |
| CC-3-4 | 4.0 % | | |
| CC-3-5 | 4.0 % | | |
| CC-4-V1 | 9.0 % | | |
| ∑ | 100.0 % | | |

To the mixture N14 are added 50 ppm of the stabiliser H-2-1-1.

### Example 15

The nematic LC mixture N15 is formulated as follows.

| | | | |
|---|---|---|---|
| B(S)-2O-O5 | 1.5 % | Clearing point [°C]: | 108.0 |
| CC-3-V1 | 5.5 % | ε_{∥} [1 kHz, 20°C]: | 3.3 |
| CCZPC-3-3 | 0.5 % | ε_{⊥} [1 kHz, 20°C]: | 7.1 |
| CCY-3-O1 | 2.0 % | Δε [1 kHz, 20°C]: | -3.8 |
| CCY-3-O2 | 8.0 % | γ₁ [mPa s, 20°C]: | 154 |
| CCY-3-O3 | 5.0 % | K₁ [pN, 20°C]: | 21.2 |
| CLY-2-O4 | 5.0 % | K₃ [pN, 20°C]: | 18.5 |
| CLY-3-O2 | 8.0 % | V₀ [V, 20°C]: | 2.31 |
| CLY-3-O3 | 5.0 % | | |
| CLY-4-O2 | 5.0 % | | |
| CLY-5-O2 | 5.0 % | | |
| COB(S)-2-O4 | 8.0 % | | |
| Y-4O-O4 | 2.5 % | | |
| CC-2-3 | 22.0 % | | |
| CC-4-V1 | 17.0 % | | |
| ∑ | 100.0 % | | |

To the mixture N15 are added 100 ppm of the stabiliser ST-8-1.

The Examples N1 to N15 that contain CCZPC-3-3 show much better white-black image sticking (WB IS) result compared with the Comparison example C1, which does not contain CCZPC-3-3.

What is more, with the increasement of the concentration of the CCZPC-3-3 from 0.5 % to 3 % as shown in Examples N1 to N15, the white-black image sticking (WB IS) result becomes better, which enables improved short term image sticking.

### Example 16

A polymerizable mixture is prepared by adding 0.3% of the polymerizable compound RM-171 and 100 ppm of the stabiliser ST-3a-1 to the mixture of Example 1.

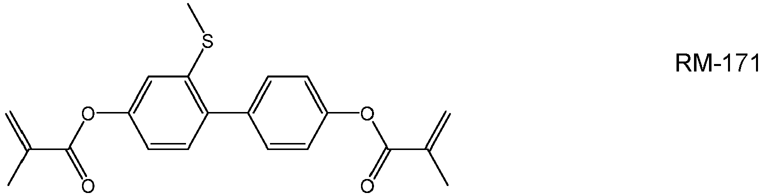

### Example 17

A polymerizable mixture is prepared by adding 0.3% of the polymerizable compound RM-1 and 100 ppm of the stabiliser ST-3b-1 to the mixture of Example 2.

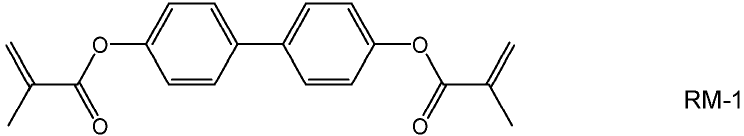

### Example 18

A polymerizable mixture is prepared by adding 0.3% of the polymerizable compound RM-35 and 50 ppm of the stabiliser H-1-1-1 to the mixture of Example 3.

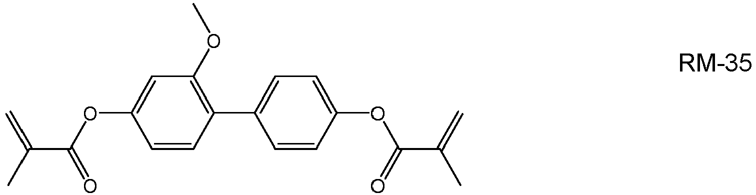

### Example 19

A polymerizable mixture is prepared by adding 0.3% of the polymerizable compound RM-120 and 150 ppm of the stabiliser ST-9-1 to the mixture of Example 4.

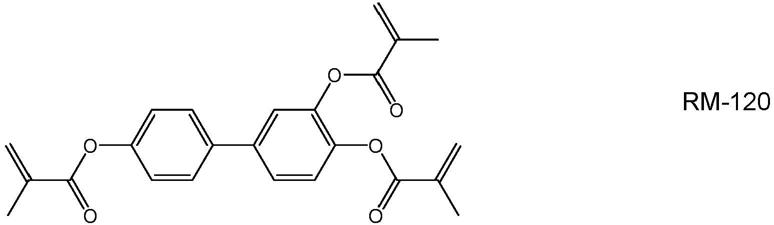

### Example 20

A polymerizable mixture is prepared by adding 0.3% of the polymerizable compound RM-142 and 150 ppm of the stabiliser ST-8-1 to the mixture of Example 5.

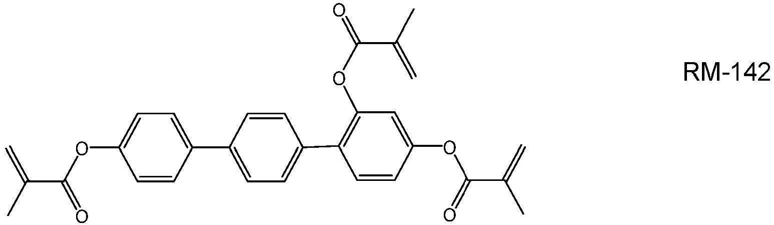

### Example 21

A polymerizable mixture is prepared by adding 0.3% of the polymerizable compound RM-143 and 150 ppm of the stabiliser ST-3a-1 to the mixture of Example 6.

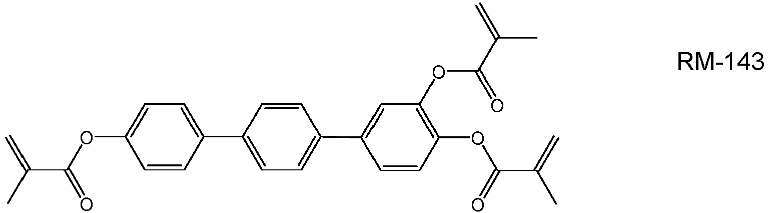

### Example 22

A polymerizable mixture is prepared by adding 0.3% of the polymerizable compound RM-172 and 50 ppm of the stabiliser H-2-1-1 to the mixture of Example 7.

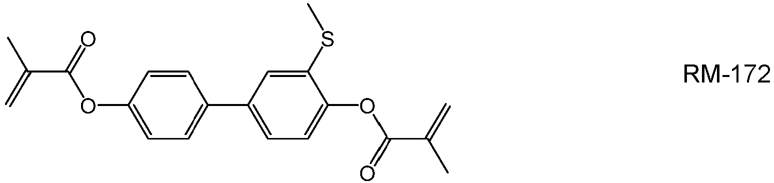

### Example 23

A polymerizable mixture is prepared by adding 0.3% of the polymerizable compound RM-159 and 50 ppm of the stabiliser H-2-1-1 to the mixture of Example 8.

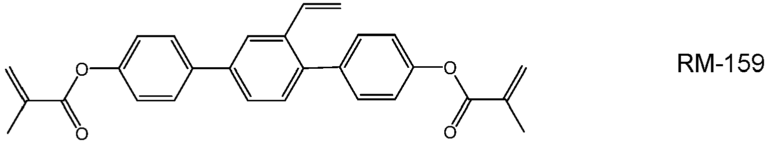

### Example 24

A polymerizable mixture is prepared by adding 0.3% of the polymerizable compound RM-145 to the mixture of Example 9.

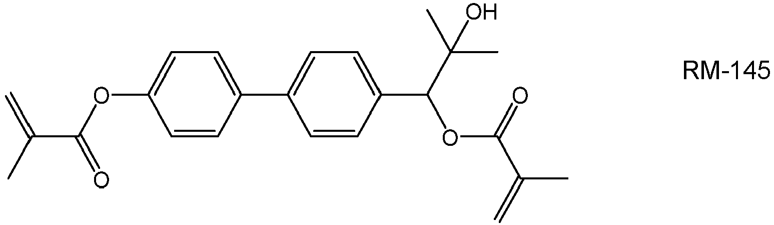

### Example 25

A polymerizable mixture is prepared by adding 0.3% of the polymerizable compound RM-156 and 150 ppm of the stabiliser ST-8-1 to the mixture of Example 10.

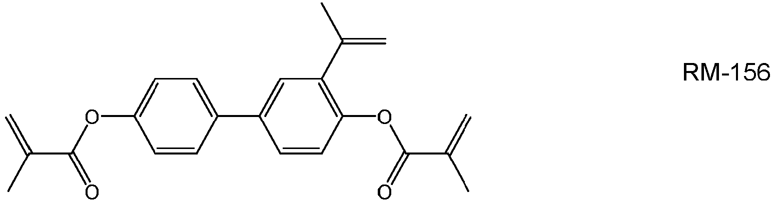

### Example 26

A polymerizable mixture is prepared by adding 0.35% of the polymerizable compound RM-162 and 50 ppm of the stabiliser H-2-1-1 to the mixture of Example 11.

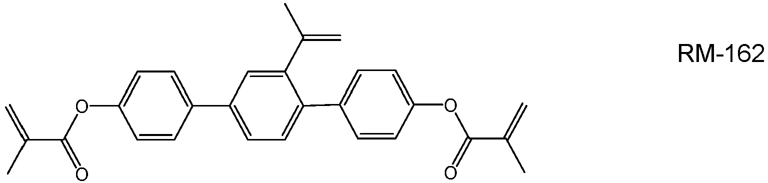

### Example 27

A polymerizable mixture is prepared by adding 0.4% of the polymerizable compound RM-58 and 150 ppm of the stabiliser ST-3b-1 to the mixture of Example 12.

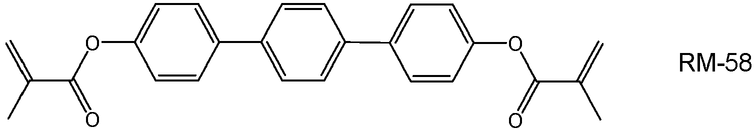

### Example 28

A polymerizable mixture is prepared by adding 0.3% of the polymerizable compound RM-160 and 150 ppm of the stabiliser ST-8-1 to the mixture of Example 13.

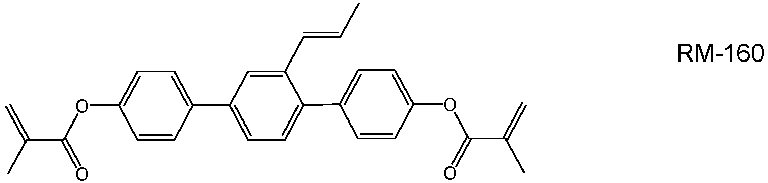

### Example 29

A polymerizable mixture is prepared by adding 0.4% of the polymerizable compound RM-163 and 100 ppm of the stabiliser ST-9-1 to the mixture of Example 14.

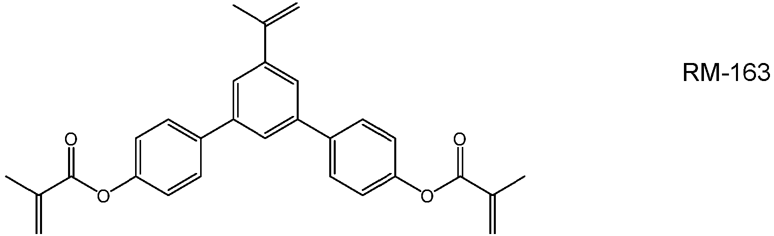

### Example 30

A polymerizable mixture is prepared by adding 0.4% of the polymerizable compound RM-64 and 150 ppm of the stabiliser ST-3b-1 to the mixture of Example 15.

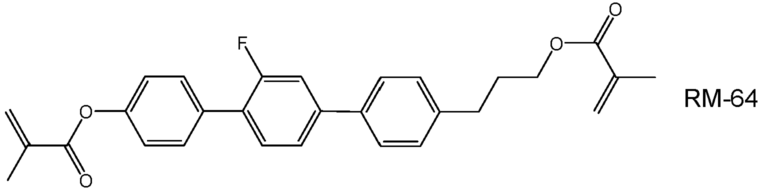

### Example 31

A polymerizable mixture is prepared by adding 0.4% of the polymerizable compound RM-169 and 100 ppm of the stabiliser ST-8-1 to the mixture of Example 1.

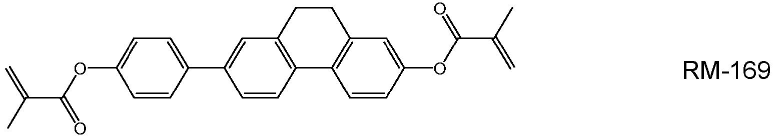

### Example 32

A polymerizable mixture is prepared by adding 0.4% of the polymerizable compound RM-157 and 150 ppm of the stabiliser H-2-1-1 to the mixture of Example 2.

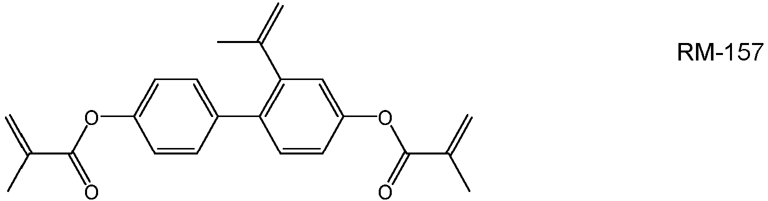

### Example 33

The nematic LC mixture N33 is formulated as follows.

| | | | |
|---|---|---|---|
| B(S)-4O-O5 | 1.5 % | Clearing point [°C]: | 102.5 |
| CC-3-V | 39.0 % | Δn [589 nm, 20°C]: | 0.0928 |
| CC-3-V1 | 5.5 % | ε_{∥} [1 kHz, 20°C]: | 3.3 |
| CCZPC-3-3 | 0.5 % | ε_{⊥} [1 kHz, 20°C]: | 7.1 |
| CCY-3-O1 | 2.0 % | Δε [1 kHz, 20°C]: | -3.8 |
| CCY-3-O2 | 8.0 % | γ₁ [mPa s, 20°C]: | 125 |
| CCY-3-O3 | 5.0 % | K₁ [pN, 20°C]: | 18.3 |
| CLY-2-O4 | 5.0 % | K₃ [pN, 20°C]: | 18.4 |
| CLY-3-O2 | 8.0 % | | |
| CLY-3-O3 | 5.0 % | | |
| CLY-4-O2 | 5.0 % | | |
| CLY-5-O2 | 5.0 % | | |
| COB(S)-2-O4 | 8.0 % | | |
| Y-4O-O4 | 2.5 % | | |
| ∑ | | | 100.0 % |

To 99.96% of the mixture N33 are added 0.03% of ST-3a-2 and 0.01% of ST-12:

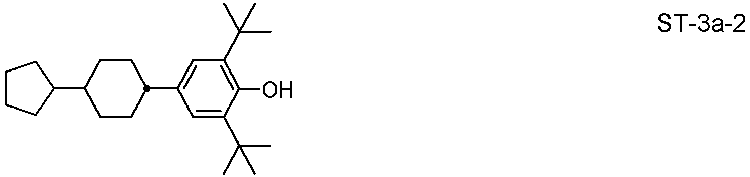

### Example 34

The nematic LC mixture N34 is formulated as follows.

| | | | |
|---|---|---|---|
| B(S)-1V1O-O1(c5) | 1.5 % | Clearing point [°C]: | 102.5 |
| CC-3-V | 39.0 % | Δn [589 nm, 20°C]: | 0.0930 |
| CC-3-V1 | 5.5 % | ε_{∥} [1 kHz, 20°C]: | 3.3 |
| CCZPC-3-3 | 0.5 % | ε_{⊥} [1 kHz, 20°C]: | 7.1 |
| CCY-3-O1 | 2.0 % | Δε [1 kHz, 20°C]: | -3.8 |
| CCY-3-O2 | 8.0 % | γ₁ [mPa s, 20°C]: | 127 |
| CCY-3-O3 | 5.0 % | K₁ [pN, 20°C]: | 18.5 |
| CLY-2-O4 | 5.0 % | K₃ [pN, 20°C]: | 18.5 |
| CLY-3-O2 | 8.0 % | | |
| CLY-3-O3 | 5.0 % | | |
| CLY-4-O2 | 5.0 % | | |
| CLY-5-O2 | 5.0 % | | |
| COB(S)-2-O4 | 8.0 % | | |
| Y-4O-O4 | 2.5 % | | |
| ∑ | 100.0 % | | |

wherein B(S)-1V1O-O1 (c5) is

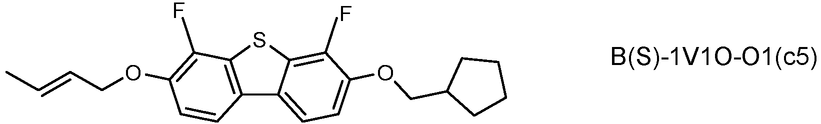

To 99.96% of the mixture N34 are added 0.03% of ST-3a-2 and 0.01% of ST-12.

### Example 35

The nematic LC mixture N35 is formulated as follows.

| | | | |
|---|---|---|---|
| B(P)-2O-O4 | 1.5 % | Clearing point [°C]: | 103 |
| CC-3-V | 39.0 % | Δn [589 nm, 20°C]: | 0.0930 |
| CC-3-V1 | 5.5 % | ε_{∥} [1 kHz, 20°C]: | 3.3 |
| CCZPC-3-3 | 0.5 % | ε_{⊥} [1 kHz, 20°C]: | 7.0 |
| CCY-3-O1 | 2.0 % | Δε [1 kHz, 20°C]: | -3.7 |
| CCY-3-O2 | 8.0 % | γ₁ [mPa s, 20°C]: | 125 |
| CCY-3-O3 | 5.0 % | K₁ [pN, 20°C]: | 18.5 |
| CLY-2-O4 | 5.0 % | K₃ [pN, 20°C]: | 18.5 |
| CLY-3-O2 | 8.0 % | | |
| CLY-3-O3 | 5.0 % | | |
| CLY-4-O2 | 5.0 % | | |
| CLY-5-O2 | 5.0 % | | |
| COB(S)-2-O4 | 8.0 % | | |
| Y-4O-O4 | 2.5 % | | |
| ∑ | 100.0 % | | |

To 99.96% of the mixture N35 are added 0.03% of ST-3a-2 and 0.01% of ST-12.

### Example 36

The nematic LC mixture N36 is formulated as follows.

| | | | |
|---|---|---|---|
| B(P)-2O-O3 | 1.5 % | Clearing point [°C]: | 103.0 |
| CC-3-V | 39.0 % | Δn [589 nm, 20°C]: | 0.0931 |
| CC-3-V1 | 5.5 % | ε_{∥} [1 kHz, 20°C]: | 3.3 |
| CCZPC-3-3 | 0.5 % | ε_{⊥} [1 kHz, 20°C]: | 7.0 |
| CCY-3-O1 | 2.0 % | Δε [1 kHz, 20°C]: | -3.7 |
| CCY-3-O2 | 8.0 % | γ₁ [mPa s, 20°C]: | 125 |
| CCY-3-O3 | 5.0 % | K₁ [pN, 20°C]: | 18.5 |
| CLY-2-O4 | 5.0 % | K₃ [pN, 20°C]: | 18.5 |
| CLY-3-O2 | 8.0 % | | |
| CLY-3-O3 | 5.0 % | | |
| CLY-4-O2 | 5.0 % | | |
| CLY-5-O2 | 5.0 % | | |
| COB(S)-2-O4 | 8.0 % | | |
| Y-4O-O4 | 2.5 % | | |
| ∑ | 100.0 % | | |

To 99.96% of the mixture N36 are added 0.03% of ST-3a-2 and 0.01% of ST-12.

### Example 37

The nematic LC mixture N37 is formulated as follows.

| | | | |
|---|---|---|---|
| B(A)-2O-O2 | 1.5 % | Clearing point [°C]: | 103 |
| CC-3-V | 39.0 % | Δn [589 nm, 20°C]: | 0.0932 |
| CC-3-V1 | 5.5 % | ε_{∥} [1 kHz, 20°C]: | 3.3 |
| CCZPC-3-3 | 0.5 % | ε_{⊥} [1 kHz, 20°C]: | 7.1 |
| CCY-3-O1 | 2.0 % | Δε [1 kHz, 20°C]: | -3.8 |
| CCY-3-O2 | 8.0 % | γ₁ [mPa s, 20°C]: | 125 |
| CCY-3-O3 | 5.0 % | K₁ [pN, 20°C]: | 18.2 |
| CLY-2-O4 | 5.0 % | K₃ [pN, 20°C]: | 18.6 |
| CLY-3-O2 | 8.0 % | | |
| CLY-3-O3 | 5.0 % | | |
| CLY-4-O2 | 5.0 % | | |
| CLY-5-O2 | 5.0 % | | |
| COB(S)-2-O4 | 8.0 % | | |
| Y-4O-O4 | 2.5 % | | |
| ∑ | 100.0 % | | |

To the mixture N37 are added 100 ppm of the stabiliser H-1-1-1.

### Example 38

The nematic LC mixture N38 is formulated as follows.

| | | | |
|---|---|---|---|
| B(S)-2O-O5 | 1.5 % | Clearing point [°C]: | 108 |
| CC-3-V | 37.0 % | Δn [589 nm, 20°C]: | 0.0984 |
| CC-3-V1 | 2.5 % | ε_{∥} [1 kHz, 20°C]: | 3.3 |
| CCZPC-3-3 | 0.5 % | ε_{⊥} [1 kHz, 20°C]: | 7.1 |
| CCY-3-O1 | 2.0 % | Δε [1 kHz, 20°C]: | -3.8 |
| CCY-3-O2 | 8.0 % | γ₁ [mPa s, 20°C]: | 143 |
| CCY-3-O3 | 5.0 % | K₁ [pN, 20°C]: | 19.7 |
| CLY-2-O4 | 5.0 % | K₃ [pN, 20°C]: | 19.4 |
| CLY-3-O2 | 8.0 % | | |
| CLY-3-O3 | 5.0 % | | |
| CLY-4-O2 | 5.0 % | | |
| CLY-5-O2 | 5.0 % | | |
| COB(S)-2-O4 | 8.0 % | | |
| Y-4O-O4 | 2.5 % | | |
| CLP-V-1 | 5.0 % | | |
| ∑ | 100.0 % | | |

To the mixture N38 are added 150 ppm of the stabiliser ST-3a-1.

### Example 39

The nematic LC mixture N39 is formulated as follows.

| | | | |
|---|---|---|---|
| B(S)-2O-O5 | 1.5 % | Clearing point [°C]: | 98.5 |
| CC-3-V | 37.0 % | Δn [589 nm, 20°C]: | 0.0988 |
| CC-3-V1 | 2.5 % | ε_{∥} [1 kHz, 20°C]: | 3.3 |
| CCZPC-3-3 | 0.5 % | ε_{⊥} [1 kHz, 20°C]: | 7.0 |
| CCY-3-O1 | 2.0 % | Δε [1 kHz, 20°C]: | -3.7 |
| CCY-3-O2 | 8.0 % | γ₁ [mPa s, 20°C]: | 122 |
| CCY-3-O3 | 5.0 % | K₁ [pN, 20°C]: | 18.0 |
| CLY-2-O4 | 5.0 % | K₃ [pN, 20°C]: | 17.6 |
| CLY-3-O2 | 8.0 % | | |
| CLY-3-O3 | 5.0 % | | |
| CLY-4-O2 | 5.0 % | | |
| CLY-5-O2 | 5.0 % | | |
| COB(S)-2-O4 | 8.0 % | | |
| Y-4O-O4 | 2.5 % | | |
| PP-1-3 | 5.0 % | | |
| ∑ | 100.0 % | | |

To the mixture N39 are added 150 ppm of the stabiliser ST-3b-2:

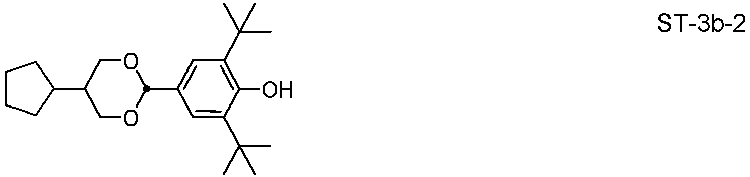

### Example 40

The nematic LC mixture N40 is formulated as follows.

| | | | |
|---|---|---|---|
| B(S)-2O-O5 | 1.5 % | Clearing point [°C]: | 98 |
| CC-3-V | 37.0 % | ε_{∥} [1 kHz, 20°C]: | 3.3 |
| CC-3-V1 | 2.5 % | ε_{⊥} [1 kHz, 20°C]: | 7.1 |
| CCZPC-3-3 | 0.5 % | Δε [1 kHz, 20°C]: | -3.8 |
| CCY-3-O1 | 2.0 % | γ₁ [mPa s, 20°C]: | 124 |
| CCY-3-O2 | 8.0 % | K₁ [pN, 20°C]: | 17.9 |
| CCY-3-O3 | 5.0 % | K₃ [pN, 20°C]: | 17.6 |
| CLY-2-O4 | 5.0 % | | |
| CLY-3-O2 | 8.0 % | | |
| CLY-3-O3 | 5.0 % | | |
| CLY-4-O2 | 5.0 % | | |
| CLY-5-O2 | 5.0 % | | |
| COB(S)-2-O4 | 8.0 % | | |
| Y-4O-O4 | | | 2.5 % |
| PP-1-5 | | | 5.0 % |
| | | | 100.0 % |

To the mixture N40 are added 50 ppm of the stabiliser H-2-1-1.

### Example 41

The nematic LC mixture N41 is formulated as follows.

| | | | |
|---|---|---|---|
| B(S)-2O-O5 | 1.5 % | Clearing point [°C]: | 93 |
| CC-3-V | 39.0 % | Δn [589 nm, 20°C]: | 0.0905 |
| CC-3-V1 | 5.5 % | ε_{∥} [1 kHz, 20°C]: | 3.3 |
| CCZPC-3-3 | 0.5 % | ε_{⊥} [1 kHz, 20°C]: | 7.7 |
| CCY-3-O1 | 2.0 % | Δε [1 kHz, 20°C]: | -4.4 |
| CCY-3-O2 | 8.0 % | γ₁ [mPa s, 20°C]: | 113 |
| CLY-2-O4 | 5.0 % | K₁ [pN, 20°C]: | 16.9 |
| CLY-3-O2 | 8.0 % | K₃ [pN, 20°C]: | 17.4 |
| CLY-3-O3 | 5.0 % | | |
| CLY-4-O2 | 5.0 % | | |
| COB(S)-2-O4 | 8.0 % | | |
| Y-4O-O4 | 2.5 % | | |
| COY-3-O2 | 5.0 % | | |
| CCOY-3-O2 | 5.0 % | | |
| ∑ | 100.0 % | | |

To the mixture N41 are added 100 ppm of the stabiliser ST-8-1.

### Example 42

The nematic LC mixture N42 is formulated as follows.

| | | | |
|---|---|---|---|
| B(S)-2O-O5 | 1.5 % | Clearing point [°C]: | 107.5 |
| CC-3-V | 39.0 % | Δn [589 nm, 20°C]: | 0.0951 |
| CC-3-V1 | 1.5 % | | |
| CCZPC-3-3 | 0.5 % | | |
| CCY-3-O1 | 2.0 % | | |
| CCY-3-O2 | 8.0 % | | |
| CCY-3-O3 | 5.0 % | | |
| CLY-2-O4 | 5.0 % | | |
| CLY-3-O2 | 8.0 % | | |
| CLY-3-O3 | 5.0 % | | |
| CLY-4-O2 | 5.0 % | | |
| CLY-5-O2 | 5.0 % | | |
| COB(S)-2-O4 | 8.0 % | | |
| Y-4O-O4 | 2.5 % | | |
| CCP-1V2-1 | 4.0 % | | |
| ∑ | | | 100.0 % |

wherein CCP-1V2-1 is

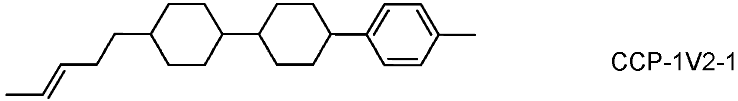

To the mixture N42 are added 50 ppm of the stabiliser ST-9-1.

### Example 43

The nematic LC mixture N43 is formulated as follows.

| | | | |
|---|---|---|---|
| B(S)-2O-O5 | 1.5 % | Clearing point [°C]: | 100.5 |
| CC-3-V | 39.0 % | Δn [589 nm, 20°C]: | 0.0960 |
| CC-3-V1 | 5.5 % | ε_{∥} [1 kHz, 20°C]: | 3.3 |
| CCZPC-3-3 | 0.5 % | ε_{⊥} [1 kHz, 20°C]: | 6.9 |
| CCY-3-O1 | 2.0 % | Δε [1 kHz, 20°C]: | -3.6 |
| CCY-3-O2 | 8.0 % | | |
| CCY-3-O3 | 5.0 % | | |
| CLY-2-O4 | 5.0 % | | |
| CLY-3-O2 | 8.0 % | | |
| CLY-3-O3 | 5.0 % | | |
| CLY-4-O2 | 5.0 % | | |
| CLY-5-O2 | 2.0 % | | |
| COB(S)-2-O4 | 8.0 % | | |
| Y-4O-O4 | 2.5 % | | |
| PYP-2-(c5) | 3.0 % | | |
| ∑ | 100.0 % | | |

wherein PYP-2-(c5) is

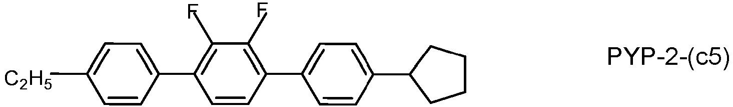

To the mixture N43 are added 50 ppm of the stabiliser ST-12.

### Example 44

The nematic LC mixture N44 is formulated as follows.

| | | | |
|---|---|---|---|
| B(S)-2O-O5 | 1.5 % | Clearing point [°C]: | 100.5 |
| CC-3-V | 39.0 % | Δn [589 nm, 20°C]: | 0.0964 |
| CC-3-V1 | 5.5 % | ε_{∥} [1 kHz, 20°C]: | 3.3 |
| CCZPC-3-3 | 0.5 % | ε_{⊥} [1 kHz, 20°C]: | 6.9 |
| CCY-3-O1 | 2.0 % | Δε [1 kHz, 20°C]: | -3.6 |
| CCY-3-O2 | 8.0 % | | |
| CCY-3-O3 | 5.0 % | | |
| CLY-2-O4 | 5.0 % | | |
| CLY-3-O2 | 8.0 % | | |
| CLY-3-O3 | 5.0 % | | |
| CLY-4-O2 | 5.0 % | | |
| CLY-5-O2 | 2.0 % | | |
| COB(S)-2-O4 | 8.0 % | | |
| Y-4O-O4 | 2.5 % | | |
| PYP-2-1 (c3) | 3.0 % | | |
| ∑ | 100.0 % | | |

wherein PYP-2-1(c3) is

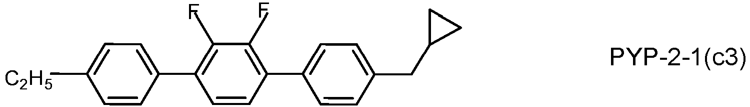

To the mixture N44 are added 100 ppm of the stabiliser H-1-1-1.

The Examples N33 to N44 that contain CCZPC-3-3 show much better white-black image sticking (WB IS) result compared with the Comparison example C1, which does not contain CCZPC-3-3.

## Claims

1. A liquid crystal medium comprising one or more compounds of formula I 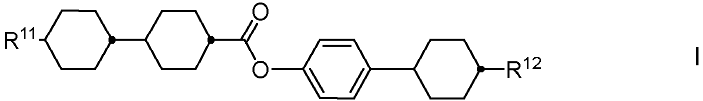 and
one or more compounds of formula III 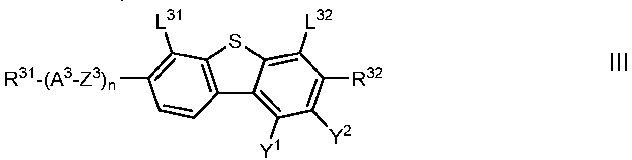 and
one or more compounds of the formulae VI-1 to VI-25, BC, PH-1, IVa-1 to IVa-4 and/or IVb-1 to IVb-3, 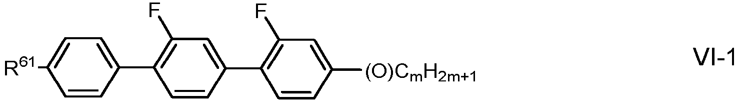 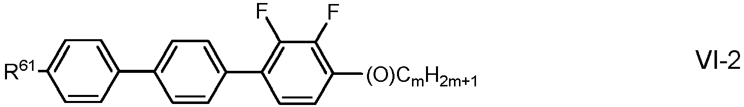 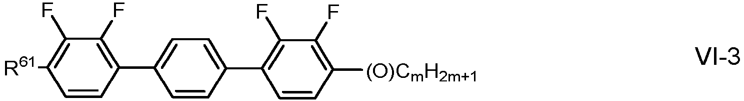 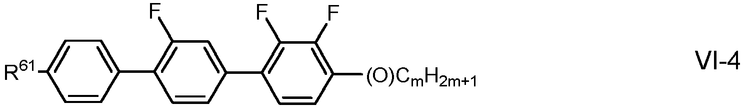 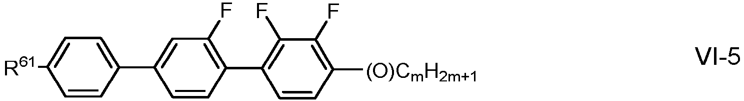 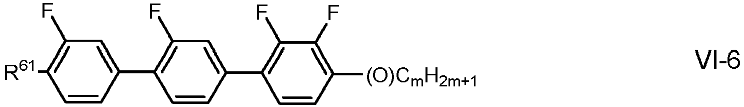 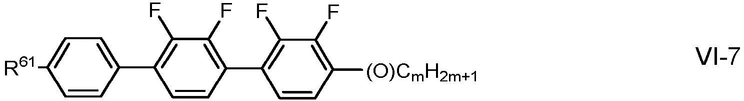 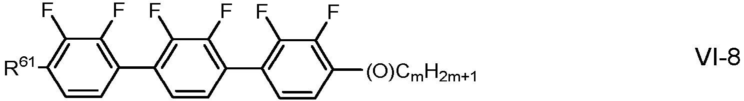 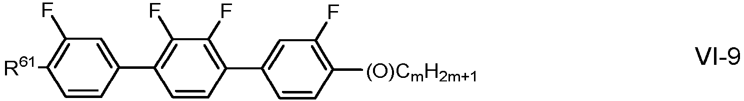 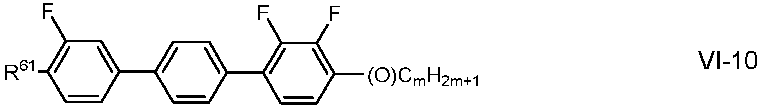 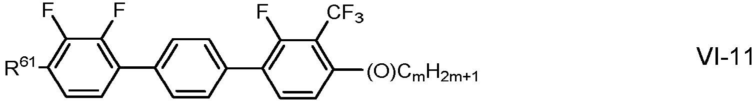 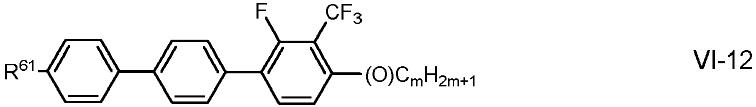 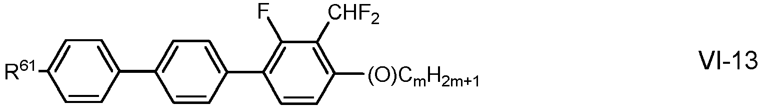 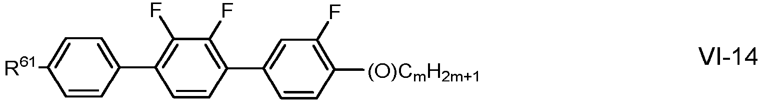 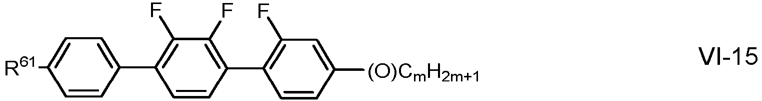 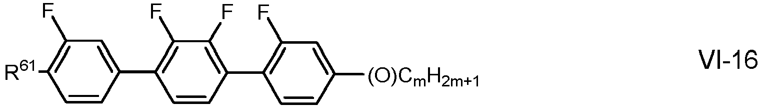 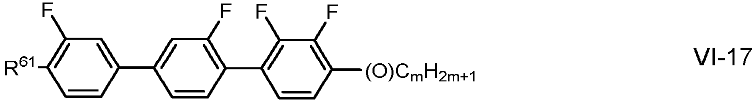 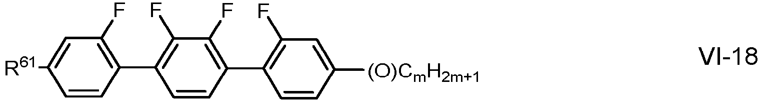 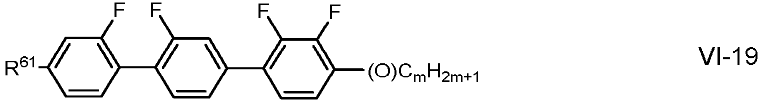 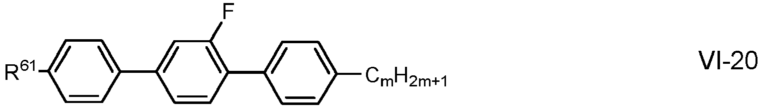 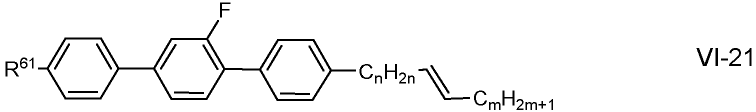 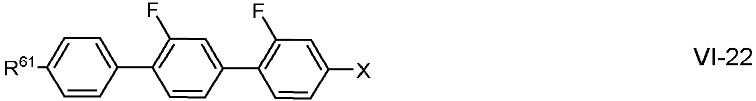 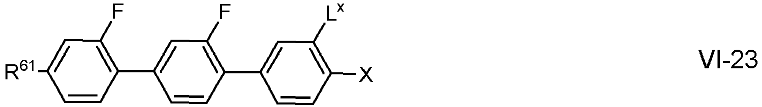 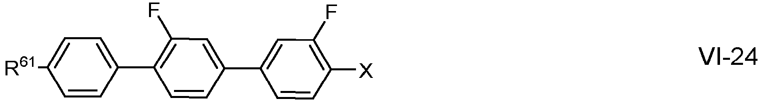 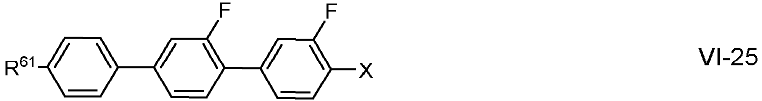 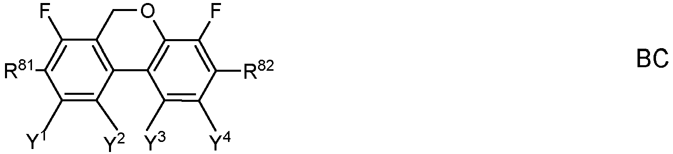 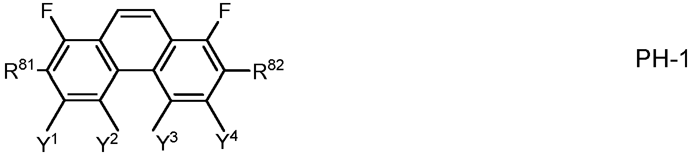 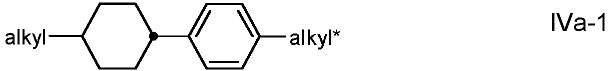 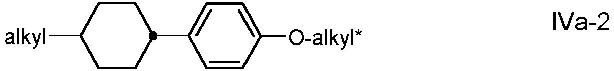 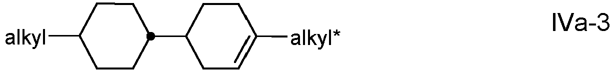 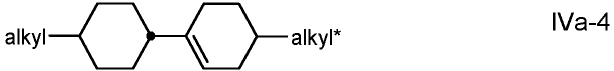 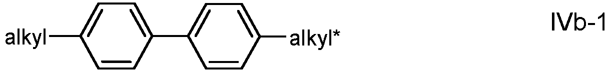 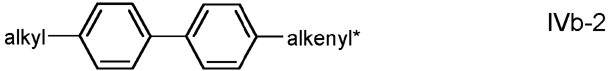 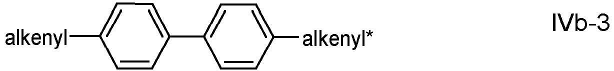
in which
R¹¹ and R¹², each, independently of one another, denote an alkyl radical having 1 to 12 C atoms, preferably having 1 to 7 C atoms, or alkenyl radical having 2 to 12 C atoms, preferably having 2 to 7 C atoms, or cyclic alkyl having 3 to 6 C atoms,
R³¹ and R³², each, independently of one another, denote H, an alkyl or alkoxy radical having 1 to 15 C atoms, preferably having 1 to 7 C atoms, where one or more -CH₂- groups in these radicals may each be replaced, independently of one another, by 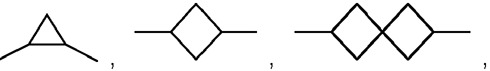 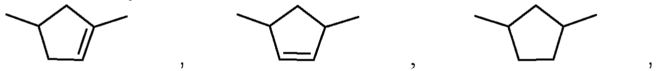 -C≡C-, -CF₂O-, -OCF₂-, -CH=CH-, by -O-, -CO-O- or -O-CO- in such a way that O atoms are not linked directly to one another, and in which one or more H atoms may be replaced by halogen,
A³ on each occurrence, independently of one another, denotes a 1,4-phenylene radical, in which one or two CH groups may be replaced by N, or a 1,4-cyclohexylene or 1,4-cyclohexenylene radical, in which one or two non-adjacent CH₂ groups may be replaced by -O- or -S-, where the radicals may be mono- or polysubstituted by halogen atoms,
n in formula III denotes 0, 1 or 2,
Z³ on each occurrence independently of one another denotes -CF₂O- , -OCF₂-, -CH₂O-, -OCH₂-, -CH₂-, -CH₂CH₂-, - CH=CH-, -C≡C- or a single bond,
L³¹ and L³², each, independently of one another, denote F, Cl, CF₃ or CHF₂,
Y¹ and Y² in formula III, each, independently of one another, denote H, F, Cl, CF₃, CHF₂, CH₃ or OCH₃, preferably H, CH₃ or OCH₃, very preferably H;
R⁶¹ denotes a straight-chain alkyl or alkoxy radical having 1 to 6 C atoms, cycloalkyl having 3 to 6 C atoms, (O) denotes -O- or a single bond,
X denotes F, Cl, OCF₃ or OCHF₂,
L^{x} denotes H or F,
m denotes 0, 1, 2, 3, 4, 5 or 6,
n in formula IV-1 to IV-25 denotes 0, 1, 2, 3 or 4,
R⁸¹ and R⁸² each, independently of one another, denote H, an alkyl, alkoxy or alkenyl radical having up to 15 C atoms which is unsubstituted or monosubstituted by F, Cl, CN or CF₃ and where, in addition, one or more CH₂ groups in these radicals may be replaced by -O-, -S-,-C≡C-, -CF₂O-, -OCF₂-, -OC-O-, -O-CO- 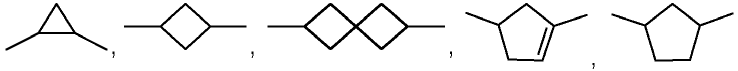 in such a way that O- and/or S-atoms are not linked directly to one another,
c denotes 0, 1 or 2,
Y¹, Y², Y³, Y⁴ in formulae BC and PH-1, each, independently of one another, denote H, F, Cl, CF₃, CHF₂, CH₃ or OCH₃,
alkyl and alkyl* each, independently of one another, denote a straight-chain alkyl radical having 1 to 6 C atoms, and
alkenyl and alkenyl* each, independently of one another, denote a straight-chain alkenyl radical having 2 to 6 C atoms.

2. The liquid crystal medium according to claim 1, wherein the medium comprises one or more compounds selected from the compounds of the formulae III-1 and/or III-6 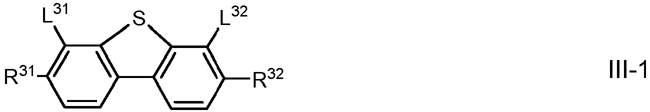 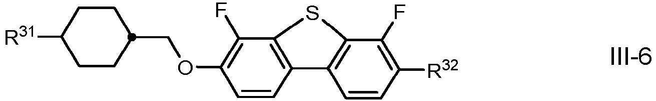 in which the occurring groups have the same meanings as given under formula III and preferably
R³¹ and R³² each, independently of one another, denote an alkyl, alkenyl or alkoxy radical having up to 15 C atoms, preferably having 1 to 7 C atoms, more preferably one or both of them denote an alkoxy radical; or cyclic alkyl having 3 to 6 C atoms,
L³¹ and L³² each, independently of one another, denote F or Cl, preferably both denote F.

3. The liquid crystal medium according to claim 1 or 2, wherein the medium comprises one or more compounds selected from the group of the formula II, 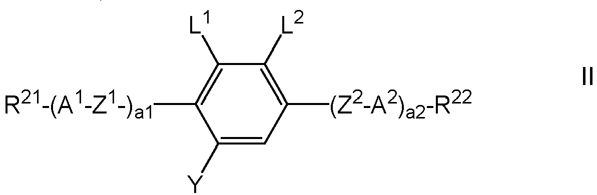 wherein the individual radicals, independently of each other and on each occurrence identically or differently, have the following meanings:
R²¹ and R²² H, straight chain, branched or cyclic alkyl or alkoxy having 1 to 20 C atoms, wherein one or more non-adjacent CH₂-groups are optionally replaced by -O-, -S-, -CO-, -CO-O-, - O-CO-, -O-CO-O-, CR⁰=CR⁰⁰-, -C≡C-, 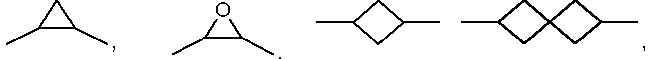 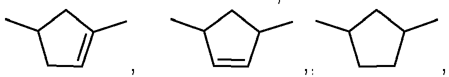 or in such a manner that O- and/or S-atoms are not directly connected with each other, and wherein one or more H atoms are each optionally replaced by F, Cl, CN or CF₃, preferably alkyl or alkoxy having 1 to 6 C atoms,
R⁰, R⁰⁰ H or alkyl having 1 to 12 C atoms,
A¹ and A² a group selected from the following formulae 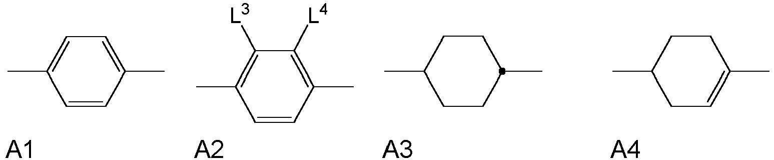 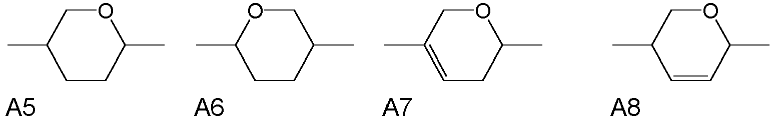 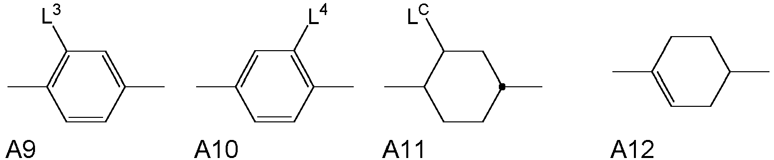 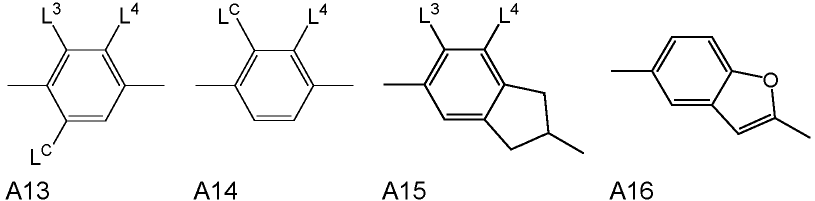
Z¹ and Z² preferably from formulae A1, A2, A3, A4, A5, A6, A9 and A10, very preferably from formulae A1, A2, A3, A4, A5, A9 and A10, -CH₂CH₂-, -CH=CH-, -CF₂O-, -OCF₂-, -CH₂O-, -OCH₂-, - CO-O-, -O-CO-, -C₂F₄-, -CF=CF-, -CH=CH-CH₂O- or a single bond, preferably a single bond,
L¹, L², L³ and L⁴ F, Cl, OCF₃, CF₃, CH₃, CH₂F or CHF₂, preferably F or Cl, very preferably F,
Y H, F, Cl, CF₃, CHF₂ or CH₃, preferably H or CH₃, very preferably H,
L^{C} CH₃ or OCH₃, preferably CH₃,
a1 0, 1 or 2,
a2 0 or 1.

4. The liquid crystal medium according to any one of claims 1 to 3, wherein the medium comprises one or more compounds selected from the group of the formulae IIA, IIB, IIC, IID, and IIE, 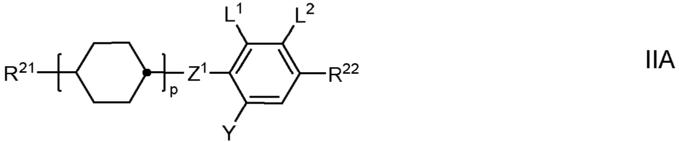 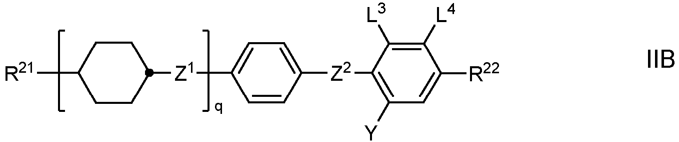 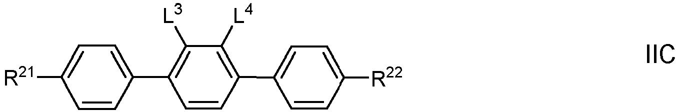 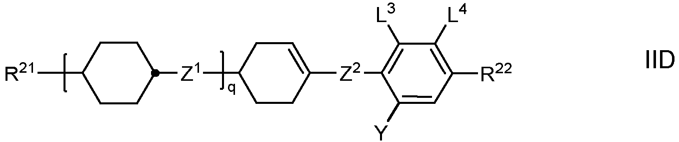 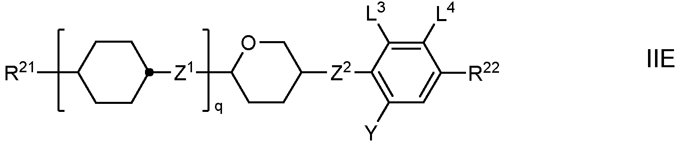 in which the individual radicals, on each occurrence identically or differently, and each, independently of one another, have the following meanings:
R²¹, R²² H, an alkyl, alkoxy or alkenyl radical having up to 15 C atoms which is unsubstituted or monosubstituted by F, Cl, CN or CF₃ and where, in addition, one or more CH₂ groups in these radicals may be replaced by -O-, -S-,-C≡C-, -CF₂O-, -OCF₂-, -OC-O-, -O-CO- 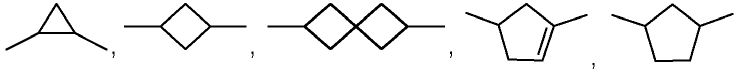 in such a way that O- and/or S-atoms are not linked directly to one another,
L¹ to L⁴ F, Cl, CF₃ or CHF₂,
Y H, F, Cl, CF₃, CHF₂ or CH₃, preferably H or CH₃, particularly preferably H,
Z¹, Z² a single bond, -CH₂CH₂-, -CH=CH-, -CF₂O-, -OCF₂-, - CH₂O-, -OCH₂-, -COO-, -OCO-, -C₂F₄-, -CF=CF-, - CH=CHCH₂O,
p 0, 1 or 2, and
q 0 or 1.

5. The liquid crystal medium according to any one of claims 1 to 4, wherein the medium comprises one or more compounds of formula IIA-Y 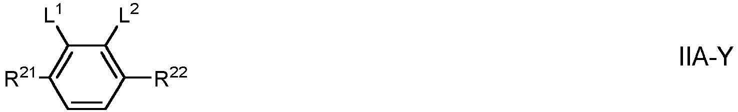 in which R²¹ and R²² have one of the meanings given in formula IIA above, and L¹ and L², identically or differently, denote F or Cl.

6. The liquid crystal medium according to any one of claims 1 to 5, wherein the medium comprises one or more compounds of formula IV 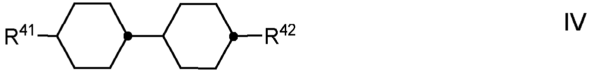 in which
R⁴¹ denotes an unsubstituted alkyl radical having 1 to 7 C atoms or an unsubstituted alkenyl radical having 2 to 7 C atoms, preferably an n-alkyl radical, particularly preferably having 2, 3, 4 or 5 C atoms, and
R⁴² denotes an unsubstituted alkyl radical having 1 to 7 C atoms or an unsubstituted alkoxy radical having 1 to 6 C atoms, both preferably having 2 to 5 C atoms, or an unsubstituted alkenyl radical having 2 to 7 C atoms, preferably having 2, 3 or 4 C atoms, more preferably a vinyl radical or a 1-propenyl radical and in particular a vinyl radical.

7. The liquid crystal medium according to any one of claims 1 to 6, wherein the medium comprises one or more compounds of the formula V 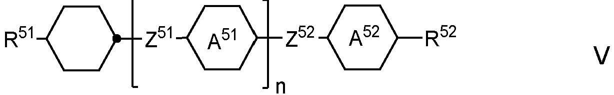 in which
R⁵¹, R⁵² denote alkyl having 1 to 7 C atoms, alkoxy having 1 to 7 C atoms, or alkoxyalkyl, alkenyl or alkenyloxy having 2 to 7 C atoms, 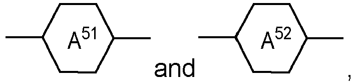 identically or differently, denote 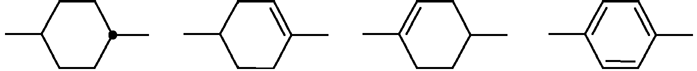 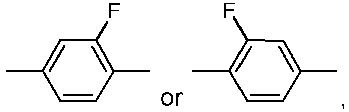
Z⁵¹, Z⁵² each, independently of one another, denote -CH₂-CH₂-, -CH₂-O-, -CH=CH-, -C=C-, -COO- or a single bond, and
n is 1 or 2.

8. The liquid crystal medium according to any one of claims 1 to 7, wherein the medium additionally comprises one or more additives selected from the group consisting of stabilisers, chiral dopants, dyes and polymerization initiators.

9. A liquid crystal display comprising the liquid crystal medium according to any one of claims 1 to 8.

10. The display according to claim 9, wherein the display is a VA, IPS, FFS, PS-VA, PS-IPS, PS-FFS, UB-FFS, UBplus or UV²A display.

11. Use of the liquid crystal medium according to any one of claims 1 to 8 for energy-saving LC displays.

12. A process of preparing a liquid crystal medium according to any one of claims 1 to 8, comprising the steps of mixing one or more compounds of formula I with one or more compounds of formula III, one or more compounds of the formulae VI-1 to VI-25, BC, PH-1, IVa-1 to IVa-4 and/or IVb-1 to IVb-3, and optionally with further LC compounds and/or additives.

## Patentansprüche

1. Flüssigkristallmedium enthaltend eine oder mehrere Verbindungen der Formel I 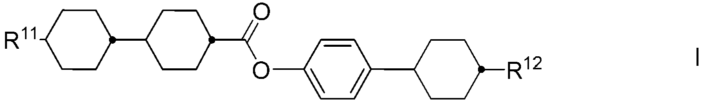 und
eine oder mehrere Verbindungen der Formel III 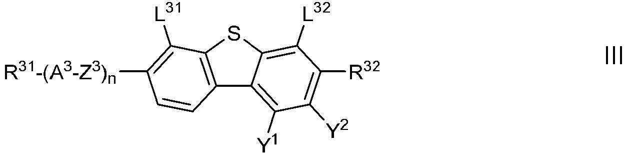 und
eine oder mehrere Verbindungen der Formeln VI-1 bis VI-25, BC, PH-1, IVa-1 bis IVa-4 und/oder IVb-1 bis IVb-3, 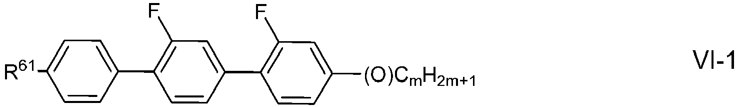 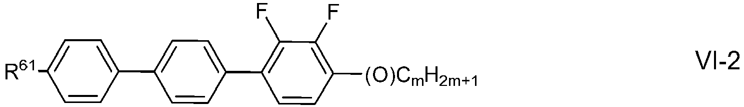 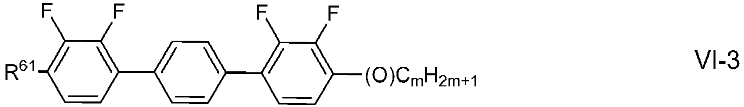 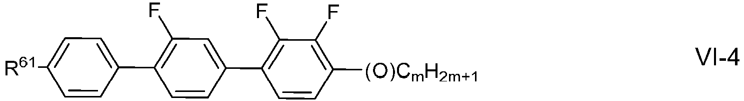 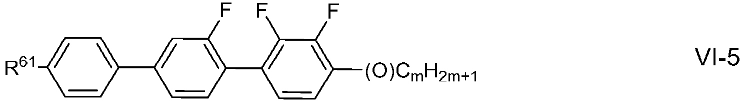 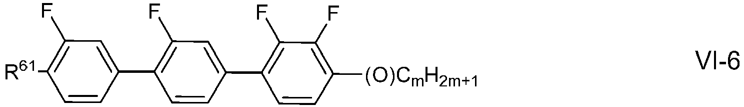 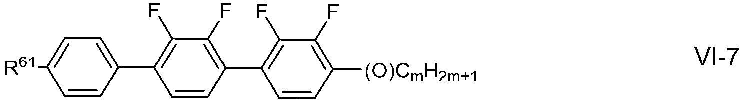 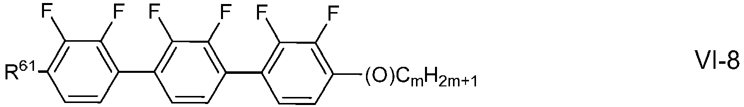 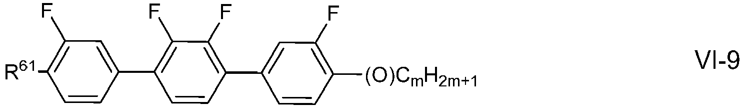 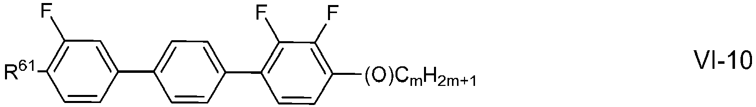 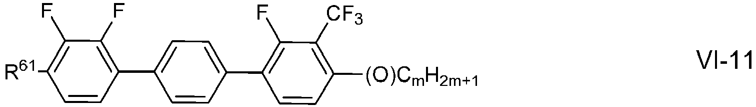 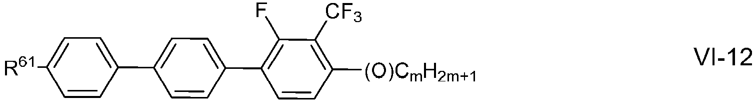 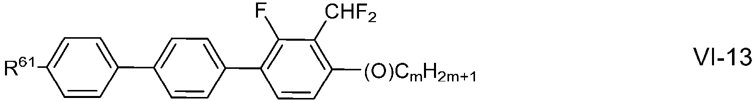 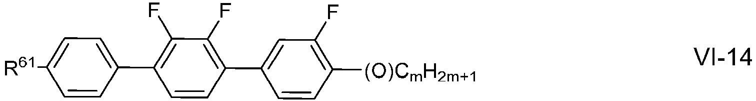 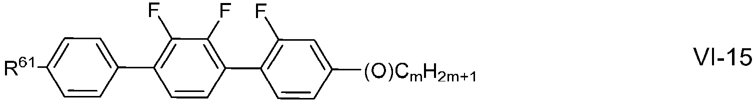 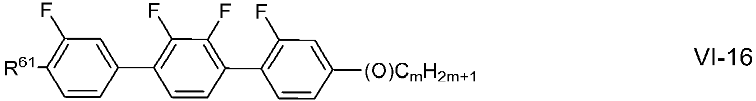 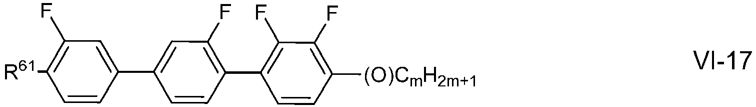 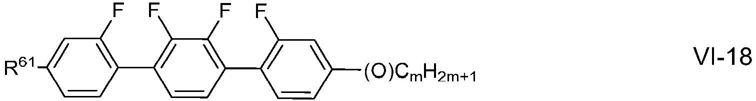 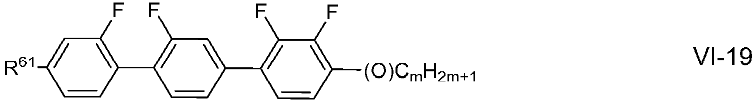 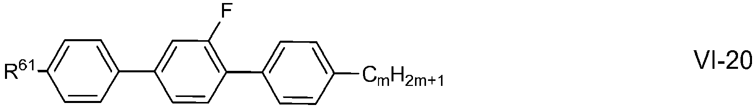 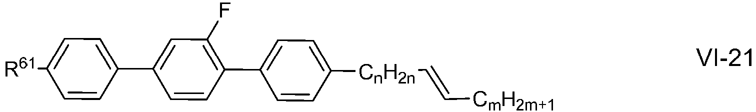 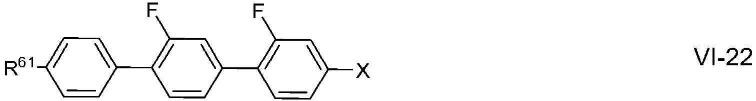 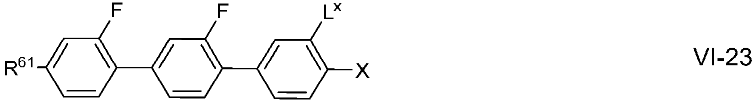 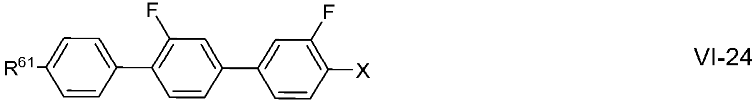 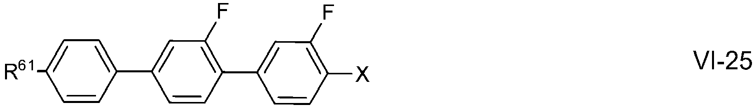 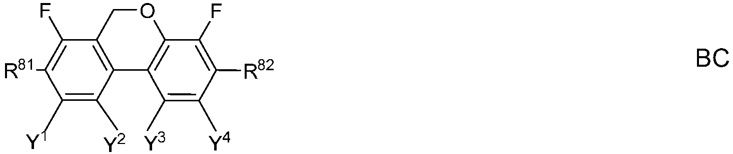 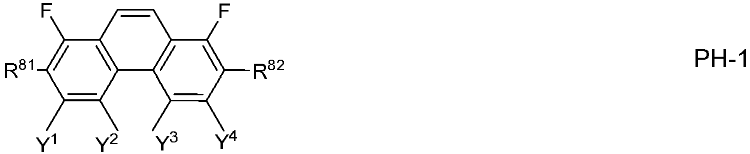 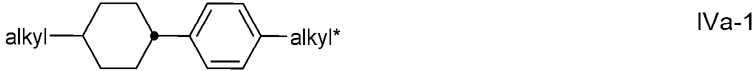 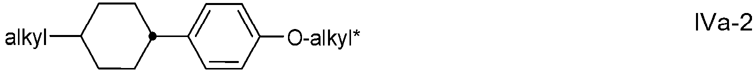 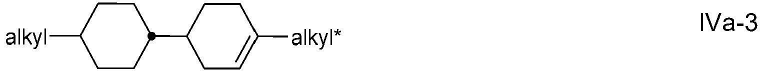 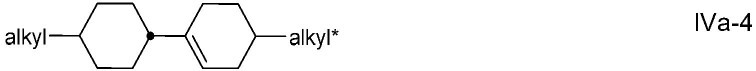 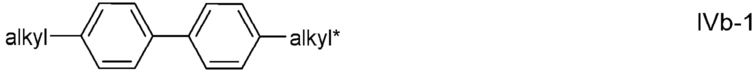 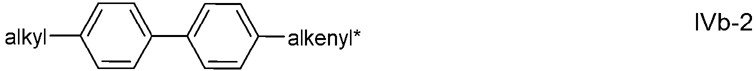 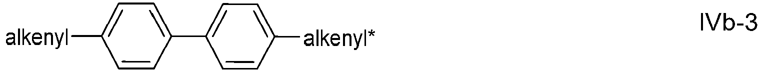
worin
R¹¹ und R¹² jeweils unabhängig voneinander einen Alkylrest mit 1 bis 12 C-Atomen, vorzugsweise mit 1 bis 7 C-Atomen, oder Alkenylrest mit 2 bis 12 C-Atomen, vorzugsweise mit 2 bis 7 C-Atomen, oder cyclisches Alkyl mit 3 bis 6 C-Atomen bedeuten,
R³¹ und R³² jeweils unabhängig voneinander H, einen Alkyl- oder Alkoxyrest mit 1 bis 15 C-Atomen, vorzugsweise mit 1 bis 7 C-Atomen bedeuten, wobei in diesen Resten eine oder mehrere Gruppen -CH₂- jeweils unabhängig voneinander so durch 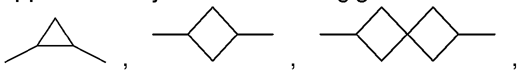 -C≡C-, -CF₂O-, 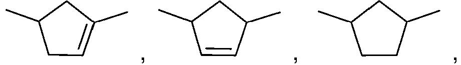 -OCF₂-, -CH=CH-, durch -O-, -CO-O- oder -O-CO- ersetzt sein können, dass O-Atome nicht direkt miteinander verknüpft sind, und worin ein oder mehrere H-Atome durch Halogen ersetzt sein können,
A³ bei jedem Auftreten unabhängig voneinander einen 1,4-Phenylen-Rest, worin eine oder zwei CH-Gruppen durch N ersetzt sein können, oder einen 1,4-Cyclohexylen- oder 1,4-Cyclohexenylen-Rest, worin eine oder zwei nicht benachbarte CH₂-Gruppen durch -O- oder -S- ersetzt sein können, bedeutet, wobei die Reste ein- oder mehrfach durch Halogenatome substituiert sein können,
n in Formel III 0, 1 oder 2 bedeutet,
Z³ bei jedem Auftreten unabhängig voneinander -CF₂O-, -OCF₂-, -CH₂O-, -OCH₂-, -CH₂-, -CH₂CH₂-, -CH=CH-, -C≡C- oder eine Einfachbindung bedeutet,
L³¹ und L³² jeweils unabhängig voneinander F, Cl, CF₃ oder CHF₂ bedeuten, und
Y¹ und Y² in Formel III jeweils unabhängig voneinander H, F, Cl, CF₃, CHF₂, CH₃ oder OCH₃, vorzugsweise H, CH₃ oder OCH₃, besonders bevorzugt H bedeuten;
R⁶¹ einen geradkettigen Alkyl- oder Alkoxyrest mit 1 bis 6 C-Atomen, Cycloalkyl mit 3 bis 6 C-Atomen bedeutet,
(O) -O- oder eine Einfachbindung bedeutet,
X F, Cl, OCF₃ oder OCHF₂ bedeutet,
L^{X} H oder F bedeutet,
m 0, 1, 2, 3, 4, 5 oder 6 bedeutet,
n in Formel IV-1 bis IV-25 0, 1, 2, 3 oder 4 bedeutet,
R⁸¹ und R⁸² jeweils unabhängig voneinander H, einen Alkyl-, Alkoxy- oder Alkenylrest mit bis zu 15 C-Atomen bedeuten, der unsubstituiert oder einfach durch F, Cl, CN oder CF₃ substituiert ist und wobei in diesen Resten zusätzlich eine oder mehrere CH₂-Gruppen so durch -O-, -S-, -C≡C-, -CF₂O-, -OCF₂-, -OC-O-, -O-CO-, 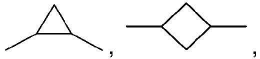 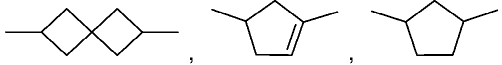 ersetzt sein können, dass O- und/oder S-Atome nicht direkt miteinander verknüpft sind,
c 0, 1 oder 2 bedeutet,
Y¹, Y², Y³, Y⁴ in den Formeln BC und PH-1 jeweils unabhängig voneinander H, F, Cl, CF₃, CHF₂, CH₃ oder OCH₃ bedeuten,
alkyl und alkyl* jeweils unabhängig voneinander einen geradkettigen Alkylrest mit 1 bis 6 C-Atomen bedeuten, und
alkenyl und alkenyl* jeweils unabhängig voneinander einen geradkettigen Alkenylrest mit 2 bis 6 C-Atomen bedeuten.

2. Flüssigkristallmedium nach Anspruch 1, bei dem das Medium eine oder mehrere Verbindungen enthält, die ausgewählt sind aus den Verbindungen der Formeln III-1 und/oder III-6 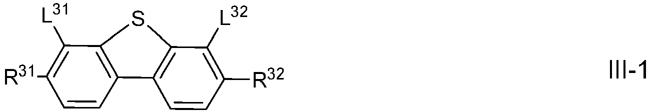 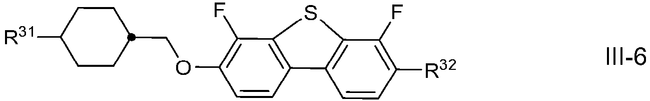 worin die auftretenden Gruppen die gleichen Bedeutungen wie unter Formel III genannt besitzen und vorzugsweise
R³¹ und R³² jeweils unabhängig voneinander einen Alkyl-, Alkenyl- oder Alkoxyrest mit bis zu 15 C-Atomen, vorzugsweise mit 1 bis 7 C-Atomen, stärker bevorzugt einer oder beide von ihnen einen Alkoxyrest bedeuten; oder cyclisches Alkyl mit 3 bis 6 C-Atomen bedeuten,
L³¹ und L³² jeweils unabhängig voneinander F oder Cl bedeuten, vorzugsweise beide F bedeuten.

3. Flüssigkristallmedium nach Anspruch 1 oder 2, bei dem das Medium eine oder mehrere Verbindungen enthält, die ausgewählt sind aus der Gruppe der Formel II, 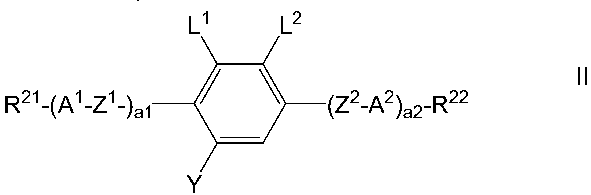 bei der die einzelnen Reste, unabhängig voneinander und bei jedem Auftreten gleich oder verschieden, die folgenden Bedeutungen besitzen:
R²¹ und R²² H, geradkettiges, verzweigtes oder cyclisches Alkyl oder Alkoxy mit 1 bis 20 C-Atomen, bei dem gegebenenfalls eine oder mehrere nicht benachbarte CH₂-Gruppen so durch -O-, -S-, -CO-, -CO-O-, -O-CO-, -O-CO-O-, -CR⁰=CR⁰⁰-, -C≡C-. 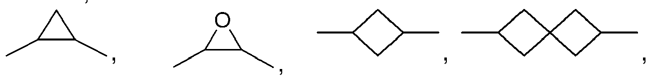 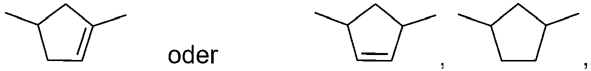 ersetzt sind, dass O- und/oder S-Atome nicht direkt miteinander verbunden sind, und bei dem gegebenenfalls ein oder mehrere H-Atome jeweils durch F, Cl, CN oder CF₃ ersetzt sind, vorzugsweise Alkyl oder Alkoxy mit 1 bis 6 C-Atomen,
R⁰, R⁰⁰ H oder Alkyl mit 1 bis 12 C-Atomen,
A¹ und A² eine Gruppe, die ausgewählt ist aus den folgenden Formeln 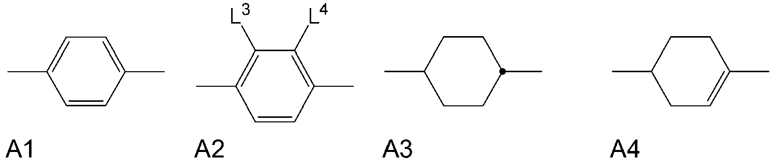 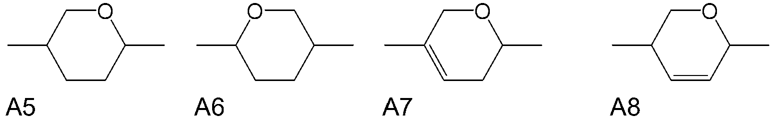 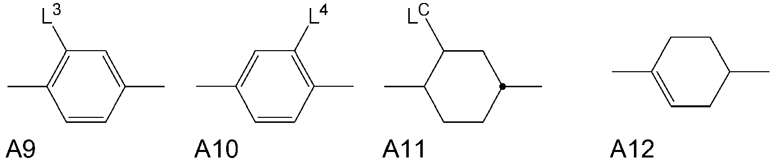 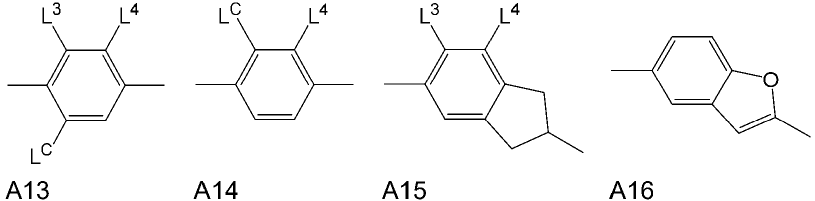 vorzugsweise aus den Formeln A1, A2, A3, A4, A5, A6, A9 und A10, ganz bevorzugt aus den Formeln A1, A2, A3, A4, A5, A9 und A10,
Z¹ und Z² -CH₂CH₂-, -CH=CH-, -CF₂O-, -OCF₂-, -CH₂O-, -OCH₂-, -CO-O-, -O-CO-, -C₂F₄-, -CF=CF-, -CH=CH-CH₂O- oder eine Einfachbindung, vorzugsweise eine Einfachbindung,
L¹, L², L³ und L⁴ F, Cl, OCF₃, CF₃, CH₃, CH₂F oder CHF₂, vorzugsweise F oder Cl, ganz bevorzugt F,
Y H, F, Cl, CF₃, CHF₂ oder CH₃, vorzugsweise H oder CH₃, ganz bevorzugt H,
L^{C} CH₃ oder OCH₃, vorzugsweise CH₃,
a1 0, 1 oder 2,
a2 0 oder 1.

4. Flüssigkristallmedium nach irgendeinem der Ansprüche 1 bis 3, bei dem das Medium eine oder mehrere Verbindungen enthält, die ausgewählt sind aus der Gruppe der Formeln IIA, IIB, IIC, IID und IIE, 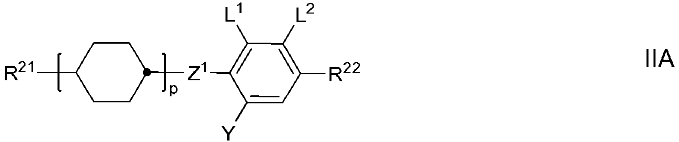 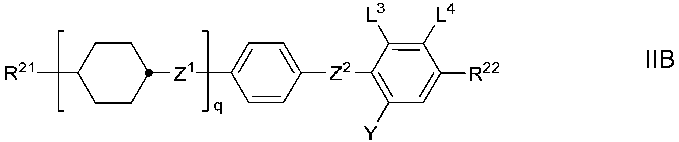 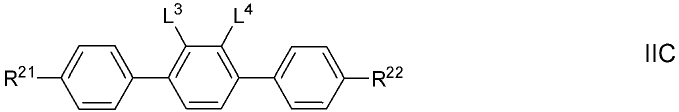 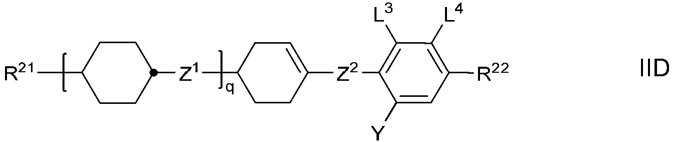 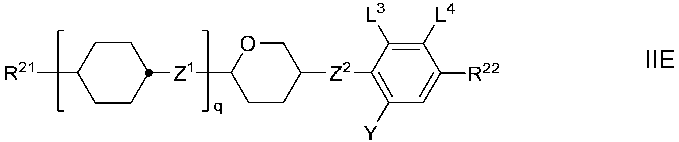 worin die einzelnen Reste, bei jedem Auftreten gleich oder verschieden und jeweils unabhängig voneinander, die folgenden Bedeutungen besitzen:
R²¹, R²² H, einen Alkyl-, Alkoxy- oder Alkenylrest mit bis zu 15 C-Atomen, der unsubstituiert oder einfach durch F, Cl, CN oder CF₃ substituiert ist und wobei in diesen Resten zusätzlich eine oder mehrere CH₂-Gruppen so durch O-, -S-, -C≡C-, -CF₂O-, -OCF₂-, -OC-O-, -O-CO-, 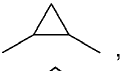 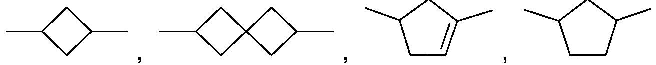 ersetzt sein können, dass O- und/oder S-Atome nicht direkt miteinander verknüpft sind,
L¹ bis L⁴ F, Cl, CF₃ oder CHF₂,
Y H, F, Cl, CF₃, CHF₂ oder CH₃, vorzugsweise H oder CH₃, besonders bevorzugt H,
Z¹, Z² eine Einfachbindung, -CH₂CH₂-, -CH=CH-, -CF₂O-, -OCF₂-, -CH₂O-, -OCH₂-, -COO-, -OCO-, -C₂F₄-, -CF=CF-, -CH=CHCH₂O,
p 0, 1 oder 2, und
q 0 oder 1.

5. Flüssigkristallmedium nach irgendeinem der Ansprüche 1 bis 4, bei dem das Medium eine oder mehrere Verbindungen der Formel IIA-Y 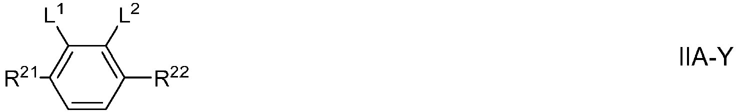 enthält, worin R²¹ und R²² eine der vorstehend in Formel IIA genannten Bedeutungen besitzen und L' und L² gleich oder verschieden F oder Cl bedeuten.

6. Flüssigkristallmedium nach irgendeinem der Ansprüche 1 bis 5, bei dem das Medium eine oder mehrere Verbindungen der Formel IV 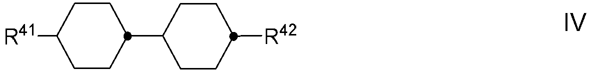 enthält, worin
R⁴¹ einen unsubstituierten Alkylrest mit 1 bis 7 C-Atomen oder einen unsubstituierten Alkenylrest mit 2 bis 7 C-Atomen, vorzugsweise einen n-Alkylrest, besonders bevorzugt mit 2, 3, 4 oder 5 C-Atomen, bedeutet und
R⁴² einen unsubstituierten Alkylrest mit 1 bis 7 C-Atomen oder einen unsubstituierten Alkoxyrest mit 1 bis 6 C-Atomen, beide vorzugsweise mit 2 bis 5 C-Atomen, oder einen unsubstituierten Alkenylrest mit 2 bis 7 C-Atomen, vorzugsweise mit 2, 3 oder 4 C-Atomen, stärker bevorzugt einen Vinylrest oder einen 1-Propenylrest und insbesondere einen Vinylrest, bedeutet.

7. Flüssigkristallmedium nach irgendeinem der Ansprüche 1 bis 6, bei dem das Medium eine oder mehrere Verbindungen der Formel V 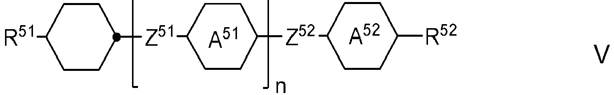 enthält, worin
R⁵¹, R⁵² Alkyl mit 1 bis 7 C-Atomen, Alkoxy mit 1 bis 7 C-Atomen oder Alkoxyalkyl, Alkenyl oder Alkenyloxy mit 2 bis 7 C-Atomen bedeuten, 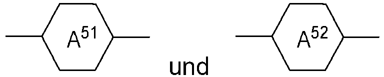 gleich oder verschieden 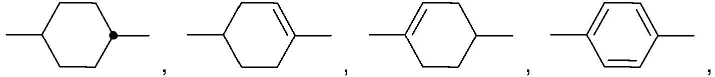 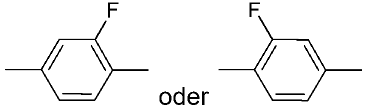 bedeuten,
Z⁵¹, Z⁵² jeweils unabhängig voneinander -CH₂-CH₂-, -CH₂-O-, -CH=CH-, -C=C-, -COO- oder eine Einfachbindung bedeuten, und
n 1 oder 2 ist.

8. Flüssigkristallmedium nach irgendeinem der Ansprüche 1 bis 7, bei dem das Medium zusätzlich einen oder mehrere Zusatzstoffe enthält, die aus der Gruppe bestehend aus Stabilisatoren, chiralen Dotierstoffen, Farbstoffen und Polymerisationsinitiatoren ausgewählt sind.

9. Flüssigkristallanzeige enthaltend das Flüssigkristallmedium nach irgendeinem der Ansprüche 1 bis 8.

10. Anzeige nach Anspruch 9, bei der es sich um eine VA-, IPS-, FFS-, PS-VA-, PS-IPS-, PS-FFS-, UB-FFS-, UBplus- oder UV²A-Anzeige handelt.

11. Verwendung des Flüssigkristallmediums nach irgendeinem der Ansprüche 1 bis 8 für energiesparende FK-Anzeigen.

12. Verfahren zur Herstellung eines Flüssigkristallmediums nach irgendeinem der Ansprüche 1 bis 8, umfassend die Schritte Mischen von einer oder mehreren Verbindungen der Formel I mit einer oder mehreren Verbindungen der Formel III, einer oder mehreren Verbindungen der Formeln VI-1 bis VI-25, BC, PH-1, IVa-1 bis IVa-4 und/oder IVb-1 bis IVb-3 und gegebenenfalls mit weiteren FK-Verbindungen und/oder Zusatzstoffen.

## Revendications

1. Milieu cristallin liquide comprenant un ou plusieurs composés de formule I 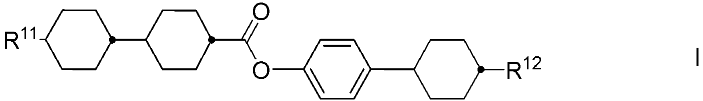 et
un ou plusieurs composés de formule III 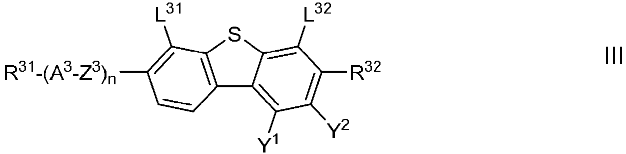 et
un ou plusieurs composés de formules VI-1 à VI-25, BC, PH-1, IVa-1 à IVa-4 et/ou IVb-1 à IVb-3, 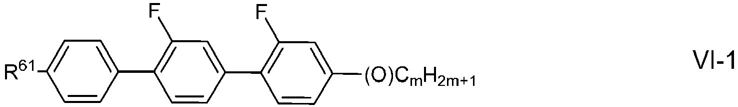 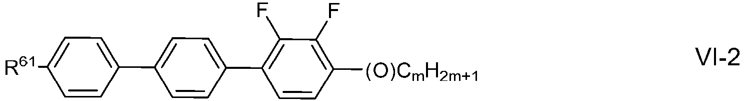 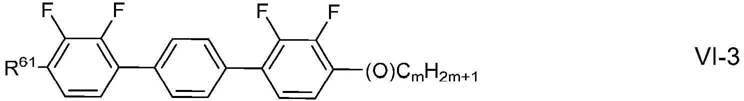 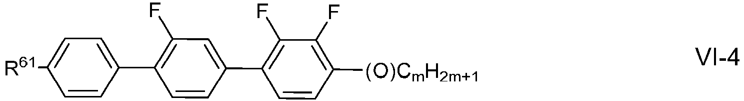 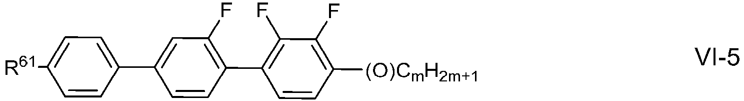 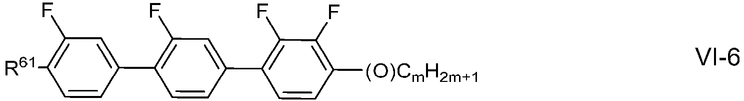 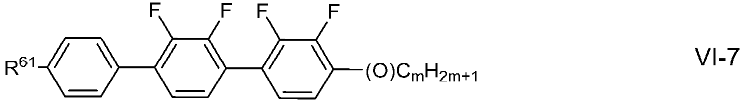 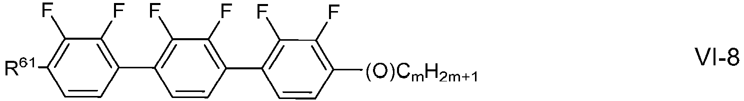 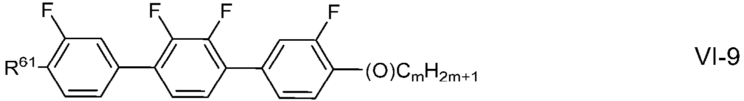 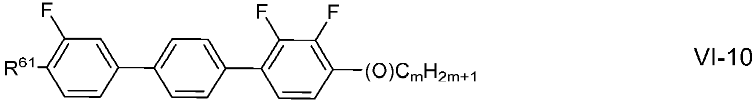 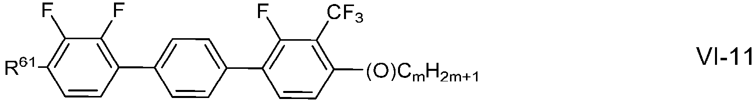 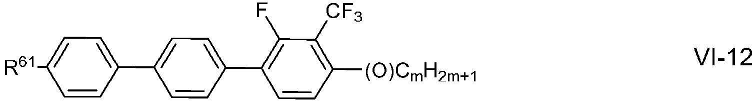 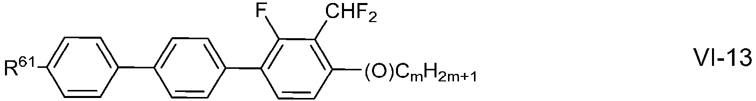 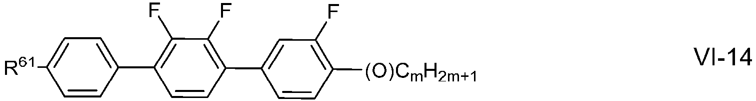 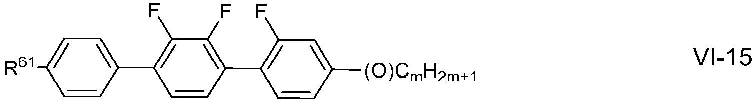 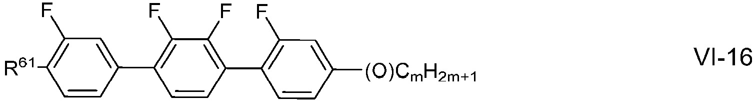 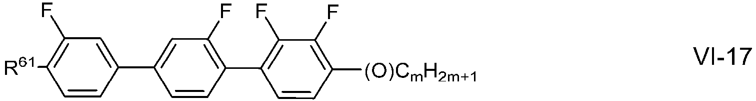 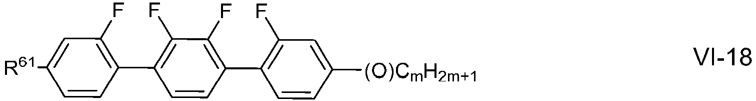 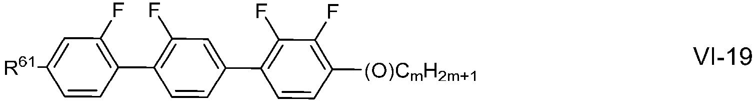 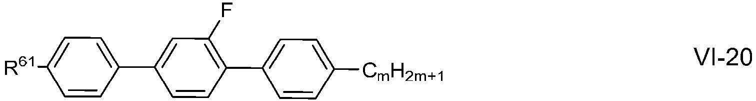 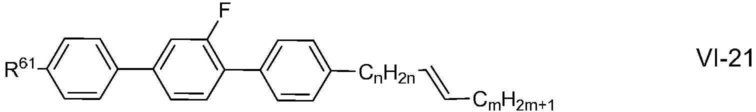 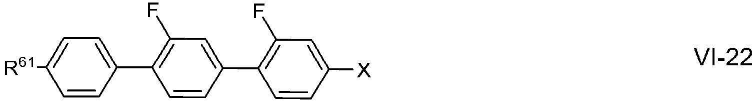 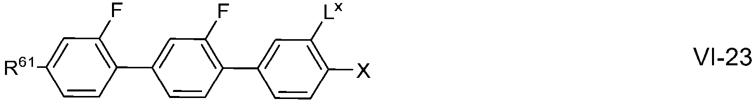 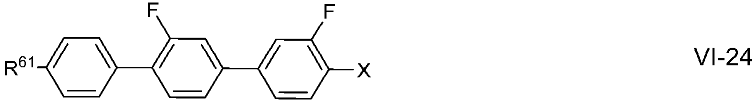 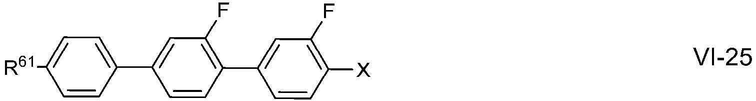 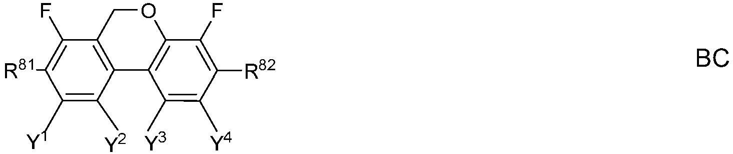 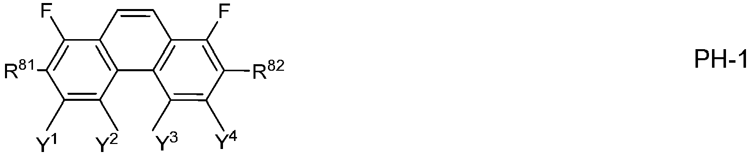 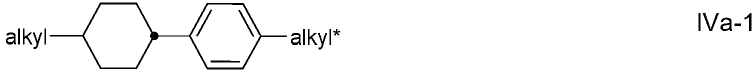 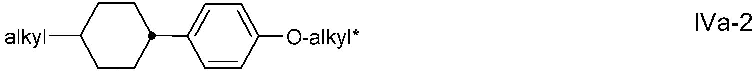 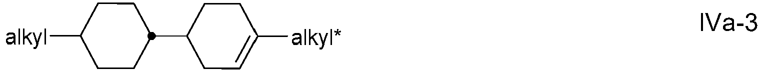 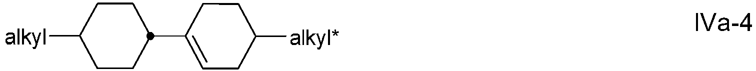 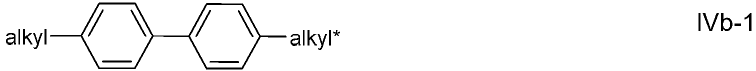 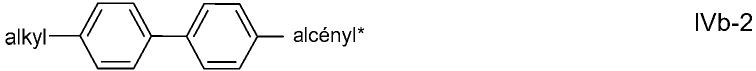 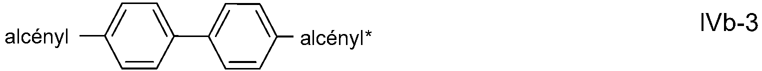
dans lesquelles
R¹¹ et R¹², désignent chacun, indépendamment l'un de l'autre, un radical alkyle ayant de 1 à 12 atomes de C, préférablement ayant de 1 à 7 atomes de C, ou un radical alcényle ayant de 2 à 12 atomes de C, préférablement ayant de 2 à 7 atomes de C, ou alkyle cyclique ayant de 3 à 6 atomes de C,
R³¹ et R³², désignent chacun, indépendamment l'un de l'autre, H, un radical alkyle ou alcoxy ayant de 1 à 15 atomes de C, préférablement ayant de 1 à 7 atomes de C, où un ou plusieurs groupements -CH₂- dans ces radicaux peuvent chacun être remplacés, indépendamment les uns des autres, par 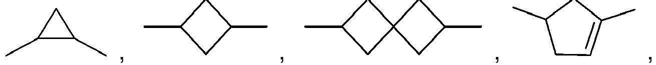 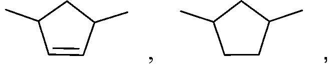 -C≡C-, -CF₂O-, -OCF₂-, -CH=CH-, par -O-, -CO-O- ou -O-CO- de telle sorte que les atomes de O ne soient pas liés directement les uns aux autres, et où un ou plusieurs atomes de H peuvent être remplacés par halogène,
A³ à chaque occurrence, indépendamment les uns des autres, désigne un radical 1,4-phénylène, où un ou deux groupements CH peuvent être remplacés par N, ou un radical 1,4-cyclohexylène ou 1,4-cyclohexénylène, où un ou deux groupements CH₂ non adjacents peuvent être remplacés par -O- ou -S-, où les radicaux peuvent être mono- ou poly-substitués par des atomes d'halogène,
n dans la formule III désigne 0, 1 ou 2,
Z³ à chaque occurrence indépendamment les uns des autres désigne -CF₂O-, -OCF₂-, -CH₂O-, -OCH₂-, -CH₂-, -CH₂CH₂-, -CH=CH-, -C≡C- ou une liaison simple,
L³¹ et L³², désignent chacun, indépendamment l'un de l'autre, F, CI, CF₃ ou CHF₂,
Y¹ et Y² dans la formule III désignent chacun, indépendamment l'un de l'autre, H, F, Cl, CF₃, CHF₂, CH₃ ou OCH₃, préférablement H, CH₃ ou OCH₃, très préférablement H ;
R⁶¹ désigne un radical alkyle ou alcoxy à chaîne linéaire ayant de 1 à 6 atomes de C, cycloalkyle ayant de 3 à 6 atomes de C,
(O) désigne -O- ou une liaison simple,
X désigne F, CI, OCF₃ ou OCHF₂,
L^{X} désigne H ou F,
m désigne 0, 1, 2, 3, 4, 5 ou 6,
n dans la formule IV-1 à IV-25 désigne 0, 1, 2, 3 ou 4,
R⁸¹ et R⁸² désignent chacun, indépendamment l'un de l'autre, H, un radical alkyle, alcoxy ou alcényle ayant jusqu'à 15 atomes de C qui est non substitué ou monosubstitué par F, CI, CN ou CF₃ et où, de plus, un ou plusieurs groupements CH₂ dans ces radicaux peuvent être remplacés par -O-, -S-, -C≡C-, -CF₂O-, -OCF₂-, -OC-O-, -O-CO-, 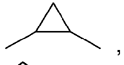 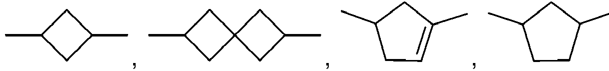 de telle sorte que les atomes de O et/ou S ne soient pas liés directement les uns aux autres,
c désigne 0, 1 ou 2,
Y¹, Y², Y³, Y⁴, dans les formules BC et PH-1, désignent chacun, indépendamment les uns des autres, H, F, CI, CF₃, CHF₂, CH₃ ou OCH₃,
alkyl et alkyl* désignent chacun, indépendamment l'un de l'autre, un radical alkyle à chaîne linéaire ayant de 1 à 6 atomes de C, et
alcényl et alcényl* désignent chacun, indépendamment l'un de l'autre, un radical alcényle à chaîne linéaire ayant de 2 à 6 atomes de C.

2. Milieu cristallin liquide selon la revendication 1, le milieu comprenant un ou plusieurs composés choisis parmi les composés de formules III-1 et/ou III-6 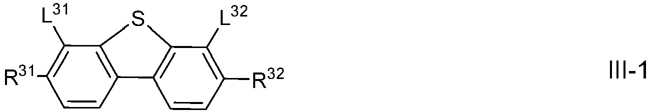 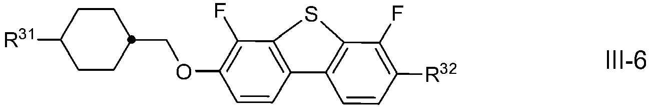 dans lesquelles les groupements présents revêtent les mêmes significations que celles données selon la formule III et préférablement
R³¹ et R³² désignent chacun, indépendamment l'un de l'autre, un radical alkyle, alcényle ou alcoxy ayant jusqu'à 15 atomes de C, préférablement ayant de 1 à 7 atomes de C, plus préférablement l'un ou les deux parmi ceux-ci désignent un radical alcoxy ; ou alkyle cyclique ayant de 3 à 6 atomes de C,
L³¹ et L³² désignent chacun, indépendamment l'un de l'autre, F ou CI, préférablement tous deux désignent F.

3. Milieu cristallin liquide selon la revendication 1 ou 2, le milieu comprenant un ou plusieurs composés choisis dans le groupe constitué par la formule II, 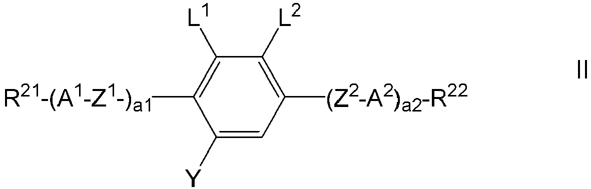 dans laquelle les radicaux individuels, indépendamment les uns des autres et à chaque occurrence de manière identique ou différente, revêtent les significations suivantes :
R²¹ et R²² H, alkyle ou alcoxy à chaîne linéaire, ramifiée ou cyclique ayant de 1 à 20 atomes de C, où un ou plusieurs groupements CH₂ non adjacents sont éventuellement remplacés par -O-, -S-, -CO-, -CO-O-, -O-CO-, -O-CO-O-, -CR⁰=CR⁰⁰-, -C≡C-, 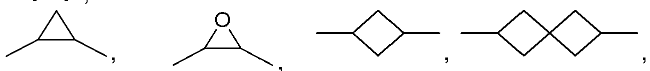 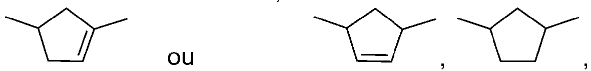 de telle sorte que les atomes de O et/ou S ne soient pas liés directement les uns aux autres, et où un ou plusieurs atomes de H sont chacun éventuellement remplacés par F, CI, CN ou CF₃, préférablement alkyle ou alcoxy ayant de 1 à 6 atomes de C,
R⁰, R⁰⁰ H ou alkyle ayant de 1 à 12 atomes de C,
A¹ et A² un groupement choisi parmi les formules suivantes 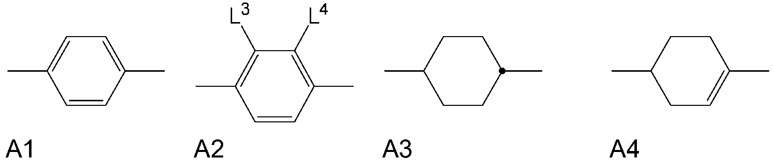 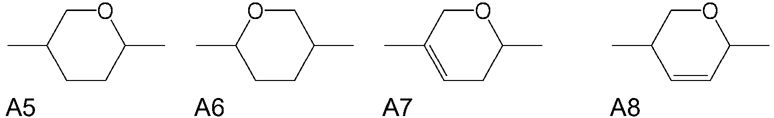 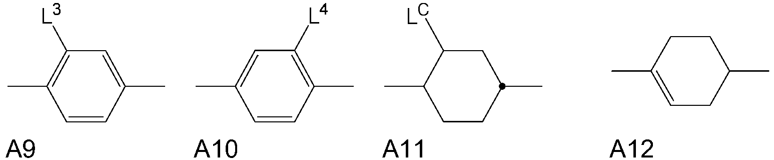 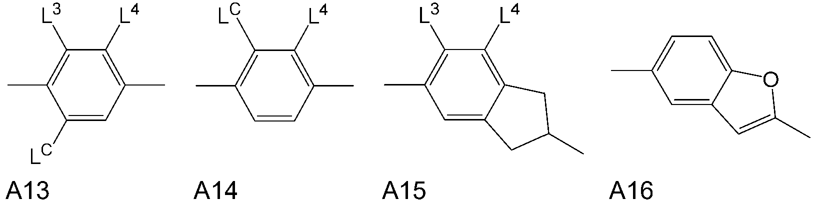 préférablement parmi les formules A1, A2, A3, A4, A5, A6, A9 et A10, très préférablement parmi les formules A1, A2, A3, A4, A5, A9 et A10,
Z¹ et Z² -CH₂CH₂-, -CH=CH-, -CF₂O-, -OCF₂-, -CH₂O-, -OCH₂-, -CO-O-, -O-CO-, -C₂F₄-, -CF=CF-, -CH=CH-CH₂O- ou une liaison simple, préférablement une liaison simple,
L¹, L², L³ et L⁴ F, CI, OCF₃, CF₃, CH₃, CH₂F ou CHF₂, préférablement F ou CI, très préférablement F,
Y H, F, CI, CF₃, CHF₂ ou CH₃, préférablement H ou CH₃, très préférablement H,
L^{C} CH₃ ou OCH₃, préférablement CH₃,
a1 0, 1 ou 2,
a2 0 ou 1.

4. Milieu cristallin liquide selon l'une quelconque des revendications 1 à 3, le milieu comprenant un ou plusieurs composés choisis dans le groupe constitué par les formules IIA, IIB, IIC, IID, et IIE, 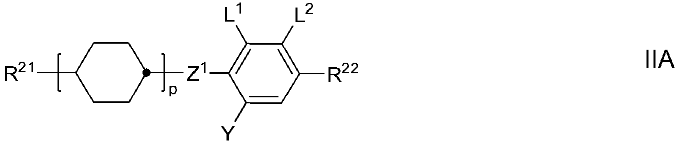 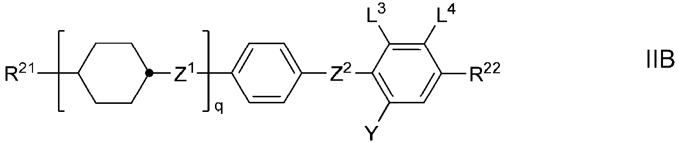 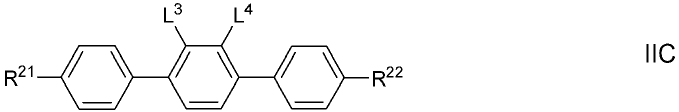 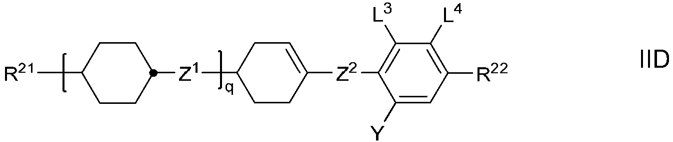 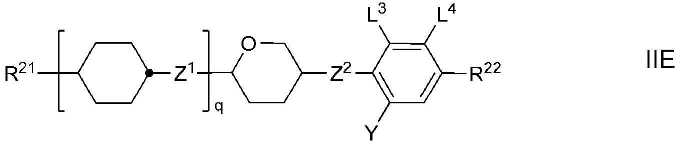 dans lesquelles les radicaux individuels, à chaque occurrence de manière identique ou différente, et chacun, indépendamment les uns des autres, revêtent les significations suivantes :
R²¹, R²² H, un radical alkyle, alcoxy ou alcényle ayant jusqu'à 15 atomes de C qui est non substitué ou monosubstitué par F, CI, CN ou CF₃ et où, de plus, un ou plusieurs groupements CH₂ dans ces radicaux peuvent être remplacés par -O-, -S-, -C≡C-, -CF₂O-, -OCF₂-, -OC-O-, -O-CO-, 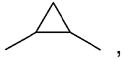 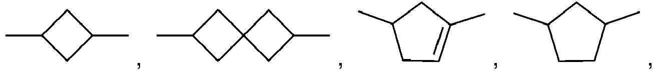 de telle sorte que les atomes de O et/ou S ne soient pas liés directement les uns aux autres,
L¹ à L⁴ F, CI, CF₃ ou CHF₂,
Y H, F, CI, CF₃, CHF₂ ou CH₃, préférablement H ou CH₃, particulièrement préférablement H,
Z¹, Z² une liaison simple, -CH₂CH₂-, -CH=CH-, -CF₂O-, -OCF₂-, -CH₂O-, -OCH₂-, -COO-, -OCO-, -C₂F₄-, -CF=CF-, -CH=CHCH₂O,
p 0, 1 ou 2, et
q 0 ou 1.

5. Milieu cristallin liquide selon l'une quelconque des revendications 1 à 4, le milieu comprenant un ou plusieurs composés de formule IIA-Y 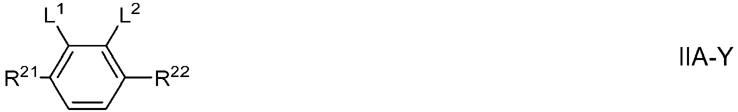 dans laquelle R²¹ et R²² revêtent l'une des significations données pour la formule IIA ci-dessus, et L¹ et L², de manière identique ou différente, désignent F ou CI.

6. Milieu cristallin liquide selon l'une quelconque des revendications 1 à 5, le milieu comprenant un ou plusieurs composés de formule IV 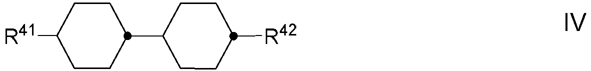 dans laquelle
R⁴¹ désigne un radical alkyle non substitué ayant de 1 à 7 atomes de C ou un radical alcényle non substitué ayant de 2 à 7 atomes de C, préférablement un radical n-alkyle, particulièrement préférablement ayant 2, 3, 4 ou 5 atomes de C, et
R⁴² désigne un radical alkyle non substitué ayant de 1 à 7 atomes de C ou un radical alcoxy non substitué ayant de 1 à 6 atomes de C, tous deux ayant préférablement de 2 à 5 atomes de C, ou un radical alcényle non substitué ayant de 2 à 7 atomes de C, préférablement ayant 2, 3 ou 4 atomes de C, plus préférablement un radical vinyle ou un radical 1-propényle et en particulier un radical vinyle.

7. Milieu cristallin liquide selon l'une quelconque des revendications 1 à 6, le milieu comprenant un ou plusieurs composés de formule V 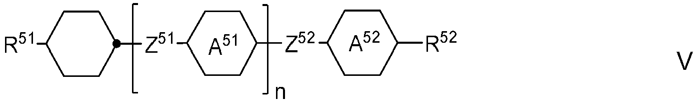 dans laquelle
R⁵¹, R⁵² désignent alkyle ayant de 1 à 7 atomes de C, alcoxy ayant de 1 à 7 atomes de C, ou alcoxyalkyle, alcényle ou alcényloxy ayant de 2 à 7 atomes de C, 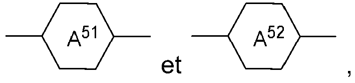 de manière identique ou différente, désignent 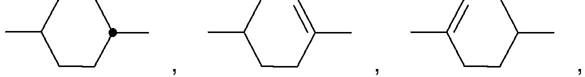 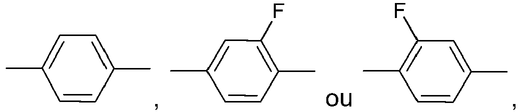
Z⁵¹, Z⁵² désignent chacun, indépendamment l'un de l'autre, -CH₂-CH₂-, -CH₂-O-, -CH=CH-, -C≡C-, -COO- ou une liaison simple, et
n vaut 1 ou 2.

8. Milieu cristallin liquide selon l'une quelconque des revendications 1 à 7, le milieu comprenant en outre un ou plusieurs additifs choisis dans le groupe constitué par les stabilisants, les dopants chiraux, les colorants et les initiateurs de polymérisation.

9. Affichage à cristaux liquides comprenant le milieu cristallin liquide selon l'une quelconque des revendications 1 à 8.

10. Affichage selon la revendication 9, l'affichage étant un affichage VA, IPS, FFS, PS-VA, PS-IPS, PS-FFS, UB-FFS, UBplus ou UV²A.

11. Utilisation du milieu cristallin liquide selon l'une quelconque des revendications 1 à 8, pour des affichages LC à économie d'énergie.

12. Procédé de préparation d'un milieu cristallin liquide selon l'une quelconque des revendications 1 à 8, comprenant les étapes de mélange d'un ou plusieurs composés de formule I avec un ou plusieurs composés de formule III, un ou plusieurs composés de formules VI-1 à VI-25, BC, PH-1, IVa-1 à IVa-4 et/ou IVb-1 à IVb-3 et éventuellement avec d'autres composés cristallins liquides et/ou additifs.
